(19) Europäisches Patentamt / European Patent Office / Office européen des brevets

(11) **EP 2 013 418 B1**

(12) **FASCICULE DE BREVET EUROPEEN**

(45) Date de publication et mention de la délivrance du brevet:
**11.07.2018 Bulletin 2018/28**

(21) Numéro de dépôt: **07765986.0**

(22) Date de dépôt: **02.05.2007**

(51) Int Cl.:
***E01C 13/08*** (2006.01)   ***A43B 5/02*** (2006.01)

(86) Numéro de dépôt international:
**PCT/FR2007/051203**

(87) Numéro de publication internationale:
**WO 2007/125268 (08.11.2007 Gazette 2007/45)**

(54) **GAZON NATUREL**

NATÜRLICHER RASEN

NATURAL TURF

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **02.05.2006 FR 0651564**

(43) Date de publication de la demande:
**14.01.2009 Bulletin 2009/03**

(73) Titulaire: **Dendro Concept**
**91730 Mauchamps (FR)**

(72) Inventeur: **Picard, Edmond-Pierre**
**91910 Saint Sulpice De Favières (FR)**

(74) Mandataire: **Lavoix**
**2, place d'Estienne d'Orves**
**75441 Paris Cedex 09 (FR)**

(56) Documents cités:
**DE-A1- 19 946 947   GB-A- 2 312 671**
**GB-A- 2 342 029   US-A- 4 812 339**
**US-A- 5 326 192**

EP 2 013 418 B1

## Description

Gazon naturel, moyens et procédé de fabrication d'un tel gazon naturel, surface comportant un tel gazon, chaussure de sport adaptée à une telle surface, système sportif comprenant un tel gazon ou un tel gazon et une telle chaussure ainsi qu'un protocole d'évaluation d'une telle surface ou du système sportif comprenant une telle surface et une telle chaussure.

## I) Domaine d'application de l'invention

L'invention concerne un gazon naturel, des moyens et un procédé de fabrication d'un tel gazon, une surface comportant un tel gazon naturel, un système sportif comprenant une telle surface sportive en gazon naturel, une chaussure de sport et un protocole d'évaluation et de contrôle de cette surface ainsi qu'une chaussure de sport adaptée à une telle surface en gazon naturel pour optimiser et mesurer selon un protocole d'évaluation et de contrôle les paramètres sportifs dépendant du couple (chaussure, surface engazonnée).

De façon surprenante, alors que le gazon naturel est utilisé depuis toujours et reconnu sans discussion depuis des siècles et décennies comme la surface sportive d'excellence et de référence pour la pratique du football et du rugby, il apparaît depuis peu de temps mais de plus en plus que le gazon synthétique, associé à des chaussures adaptées et bénéficiant surtout de mesures normalisées de certaines caractéristiques sportives, soit en train de devenir une référence de substitution du gazon naturel. L'avantage du gazon synthétique n'est pas lié à une simple matière sportive, puisque tout le monde s'accorde à reconnaître la supériorité d'un bon gazon naturel sur une surface synthétique mais il est lié à l'existence d'un système sportif intégrant ce nouveau type de surface. Ce système sportif est avantageux dans la mesure où il propose à l'utilisateur des caractéristiques maîtrisées, contrôlables et officiellement reconnues. Cette approche est plus facile pour un produit industriel fabriqué que pour un gazon naturel mettant en oeuvre un ensemble de paramètres d'influence extrêmement large et c'est pourquoi les gazons synthétiques sont aujourd'hui avantagés car il n'existe pas à l'heure actuelle de système sportif mettant en oeuvre du gazon naturel et pouvant se comparer, avantageusement, par rapport au système sportif nouveau mettant en oeuvre du gazon synthétique.

Les tenants du gazon synthétique prônent ce nouveau système sportif tout en reconnaissant que le gazon naturel dans de bonnes conditions est la surface idéale servant de référence et de modèle au gazon synthétique qui essaie de se rapprocher de ce modèle. Cependant, ils affirment que d'une part il vaut mieux un terrain un peu moins bon mais dont la qualité est prévisible qu'un terrain potentiellement meilleur mais dont on ne peut pas prévoir l'état, pour une rencontre donnée et que d'autre part les gazons naturels ne peuvent supporter une forte fréquentation d'utilisation. Beaucoup de décideurs en sont venus à être persuadés, ce qui est inexact, qu'il est impossible d'avoir une forte fréquentation d'un gazon naturel sur un terrain d'entraînement sans le détériorer et qu'on ne peut en aucune façon mettre en oeuvre des moyens permettant de garantir la qualité d'un gazon naturel pour une rencontre prévue.

De façon paradoxale, l'évidence même du monopole du gazon naturel pendant de nombreuses années a rendu apparemment inutile une démarche visant, comme c'est le cas de la présente invention, à proposer un système sportif complet mettant en oeuvre du gazon naturel et garantissant des caractéristiques prévisibles, stables, connues et contrôlables selon un protocole défini.

Compte tenu de la complexité du système d'un sol dans lequel pousse du gazon naturel soumis aux variations climatiques, la mise en place d'un tel système selon la présente invention concerne la maîtrise des nombreux processus concernés et met en oeuvre une approche transverse multidisciplinaire visant à contrôler tous les facteurs de dispersion.

## II) Etat de la technique

On utilise des surfaces en gazon naturel depuis toujours pour pratiquer des sports tels que le football, le rugby, pour installer des surfaces sportives comme des hippodromes et terrains de golf ainsi que pour installer des parcs et bien d'autres surfaces.

Cependant, il est connu que, sous l'effet d'une forte fréquentation ou dans des conditions climatiques défavorables, ces surfaces en gazon naturel se détériorent et peuvent se présenter glissantes, boueuses, saturées d'eau et impraticables. Même sans en arriver là, il est connu que le comportement de telles surfaces est variable en fonction des circonstances climatiques, de l'entretien, des fréquentations antérieures etc. Il est connu également que la pousse du gazon permet une régénération naturelle continue mais que celle-ci a des limites, et notamment n'a pas lieu de façon identique en toute saison ni de façon instantanée.

Compte tenu des besoins d'entraînement et des calendriers des compétitions sportives, il arrive que l'on dépasse les possibilités de fréquentation des terrains utilisés pour les matchs et que l'on joue sur un terrain détérioré jusqu'à la fin de la saison, c'est-à-dire jusqu'à la fin de la période pendant laquelle il est possible de rétablir la qualité de la pelouse par un entretien approprié qui peut parfois demander un repos pendant une période de plusieurs semaines. Il se peut aussi que les besoins d'entraînement ne puissent être satisfaits ou le soient au détriment de la qualité de la pelouse.

## II-1 Etat de la technique du gazon naturel

### II-1-A Etat de la technique du gazon naturel « installé à demeure»

Compte tenu de ces inconvénients, de nombreuses améliorations du gazon naturel des surfaces sportives ont été apportées depuis des décennies et particulièrement ces dernières années d'une part et nombre de solutions alternatives ont été proposées récemment d'autre part.

Parmi les améliorations, on peut citer les progrès sur l'arrosage automatique, qui s'est généralisé et les progrès récents très significatifs sur les variétés de gazon, encore largement méconnus.

On peut citer également le drainage renforcé par fentes de suintement, notamment les fentes de suintement larges de 5 à 8 cm, remplies de gravier de 2 à 8 mm avec une équidistance de 50 cm à 1,50 m, qui sont très efficaces pour empêcher les excès d'eau dans le terrain. Or ces excès d'eau sont à l'origine de 80 à 90 % des désordres observés sur les terrains de sport en gazon naturel et qui font croire à tort à la majorité que ces gazons naturels ne sont pas fiables et que leur mauvais état pendant une bonne partie de l'année est inéluctable. Beaucoup de terrains célèbres et même la plupart d'entre eux ne disposent pas de tels équipements, qui sont pourtant peu coûteux, et les matchs télévisés sur une pelouse calamiteuse ou reportés car la pelouse est impraticable font une contre-publicité particulièrement trompeuse sur la réalité du gazon naturel, même si ce dernier a en effet des limites comme il a été dit précédemment.

### II-1-B Etat de la technique du gazon naturel « mobile »

A coté du gazon installé à demeure une fois pour toutes sur une surface donnée, sont apparues d'autres formes de gazon naturel avec le gazon de placage et le gazon de pavage, plus ou moins épais, ou encore les bacs amovibles.

En plus des problèmes de sur-fréquentation, les grands stades ont un problème spécifique de climat avec l'ombre des tribunes et d'autre part et surtout il existe une exigence nouvelle et spécifique liée à la rentabilisation des coûts d'investissement non pas de la surface sportive mais des tribunes et infrastructures (parkings, transport, vestiaires loges etc.) qui incite de nombreux gestionnaires de ces grands stades à organiser sur la surface de jeu des spectacles incompatibles avec le maintien en état de cette dernière.

Pour cette raison, on souhaite pouvoir installer rapidement sur la surface de jeux une nouvelle pelouse à partir de gazon pré-cultivé ailleurs sur gazonnière, éventuellement même sous un autre climat, malgré un coût de transport supplémentaire dans ce cas.

Le gazon de placage, en petits ou grands rouleaux, est parfois utilisé pour implanter plus rapidement une surface sportive destinée à rester installée à demeure mais est également utilisée pour remplacer rapidement une ancienne pelouse de gazon naturel endommagé. L'inconvénient de cette solution est la plus grande fragilité et le moins bon drainage pendant une période d'implantation de plusieurs semaines et un surcoût important par rapport à un semis. Avant l'implantation des racines, le gazon de placage n'est pas adapté à la pratique sportive et il n'est que trop connu qu'il se comporte comme un tapis glissant sur un parquet et fait des plis en peau de chien et se déchire ensuite en lambeaux si on essaie de l'utiliser trop tôt. Une fois implanté, le résultat est à terme, une fois les racines du gazon de placage implantées dans le substrat sous-jacent, un gazon naturel semblable à un gazon semé, avec toutefois quelques légers inconvénients du fait que le drainage, s'il existe, ne remonte pas jusqu'en haut et que le gazon de placage arrive avec un feutre au départ. Il présente l'avantage, comme tous les gazons mobiles, de pouvoir être cultivé dans un climat plus favorable et d'arriver en meilleur état au moment de l'installation.

Les gazons de pavage sont une solution a priori plus intéressante car il s'agit de mettre en place des pavés de gazon comprenant l'herbe accrochée à son support de culture et accrochée à celui-ci et lui donnant sa cohésion comme en gazonnière. L'avantage du pavé est de se tenir par son propre poids, tant que sa cohésion le fait réagir comme un ensemble solidaire. Malheureusement, le transport intermédiaire, avec ses vibrations a tendance à faire s'effriter les mottes si ces dernières sont de nature sableuse et alors les pavés posés les uns à coté des autres ne se mettent pas de niveau et de plus, la solidarité du pavé recherchée est diminuée par toutes les manipulations. Aussi, pour éviter ce problème majeur, les pavés sont ils constitués de terre plus lourde, capable d'une plus grande cohésion par ses propres capacité de collage interne, c'est à dire une terre à l'inverse même des caractéristiques souhaitables pour un terrain de sport. La cohésion de la terre est dans l'état actuel de la technique la cohésion de la terre elle-même c'est à dire, à l'échelle microscopique, les forces de collage des fines (argile et non la cohésion par l'effet, à l'échelle mésoscopique, des racines tenant la motte par les forces capillaires. Le problème est d'autant plus grave que ces terrains qui auraient plus besoin de drainage que les autres, du fait même du choix d'une terre collante, ne sont pas drainables par faute de temps car ils sont mis en place juste avant d'être utilisés et le drainage ne peut pas non plus être pratiqué sans délais, sans faire courir un risque pour la pelouse car les pavés ont besoin de consolider leurs jonctions avant de résister à un tranchage intensif et rapproché. Aussi, les expériences de pavage, dont le coût est considérable et la mise en place hasardeuse en conditions pluvieuse, donnent des résultats souvent décevants dont on impute à tort les effets négatifs à l'incapacité présumée du gazon d'être à la fois mobile, fiable et performant.

Une autre solution intermédiaire développée est l'installation de gros rouleaux de gazon avec un substrat de 3,5 cm d'épaisseur avec un maillage dans la terre d'une fibre en nylon type netlon®, toujours dans le but d'obtenir un substrat qui ne s'effrite pas pendant le transport et un gazon qui se tienne par son poids. Un mètre carré sur 3,5 cm représentant environ 50 kg, des rouleaux de 20 m² ont un poids d'environ 1000 kg.

Les gazons en bacs n'ont pas vraiment eu de développement dans la mesure où il s'agit d'une lourde infrastructure pour un gazon sans qualité spécifique autre que de pouvoir être rentré et sorti mais dont le remplacement n'est pas forcément facile et le coût très élevé.

### II-2 Etat de la technique dans le domaine des surfaces artificielles concurrentes du gazon naturel

A coté du gazon naturel, se sont développées des surfaces artificielles, imitant ce dernier visuellement ou sur le plan fonctionnel. On trouve ainsi des gazons synthétiques, des pistes en sable ou terre fibrées, des gazons mixtes composées de gazon synthétique avec une place pour intercaler du gazon naturel, et enfin des gazons fibrés, ou cultivés dans un maillage dur en plastique ou en béton ou dans un maillage souple comme le netlon®.

Se sont en particulier développés depuis 20 ans différents types de gazons synthétiques qui ont évolué et présenté différentes générations d'innovation pour essayer de se rapprocher le plus possible de l'aspect mais surtout des caractéristiques mécaniques du gazon naturel en bon état, généralement reconnu comme la meilleure surface sportive connue.

### II-2-A Différents types de gazons synthétiques

Ils existent sous deux formes principales : avec des fibres sans granulés entre les fibres synthétiques ou plus communément lesté par sable ou sable et caoutchouc ou au contraire avec des granulés entre les fibres qui peuvent être du sable ou un mélange de sable et caoutchouc ou différentes couches de caoutchouc en surface, sable et caoutchouc au milieu et sable en bas.

Dans tous les cas, les granulés sont bloqués entre les fibres et se compactent et le comportement est dur. Le prix d'installation est élevé, l'entretien important et la durée de vie courte avec un drainage difficile, un arrosage nécessaire, une usure mécanique et par UV et une ségrégation et compactage des grains et disparition par ruissellement des billes de caoutchouc superficielles d'autant que le caoutchouc bloque l'eau par sa tension de surface et par sa densité et part avec l'eau qui, ne s'infiltrant pas, déborde par ruissellement.

Les documents US 5 958 527, FR 2 857 991, GB 2 135 350 et US 3 034 071 décrivent de telles surfaces en synthétique et les solutions pour essayer de minimiser les tassements ségrégations, problèmes de drainage et ont tous pour objectif affiché et affirmé de se rapprocher autant que possible du gazon naturel.

Les synthétique sont des prédateurs d'écosystème et là où ils sont installés à la place d'un gazon naturel, on perd un filtre de l'air, un climatiseur, une source de vie avec vers de terre pour les oiseaux, et surtout une machine à transformer du $CO_2$ en oxygène, en absorbant poussières nuisibles et pollen et en filtrant le bruit. Mais à l'inverse, non seulement la surface est stérilisée mais elle est polluée par des lessivages du plastique constitutif et des caoutchoucs de récupération et il a été plusieurs fois mesuré des augmentations significatives de métaux lourds dans le sous sol tandis que du caoutchouc migre vers l'extérieur et que la durée de vie limitée du synthétique crée un problème latent de destruction des déchets en fin de vie.

De plus, la température monte sur une surface en synthétique jusqu'à des températures élevées pouvant atteindre 60 °C en été, ce qui rend l'atmosphère irrespirable non seulement pour les joueurs mais pour tout le voisinage, avec une odeur caractéristique de caoutchouc chaud qui ne remplace pas avantageusement pour le bien être du quartier l'odeur de gazon coupé. Pour cette raison, les synthétiques sont aujourd'hui prévus avec un arrosage automatique normalisé, ce qui est difficilement explicable aux riverains quand on restreint l'arrosage des plantes qui, elles, font un travail de climatisation avec le meilleur rendement possible et en utilisant l'énergie solaire pour faire baisser la température.

Sur le plan du coût de fonctionnement des terrains synthétique, il est présenté comme modeste par les promoteurs de cette technique, ce qui n'est déjà pas évident en ne prenant en comptabilité publique que les frais de fonctionnement et en les divisant par le nombre d'heures d'utilisation réelle et non pas théorique mais qui est difficilement soutenable si on prend en compte l'amortissement du coût d'installation sur le temps de vie réel, assez court et si on y rajoute les coûts de remise en état, avant de remplacer le terrain en fin de vie.

Sur le plan technique le bilan n'est pas non plus convainquant car ces terrains sont durs et glissants, traumatisant pour les chutes et que le jeu y est moins agréable avec une balle qui n'a pas la même course que sur un vrai gazon. Le terrain est jouable par tous les temps en dehors du gel humide et de la neige mais en pratique personne ne veut y jouer par la chaleur et le terrain glisse souvent, de sorte qu finalement les caractéristiques sont variables avec les conditions climatiques. De plus les conditions se dégradent régulièrement, sans la régénération continue et annuelle du gazon, entre le terrain neuf et le terrain à changer au bout de 8 ans à 10 ans. En plus des difficulté de remontée du sable, de migration et ségrégation du caoutchouc et de tassement et de vieillissement accéléré au centre, il faut compter avec la durée aux UV limitée, le fait que les synthétiques ne supportent pas la pollution par la terre, les pollens, les feuilles, et qu'il leur faut un entretien important et régulier. Ils posent le problème de changement dans le temps d'une surface plus souple à une surface de plus en plus dure, avec la nécessité coûteuse de recharger régulièrement en caoutchouc.

Les sous-couches résilientes sont utilisées pour les synthétiques et beaucoup sont anciennes et déjà dans le domaine public. Les documents NL 0 204 381 et GB 2 135 631 décrivent des sous couches soit synthétiques soit utilisant un mélange de sables, fibres et éléments résilients.

Il est intéressant de noter que les gazons synthétiques ont été proposés sans succès pendant des années en fonction d'une épaisseur de fibres, de la hauteur du gazon synthétique, de la division des brins, des sables ou polymères utilisés et de moyens sans intérêt pour l'utilisateur. Ce qui en revanche permet aux gazons synthétiques d'être aujourd'hui vendu avec succès indiscutable semble être le résultat d'une démarche visant à passer d'un produit présenté en termes de moyens à un produit dont est affirmée une caractéristique sportive car les terrains synthétiques sont passés, en partenariat avec les fédérations internationales, à une différentiation fonctionnelle mesurable par des protocoles normalisés en termes de roulement de ballon, amortissement etc.

## II-2-B Terrains en sable fibré

Un brevet de 1986 (FR 86 17402) décrit une surface de jeux en sable avec des fibres pour se substituer au gazon, les fibres apportant la portance au sable et n'ayant pas besoin d'entretien et ce brevet est amélioré en 1993 par Genser (FR 93 07994) qui propose une surface artificielle essentiellement composée par un matériau de fines particules et d'une épaisseur de 40 à 150 mm avec 1 à 5 ‰ de fibres synthétiques notamment polypropylène d'une longueur entre 4 et 75 cm et d'un diamètre entre 5 et 20 μm.

Ces terrains sont essentiellement utilisés depuis plusieurs années dans le domaine hippique, avec en particulier des carrières en sable fibré et des pistes de galop en sable fibré. Ces terrains de sport présentent un intérêt économique évident en terme d'entretien mais les terrains réalisés avec cette technique sont connus pour être des terrains très durs, avec des problèmes de tassement et de drainage.

## II-2-C Combiné synthétique + naturel

Les documents WO 98/23817, WO 94/00639, CA 2 285 639 et US 870 541 décrivent des terrains en synthétique dans lesquels sont ménagés des emplacement pour permettre au gazon de pousser au travers du tapis de brins synthétiques et de la natte sous-jacente.

En réalité, le gazon pousse dans un substrat « bourré », tassé et compacté entre des fibres synthétiques verticales, comme c'est le cas d'ailleurs des granulés de lestage des terrains synthétiques et les plans de gazon n'ont pas la place de taller de sorte qu'ils poussent comme des radis dans un rang non éclairci.

Ce principe d'un gazon « bridé » dans un maillage de gazon synthétique peut être rapproché des techniques type netlon® ou des losanges en plastique ou béton pour gazons de parking. L'objectif visé est d'avoir un combiné des qualités de gazon et la résistance du synthétique mais on a un gazon bridé et un sol compacté et il s'agit d'un comportement de sol tassé et bloqué et donc dur et sans grande qualité sportive.

## II-2-D Gazon fibré

Enfin, il a été prévu d'améliorer les gazons en utilisant dans un gazon des inclusions qui permettent d'armer le sol ou d'augmenter son coefficient de frottement de façon très significative pour le bloquer en toute circonstance.

Même si il n'existe pas de brevet relatif aux gazons fibrés, certaines entreprises ont transposé les principes de piste en sable fibré en essayant de l'appliquer à une surface engazonnée de surcroît : il s'agit d'une simple transposition du concept de sable fibré avec installation d'un gazon sur un substrat fibré selon un brevet de 1986 (FR 86 17402) qui décrit une surface de jeux en sable avec des fibres pour se substituer au gazon. Or, il est connu qu'une telle surface, avec des fibres épaisses par rapport à la granulométrie du sable, aboutit à une chute de cohésion et une augmentation de la résistance au cisaillement , c'est à dire à un comportement privé de souplesse et proche du sable concassé donnant sol traumatique .

Dans le même esprit, avec d'autres inclusions que des fibres, un autre brevet déposé par Genser en 1999 (FR 99 11987) décrit une surface qui peut être engazonnée et qui comprend des inclusions de bandelettes de géotextile non-tissé caractérisées par un rapport L/l entre longueur et largeur supérieur à 4 et le grammage du géotextile étant entre 100 et 500 grammes par mètre carré.

Ce type de bandelettes a pour effet de se constituer en réseau en augmentant considérablement le coefficient de frottement et peut être utilisé pour constituer un terrain hippique en sable extrêmement fin (autour de 80 μm) mouillé sans gazon ou encore un gazon de parking par exemple mais n'a pas d'application en termes de terrain de sport engazonné car il est totalement dur.

Un autre brevet a été déposé par Grégori, sous le N° 98 14323 et publié sous le N° 2 785 918 qui ne décrit pas un terrain et un substrat nouveau mais une machine à fibrer et déposer du sable fibré pour constituer un terrain de sport en sable fibré éventuellement engazonné. Le brevet mentionne et prend en référence la possibilité d'utiliser le substrat de sable fibré selon la description du brevet FR 86 17402, mentionné ci-dessus mais sur des surfaces éventuellement engazonnées, avec une amélioration ne portant pas sur la recette mais sur le matériel permettant de disperser les fibres en tous sens. Cette société Plusieurs terrains en gazon fibré ont été réalisé selon cette technique et il est constaté que ces terrains sont très résistants et stables mais terriblement durs, avec des problèmes de drainage et des traumatismes pour les sportifs l'utilisant.

Les techniques connues dans l'état de la technique utilisent les fibres connues dans le marché et qui proviennent d'une transposition aux terrains de sport d'une utilisation de fibres pour armer le béton en utilisant la capacité des fibres à résister à la traction et à se constituer en réseau et à augmenter la portance par l'effet combiné de l'augmentation du frottement interne et de la mise en réseau des fibres. En contrepartie, ces fibres fines à l'oeil mais épaisses en comparaison de la taille des pores du sable écartent les grains et font chuter la cohésion du sable. Ainsi, les terrains de sable fibré avec ou sans gazon perdent la caractéristique principale du gazon, à savoir la cohésion interne, pour la remplacer par une augmentation très importante de frottement qui donne au terrain un comportement comparable à celui d'un sable concassé, portant mais inadapté pour une bonne pratique du sport par manque de souplesse.

DE 199 46 947 A1 montre un substrat destiné à la culture du gazon formant également partie de l'état de la technique.

### III) Evaluation objective de la performance des terrains de sport

### *III-1 Analyse fonctionnelle : évaluation des terrains de sport par rapport a l'objectif fonctionnel*

### III-1-A Définition fonctionnelle de la finalité d'un terrain de sport

Pour comparer les surfaces sportives entre elles et tout particulièrement les gazons naturels entre eux, il faut d'abord prendre le recul de se poser, pour commencer, la question de l'utilité fondamentale et des objectifs de tels terrains.

Les caractéristiques et la qualité d'une surface sportive devant être déterminées de manière à permettre une utilisation conforme à son objectif, cela amène à poser d'abord la question de l'objectif de la pratique du sport.

Une des premières raisons d'être du sport est sa fonction ludique à travers la compétition. On attend donc du terrain qu'il permette de départager de façon équitable les compétiteurs, hommes ou animaux, éventuellement des véhicules, sans avantager certains par rapport à d'autres. Même si l'on sait bien qu'un terrain « lourd », par exemple, favorisera certains joueurs ou certains chevaux par rapport à d'autres, cela n'a pas posé trop de problèmes pendant des années pour des sports où tout le monde concourt en même temps, dans la mesure où la qualité du terrain est la même pour tout le monde au même moment. Cependant, dans le cas de surfaces particulièrement dégradées, glissantes ou à réaction aléatoire, les équipes perdantes se plaignent de plus en plus du fait que la compétition sur des surfaces si dégradées donne une place trop grande au hasard par rapport à la technique sportive. Dans cette perspective d'«équité», le saut d'obstacle est la discipline sportive qui a le plus à souffrir des écarts par rapport à cette «équité» théorique, car les chevaux qui sautent en dernier peuvent avoir une surface sportive très dégradée par rapport aux concurrents passés avant eux. L'«esprit sportif» qui consiste à «faire contre mauvaise fortune bon coeur» reste un argument fort et nécessaire pour accepter une part inévitable d'inéquité, mais, précisément, dans une société technique, celle-ci n'est plus acceptée que dans la mesure où l'inéquité est vraiment techniquement inévitable.

Une autre raison d'être du sport est la recherche de bien-être, de plaisir et de santé à travers la pratique sportive. Dans cette perspective, la bonne surface sportive est celle qui permet de ressentir du bien-être en jouant et qui va permettre à la pratique sportive d'engendrer un effet positif, notamment réparateur, sur la santé. Il y a donc à la fois une notion subjective mais réelle et mesurable de plaisir et de bien-être à pratiquer le sport sur une telle surface, et un impact sur la santé. Il est connu que la pratique un peu intensive d'un sport sur des surfaces inadéquates peut favoriser des effets néfastes importants à moyen ou long terme, notamment de dégradation des ligaments et articulations (problèmes de genoux, aine, vertèbres ...) et il est également connu que de mauvais appuis peuvent favoriser l'occurrence d'accidents à court terme avec différents traumatismes directs, notamment des problèmes de ligaments et entorses du genoux et de la cheville, et indirects du fait de la chute.

Il est recherché depuis longtemps d'éviter les surfaces trop glissantes qui entraînent des chutes, mais la recherche d'une surface qui minimise les problèmes à long terme sur le squelette n'a toujours pas abouti et une surface non glissante, notamment un gazon non glissant, est toujours un des avantages importants recherchés.

En réalité, il serait restrictif et inexact de limiter les objectifs d'un terrain de sport à la seule pratique du sport. Les terrains gazonnés jouent un rôle essentiel dans les villes pour leur environnement immédiat par le spectacle apaisant du gazon et par son rôle écologique local (absorption de $CO_2$ et restitution d'oxygène, filtre anti-bruit et de poussières, absorption des pluies, climatisation). Un terrain de sport est donc aussi un espace vert de grande utilité pour l'écologie et il participe au bien-être du voisinage. Les terrains de sport permettent une activité en plein air et c'est un rôle important du sport pour la santé que de donner une motivation d'exercice en plein air, même quand le temps n'est pas agréable, qu'il soit froid ou pluvieux. Ce rôle suppose que les gazons sportifs soient praticables presque toute l'année, et d'ailleurs les calendriers de compétition sportive l'imposent.

A l'inverse, les gazons sportifs ont un coût de construction et d'entretien. Ces coûts peuvent être affectés à la seule utilisation sportive du terrain pour donner un coût horaire d'utilisation sportive ou être affectés pour partie à l'intérêt collectif, écologique et être intégré au coût des espaces verts. En tout état de cause, la disponibilité de fréquentation du terrain et le coût horaire d'exploitation sportive sont un autre critère important de qualité d'un terrain sportif.

**III-1-B Définition fonctionnelle des caractéristiques sportives d'un terrain de sport**

Au delà du rôle du sport et d'un terrain de sport sur l'environnement et le voisinage, un terrain de sport donné a un effet sur la qualité du sport et sur la santé du sportif du fait même de la pratique sportive sur ce terrain, en fonction de caractéristiques fonctionnelles qui sont connues et peuvent être regroupées par couples de caractéristiques connues pour être difficilement compatibles.

Il est connu qu'on attend un certain amortissement, c'est à dire la capacité du sol à décélérer un mobile en mouvement entrant en collision avec le sol. Lorsqu'un mobile qui peut être le pied d'un sportif (ou son corps lors d'une chute) entre en contact avec le sol, le sol est déformé et absorbe une partie de l'énergie du choc et décélère le pied jusqu'à l'arrêter à une certaine profondeur et ce sol remonte jusqu'à sa place ou conserve une déformation. En remontant vers sa place, le sol peut restituer une partie de l'énergie du choc en renvoyant le mobile vers le haut avec une vitesse correspondant à une énergie cinétique restituée par le sol. L'énergie restituée est comprise entre 0 % et 100 % de l'énergie cinétique lors de l'impact proportionnellement à un coefficient connu comme le coefficient de restitution.

Le sol peut remonter en restituant une partie de l'énergie au mobile ou peut rester écrasé tant que le mobile appuie sur le sol et remonter après : la force qui s'exerce pour faire remonter le sol et le mobile est connue comme l'élasticité tandis que la capacité du sol à remonter à sa place après que l'effort d'écrasement a disparu est connu comme la résilience du sol. La vitesse du sol à se remettre en place par élasticité est très importante car, même en cas de retour parfaitement élastique, l'énergie n'est plus restituée au pied si ce dernier est déjà parti.

Si le sol reprend vite sa place en restituant de l'énergie, il est dit performant.

On attend également d'un sol qu'il ne glisse pas trop car un sol glissant provoque des chutes mais glisse suffisamment car un pied qui se bloque trop facilement entraîne également des entorses.

On attend d'un sol qu'il soit plat mais également qu'il reste plat malgré les agressions mécaniques du sport. Ce point est un point critique essentiel du gazon : on veut qu'il soit à la fois souple et plat et pour rester plat il doit être résistant.

Or il est connu qu'il est difficile d'avoir un sol qui soit en même temps amortissant et résistant.

Dans le cas particulier d'un sol en gazon naturel, on attend qu'il ait plusieurs couples de caractéristiques fonctionnelles, généralement difficiles à concilier et en particulier :

- portance ou résistance et amortissement,
- amortissement ou souplesse et bonne performance ou rapidité de la surface sportive.

Le manque de souplesse entraîne à terme des lésions des tendons et articulations.

A l'inverse, un sol manquant de rapidité ou de performance entraîne efforts, fatigue et blessures musculaires.

Ce dernier point doit être développé ici, même si le problème ne se pose pas avec les gazons naturels, car il se pose avec les terrains synthétiques.

Pour exprimer de façon analogique les fonctions attendues d'un terrain de sport, on peut se ramener à l'expérience commune du comportement d'un sol de plage en sable fin car l'amplitude des phénomènes est telle qu'ils sont observables par tout un chacun sans instruments de mesures. Il est en effet connu qu'un terrain parfait pour amortir est le sable sec d'une plage en sable fin qui laisse des empreintes de pas profondes là où on marche. Si l'on saute en longueur et que la réception a lieu dans un tel sable ou si on fait une chute dans un tel sable, l'amortissement est optimal et on minimise les traumatismes dans cette phase. Cependant, si on désire parcourir une grande distance en marchant ou en courrant ou jouer au ballon, il est connu que la marche est épuisante et chacun sait qu'il faut aller marcher près de l'eau, là où chaque vaguelette mouille le sable : à cet endroit, le sable fin a une cohésion et l'empreinte existe mais reste faible et disparaît avec chaque vaguelette et l'énergie du pas est restituée et un ballon rebondit ; il est également possible de rouler sur un tel sable en bicyclette ou de prendre appui avec les pieds pour tirer une remorque avec un bateau dessus mais, au delà d'un certain effort horizontal, il arrive que le sol se dérobe quand même sous les pieds et la roue de bicyclette ou de la remorque s'enfonce si elle n'est pas assez large.

Sur un terrain de sport en général, on recherche un bon positionnement de trois caractéristiques mentionnées.

On a besoin d'un amortissement suffisant, remplissant moins bien mais suffisamment la fonction du sable qui se déforme pour amortir une réception ou une chute.

On a besoin d'un sol qui réagisse rapidement en restituant une part de l'énergie de la réception pour l'appel suivant : il faut proscrire le sable sec sans cohésion qui amortit toute l'énergie mais ne restitue rien et préférer le sable humide mais résistant du bord de l'eau qui amortit un peu et restitue de l'énergie. Il faut enfin un sol qui résiste à un effort de mêlée par exemple et on voit qu'un sable mouillé a une certaine résistance mais qu'il y a arrachement au delà d'une certaine limite, de sorte qu'on ne peut pas pousser une poussette lourde à roue étroites et dures par exemple.

Une solution proposée par les terrains en gazon naturel est d'avoir une résistance à l'arrachement assuré par le maillage des racines et le meilleur couple (amortissement- restitution de l'énergie) possible mais avec une limite à la résistance à l'arrachement quand c'est humide et une baisse de l'amortissement quand c'est sec.

A l'inverse, les synthétiques étant très résistants à l'arrachement en toute circonstance ont le défaut d'être durs et une solution a été imaginée consistant à inclure des élastomères pour amortir le choc. L'inconvénient des élastomères est qu'ils ne travaillent pas à une échelle suffisante pour pouvoir agir autrement que par une déformation égale à la somme des écrasements et que ce comportement est plus de la résilience que de l'élasticité, ce qui signifie que l'énergie est bien restituée mais après le départ du pied qui a créé l'écrasement et que d'autre part l'amortissement lui même est une phase qui précède et donc retarde le blocage du sol. On voit que la résilience est une solution de rattrapage dont l'efficacité en terme d'amortissement est au prix d'un retard et d'un manque de performance.

Ainsi, le problème propre des terrains en gazon naturel est celui de la teneur en eau qui fixe l'équilibre entre amortissement-dureté et résistance à l'arrachement ou l'enfoncement -portance tandis que le problème propre des synthétique consiste plutôt à régler la part d'éléments résilients pour trouver un équilibre entre dureté-amortissement et performance-vitesse de restitution de l'énergie, avec un positionnement des synthétiques offrant une meilleure résistance à l'arrachement mais un moins bon comportement sportif : moins bon amortissement et moins bonne performance.

Il faut simplement remarquer qu'une meilleure résistance à l'arrachement n'est pas un avantage en soi : l'objectif est de pouvoir résister aux sollicitations dues à la fréquentation sportive mais résister à des efforts plus importants mais non exercés dans la pratique ne présente aucun intérêt particulier.

L'objectif, concernant les gazons naturels selon l'invention est de régler le couple dureté-résistance pour obtenir une résistance suffisante (et non maximale) et avoir dans ce cadre le meilleur couple (amortissement, performance).

Là encore, on parle globalement de coefficient de restitution, mais ce sont en fait deux phénomènes, l'un intrinsèque au sol et l'autre dépendant du sportif, qui déterminent ce coefficient de restitution : dans la performance on a à la fois la proportion d'énergie cinétique restituée à un mobile tombant sur le sol et la vitesse de restitution de cette énergie pour que le pied qui a donné de l'énergie au sol ne soit pas déjà parti quand le sol arrête son enfoncement pour restituer cette énergie.

Pour pouvoir comparer les sols de façon objective, on voit bien à ce stade qu'une expression mathématique du mouvement mécanique est indispensable pour pouvoir exprimer, comparer et évaluer de façon rigoureuse ces objectifs fonctionnels bien connus, que les sportifs ressentent et que le corps subit.

**III-1-C Inconvénients fonctionnels des terrains dans l'état de la technique**

**III-1-C-1 Inconvénients écologiques des gazons synthétiques**

Il est généralement connu que des mousses artificielles ou des matières élastomères à base de caoutchouc ou d'obtention artificielle sont généralement utilisés dans les terrains de sport en gazon synthétique, soit entre les brins de gazon artificiel, soit en sous-couche résiliente.

On ne peut pas garantir que ces produits seront non polluants pendant leur utilisation ou lors de transports non contrôlés de matière hors du site ou par pollution du sous sol ou encore lors de la fin du cycle de vie du terrain. Or, à ce titre, les matières synthétiques par elles-mêmes et les matières élastomères de leur côté sont reconnues comme polluantes.

Par ailleurs, sur le plan du drainage et de la cohésion du substrat, la tension de surface des élastomères habituellement utilisés qui ne sont pas hydrophiles mais généralement hydrophobes ou en tout cas peu mouillables, bloque l'eau, diminue la cohésion, favorise donc la ségrégation et les pressions d'eau interstitielle lors d'évènements pluvieux, ce qui se traduit par un débordement de l'eau avec transport à l'extérieur du terrain d'éléments élastomères, compte tenu de leur densité.

### III-1-C-2 Problèmes de blessures

Les terrains en gazon fibrés sont reconnus pour être durs et il a été observé en particulier que des chevaux sautant sur des carrières en gazon fibré selon la technique caractéristique de l'état de la technique (avec fibres épaisses par rapport à la granulométrie du sable) ont été gravement blessés - avec des lésions internes définitives - par un seul passage de parcours d'obstacles, pourtant sans chutes et en apparence réussi.

De la même façon, les terrains synthétiques favorisent certaines blessures.

Le sable est abrasif et les chutes sur synthétique avec du sable en surface causent des brûlures bien connues et redoutées des utilisateurs. Les synthétiques sans lest n'ont pas cet inconvénient mais il est reconnu qu'ils présentent un risque important d'accident des ligaments intérieurs du genou car ils tiennent les crampons enfoncés en otage et s'opposent à la rotation du pied après un arrêt brusque qui est l'occasion d' y enfoncer les crampons. Les sols lestés par un mélange de sable et de caoutchouc deviennent durs car il existe une dynamique des particules et la différence de tension de surface d'une part et de densité d'autre part entre le sable et le caoutchouc crée des problèmes de mauvaise infiltration de l'eau et d'absence de cohésion et à terme de ségrégation car la pression interstitielle augmente en surface lors des pluies à cause de la tension superficielle qui bloque l'eau de sorte que le caoutchouc de surface part en flottant tandis que le sable remonte, de sorte que l'ensemble durcit avec le temps et devient abrasif.

Comme les terrains synthétiques sont trop durs, il a été imaginé d'installer des éléments résilients pour assouplir la surface. La solution est de charger majoritairement en caoutchouc et on obtient alors une surface molle et lente qui ne répond pas et qui oblige les sportifs à compenser par un effort musculaire qui se traduit en problèmes de déchirures musculaire, et en accidents de fatigue. En outre, malgré ces éléments qui font perdre de la performance, les gazons synthétiques sont moins durs mais restent trop durs et nettement plus durs que le gazon naturel.

### III-1-C-3 Autres inconvénients fonctionnels

Les inventions et recherches de nouvelles surfaces améliorés et le succès des synthétiques malgré un coût de fabrication très élevé, un impact environnemental extrêmement négatif, une relative insatisfaction des joueurs et une durée de vie faible à très faible sans entretien important sont d'autant plus nombreuses et les directions de recherche d'autant plus variées que les solutions connues pour l'amélioration des gazons naturels dont chaque technique essaie cependant de se rapprocher sont restées jusqu'à présent insatisfaisantes.

On a bien pensé et essayé de mettre des fibres ou des bandelettes dans les substrats du gazon ou d'installer du gazon naturel dans une trame synthétique dans l'espoir de combiner les avantages du gazon naturel à la résistance des synthétiques ou des pistes en sable fibré mais on a seulement réussi l'inverse : une surface dure et un gazon fragile.

A chaque fois qu'on améliore la portance tout temps d'une surface sportive engazonnée, c'est au détriment de la souplesse caractéristique du gazon naturel et la surface devient trop dure. D'autre part, la sensibilité aux conditions climatiques des surfaces sportives connues en gazon naturel rend trop aléatoires les conditions de pratique sportive pour que les instances sportives puissent continuer longtemps à s'en satisfaire, compte tenu des inconvénients que représente une surface ravagée comme il y en a trop souvent sur les stades les plus connus.

Les synthétiques se développent d'autant mieux qu'on compare les performances espérées des nouvelles générations de synthétiques aux terrains en gazon naturel dans leur version non drainée et dans leur état le moins bon.

Les gazons synthétiques ne progressent dans les stades de compétition que parce qu'on préfère une solution peu satisfaisante au risque d'une situation catastrophique.

Ils progressent sur les terrains d'entraînement pour une autre raison : l'incapacité des gazons naturels, non pas à supporter une fréquentation aussi intense que les synthétiques mais au moins à supporter une fréquentation par semaine significativement supérieure à la très faible possibilité de fréquentation hivernale à l'heure actuelle, dans les climats d'Europe occidentale. Un objectif de 20 à 40 heures par semaine quel que soit le temps serait suffisant pour rendre ces terrains beaucoup plus intéressant sur le seul plan économique dans 80 % des situations car les utilisations réelles de synthétique de plus de 50 heures en hiver ne représentent pas plus de 20 % des cas. Même si beaucoup de joueurs souhaitent sans le pouvoir jouer en même temps à certaines heures privilégiées, il est rare, pour des raisons plus sociologiques que techniques, que l'on puisse s'organiser pour jouer toute la nuit et il est également difficile de réunir 22 personnes, scolaires ou adultes, à toute heure du jour, de façon régulière, pour utiliser toutes les plages de disponibilité du terrain inoccupé.

En dehors de l'aspect de capacité de fréquentation illimitée tout temps mis en avant, avec succès commercial, par les tenants du gazon synthétique, il a été rapidement vu ci-dessus que l'ensemble des autres paramètres de comparaison montre de gros désavantages du gazon synthétique par rapport au gazon naturel.

Du fait que les gazons synthétiques à l'extérieur suppriment une importante surface à l'écosystème, un certain nombre de gazons synthétiques ont même été remplacés, pour ces raisons, par des surfaces naturelles et il est souhaitable dans une politique de développement durable et dans un triple souci de qualité du sport, de santé des joueurs et de gestion raisonnable de proposer une surface améliorée qui soit en gazon naturel.

Même si le gazon naturel est la seule surface sportive qui joue un rôle positif pour la santé des joueurs et du voisinage, et cela du seul fait de son rôle écologique pour l'environnement, même si le gazon naturel reste la surface de référence pour la qualité et l'agrément de jeux et même si les joueurs se sentent plus en sécurité et ressentent plus de bienfait à long terme à jouer sur ce type de surface, un certain nombre d'inconvénients limitent l'utilisation de gazons naturels et, pour cette raison, de nouvelles surfaces sportives en gazon synthétique sont apparues sur le marché qui, malgré un coût d'installation plus élevé, concurrencent le gazon naturel avec succès.

En effet, bien qu'il soit généralement reconnu qu'un gazon naturel permet, dans des conditions météorologiques favorables, une meilleure qualité de jeux, un meilleur confort et moins d'effets négatifs à long terme sur le squelette que les surfaces en gazon synthétique, il est également reconnu que la sensibilité aux intempéries du gazon naturel est un inconvénient majeur qui donne un avantage à d'autres surfaces et justifie leur choix de plus en plus fréquent aux dépens du gazon naturel.

Une conception erronée des besoins du gazon a amené jusqu'à présent à cultiver le gazon sur des milieux propices à l'agriculture ou à l'horticulture, mais inadaptés aux besoins spécifiques des terrains de sport ; en particulier, la fraction des fines peut être avantageusement remise en cause selon l'invention pour créer un substrat qui réponde à la fois à une fonction biologique et mécanique adaptée aux besoins des terrains de sport.

Trop dur parfois en été, sans portance ni résistance au cisaillement suffisantes l'hiver, injouable sous la neige, trop dur quand il gèle, fragile lors du dégel, les terrains de sport en gazon naturel classique habituellement disponibles présentent des inconvénients auxquels il faut apporter une solution, si l'on veut revaloriser le gazon naturel. Même dans des conditions météorologiques idéales, les terrains de sport engazonnés ont un comportement mécanique qui a besoin d'être amélioré.

Il serait donc utile de pouvoir proposer une surface sportive engazonnée dont les performances sportives et le bénéfice pour la santé soient améliorés par rapport aux surfaces sportives connues.

Il serait hautement souhaitable en particulier de procurer une surface sportive écologique, jouable par presque tous les temps et capable de supporter une forte fréquentation sans se dégrader, et dont la réponse mécanique aux sollicitations soit connue, relativement constante par rapport aux aléas climatiques et supérieure aux autres surfaces connues pour la qualité du jeu et pour l'effet sur la santé des joueurs.

### *III-2 Analyse mécanique : évaluation des terrains par une analyse mathématique de la mécanique du sol*

### III-2-A Traduction objective du problème fonctionnel

Pour pouvoir comparer objectivement l'avantage d'une telle surface par des critères mesurables à la fois pertinents pour la pratique sportive et l'effet sur la santé, il faut une traduction mathématique d'un problème au départ fonctionnel.

Sans d'ailleurs vouloir à ce stade imposer un protocole d'évaluation complètement figé à ce stade, le parti pris de l'invention est de privilégier l'analyse du comportement mécanique du sol à partir d'une mesure, avec un grand nombre de points d'enregistrement, de la courbe accélérométrique d'un mobile tombant sur le sol d'une hauteur donnée.

Bien que cette courbe donne par elle même des renseignements sur la résistance du sol, il paraît préférable d'inclure également dans le protocole d'évaluation d'un sol gazonné une mesure spécifique adaptée à chaque sport et évaluant la résistance aux agressions du sol par l'exercice du sport considéré. Cette mesure peut être unique ou il peut s'agir d'une note tenant compte de plusieurs mesures qui concernent spécialement la résistance au poinçonnement et surtout au cisaillement. Sans mesure supplémentaire, on peut considérer comme représentative la mesure de l'empreinte laissée par le même mobile dans l'expérience accélérométrique ou bien prendre en considération une mesure de résistance au pénétromètre ou encore mettre au point et choisir toute mesure caractéristique de la résistance au cisaillement, la plus représentative possible de la résistance aux agressions spécifiques du sport considéré.

Dans tous les cas, le protocole d'évaluation cherchera à mettre en évidence :

- à titre d'exemple la plus faible valeur du maximum de la force de décélération exercée par le sol sur le mobile, ou, de façon plus générale la courbe la moins traumatisante pour les sportifs selon les méthodes de traitement du signal de cette courbe accélérométrique les mieux adaptées pour les plus adaptées à l'interprétation des risques sur la santé ;
- à titre d'exemple la plus faible empreinte possible ou d'une façon générale la plus faible déformation du sol sous contraintes sportives ;
- la plus faible variation des deux paramètres précédents aux aléas climatiques.

### III-2-B Analyse théorique et interprétation générale de la courbe accélérométrique d'un mobile arrêté par le sol

Pour bien préciser ce qui doit être évalué ou contrôlé et les mesures adéquates pour évaluer le sol, ou évaluer le couple (sol-chaussure) et éviter des confusions hâtives communes, il n'est pas inutile de commencer par définir plus précisément ce que l'on cherche et ce qui est intrinsèquement impossible, car il existe des lois de la dynamique incontournables.

Comme on souhaite en général une bonne absorption du choc d'impact et en même temps un sol qui ne se déforme pas, il peut être utile à ce stade, pour bien cadrer le problème, de rappeler que l'accélération et la pénétration, au moment du choc, sont indirectement liées et que l'accélération et le déplacement négatif maximal Zmax sont directement liés par une relation mathématique et qu'il n'y a pas de limitation possible de la décélération sans déformation du sol correspondante.

Si un mobile entre en collision avec un obstacle, le mobile ne peut s'arrêter que par la somme des décélérations liées à la déformation de l'obstacle et à l'écrasement du mobile. Pour minimiser l'écrasement du mobile, il faut une déformation de l'obstacle selon des lois incontournables.

**III-2-B-1 Relations décélération du mobile - déformation du sol - enfoncement - empreinte**

Si l'on choisit un repère fixe avec une origine coïncidant avec la surface libre du sol au temps zéro, et l'axe des Z positif vers le haut, et le temps initial t=0 au moment de l'impact d'un mobile tombant sur le sol avec une vitesse - V0 (V0 étant positif et - V0 négatif), on peut en effet écrire :

$$Z(t) \ = \ 0 \ + \ \int_{u=0}^{u=t} z'(u)$$

du

avec z(t) l'altitude du mobile dans son repère fixe égale, par hypothèse, à 0 au temps t=0, avec z'(t) la dérivée de z soit la vitesse verticale du mobile au temps t, avec z'(t) = -V0 par hypothèse pour t=0, et avec z'' (t) dérivée de z, c'est à dire accélération verticale positive du mobile au temps t>0 considéré.

On a z' (t) = $-V_0 + \int_{u=0}^{u=t} z''(u)$ du

De là, on voit clairement que l'on peut déduire Ti le temps nécessaire à l'immobilisation du mobile :

Comme z'' est une force de réaction toujours positive et que ça finit toujours par s'arrêter, cela détermine Ti par l'équation :

$$V_0 \ = \ \int_{u=0}^{u=Ti} z''(u)$$

du

De là, on calcule le déplacement négatif maximal $Z_{max}$ selon l'axe des z atteint par le mobile par l'équation :

$$Z_{max} \ = \ \int_{u=}^{Ti} z'(u)$$

du

Ainsi, on voit d'emblée que le déplacement négatif maximal $Z_{max}$ est intrinsèquement liée à la courbe d'accélération puisqu'on peut le calculer si on connaît la courbe d'accélération.

On voit aussi que plus z'' est grand, plus le temps d'arrêt est petit et plus la vitesse est ralentie et donc plus le déplacement négatif maximal $Z_{max}$ est petit. Ainsi, il apparaît, grossièrement, qu'une accélération plus faible donne nécessairement un déplacement négatif maximal $Z_{max}$ plus fort, ce qui est le contraire de ce que l'on semble chercher.

Il est vrai cependant que deux courbes ne sont pas deux nombres et ne sont pas forcément plus grandes l'une que l'autre en tout point et c'est en cela qu'il est nécessaire de préciser à quoi devrait ressembler une courbe d'accélération idéale, capable de satisfaire les exigences apparemment contradictoires du confort des joueurs (faible accélération) et d'un faible enfoncement lors de cette phase.

On peut observer que pour avoir une faible valeur de déplacement négatif maximal $Z_{max}$, le mieux est d'avoir une courbe dont les caractéristiques soient :

- une décélération forte tout de suite pour décélérer rapidement ;
- une décélération qui reste forte pendant un temps d'exposition 1 assez long (basse fréquence) sans augmenter ni diminuer beaucoup jusqu'à l'arrêt.

L'idée et le faux espoir qu'on peut caresser sont qu'une décélération moins forte mais gardée constante puisse faire un arrêt aussi rapide qu'une décélération plus forte mais pendant moins longtemps (haute fréquence) et qu'une courbe idéalement dessinée puisse éventuellement permette d'obtenir un déplacement négatif maximal $Z_{max}$ moins important que celui correspondant à une plus haute fréquence. Il n'en est rien comme le montre l'analyse rapide ci dessous.

En effet, si on supposait à titre d'exemple semi-démonstratif ou illustratif dans le seul but de fixer les idées que l'on veuille comparer deux sols caractérisés par deux courbes qui partent en même temps avec une décélération constante G1 et un temps d'immobilisation T1 et l'autre courbe avec une décélération constante G2 = 3G1 et un temps d'immobilisation T2, l'intégration donnerait alors :

$$VO = T1 \times G1 = T2 \times G2 = T2 \times 3G1 \quad \text{et donc } T2 = T1/3$$

$$Z_{max1} = \int_{u=0}^{u=T1} z'(u) \, du = \int_{u=0}^{u=T1} G1 \, u \, du = G1 \, T1^2/2$$

$$Z_{max2} = G2 \, T2^2/2 = 3G1 \times (T1/3)^2 /2 = Z_{max1}/ 3$$

$$Z_{max1} = 3 \times Z_{max2}$$

On voit que le rapport existe bien, mais inversé entre l'accélération maximale et $Z_{max}$ du fait que le coefficient de proportionnalité se trouve au carré pendant un temps proportionnel lors de la double intégration.

Cet exemple est donné pour bien illustrer l'impossibilité d'obtenir un déplacement négatif maximal $Z_{max}$ plus petit lors du choc avec une décélération plus petite.

Une démonstration plus générale pourrait d'ailleurs se faire selon le même principe sur un cas général de courbes d'accélération quelconques en approchant les courbes de fonctions d'accélération par des suites convergentes de fonctions en escalier ou encore dans une analyse du signal par une approche en séries de Fourrier.

Sans préjuger des aspects physiques, on peut donc constater que l'analyse mathématique à priori impose qu'à une décélération moins forte corresponde un déplacement négatif maximal $Z_{max}$ plus grand.

Et pourtant, une déformation du sol plus petite ou une pénétration lors du choc plus petite avec une décélération plus petite ne sont pas, séparément impossibles à obtenir.

En effet, le repère choisi est un repère fixe qui coïncide avec le surface du sol au moment de l'impact mais le sol peut se déformer et on a alors la relation, en choisissant des valeurs positives vers le bas pour simplifier la compréhension :

$$Z(t) = d(t) + P(t)$$

Le déplacement du mobile dans un repère absolu z(t) est égal à la somme du déplacement de la surface d(t) et du déplacement du mobile par rapport à la surface , c'est à dire la pénétration p(t).

Si par exemple on a une surface qui encaisse le choc de façon parfaitement élastique et sans pénétration, on aura z(t) = d(t) et à la fin de l'opération d(t) = 0 et du coup p(t) = empreinte.

D'une façon générale, on peut dire que l'on a une surface qui va subir une déformation plus ou moins élastique et que le déplacement final de la surface est égal au déplacement élastique nul plus un résidu de déformation plastique.

L'empreinte est égale à la somme du résidu de déformation plastique et de la pénétration et on a la relation :

$$Z_{max} = \text{déformation élastique}_{max} + \text{déformation irréversible} + \text{pénétration}$$

Si l'on considère la déformation élastique d'une part et la somme (déformation irréversible + pénétration) d'autre part que l'on peut nommer enfoncement par rapport à la surface libre, on a z(t) = d(t) + enfoncement (t).

Une difficulté d'interprétation de la seule courbe d'accélérométrie z"(t) est précisément que l'on mesure la somme d"(t) et de p"(t) alors qu'on voudrait évidemment connaître chacune de ces courbes pour savoir ce qui se passe réellement.

Cependant on peut décomposer le mouvement de la surface comme la somme des déformations élastique et irréversible, et par définition on a :

$$Z_{max} = \text{déformation élastique+ déformation irréversible}$$

Toutefois, quand on enlève le mobile, il reste une empreinte qui obéit à la relation établie ci dessus et qui montre que l'empreinte est un bon indicateur qui intègre la capacité du sol pendant tout le choc à résister à l'enfoncement.

$$\text{Empreinte} = Z_{max} - \text{déformation élastique} = \text{déformation irréversible + pénétration}$$

**III-2-B-2 Relations décélération du mobile - vitesse de restitution, énergie restituée, coefficient de restitution.**

En reprenant sans la développer à nouveau l'analyse précédente, on constate :

- qu'à tout instant on connaît la vitesse du mobile par rapport à un repère fixe, en intégrant l'accélération avec une vitesse initiale connue,
- qu'à tout moment on connaît l'altitude absolue du mobile (somme de la déformation du sol et de l'enfoncement du mobile dans le sol) en intégrant la vitesse, avec une position initiale connue au moment du choc.

Ainsi, on connaît à la fois la vitesse du mobile quand il remonte vers le haut après avoir été arrêté par la décélération : cette vitesse donne l'énergie cinétique de restitution :

$$1/2 \ m \ V^2.$$

Comme on a la mesure simultanée des vitesses et du temps, on peut en déduire la courbe énergie cinétique absorbée et restituée en fonction du temps et cela permet d'avoir accès à la notion de restitution et à la notion plus intuitive de « vitesse du terrain ». Le coefficient de restitution est partiellement intrinsèque et partiellement extrinsèque dans la mesure où la restitution effective est l'énergie cinétique restituée avant que le pied n'ait quitté la position qui lui permet de profiter de cette énergie et le coefficient est le rapport entre cette énergie cinétique et l'énergie cinétique du mobile au moment initial de l'impact.

Cette mesure accélérométrique permet donc de comparer entre eux des terrains en termes de performance même si l'analyse en est délicate en ce ses que le coefficient de restitution dépend à la fois du sol et du mouvement du sportif.

Ainsi, la mesure accélérométrique suffit à déterminer la réaction du sol mais le critère d'évaluation doit intégrer une durée efficace qui met également en jeu une connaissance du mouvement sportif.

**III-2-B-3 Relations décélération du mobile - déplacement du mobile**

En reprenant sans la développer à nouveau l'analyse précédente, on peut avoir à tout moment la force exercée par le sol sur le mobile et le déplacement.

Si d'une part, comme ce serait le cas dans du sable sec pur le déplacement était la somme d'un déplacement nul du sol et d'un enfoncement par rapport au sol, cela permettrait d'avoir une courbe de la force par rapport à l'enfoncement.

Dans les faits, comme il a été dit plus haut, on ne connaît pas à tout instant la répartition entre déformation du sol et pénétration du mobile, il n'est pas possible de connaître de façon exacte la résistance à l'enfoncement du seul fait de la mesure accélérométrique.

Toutefois il est possible de déduire de l'empreinte finale et de la courbe une résistance minimale à l'enfoncement qui peut dans certains cas suffire à caractériser une résistance suffisante. Si par exemple la masse est lourde et la hauteur initiale de lâcher suffisante pour avoir une forte énergie cinétique et que le sol restitue assez d'énergie pour remonter rapidement le mobile à la surface, on a la preuve d'une résistance à la pénétration supérieure aux forces mesurées qui se sont exercées pendant l'ensemble du mouvement.

De façon moins précise, on peut considérer qu'une petite empreinte est significative d'une forte résistance à l'enfoncement.

Il existe toutefois une difficulté de principe et méthodologique si l'on considère l'effet de résilience.

Pour illustrer cette difficulté, il suffit de prendre l'exemple d'un sol par hypothèse totalement résilient : lors du choc, le sol s'écrase complètement et ne remonte pas tant que le mobile est présent sur le sol mais le sol reprend sa place dès que le mobile est enlevé.

L'analyse de la courbe accélérométrique prend en compte ce cas puisque en intégrant deux fois, on constatera que tout s'immobilise avec un mobile enfoncé de la valeur de l'écrasement.

Si, cependant on enlève le mobile pour mesurer l'empreinte, on aura une empreinte nulle car le mobile ayant disparu, le sol reprend sa place « en un éclair ». Pour cette raison, la courbe accélérométrique donne une partie de l'information concernant l'absence de performance mais l'absence d'empreinte mesurée est une autre information donnant le fait que le sol ne va pas être détérioré par poinçonnement et la différence entre les deux mesures donne la part de déformation (plus ou moins) irréversible du sol.

**III-2-B-4 Analyse générale d'un sol réagissant en deux phases bien distinctes d'amortissement et de résistance, représenté par trois paramètres (choc, performance, résistance)**

Cette première approche consiste à envisager le problème dans son cadre sportif spécifique en considérant que le signal d'accélérométrie complet d'un sol soumis à une séquence d'effort du fait de la pratique de ce sport est évidemment plus complexe que le signal d'un mobile tombant une seule fois et à la verticale. Dans le cas d'un cheval au galop ou d'une poussée de rugbymen dans une mêlée ou d'une foulée de footballeurs, le sol est soumis d'abord à un choc lors de la réception et ensuite seulement à une propulsion (galop) ou une poussée (mêlée) qui est le facteur de destruction de la pelouse, ce qui n'est généralement pas le cas de la phase de réception (sauf dans le cas du galop ou de la réception après obstacle).

En fait, soit on est dans le cas d'un sol performant lors d'un effort bref comme la foulée du pied dans une course et l'analyse précédente de (gmax, empreinte théorique) = (faible, faible) est l'objectif idéal à atteindre, soit on accepte un sol peu performant par rapport à l'action et il faut au minimum pouvoir commencer par une décélération faible et basse fréquence et poursuivre ensuite par une réaction sans déformation ni travail du sol et qui permet, elle, la meilleure restitution possible de l'énergie de propulsion.

Ceci est plus facile à atteindre dès lors qu'il s'agit de deux phases successives bien distinctes : réception et propulsion.

On a deux situations typiques dans lesquelles une telle analyse peut être la plus pertinente :

1er cas : terrain de football à faible performance

C'est le cas par exemple d'un sol en synthétique trop dur que l'on « bourre » d'éléments résilients pour amortir le choc. Le résultat de cette résilience est de diminuer l'intensité du choc par une courbe qui « perd du temps » avec un premier écrasement à faible pouvoir de décélération qui absorbe une partie de l'énergie cinétique, le reliquat d'énergie cinétique étant ensuite absorbé de façon brutale mais avec un décalage dans le temps. On a une absence de restitution d'énergie par la partie résiliente qui ne peut restituer l'énergie qu'à retardement tandis que le choc dur n'est pas restitué non plus car le pied a eu le temps de passer en phase active et s'en va trop tôt pour récupérer l'énergie du choc, qui de toutes façons est plus traumatisant à haute fréquence que récupérable.

La mesure accélérométrique indique une forte empreinte théorique du fait de la résilience qui ne remonte pas le mobile au niveau du sol, ce qui n'empêche pas le terrain de récupérer sa planéité après le départ du pied.

La question de savoir si le sol est résistant aux agressions ne peut donc pas être résolue en lisant la courbe accélérométrique.

Il convient donc à l'évidence dans ce cas de représenter le terrain par trois paramètres :

- intensité du choc,
- performance lors du choc,
- résistance ultérieure aux agressions.

C'est la même situation avec un sol qui se montre très souple pendant le choc avec ou sans résilience et qui va être soumis ensuite à un très fort effort de cisaillement : il se peut que les mécanismes de résistance au cisaillement n'aient pas eu le temps de se manifester pendant le choc et se révèlent à ce moment là seulement ou au contraire qu'un terrain résistant à des efforts verticaux courts ne puisse pas résister à une mêlée.

D'une façon générale, l'étude en deux phases distinctes des trois paramètres ci dessus doit toujours être faite pour contrôler, estimer et comparer les terrains entre eux car elle répond aux questions fonctionnelles de base du sol soumis à une utilisation spécifique. D'autre part cette analyse ne repose pas, comme c'est le cas de l'analyse ci dessous, sur une hypothèse de corrélation entre supposés paramètres d'état, à vérifier en parallèle.

**III-2-B-5 Représentation idéale d'un sol dans un diagramme (g$_{max}$, empreinte théorique)**

Malgré ce qui vient d'être dit, il existe des relations entre les paramètres mesurés et l'utilisation de ces corrélations peut permettre une représentation en deux paramètres qui est bien préférable.

La seule restriction est la nécessité en parallèle de vérifier que les corrélations permettent de considérer que cette représentation est suffisante pour évaluer l'intégralité des aspects mécaniques.

Compte tenu des analyses générales qui précèdent, il est intéressant en première approche de considérer comme deux nombres représentatifs d'un phénomène très complexe le couple

(gmax, empreinte théorique), en recherchant à obtenir de façon idéale le positionnement :

$$\text{(gmax, empreinte théorique)} = \text{(petit, petit)}$$

On saisit bien qu'un couple (gmax, empreinte théorique) dont le premier terme est faible et le second terme est faible également correspond à l'idéal recherché, pour une énergie d'impact la plus grande possible, c'est à dire une masse et une hauteur de lâcher les plus importantes possibles.

Si l'on ne considère que l'empreinte théorique obtenue en intégrant deux fois la courbe accélérométrique, cela permet de considérer la résilience comme un enfoncement.

Comme gmax faible donne $Z_{max}$ fort, il faut donc avoir une déformation élastique très importante aussi pour que la différence, c'est à dire l'empreinte soit faible, elle aussi.

Si l'empreinte théorique est faible, cela signifie que la pénétration est encore plus faible (ou égale si on ne considère pas la déformation irréversible de la surface).

$$\text{Donc (gmax, empreinte théorique)} = \text{(faible, faible)}$$

signifie que

$$\text{(gmax, élasticité)} = \text{(faible, fort)}$$

Or, on cherche sur le plan fonctionnel à avoir une caractérisation

$$\text{(gmax, résistance à l'enfoncement)} = \text{(faible, fort)}.$$

On peut considérer que la mesure d'un mobile tombant avec une vitesse rapide permet en effet de tester ces deux aptitudes et qu'une mesure (gmax, empreinte théorique) = (faible, faible) manifeste en effet par une empreinte théorique faible que le sol a été capable non seulement d'arrêter le mobile sans choc mais encore d'avoir mobilisé une capacité de résister à la pénétration malgré des forces importantes et pendant un temps long.

Or ce que l'on attend des surfaces sportives est là : on veut en même temps un sol non dur, c'est à dire gmax faible et on veut aussi une résistance à l'enfoncement forte pour avoir un sol qui ne soit pas « labouré » par l'utilisation sportive.

On vient de montrer que c'est ce qu'on obtient quand on observe (gmax, empreinte théorique) = (faible, faible) .

Rappelons cependant que sur le plan purement mathématique, le fait que l'empreinte théorique est faible ne signifie pas a priori que le retour est rapide.

Notons ensuite qu'il est en revanche possible de calculer ce retour pour le vérifier sur la courbe accélérométrique.

Ainsi sur le plan mathématique, la notion de performance n'est pas directement mesurée dans le seul couple (gmax, empreinte théorique).

Toutefois, au plan de la mécanique du sol, dans le cas où l'empreinte théorique est faible, cela signifie que le sol a fonctionné de façon élastique et sans enfoncement par rapport au sol. Dans ce cas, les critères mécaniques qui rendent le sol élastique et résistant sont d'expérience bien corrélés à ceux qui donnent un sol performant, d'une performance caractéristique du sol en question, quand les contraintes ne dépassent pas sa capacité de comportement purement élastique.

Pour cette raison, en considérant qu'une empreinte théorique est d'autant plus faible que le sol est élastique et à retour rapide, cela permet de représenter le comportement d'un sol sur un diagramme en deux dimensions seulement pour pouvoir les comparer : un diagramme (gmax, empreinte théorique) permet d'avoir une évaluation pertinente des terrains.

On peut en effet constater que chaque terrain a une relation intrinsèque caractéristique entre ces deux paramètres, déterminant une sorte de courbe d'état, paramétrable par les facteurs d'influence propre à chaque type de terrain.

Dans le cas des terrains granulaires, et notamment des terrains stabilisés et des terrains en gazon naturel, la teneur en eau est le principal paramètre de la courbe d'état et l'on a une très bonne corrélation, pour un terrain donné entre la teneur en eau et le point sur la courbe caractéristique du terrain dans un diagramme (gmax, empreinte théorique)

Aussi, malgré la différence mathématique entre les notions de restitution rapide et de remontée sans enfoncement, mais en prenant en compte les relations existant entre ces paramètres du fait du mode de fonctionnement physique des sols, on peut estimer qu'une mesure (gmax, empreinte théorique) = (faible, faible) est suffisante dans la pratique pour caractériser un bon terrain.

Cependant, la courbe accélérométrique permet de vérifier, et il faut le faire pour des terrains d'un type nouveau, qu'est bien vérifiée l'hypothèse faite, selon laquelle vitesse, performance et coefficient de restitution sont bien corrélés à l'empreinte théorique avec un coefficient de restitution d'autant meilleur que l'empreinte théorique est faible.

Sur le plan du principe mathématique, on voit déjà que c'est possible et qu'un couple simple de deux nombres mesurables à partir de la seule expérience d'un mobile lâché d'une hauteur fixe (gmax, empreinte théorique) peuvent constituer un bon critère d'évaluation.

**III-2-C Inconvénients mécaniques des terrains dans l'état de la technique**

**III-2-C-1 Inconvénients des synthétiques avec ou sans résilience ajoutée et des sols non granulaires ou collés ou tassés**

Il a été vu dans l'analyse ci dessus en une seule phase qu'il est idéal de pouvoir avoir (gmax, empreinte) = (faible, faible).

On a vu que cette caractéristique suppose qu'on a un couple

```
(gmax, élasticité) = (faible, fort).
```

Justement, cette caractéristique physique est très difficile à atteindre. Le gazon naturel est la surface qui montre le meilleur comportement dans ce diagramme avec des courbes d'état situées en dessous des courbes d'état des sols synthétiques de tous types.

C'est le problème de toutes les surfaces artificielles qui ont une déformation élastique reposant sur des liaisons mécaniques entre solides : une bonne élasticité se traduit toujours par des réponses à haute fréquence et grande amplitude de la décélération en réaction aux chocs.

Aussi, la réponse apportée par les synthétiques consiste à répondre différemment en deux phases.

On a trouvé de remédier au problème des chocs trop forts en incorporant des surfaces constituées d'éléments résilients qui sont incluses en surface d'une surface dure ou en sous-couche d'une telle surface. Ces éléments résilients absorbent une partie du choc mais ne restituent pas l'énergie (la résilience a lieu après le départ du pied). Ces solutions qui donnent un confort accru mais fonctionnent selon l'un des deux schémas possibles qui consistent :

- soit à retarder le problème par une phase courte d'amortissement sans importante perte d'énergie cinétique (faible décélération par temps court) et suivie d'une phase d'appel qui est quasiment semblable à la situation sans résilience. Cette faible perte de temps ne modifie pas le comportement dur de la surface mais apporte toutefois une différence non négligeable : La courbe accélérométrique a une première phase avec faible accélération pendant que le mobile descend d'une hauteur supplémentaire de 1 cm par exemple, ce qui laisse le temps à l'influx nerveux de prévenir le sportif qu'il a atteint la piste et lui permet de réagir de façon active mais ne permet pas de diminuer significativement la vitesse d'attaque de la phase 2 ;

- soit au contraire à avoir une phase longue d'amortissement jusqu'à diminuer la vitesse de façon significative : temps long indispensable pour compenser une faible décélération et avec une amplitude de déformation nécessairement très importante. Dans ce contexte, on obtient des surfaces connues comme lentes et fatigantes et les joueurs compensent cette lenteur par des efforts musculaires accrus qui se traduisent en fatigue puis souvent en blessures.

Certes, l'adjonction d'éléments résilients est un bon moyen d'apporter une souplesse, surtout dans l'axe vertical car cela ne compense pas automatiquement le blocage en cisaillement. Mais l'expérience des gazons synthétiques montre que cela n'empêche pas la surface d'être dure et que l'impression de souplesse créée par une forte proportion d'éléments résilients dans un sol à très forte résistance au cisaillement horizontal donne un comportement déséquilibré qui gêne le sportif et crée des blessures musculaires.

**III-2-C-2 Inconvénients des gazons naturels et des sols granulaires**

De façon visuelle, dans un graphe avec en abscisse l'empreinte théorique et en ordonnée le pic d'accélération où sont reportées des mesures de différents terrains, les stabilisés sont placés très haut près de l'axe des ordonnées (faible empreinte théorique mais choc brutal et élastique). Les synthétiques sont un peu plus bas (plus d'amortissement et avec des empreintes théoriques fortes (emploi de granulé et sous-couches résilientes). Les gazons naturels sont plus bas que les synthétiques et plus près de l'axe des ordonnées (ils réagissent de façon performante avec une seule réaction en une seule phase très amortissante sans choc du fait de granulés qui peuvent jouer les uns par rapport aux autres avec des forces d'opposition qui travaillent sans bloquer pendant une course assez importante et une élasticité due aux racines de gazon. Malheureusement, les points du gazon sont très étalés et le gazon naturel est trop dur quand il est sec et l'empreinte théorique est beaucoup trop grande quand il est mouillé et seul son comportement de teneur en eau médiane est satisfaisant.

Dans la pratique, on sait bien qu'un gazon naturel a une décélération forte et une empreinte faible quand la teneur en eau est faible et au contraire une décélération faible et une empreinte forte quand la teneur en eau est élevée en passant par un compromis convenable à teneur en eau modérée. Mais, d'une part, ce compromis peut être amélioré et, d'autre part, la sensibilité à la teneur en eau est trop forte avec des améliorations par inclusions. Il est donc souhaitable d'obtenir un couple (gmax, empreinte théorique) = (plus faible, plus faible) que dans un gazon naturel normal.

On souhaite également que la courbe paramétrée par la teneur en eau soit une courbe presque concentrée sur un point au lieu d'une grande courbe.

Inconvénients des gazons fibrés connus

Dans le cas des fibres et autres inclusions faites dans les substrat de gazon, les différentes solutions mises en oeuvre dans l'état de l'art antérieur n'ont pas reconnu que le gazon naturel a un comportement mécanique caractérisé par une forte cohésion apparente et un angle de frottement modéré et que le sol a une capacité d'absorption d'énergie importante du fait que les racines et les grains attachés aux racines par capillarité peuvent facilement se déformer du fait de la souplesse et de l'absence de contraintes rigides au déplacement.

Si on considère que le travail du sol est égal à la somme des travaux des particules le composant et que le travail de chaque particule est égale au produit de la force s'opposant au déplacement par le déplacement lui même, on comprend qu'il faut des forces qui s'opposent, certes, mais ces forces ne doivent pas bloquer le mouvement car sinon elles ne travaillent pas.

C'est ce qui se passe en particulier dans les sables fibrés (avec ou sans gazon) avec des fibres plus épaisses que la porosité : les grains sont obligés de s'écarter pour laisser passer la fibre lors du mélange et cela fait des ruptures de la cohésion du milieu. Pour cette raison, si on met peu de ces fibres, la portance diminue par perte du principal facteur ; si on met une quantité importante de ces fibres, elles se connectent en réseau presque comme un filet type netlon® par exemple et les grains se répartissent comme dans des cases séparées entre elles par les fibres qui sont comme des frontières de rupture de cohésion. En revanche, les grains se tassent dans chaque case et le réseau des fibres se met en tension et bloque tout mouvement par frottement interne avec les grains. Il en résulte une forte portance mais un comportement qui n'est pus celui des racines dans un sol meuble où les grains sont libres de se délacer dans un certain espace mais les fibres se substituant aux racines pour bloquer tout mouvement du sable par un fort coefficient de frottement et une répercussion d'un effort ponctuel par les fibres à tout un réseau de grains qui s'opposent au mouvement en le bloquant tout de suite. Ainsi, le comportement d'un sable fibré avec ou sans gazon est celui d'un sable dont on a tellement augmenté le coefficient de frottement qu'il se comporte comme un concassé, parfaitement portant pour faire une route mais sans souplesse, indéformable et donc traumatique pour un sol sportif.

Ceci se traduit par un positionnement proche des terrains stabilisés, c'est à dire en haut et près de l'axe des ordonnées (faible empreinte théorique et fort choc d'accélération).

Un autre problème apparaît avec des sols durs à faible cohésion. On pourrait penser améliorer la dureté en compensant cette dureté par un apport d'éléments résilients comme on le fait dans le cas des synthétiques par apport de billes de caoutchouc. Cependant, en l'absence de cohésion et avec l'énergie du piétinement intensif, il y a une ségrégation entre billes de caoutchouc et sable dans le cas des synthétiques, de même qu'on observe une ségrégation entre fibres et sable dans le cas des sables fibrés. Les billes de caoutchouc ont une tension de surface très différente de la silice et cela aboutit à bloquer le drainage. Certes, l'adjonction d'éléments résilients est un bon moyen d'apporter une souplesse, surtout dans l'axe vertical car cela ne compense pas automatiquement le blocage en cisaillement mais l'expérience des gazons synthétiques montre que cela n'empêche pas la surface d'être dure et que l'impression de souplesse créée par une forte proportion d'éléments résilients dans un sol à très forte résistance au cisaillement horizontal donne un comportement déséquilibré qui gêne le sportif et crée des blessures musculaires.

### IV) But et solution de l'invention

#### IV-1 Le but de l'invention

Le but de l'invention est de pallier les différents inconvénients décrits jusqu'ici.

L'objectif de l'invention est plus particulièrement de proposer un sol en gazon naturel différent des autres sols sportifs par sa capacité à offrir un compromis idéal entre les deux paramètres amortissement et résistance, avec une faible sensibilité au paramètre humidité.

L'objectif, une fois connu un tel sol sportif, est de proposer également une chaussure adaptée à ce sol pour optimiser la performance du couple (chaussure, sol sportif) et de proposer un protocole de mesures et des critères d'évaluation permettant de contrôler les qualités objectives de ce sol sportif et de les comparer.

#### IV-2 La solution de l'invention

Le but de l'invention est atteint d'abord par un gazon naturel destiné à être soumis à des charges sportives et comportant une couche de feuilles et parties aériennes de graminées ou autres plantes gazonnantes naturelles et au moins une couche de substrat dans laquelle sont enracinées ces plantes.

Conformément à l'invention, la couche de substrat de ce gazon comprend une première partie de particules ayant la granulométrie d'un sable, comprise entre 80 μm et 3 mm, et des moyens conformés pour pouvoir assurer le maintien du niveau de la teneur en eau du substrat entre une valeur minimale et une valeur maximale compatibles avec le maintien des conditions de l'utilisation projetée et de l'état de la végétation constitutive dudit gazon.

Ces moyens sont choisis selon le climat moyen et les données géologiques, topographiques et climatiques du lieu où le gazon est installé. Ainsi, de tels moyens peuvent comprendre, par exemple, un drainage renforcé à équidistance adaptée à ces conditions et un arrosage automatique permettant de contrôler l'humidité du sol dans une plage déterminée, avec un facteur de risque statistiquement faible et acceptable.

La première partie de particules comprend du sable siliceux ou un granulat de nature différente, résiliente ou poreuse.

La nature du sable, indépendamment de sa granulométrie, peut être un mélange d'éléments de densités et propriétés différentes mais sa forme doit être la moins anguleuse ou la plus ronde possible.

Dans une première version, adaptée à la rénovation d'un terrain existant, le substrat est obtenu par mélange à la terre en place d'un substrat dont les éléments minéraux d'une dimension inférieure à 150 μm ou supérieure à 3 mm sont idéalement absents ou sinon en quantité infime ou négligeable.

Dans une version préférable de création de novo, le substrat est composé pour une part d'un squelette minéral à granulométrie de sable entre 80 μm et 3 mm mais comportant de préférence une part importante et qui peut être exclusive dans une version avantageuse de l'invention dans la plage 200 à 400 μm, de façon à favoriser la cohésion naturelle du substrat squelettique de base, en évitant pour cela les grosses granulométries qui créent une porosité de plus grande taille dans laquelle la part relative des forces de cohésion tient moins d'importance.

Dans une version préférable, les argiles et limons et dans une moindre mesure les sables fins entre 50 et 150 μm seront sinon interdits du moins très limités en proportion car ils donnent au substrat un comportement plus sensible aux légères variations d'humidité alors que dans le fuseau de 200 à 400 μm, les excès d'eau s'écoulent par granulométrie tandis que l'eau liée reste constante et donnent un comportement à la fois constant et essentiellement cohésif, ce qui est recherché. De façon idéale, le substrat doit pouvoir être utilisé dans la plage d'humidité telle que prévue et contrôlée par l'arrosage et le drainage pour faire des pâtés de sable qui se tiennent par cohésion même si une force modérée permet de les faire s'écrouler en l'absence de la « colle » typique de l'action des argiles, quand le sol est plutôt sec, l'effet de colle ne laissant pas assez de place au travail du sol lors d'un choc et se traduisant, pour une faible teneur en eau, par une dureté de sol non désirée dans la présente invention, tandis qu'au contraire, cette action des argiles se traduit par un gonflement de ces dernières qui réduit la résistance du sol à l'arrachement quand la teneur en eau est élevée, effet non désiré également dans le cadre de la présente invention.

Un autre aspect est la santé du gazon dont les feuilles ont un rôle très important pour amortir les pieds, créer une surface assez glissante mais pas trop, amortir le roulement du ballon et protéger le sol. Or, le gazon est d'autant plus vigoureux en surface et résistant aux maladies que le substrat est aéré et que le chevelu est développé. Le choix de substrat est donc favorable à la fois à l'amélioration du comportement mécanique du sol et à la croissance et par conséquent à l'efficacité de la fonction mécanique du gazon.

Un autre aspect important de l'invention est d'utiliser un type de gazon approprié, sur le plan botanique, au climat, au sol et à l'usage.

Dans ce substrat, enfin, sont ajoutées, dans une version préférable de l'invention, des inclusions qui sont un aspect caractéristique particulièrement avantageux de la présente invention.

Une étude détaillée plus loin expose le principe de choix de ces inclusions et indique quelques exemples d'inclusions, caractéristiques de l'invention, qui donnent au substrat des comportements mécaniques avantageux et inconnus auparavant, à savoir une amélioration de la résistance sans perte ou même avec augmentation de la souplesse.

L'invention concerne aussi un substrat ayant l'une au moins des caractéristiques suivantes :

- le substrat est destiné à servir de support de culture à du gazon pour constituer une surface sportive engazonnée mécaniquement performante, caractérisé :
- premièrement en ce qu'il comprend une première partie de particules minérales ou artificielles (4) ayant la granulométrie d'un sable, comprise entre 80 $\mu$m et 3 mm, constituant le squelette du substrat et représentant entre 25% et 99,9% du poids total du substrat,
- deuxièmement en ce qu'il comprend au moins une seconde partie de particules (5) mélangées et incorporées à ce squelette, chacune de ces particules (5) ayant au moins une de ses dimensions largement supérieure à la granulométrie des particules sableuses(4), de sorte qu'elle se trouve au voisinage ou au contact d'une multitude de ces dites particules sableuses (4), le dosage de ces particules (5) étant au moins égal à 2 grammes par litre de substrat,
- troisièmement en ce que le substrat comprend une 3$^{ième}$ partie constituée par la fraction organique du substrat qui peut être éventuellement absente et qui représente en tout état de cause une proportion en volume comprise entre 0 % et 50 % du volume total du substrat, cette troisième partie étant intimement mélangée à la première partie,
- quatrièmement en ce que le substrat comprend une 4$^{ieme}$ partie constituée par les particules granulaires résilientes non minérales ayant la granulométrie d'un sable entre 80 $\mu$m et 3 mm, qui peut être éventuellement absente et qui représente en tout état de cause une proportion en volume comprise entre 0 % et 75 % du volume total du substrat, cette quatrième partie étant intimement mélangée à la première partie,
- cinquièmement en ce que le substrat a, au moins pour certaines valeurs de la teneur en eau du substrat, une cohésion interne supérieure d'au moins 20% à celle du même substrat avec la même teneur en eau mais sans les inclusions (5), en prenant comme définition classique de la cohésion interne la force de cisaillement à exercer pour amorcer un glissement interne, diminuée de la force de frottement interne selon la formule $\sigma = C + (p - U) \sin a$, où C est la cohésion interne, $\sigma$ étant l'effort de cisaillement nécessaire pour vaincre les forces de cohésion et de frottement et créer un glissement interne, p étant la pression exercée sur le substrat, U la pression interstitielle de l'eau de sorte que p - U est la pression interne des forces normales réciproques exercée par les éléments du substrat l'un sur l'autre et a l'angle de frottement interne qui détermine la force de frottement, proportionnelle à la pression interne par la formule de Coulomb : force de frottement = (p - U) sin a,
- sixièmement en ce que ce substrat, pour répondre aux exigences requises en terme d'efficacité et d'innocuité pour un support de culture dans lequel doit pousser un gazon qui doit y puiser l'eau et les nutriments dont il a besoin, a = d'une part une concentration en éléments chimiques solubles inférieure aux seuils déterminés par les normes des supports de culture, en particulier pour les produits connus pour être toxiques pour le gazon que sont la simazine, l'atrazine, la créosote, les acides phénoliques, les acides tanniques, le chlorure de sodium et le bore et a = d'autre part une valeur supérieure à 7 % pour son coefficient volumique de rétention d'eau, diminué le cas échéant du coefficient volumique d'occupation par d'éventuelles substances présentes dans le substrat et occupant dans la porosité la place normale de l'eau capillaire, comme par exemple de l'huile ou de la paraffine, classiquement utilisées pour augmenter la cohésion des sols sportifs en sable fibré non engazonné, ce coefficient de rétention d'eau par unité de volume apparent de substrat étant égal à la porosité totale du substrat diminuée de la porosité de drainage, cette dernière étant elle même égale, par unité de volume , au volume d'eau drainée par gravité ;
- le substrat est caractérisé:
- d'une part en ce que les inclusions (5) du substrat sont capables de bloquer ledit substrat soumis à un effort de cisaillement par l'effet combiné de leur résistance interne à la compression et à l'élongation et des forces de frottement qu'elles peuvent exercer entre elles et sur les grains (4) du squelette sableux du substrat, de sorte que le substrat résiste à certains efforts de cisaillement alors que le même substrat dans les mêmes conditions mais sans les inclusions n'y résiste pas,
- d'autre part en ce que, lorsque le substrat est soumis à une sollicitation mécanique de cisaillement, ces inclusions commencent pendant une première phase par se déformer dans le sens de l'élongation à l'intérieur du squelette sableux (4) avant d'être mises en tension et que leur mise en tension n'aboutisse à une force d'opposition au cisaillement du substrat, de telle sorte que le rapport $\sum_i |\varepsilon_i|/\sum_i |f_i|$ entre la somme des valeurs absolues de ces déformations d'inclusions et la somme des forces positives d'opposition au cisaillement développées par ces mêmes inclusions par l'effet combiné de leur résistance interne à l'élongation et de leur frottement sur le squelette sableux (4) soit au moins 10 fois supérieur au même rapport avec un substrat fibré classique constitué d'un sable dans lequel sont incorporées des fibres non élastiques dont la section est supérieure à la porosité moyenne de ce sable, en définissant la déformation $\varepsilon_i$ d'une inclusion comme l'augmentation entre l'état initial au repos et l'état à l'instant t de la distance maximale entre les 2 points les plus éloignés de cette inclusion, cette déformation augmentant donc quand une fibre en lacet se tend ou quand une fibre élastique s'étire ;

- le substrat est caractérisé en ce que la première partie de particules
- est pratiquement exempte de fines sous forme de limon ou d'argile, les particules minérales de dimension inférieure à 20$\mu$m représentant moins de 5% en poids du substrat, et
- comprend au moins 30% et jusqu'à 100% en poids d'un sable :
- dont la granulométrie est comprise entre 200 $\mu$m et 400 $\mu$m,
- dont le coefficient de dureté est supérieur à 6 Mohs,
- dont la forme se rapproche autant que possible de la forme sphérique et lisse, avec un coefficient de sphéricité entre 1 et 1,1, ce coefficient de sphéricité représentant le rapport moyen entre la surface réelle d'un grain et la surface de la sphère ayant le même volume ;
- le substrat est caractérisé
- premièrement, en ce qu'il existe une partition de l'ensemble des dimensions granulométriques de ses particules minérales (4) en un ou n intervalles disjoints $I_i$, i allant de 1 à n et n supérieur ou égal à 1, ce qui signifie que chaque grain a sa dimension granulométrique qui appartient à un et à un seul de ces intervalles Ii,
- deuxièmement, en ce que, dans l'un au moins de ces intervalles $I_i$, la granulométrie est répartie de façon relativement homométrique autour d'un pic isolé de dimension $\lambda_i$, avec d'une part un coefficient d'uniformité inférieur ou égal à 1,5 dans l'ensemble des particules ayant leur dimension granulométrique dans l'intervalle $I_i$ ce coefficient étant défini par le rapport $d_{60}\,i/d_{10}\,i$ , $d_{60}\,i$ étant l'ouverture des mailles laissant passer 60% des grains ayant leur dimension granulométrique dans l'intervalle $I_i$, et $d_{10}\,i$ étant l'ouverture des mailles ne laissant passer que 10% des grains ayant leur dimension granulométrique dans l'intervalle $I_i$, et avec d'autre part l'intervalle $[2/3\,d_{10}\,i\,,\,1,5\,d_{60}\,i\,]$ inclus dans l'intervalle $I_i$.
- le substrat est caractérisé
- premièrement, en ce qu'il existe une partition de l'ensemble des dimensions granulométriques de ses particules minérales (4) en n intervalles disjoints $I_i$, i allant de 1 à n et n étant supérieur ou égal à 2, ce qui signifie que chaque grain a sa dimension granulométrique qui appartient à un et à un seul de ces intervalles $I_i$,
- deuxièmement, en ce que, dans deux au moins de ces intervalles $I_i$, que l'on peut nommer $I_1$ et $I_2$ en choisissant l'indexation pour que les éléments de $I_2$ soient plus grands que ceux de $I_1$, la granulométrie est répartie de façon homométrique autour d'un pic isolé de dimension $\lambda_i$, avec d'une part, pour i=1 et pour i =2, un coefficient d'uniformité inférieur ou égal à 1,5 dans l'ensemble des particules ayant leur dimension granulométrique dans l'intervalle $I_i$ et avec d'autre part, pour i=1 et pour i=2, l'intervalle $[2/3\,d_{10}\,i\,,\,1,5\,d_{60}\,i]$ inclus dans l'intervalle $I_i$,
- troisièmement, en ce que $\lambda_2 > 4\,\lambda_1$ de sorte qu'une ou plusieurs particules ayant leur dimension granulométrique dans l'intervalle $I_1$ puissent entrer dans la porosité constituée par les particules ayant leur dimension granulométrique dans l'intervalle $I_2$,
- quatrièmement en ce que le volume apparent qu'aurait l'ensemble des grains du substrat dont la dimension est inférieure à $d_{60\,1}$ si ils étaient séparés du reste du substrat est inférieur à la porosité totale qu'aurait l'ensemble des grains du substrat dont la dimension est supérieur à $d_{10\,2}$ si ils étaient séparés du reste du substrat ;
- le substrat est caractérisé en ce qu'il comprend au moins un ingrédient dans la famille comportant :
- des granulats poreux comme du corail ou des minéraux d'origine volcanique comme pierre ponce, zéolithe, pouzzolane,
- des granulats résilients et notamment des granulats résilients en liège cru ou en liège cuit d'une granulométrie fine entre 500 $\mu$m et 3 mm,
- des granulats résilients grossiers d'une granulométrie supérieure à 5 mm et pouvant atteindre plusieurs centimètres,
- des granulats enrobés d'un produit augmentant la cohésion entre grains comme par exemple du latex ou une paraffine, ce produit étant choisi non toxique pour la croissance du gazon et son dosage laissant une place suffisante, compte tenu de la porosité, pour l'eau capillaire nécessaire à la croissance du gazon,
- un agent mouillant pelliculant certains grains et modifiant les tensions de surface, permettant à la fois une augmentation des forces de cohésion par rapport à celles que l'on aurait dans le même substrat sans agent mouillant et une amélioration de la réserve utile en eau favorable à la culture du gazon,
- des inclusions allongées, visant à bloquer les grains de sable (4) du squelette du substrat, comme par exemple des fibres, naturelles ou artificielles, de préférence souples ou élastiques ou résilientes ou encore des pailles ou même des bandelettes,

- des fibres ayant une capacité d'élongation élastique, visant à permettre au sol soumis à une sollicitation mécanique de se déformer plus et donc d'amortir une plus grande part du choc avant d'être bloqué et visant aussi une restitution d'énergie dans la phase de rebond et un meilleur retour du sol à sa position initiale,

- des inclusions, fibres, non tissés ou tissus, constituées de matières synthétiques comme le nylon ou le polypropylène,

- des inclusions, fibres, non tissés ou tissus, constituées de matières naturelles organiques lentement biodégradables qui peuvent être d'origine végétale comme le chanvre, la fibre de coco ou de cacao, le lin, le coton, les fibres de bois ou de chaume, à l'état naturel ou traitées contre une biodégradation rapide, notamment par thermo-modification et en particulier par rétification ou peuvent être d'origine animale comme les cheveux ou poils divers et notamment laine ou crin de cheval,

- des éléments organiques ayant subi un compostage poussé et exempts de mauvaises graines et de résidus toxiques avec une granulométrie fine et homométrique que possible et avec une flore bactérienne aussi riche et active que possible comme par exemple du lombricompost obtenu à partir de fumier de bovin ou encore du lin composté ;

- le substrat a une composition qui vise à permettre aux divers ingrédients de coopérer entre eux pour permettre au substrat de se déplacer dans une première phase puis de se bloquer quand il est soumis à une sollicitation mécanique de cisaillement, de telle sorte que de façon idéale le sol soumis à une sollicitation mécanique bouge dans un premier temps comme en l'absence d'inclusions et se bloque ensuite par l'effet des inclusions, grâce à l'effet combiné d'une ou plusieurs des caractéristiques du squelette et des inclusions que sont pour les premières la répartition granulométrique, la forme ni anguleuse ni plate des grains ainsi que leur tension de surface et leur coefficient de frottement modéré et que sont pour les secondes primo leurs caractéristiques géométriques par rapport à la géométrie des grains, notamment la petite taille des sections de fibres par rapport aux pores du squelette sableux, secundo leurs caractéristiques rhéologiques de capacité d'écrasement ou d'allongement élastique, tertio leurs caractéristiques de surface de rugosité et de tension de surface et quarto leur faible densité pondérale, et il est caractérisé en ce qu'il comprend au moins un mode de coopération entre ingrédients lié à une relation fonctionnelle ou de dosages respectifs entre ingrédients dans la famille comportant les modes suivants:

- mode de coopération entre fibres fines et allongées par rapport aux dimensions des grains du squelette(4) du substrat, de telle sorte que d'une part ces fibres, du fait de leur longueur importante, se trouvent par leur mélange avec les grains du squelette(4) au contact ou au voisinage d'un très grand nombre de ces grains de sable, ces nombreux grains étant ainsi reliés entre eux par les forces qu'ils exercent individuellement sur la fibre en question et les forces de réaction de ladite fibre et que d'autre part la section de la fibre est petite en comparaison de la taille des pores, de sorte qu'une telle fibre s'incorpore dans le substrat en faisant des lacets entre les grains et qu'elle a la place de se déplacer à l'intérieur de la porosité avant d'être plaquée contre un grain lorsqu'elle se tend sous l'effet d'un cisaillement du substrat, ce qui lui laisse un potentiel important d'allongement avant d'être tendue , avant que la dite fibre, une fois tendue, n'exerce par frottement sur les grains à son contact une force de blocage s'opposant à la poursuite du mouvement, du fait de sa propre réaction interne à l'allongement,

- mode de coopération entre fibres fines et allongées par rapport aux dimensions des grains du squelette (4) du substrat, dans lequel au moins 80% des pores du squelette (4) ont une dimension supérieure à 10 fois la section des fibres fines coopérant avec eux,

- mode de coopération entre fibres fines et allongées par rapport aux dimensions des grains du squelette (4) du substrat, dans lequel plus de 30% de la partie (4) du squelette est constituée d'un sable dont la granulométrie est entre 100 $\mu$m à 400 $\mu$m, les fibres ayant un diamètre compris entre 5 $\mu$m et 30 $\mu$m et une longueur entre 3 mm et 100 mm, pour créer des lacets à l'intérieur du sable, la dose des fibres étant comprise entre 5 et 50 grammes/litre de substrat,

- mode de coopération complexe entre sable, éléments grossiers élastiques ou résilients et inclusions bloquantes allongées formant des lacets entre des particules résilientes grossières, dans lequel la mise en tension de ces inclusions bloquantes allongées par l'effet du frottement du sable se déplaçant de façon divergente lors d'un cisaillement passe par l'écrasement préalable de ces particules résilientes,

- mode de coopération entre grosses particules résilientes d'une dimension supérieure à 5 mm et pouvant atteindre plusieurs centimètres et des fibres ou des bandelettes, suffisamment fines et longues par rapport aux particules résilientes et suffisamment nombreuses dans la constitution du substrat du sol, dans lequel lesdites fibres ou bandelettes font des lacets autour de plusieurs de ces grosses particules résilientes lorsque ces fibres ou bandelettes sont mélangées au substrat, de sorte qu'ils doivent écraser ces grosses particules avant de se tendre et de bloquer le substrat,

- mode de coopération entre sable, éventuelles inclusions allongées et inclusions comprennent des fibres ou bandelettes creuses ayant une capacité de travail par compression ou par élongation élastique, dans lequel lesdites fibres ou bandelettes creuses jouent à la fois un rôle de blocage une fois comprimés et allongés et un rôle d'amortisseurs dans la phase de compression élongation et peuvent également coopérer entre elles ou avec des inclusions allongées et travailler en sens inverse par son énergie interne à ramener le sol à sa position initiale,

- mode de coopération entre eau interstitielle, air interstitiel, sable et éventuelles inclusions dans lequel une partie des particules du substrat et en particulier les inclusions, compte tenu d'une combinaison de leur répartition spatiale, de leur faible densité pondérale et de leur caractéristiques de surface et notamment de rugosité et de forte tension de surface se tient dans l'espace essentiellement par des forces de tension de surface sans que la gravité ne les plaque contre les grains au dessous d'eux et n'entraîne un frottement important contre ces grains dès qu'il y a déplacement interne dans le substrat,

- mode de coopération entre eau interstitielle, air interstitiel, particules sableuses (4) du substrat et une éventuelle fraction organique du substrat dans lequel les forces prépondérantes entre éléments solides du substrat sont essentiellement les forces exercées par l'air interstitiel sur l'eau interstitielle attachée au grains par les forces de tension de surface du fait de la répartition granulométrique dans laquelle les rayons des grains sont dans l'ensemble assez petits pour que les forces capillaires de cohésion, approximativement proportionnels pour un diamètre de grain supérieur à 100 $\mu$m à la surface de la sphère, soit $4\pi R^2$ (malgré un coefficient correcteur lié au rayon de courbure) l'emportent sur les forces gravitaires, proportionnelles au volume, soit $4/3 \ \pi R^3$ , ces forces de cohésion liées à la capillarite rendant possible, dans une large plage de teneurs en eau excluant l'état sec et l'état saturé, de mouler et faire tenir ce substrat en « pâté de sable » d'une hauteur supérieure à 30 cm par l'effet des seules forces de cohésion liées à la tension capillaire de l'eau sur les particules dudit substrat et que d'autre part ces mêmes grains soient dans l'ensemble assez grands, ronds, peu rugueux et peu angulaires pour que les forces de cohésion capillaires de cohésion de ce substrat sans inclusions et les forces de frottement interne soient assez faibles pour qu'une personne laisse une empreinte de plus de 1 mm en marchant dans un tel substrat épandu en couche de 20 cm sur un fond de forme drainant et tassé et se trouvant à l'état frais c'est à dire avec une teneur en eau obtenue en mouillant abondamment et en attendant que l'eau gravitaire soit évacuée ;

- le substrat sans les inclusions mais constitué de particules et d'une éventuelle fraction organique a une répartition granulométrique telle que

- d'une part les rayons des grains sont dans l'ensemble assez petits pour que les forces capillaires de cohésion, approximativement proportionnels pour un diamètre de grain supérieur à 100 $\mu$m à la surface de la sphère, soit $4\pi R^2$ (malgré un coefficient correcteur lié au rayon de courbure) l'emportent sur les forces gravitaires, proportionnelles au volume, soit $4/3 \ \pi R^3$, de telle sorte qu'il est possible, dans une large plage de teneurs en eau excluant l'état sec et l'état saturé, de mouler puis démouler et faire tenir ce substrat en « pâté de sable » avec une paroi verticale se tenant par cohésion capillaire sur une hauteur d'au moins 30 cm par l'effet des forces de cohésion liées à la tension capillaire de l'eau sur les particules dudit substrat,

- d'autre part ces mêmes grains soient dans l'ensemble assez grands, ronds, peu rugueux et peu angulaires pour que les forces de cohésion capillaires de cohésion de ce substrat sans inclusions et les forces de frottement interne soient assez faibles pour qu'une personne laisse une empreinte de plus de 1 mm en marchant dans un tel substrat épandu en couche de 20 cm sur un fond de forme drainant et tassé et se trouvant à l'état frais c'est à dire avec une teneur en eau obtenue en mouillant abondamment et en attendant que l'eau gravitaire soit évacuée,

- enfin, la conductivité hydraulique du substrat complet avec ses inclusions est supérieure à 5 cm / heure quand la teneur en eau est supérieure à 90 % de la saturation et supérieure à 2 cm/heure pour une teneur en eau supérieure à 80 % de la saturation ;

- la distribution des inclusions (5), fibres, non tissés ou tissus obéit à l'une des possibilités suivantes :

- les inclusions sont incorporées au substrat de façon individuelle et la distribution spatiale de leur dosage et de leur orientation spatiale dans toutes les directions est uniforme,

- les inclusions sont incorporées au substrat, regroupées en paquets et les fibres au sein d'un paquet ne sont pas parallèles et collées les unes aux autres comme dans une mèche mais leur orientation au sein d'un paquet est au contraire bien dispersée dans toutes les directions comme dans une pelote ou une touffe et ces pelotes sont elles même réparties de façon uniforme dans le substrat et suffisamment proches les unes des autres pour se constituer un maillage continu, la distance entre deux pelotes voisines étant faible par rapport à la taille des pelotes ou idéalement nulle en ce sens qu'un réseau continu de fibres permet de relier deux pelotes contiguës de telle sorte que le substrat apparaisse homogène à l'échelle macroscopique de 20 cm, même si la répartition mésoscopique des pelotes apparaît discrète à l'échelle microscopique, de façon comparable aux touffes de gazon qui ont des chevelus séparés les uns des autres mais proches et légèrement enchevêtrés.

- le substrat est capable d'amortir un choc par un déplacement interne dans un premier temps malgré les inclusions et de se bloquer avec restitution d'énergie dans un deuxième temps grâce aux inclusions, et caractérisé en ce que, si il est épandu sur un fond de forme et sur une surface suffisante pour pouvoir négliger les effets de bord, par exemple 1 mètre carré, et sur une certaine épaisseur représentative d'un substrat de gazon de sol sportif, par exemple 20 cm, puis mouillé et tassé pour simuler une surface sportive et qu'on laisse tomber un mobile d'une certaine hauteur sur cette surface pour observer l'action mécanique de cette surface sur le mobile, on constate, au moins dans certaines conditions expérimentales :

- d'une part, que la distance de décélération $\varepsilon_{max}$ parcourue par le mobile après le contact avec la surface et avant l'annulation de sa vitesse instantanée est au moins égale ou supérieure à la moitié de la distance de décélération du même mobile tombant sur une surface constituée dans les mêmes conditions avec le même substrat mais sans les inclusions (5) dans le substrat,

- d'autre part que l'enfoncement résiduel $\varepsilon_{résiduel}$, c'est à dire la distance parcourue par le mobile vers le bas après le contact avec la surface, c'est à dire la distance de décélération $\varepsilon_{max}$, diminuée de la distance de remontée ultérieure du mobile en sens inverse avant immobilisation complète, sous l'effet des forces de restitution d'énergie du sol, est au plus égal ou inférieur à 75% de l'enfoncement résiduel $\varepsilon_{résiduel}$ du même mobile tombant sur une surface constituée dans les mêmes conditions avec le même substrat, mais sans les inclusions (5) dans le substrat.

Ainsi, selon un autre mode de réalisation de l'invention, le gazon naturel comporte une seconde partie de particules choisie parmi des grains et des fibres ou d'autres types d'inclusions caractérisées par leur forme, leur dimension, leur rhéologie, leur densité, leur tension de surface et leur compatibilité bio-chimique avec la végétation du gazon et l'environnement, certaines de ces inclusions pouvant présenter une granulométrie ou des dimensions supérieures à la granulométrie de la première partie de particules afin de permettre au gazon et au sol de présenter en même temps une cohésion apparente supérieure et une souplesse supérieure à celle du même gazon non équipé de tels grains et/ou de fibres, d'autres inclusions et notamment des fibres pouvant être choisies au contraire pour leur finesse comparée à la taille de la porosité du même gazon non équipé de tels grains et/ou fibres mais en ayant une longueur très importante par rapport aux dimension de la granulométrie qui est presque négligeable par rapport à cette longueur.

Selon un autre mode de réalisation de l'invention, le gazon naturel comporte l'addition, définitive ou répétée à intervalle régulier sous forme d'arrosage, d'un agent mouillant pouvant augmenter la cohésion du substrat. L'arrosage du gazon par de l'eau additivée par un agent mouillant est conditionnée à son effet sur l'état de santé des gazons, qu'il peut notamment améliorer en diminuant les effets négatifs du feutrage naturel et en favorisant en même temps le piégeage de l'eau au niveau des racines et un meilleur drainage par augmentation de l'espace poral utile du fait que le film d'eau autour des grains est rétréci en épaisseur.

Le gazon est installé sur une surface d'accueil qui comprend au moins un fond de forme suffisamment plat sur lequel repose directement ou non le substrat dans lequel pousse l'herbe constitutive du gazon.

Selon différents modes de réalisation de l'invention, le gazon comprend également une éventuelle sous-couche sur laquelle le substrat repose et qui repose elle même sur le fond de forme de la surface directement ou sur des pieds et qui peut avoir une fonction de résilience ou de transport.

Selon différents modes de réalisation de l'invention, le gazon comprend également des éléments résilients apportant un comportement de résilience à l'ensemble.

En combinant des éléments résilients dans un système complexe où ces éléments sont reliés à d'autres par une combinaison innovante de cohésion et de frottement, on obtient une synergie procurant des possibilités de réalisation de gazons naturels et de surfaces engazonnées très avantageux avec des propriétés inégalées, notamment comparées à celles de gazons synthétiques.

La solution selon l'invention procure une surface dont la réaction mécanique comprend, après une éventuelle phase de résilience pure, une première phase à fort amortissement (réaction à forte élasticité et décélération soutenue à basse fréquence sans pic violent) et se poursuit par une seconde phase où le sol se durcit et offre une surface particulièrement performante et résistante pour la phase de propulsion.

L'invention procure ainsi un gazon naturel et une surface engazonnée en gazon naturel procurant tous les avantages d'une telle surface mais avec des caractéristiques de portance et de souplesse à la fois supérieures, prévisibles et stables tout au long de l'année avec la capacité de supporter une fréquentation estivale presque sans limite et hivernale très significativement augmentée par rapport à un gazon naturel ou même quasiment illimitée si on accepte de voir se détériorer pendant l'hiver le feuillage du gazon qui réapparaît toutefois au printemps, avec des caractéristiques sportives hivernales qui restent acceptables pour un terrain d'entraînement, même avec un gazon détérioré.

L'invention propose en outre un système sportif complet par une telle surface dont les caractéristiques sportives prévisibles sont adaptées aux besoins spécifiques des sportifs et de leur équipement (chaussures des joueurs ou sabots des chevaux et ballon) pour obtenir un ensemble de paramètres intrinsèques de portance, d'amortissement des chocs, et extrinsèques car dépendant aussi de l'équipement de glissance transversale et de résistance à la rotation d'une chaussure à crampon donnée ou d'un sabot ou du rebond et de la glissance d'un ballon donné qui soient connus et fiables avec une moyenne et un écart type connus à l'avance, indépendamment des conditions climatiques.

Si l'amortissement et la déformabilité au jeu du terrain sont intrinsèques du sol, on peut également considérer avec une démarche encore plus efficace l'ensemble du système sportif. Il est permis, au lieu de considérer le couple (sportif, chaussure) soumis à un sol donné, de considérer que le sportif est soumis à un couple (chaussure, sol) donné et il est donc utile de chercher une solution optimale de ce couple (chaussure, sol) non seulement en termes de glissance et rotation mais également en termes de choc et propulsion. La podologie sportive est une discipline en plein essor qui doit être intégrée à la démarche de recherche du sol puisque la podologie utilise des matériaux qui ne peuvent être définis que par rapport à la discipline sportive, le sol, et éventuellement ou idéalement le sportif considéré. Compte tenu de la sensation du sol qui diminue quand la résilience de la chaussure augmente et d'un besoin global d'amortissement, il est clair que la chaussure ne peut être définie de façon idéale qu'à partir de l'ensemble des paramètres du sol auxquels elle doit pouvoir s'adapter et un sol plus précisément défini permet donc une chaussure mieux ciblée.

L'invention est donc atteinte par la mise en oeuvre de différents moyens :

- un premier moyen est la constitution d'un gazon naturel selon des spécifications particulières,
- un deuxième moyen est l'incorporation au substrat d'inclusions caractérisées par le fait qu'elles déplacent trois caractéristiques intrinsèques mesurables dudit gazon naturel dans le sens :

  = d'une augmentation de la résistance, même au maximum de l'humidité autorisée par le système de contrôle intégré de l'humidité,

  = du maintien ou d'une amélioration de l'amortissement, même au minimum d'humidité autorisé par ledit système de contrôle intégré,

  = d'une diminution de l'écart type de ces deux paramètres en intégrant leur variation liée à l'humidité dans toute la plage d'humidité autorisée par le système de contrôle intégré de l'humidité, ainsi que leur variation spatiale, temporelle, d'homogénéité, d'état du gazon, d'usure.

Or, on sait par expérience qu'en règle habituelle, améliorer l'un se fait au détriment de l'autre.

Cependant on sait aussi qu'un gazon naturel poussant dans un substrat à l'état frais, c'est à dire avec une teneur en eau obtenue après un copieux arrosage, une fois que l'eau interstitielle gravitaire est évacuée, présente la meilleure surface sportive connue, en ce sens que l'amortissement est meilleur que dans les autres surfaces sportives.

Les moyens suivants visent :

- d'une part à cadrer l'ensemble des paramètres susceptibles de détruire l'équilibre désiré
- et d'autre part à prévoir, en plus du gazon directement installé à demeure, deux versions de ce gazon cultivé et conditionné sous une forme mobile à installer sur une surface pour être utilisable immédiatement à l'issue de l'installation.

La première version est un gazon prêt à être installé sur une surface adaptée sous forme de pavés à positionner entre des drains solides posés sur ladite surface selon un certain modus operandi.

La seconde sous forme de modules, qui peuvent être dotés de toutes sortes d'équipement les rendant autonomes, comme l'arrosage, le drainage et des moyens de chauffage et pouvant être assemblés rapidement selon un modus operandi prévu pour une installation rapide d'une surface immédiatement disponible pour la pratique du sport ou pour d'autres usages, par exemple des usages nouveaux, sur des surfaces planes quelconques. De tels surfaces et usages peuvent être, par exemple,

- une surface de circulation,
- une toiture plate, aussi appelée toiture terrasse,
- une surface engazonnée porteur d'un gazon usé ou peu esthétique,
- une surface de décoration, horizontale ou en pente,
- une surface d'exposition,
- une surface de circulation à l'intérieur d'un stand d'exposition et/ou entre des stands d'une exposition.

Les moyens mis en oeuvre selon l'invention concernent, autant que de besoin, tous les paramètres qui se sont avérés les paramètres limitants dans l'état de la technique actuel, en sachant qu'un seul paramètre défaillant peut ruiner l'ensemble :

- choisir un gazon naturel dans une composition de substrat minimisant la sensibilité à l'humidité,
- choisir une gamme d'humidité maximalisant la souplesse du gazon naturel en question,
- contrôler la plage de teneur en eau du substrat choisie, notamment par un drainage et arrosage approprié,
- améliorer le résultat en intervenant sur les facteurs climatiques (température, lumière),
- mettre des inclusions qui conservent au gazon naturel sa souplesse en ne modifiant pas la nature du comportement de base du gazon, essentiellement liée à la cohésion, mais qui brident ce fonctionnement en le bloquant après une première phase de mise en tension. De façon résumée, les inclusions sont choisies pour obtenir un effet semblable à celui des racines et constituer un réseau qui ne se met pas tout de suite en tension mais qui bloque le sol une fois en tension pour le rendre performant et restituer le maximum d'énergie,

- choisir et cultiver selon les règles de l'art une population de plantes adaptées au climat considéré et à leur fonction.

L'invention concerne également un

Protocole de mesures et d'évaluation fonctionnelle d'un substrat, le protocole étant destiné à objectiviser cette performance mécanique du substrat recherchée par l'invention pour favoriser la performance des surfaces sportives constituées à partir d'un gazon poussant dans un tel substrat, et comprenant les étapes suivantes :

- installation du substrat qui est d'abord épandu sur une surface déterminée par le protocole et suffisante pour pouvoir négliger les effets de bord sur une épaisseur déterminée par le protocole puis, dans une première variante tassé selon une méthode déterminée par le protocole et dans une seconde variante tassé et engazonné dans des conditions déterminées par le protocole avec un gazon déterminé par le protocole que l'on fait pousser dans ledit substrat et que l'on entretient jusqu'à un état de maturité selon un processus défini par ledit protocole, et enfin mouillé pour atteindre une teneur en eau déterminée par le protocole,

- mesure d'une courbe d'accélérométrie consistant à faire tomber directement sur le substrat préparé lors de l'étape précédente un mobile en matière suffisamment dure pour que sa déformation interne soit négligeable lors d'un choc avec le substrat et doté d'un accéléromètre faisant un nombre d'acquisitions par seconde de l'accélération du centre de gravité du mobile égal ou supérieur à une fréquence d'acquisition minimale déterminée par le protocole d'évaluation et suffisante pour décrire la courbe par rapport au temps de l'accélération du centre de gravité du mobile $\gamma(t)$ pendant le choc, ces mesures étant transmises à un ordinateur selon un processus de transmission et un programme appropriés pour pouvoir déterminer par double intégration numérique de cette courbe d'accélération par rapport au temps $\gamma(t)$) la courbe de déplacement du centre de gravité du mobile $\varepsilon(t)$ par rapport à sa position au moment du contact avec le sol, ce qui permet dans une variante préférable d'établir et d'imprimer la courbe paramétrée $\gamma(\varepsilon)$ en associant, pour chaque temps t, $\gamma(t)$) à $\varepsilon(t)$, ce déplacement et cette accélération pouvant être approximativement assimilés à ceux d'un point de la surface de contact du mobile avec le substrat , dans la mesure où le mobile est quasiment indéformable, de par la dureté de son matériau comparé à celle du substrat,

- répétition de l'opération d'acquisition de la courbe $\gamma_i(\varepsilon)$ pour i allant de 1 à n, dans chacune des n conditions expérimentales prévues par le protocole, n étant supérieur ou égal à 1 , les conditions expérimentales prévues pouvant porter en particulier sur la teneur en eau du substrat, le poids, la hauteur de chute et la section du mobile ;

et, selon le mode de mise en oeuvre choisi, aussi l'une au moins des caractéristiques suivantes :

- pour chacune des n conditions expérimentales CEi , avec i = 1 à n, déterminées par le protocole, sont associées au substrat pi valeurs, ces valeurs $V_{i,1}$ .....$V_{i,pi}$ étant des nombres réels calculées à partir de la courbe $\gamma_i(t)$ mesurée selon le protocole dans les conditions expérimentales CEi ,

- chacun de ces nombres est issu des paramètres qui peuvent être extraits par traitement numérique de la courbe $\gamma_i(t)$ ou de la courbe $\gamma_i(\varepsilon)$, et les nombres visant à caractériser le comportement fonctionnel mécanique du substrat peuvent de préférence être choisis parmi les nombres suivants :

    - $\gamma$ max i : la mesure de l'accélération maximum pendant le choc, que l'on souhaite la plus faible possible,

- $\varepsilon_{résiduel\,i}$ : la mesure de l'enfoncement résiduel en fin de course, que l'on souhaite le plus petit possible, $\varepsilon_{résiduel}$ étant calculé comme la distance totale parcourue par le mobile après le contact avec la surface, soit la distance de décélération $\varepsilon_{max}$ i diminuée de la distance de remontée ultérieure du mobile en sens inverse avant immobilisation complète, sous l'effet des forces de restitution d'énergie du sol,

- $\varepsilon_{max}$ i : la mesure du déplacement maximum du mobile, c'est à dire la distance de décélération $\varepsilon_{max}$ parcourue par le mobile après le contact avec la surface et avant l'annulation de sa vitesse instantanée,

- E $_{total\,i}$ : l'énergie totale communiquée par le sol au mobile jusqu'à l'arrêt momentanée du mobile quand $\varepsilon_i(t)$= emax, cette mesure, qui doit être égale à la valeur connue de l'énergie cinétique du mobile juste avant le choc, est égale à l'intégrale de la courbe f $\gamma_i(\varepsilon_i)$ d$\varepsilon_i$ entre $\varepsilon_i$ =0 et $\varepsilon_i$ = $\varepsilon_{max}$ i ,

- E restituée i : la mesure de l'énergie restituée au mobile par le sol pendant la phase de remontée, si une telle phase existe , c'est à dire entre $\varepsilon_i$ = $\varepsilon_{max}$ i et $\varepsilon_i$ = $\varepsilon_{retour\,i}$ , cette mesure étant égale à l'intégrale de la courbe

∫ $\gamma_i(\varepsilon_i)$ d$\varepsilon_i$ entre $\varepsilon_i$ = $\varepsilon_{max\,i}$ et $\varepsilon_i$ = $\varepsilon_{résiduel\,i}$

- E dissipée i : la mesure de l'énergie dissipée par le sol, obtenue par différence entre l'énergie totale communiquée par le sol et l'énergie restituée

- T descente i : le temps de la descente c'est à dire le temps T descente i au bout duquel

$$\varepsilon_i \, (T_{descente \, i}) = \varepsilon_{max \, i}$$

- T remontée i : le temps de la remontée c'est à dire le temps au bout duquel $\varepsilon_i(t) = \varepsilon_{retour \, i}$ diminué du temps de descente T descente i
- $T_{choc \, i}$ : le temps du choc c'est à dire le temps au bout duquel $\gamma(T_{choc \, i}) = \gamma_{max \, i}$, à chaque substrat est donc associé, par le protocole, un élément de $R^p = (V_{1,1} ,..., V_{1p1} ,..., V_{i,1} .... V_{i,pi} .... V_{n,1}, V_{n,pn})$ en mettant dans l'ordre des conditions expérimentales prévues par le protocole et pour chaque condition expérimentale et dans l'ordre prévu par le protocole les $p_i$ valeurs prévues, mesurées et calculées selon le protocole ;
- les critères d'évaluation du substrat pour une condition expérimentale donnée i sont au moins au nombre de deux et portent :

   - d'une part sur l'enfoncement résiduel en fin de course $\varepsilon_{résiduel \, i}$ , calculé par double intégration de $\gamma_i$, le substrat étant jugé d'autant meilleur que ce paramètre est petit car cela indique à la fois une meilleure résistance au cisaillement et une meilleure performance sportive en terme de restitution et
   - d'autre part sur l'un des 2 paramètres que sont :
   - Ymax i le substrat étant jugé d'autant meilleur que ce paramètre est petit car cela indique un sol souple et non traumatisant
     ou sur $\varepsilon_{max}$ i le substrat étant jugé d'autant meilleur que ce paramètre est grand car cela signifie que le sol travaille et amortit le choc, permettant ainsi à Ymax i d'être d'autant plus petit,
     $\varepsilon_{max}$ i et $\gamma_{max}$ i étant reliés par la relation

$$\text{Energie Cinétique}_i \text{ du mobile au moment du choc}$$
$$= \int \gamma_i(\varepsilon) \, d\varepsilon \text{ entre } \varepsilon = 0 \text{ et } \varepsilon = \varepsilon_{max \, i} \, ;$$

- d'une part en ce qu'il comprend deux conditions expérimentales distinctes correspondant à deux teneurs en eau du substrat différentes ,
- d'autre part en ce que la représentation du substrat se fait selon l'une des variantes suivantes :

   = dans une version plus complète, à chaque substrat est associé le quadruplet de $R^4 = (\varepsilon_{résiduel \, mouillé} , \gamma_{max \, mouillé} , \varepsilon_{résiduel \, sec}, \gamma_{max \, sec})$
   = dans une version minimale, à chaque substrat est associé le couple de $R^2 = (\varepsilon_{résiduel \, mouillé} , \gamma_{max \, sec})$, $\varepsilon_{résiduel}$ mouillé et Ymax mouillé étant respectivement les valeurs de $\varepsilon_{résiduel}$ et Ymax pour la teneur en eau la plus haute des 2 teneurs en eaux retenues par le protocole, et à l'inverse $\varepsilon_{résiduel \, sec}$ et $\gamma_{max \, sec}$ pour la teneur en eau la plus basse ;

- le protocole est un protocole de comparaison entre deux substrats quelconques S et S' définissant la relation de comparaison :
  S **plus performant que** S'
  à partir d'un protocole de mesures et d'évaluation fonctionnelle d'un substrat , où
- à tout substrat S, est associé, un élément de $R^p = (V_1, V_2, ..., V_i, V_p)$, $p \geq 1$ étant le nombre de valeurs d'évaluation retenues par le protocole de mesures et d'évaluation fonctionnelle d'un substrat,
- ces p valeurs $V_i$ sont des critères d'évaluation du substrat choisis pour que le substrat S soit d'autant plus performant, pour le critère considéré, que ce paramètre est petit,
- S et S' étant deux substrats quelconques selon l'invention, la relation de comparaison : S **plus performant que** S' étant définie, selon le protocole de comparaison, par la relation d'ordre non total $\delta$ entre les p-uplets qui leur sont associés, cette relation d'ordre non total $\delta$ étant elle même définie par :

$$(V_1, V_2, ..., V_i, V_p) \; \delta \; (V'_1, V'_2, ..., V'_i, V'_p)$$

si et seulement si

$$V_i \le V'_i \quad \forall \ i \ tq \ 1 \le i \le p$$

c'est à dire :

$V_1 \le V'_1$ **et** ......... $V_i \le V'_i$ **et** ......... $V_p \le V'_p$,
la relation de comparaison S **plus performant que** S' si et seulement si $V_i \le V'_i \ \forall$ i tq $1 \le i \le p$ permettant de comparer la performance de deux substrats même si, en prenant deux substrats S et S' au hasard, on n'a pas forcément S **plus performant que** S' ou S' **plus performant que** S ;

- le protocole est un procédé de classement en un nombre de classes des substrats à partir d'un protocole de mesures et d'évaluation fonctionnelle d'un substrat et de la relation d'ordre $\delta$ **O⌐**
- à tout substrat S, est associé un élément de $R^p = (V_1, V_2, ..., V_i, V_p)$, $p \ge 1$ étant le nombre de valeurs d'évaluation retenues par le protocole de mesures et d'évaluation fonctionnelle d'un substrat,
- à toute classe j pour $1 \le j \le C$ est associé, selon le protocole de classement, un p-uplet de $R^p = (Kj_1, Kj_2, ..., Kj_i, Kj_p)$ définissant la référence d' exigence fonctionnelle de la classe j par la relation :
le substrat appartient à la classe $C^j$ si et seulement si

$$(V_1, V_2, ..., V_i, V_p) \quad \delta \quad (K^j_1, K^j_2, ..., K^j_i, K^j_p).$$

Pour créer un mélange adéquat, il sera vu plus loin les moyens innovants qui caractérisent les ingrédients du mélange selon l'invention.

Cependant, même en mettant ensemble les ingrédients répondant aux principes de l'invention, les phénomènes de la statique ou de la dynamique des milieux granulaires multi phases assemblés par cohésion sont tellement difficiles à modéliser qu'il est prévu, selon l'invention, la nécessité de qualifier le mélange obtenu par un protocole de mesures faisant partie de l'invention.

L'invention concerne aussi un gazon cultivé comportant une couche de feuilles et autres parties aériennes de graminées ou d'autres plantes gazonnantes naturelles et au moins une couche de substrat ayant une épaisseur supérieure à 5 cm et reposant sur un fond, dans laquelle sont enracinées ces plante ;

un tel gazon est cultivé dans un substrat tel que ceux décrits plus haut ;

un tel gazon naturel est conformé pour pouvoir être déplacé et caractérisé en ce que le fond sur lequel est épandu le substrat dans lequel poussent les plantes gazonnantes n'est pas un fond de forme fixe mais un fond qui n'est pas solidaire du fond de forme et repose sur des pieds de transport ;

le gazon se présente sous la forme d'une surface engazonnée ou une pelouse et est caractérisée en ce qu'elle forme un système qui comprend un gazon naturel, une surface d'accueil située dans son environnement sur laquelle est installé de gazon, des moyens et un protocole d'entretien et d'utilisation de ce gazon sur cette surface d'accueil ;

le gazon est une surface engazonnée dont les qualités sportives dépendent à la fois du gazon et des circonstances d'utilisation et en particulier de la teneur en eau du substrat au moment de son utilisation et qui dispose de moyens permettant de maintenir cette teneur en eau du substrat entre deux valeurs déterminées, caractérisé en ce qu'elle comprend des moyens conformés pour assurer un arrosage automatique d'une hauteur d'eau en millimètre réglable, un drainage permettant d'éconduire rapidement l'eau excédentaire, un protocole d'utilisation déterminant une valeur minimale sèche de la teneur en eau d'utilisation TE « sèche » et une valeur maximale d'utilisation humide TE « humide », un protocole d'arrosage calculant l'arrosage à effectuer à partir de l'historique d'évapotranspiration et de précipitations et de l'historique des arrosages précédents et permettant de s'assurer :

- premièrement que la teneur en eau reste supérieure à la valeur minimale d'utilisation choisie TE « sèche » par le fait que

  = d'une part la hauteur d'arrosage est supérieure au produit de l'épaisseur du substrat par la capacité au champ du substrat diminuée de TE « sèche », la teneur en eau minimale choisie, de sorte que la teneur en eau du substrat est supérieure à la capacité au champ du substrat, juste après arrosage
  = d'autre part le temps entre deux arrosages successifs est inférieur à la différence entre la capacité au champ et TE « sèche » , la teneur minimale choisie, divisée par l'évapotranspiration potentielle,

- deuxièmement que la teneur en eau reste inférieure à la valeur maximale d'utilisation choisie par le fait que

= d'une part un délai de quelques heures, court mais suffisant, est respecté après l'arrosage ou après un très gros orage avant de pouvoir rejouer dans les conditions prévues, ce délai de repos multiplié par le débit hydraulique du substrat étant suffisant pour diminuer la teneur en eau depuis la valeur de saturation jusqu'à la valeur maximale prévue pour l'utilisation du terrain

= d'autre part l'eau excédentaire, dépassant la saturation du substrat s'écoule sur la surface jusqu'à une fente de suintement du drainage et que toute cette eau excédentaire est évacuée directement sans temps supplémentaire de percolation ;

le gazon peut être conformé, selon un mode de réalisation particulier, représentatif d'une surface engazonnée avec les caractéristiques suivantes :

premièrement :

- l'indice de porosité du substrat donnant la teneur à saturation est proche de 35 %,
- la capacité au champ du substrat est proche de 20 %,
- le point de flétrissement du substrat est proche de 5%,
- l'épaisseur du substrat est proche de 20 cm,
- l'évapotranspiration potentielle hivernale est proche de 1 mm/jour et l'évapotranspiration potentielle estivale est proche de 5 mm/jour,

deuxièmement :
le protocole a choisi dans ces conditions :

- une humidité maximum d'utilisation humide TE « humide », la teneur d'eau obtenue en arrosant jusqu'à saturation et en laissant se ressuyer par gravité pendant 2 heures, teneur en eau qu'on peut estimer proche de 30 % environ et
- une humidité minimum d'utilisation sèche TE « sèche » de 15 %,

troisièmement:
le calcul donné à la revendication 20 donne comme réserve d'arrosage : épaisseur substrat * (capacité au champ - valeur minimale TE « sèche ») = 20 cm x (20 % - 15 %) = 10 mm) ce qui donne, selon le calcul d'arrosage en fonction de l'évapotranspiration :
arrosage nécessaire $\geq$ réserve d'arrosage / ETP = 10 mm / 5mm/jour = 2 jours en été ou 10 jours en hiver sec,
quatrièmement :
le protocole choisit ici dans la pratique un arrosage de 15 mm tous les 2 jours pour être supérieur à l'arrosage calculé ci dessus de 10 mm tous les 2 jours et pas d'arrosage en hiver.

En cas de pluie, il y a une réserve moyenne de 20 à 30 mm de pluie avant d'arriver au seuil maximum prévu, ce qui représente une précipitation importante permettant de jouer dans les conditions prévues par le protocole, même en situation pluvieuse, en dehors des pluie d'orage, sachant qu'en cas d'orage, il suffit d'attendre 2 heures avant d'être à nouveau dans les conditions prévues, même si l'orage a lieu après un arrosage.

La présente invention concerne également deux procédés d'évaluation, également appelés ci après des protocoles d'évaluations, tous deux fort utiles et complémentaires, mais bien distincts : un protocole d'évaluation du substrat lui-même et un protocole d'évaluation permettant de constituer un système sportif à partir des terrains admis à participer au système et dudit protocole permettant de contrôler selon des critères définis que tel terrain engazonné remplit les critères requis pour participer audit système.

Ces protocoles d'évaluation comprennent chacun un protocole de mesures et un critère d'évaluation de ces mesures :
Le protocole d'évaluation du substrat lui-même, est utilisable immédiatement, dès la fabrication du substrat, ce qui permet de contrôler cette fabrication.

Ce protocole d'évaluation du substrat, à usage du fabriquant du substrat, permet de vérifier immédiatement que le traitement du substrat lui même par incorporation d'inclusions a amélioré les caractéristiques mécaniques intrinsèques du substrat dans le sens souhaité.

Le second protocole est un protocole d'évaluation du système sportif.

Ce protocole d'évaluation du système sportif a pour but de permettre aux utilisateurs potentiels de contrôler les performances sportives du système et de les comparer aux autres systèmes comme par exemple les terrains en gazon synthétique.

Le protocole d'évaluation du système sportif concerne le système sportif dans son ensemble, c'est à dire la surface équipée d'un gazon développé avec l'ensemble des dispositifs de contrôle des paramètres.

Dans sa version complète, le protocole d'évaluation du système sportif concerne un système sportif comprenant une chaussure et un sol définis et fonctionnant ensemble.

Le protocole d'évaluation combine un protocole de mesures et des critères d'évaluation à partir de ces mesures permettant de comparer les terrains, ce qui permet de répondre, selon un critère partiel mais objectif et justifiable, à la question aujourd'hui sans réponse : tel terrain ou tel couple (terrain, chaussure) est-il meilleur que tel autre ?

L'invention concerne aussi les procédés ou protocoles suivants :

- un protocole de classification a priori d'une surface engazonnée, visant à classer une surface par nature avant sa fabrication pour pouvoir exiger lors de la commande un niveau de performance attaché à la nature du substrat, caractérisé en ce que la classification utilisée pour classer la surface engazonnée est la classification du substrat utilisé pour faire pousser le gazon ;
- un protocole de mesure, d'évaluation et de classification et de contrôle a posteriori d'une surface engazonnée, avec des protocoles de traitement des mesures décrits plus hauts maintenus inchangés mais avec des mesures et une évaluation fonctionnelle du substrat destinés à objectiviser cette performance mécanique du substrat recherchée par l'invention pour favoriser la performance des surfaces sportives constituées à partir d'un gazon poussant dans un tel substrat, ces mesures s'appliquent à un mobile tombant in situ sur le gazon de la surface sportive en l'état ;
- un protocole de comparaison de deux surfaces sportives où
S et S' étant 2 surfaces sportives engazonnées quelconques, la relation de comparaison :

S **plus performant que** S'
est définie par :

$$\varepsilon_{résiduel\ mouillé}\ (surface\ S)\ \leq\ \varepsilon_{résiduel\ mouillé}\ (surface\ S')$$

et

$$\gamma_{max\ sec}\ (\ surface\ S)\ \leq\ \gamma_{max\ sec}\ (surface\ S')\ ,$$

c'est à dire qu'une surface sportive engazonnée est définie plus performante qu'une autre par le protocole de comparaison quand à la fois l'enfoncement résiduel en situation mouillée de la surface S et l'accélération maximale en situation sèche de la surface S sont plus petits que les mêmes caractéristiques de la surface S', en appliquant les protocoles de traitement des mesures concernant les substrats selon les revendications 12 à 16 aux mesures selon la revendication 11 appliquées à un mobile tombant in situ sur le gazon de la surface sportive en l'état ;

- un protocole de classification des surfaces sportives engazonnées en C classes d'efficacité, où une surface sportive est admise dans la classe d'efficacité $CE_j$ si et seulement si le p-uplet $(V_1, V_2, ..., V_i, V_p)$ correspondant à la surface sportive considérée selon la revendication 23, est plus petit, au sens de la proposition 16, qu'un p-uplet de référence $(K^j{}_1, K^j{}_2, ..., K^j{}_i, K^j{}_p)$ caractéristique de la classe d'efficacité $CE_j$,
soit $(V_1, V_2, ..., V_i, V_p)\ \delta\ (K^j{}_1, K^j{}_2, ..., K^j{}_i, K^j{}_p)$
c'est à dire : $\forall i{\leq}p,\ V_i{\leq}K^j{}_i$ ;
- un protocole de classification des surfaces sportives engazonnées visant à comparer en même temps les performances de souplesse d'une surface sportive selon l'invention en condition défavorable, c'est à dire sèche, à la souplesse d'une surface engazonnée étalon non fibrée en situation favorable, c'est à dire humide, et à contrario visant à comparer la résistance de la surface selon l'invention en situation défavorable, c'est à dire humide à la résistance de la même surface engazonnée étalon non fibrée en situation favorable, c'est à dire sèche, où :

  - premièrement le protocole comprend une méthodologie pour mettre la surface sportive en condition expérimentale « sèche » et en condition expérimentale « humide »,
  - deuxièmement, p=2 : les critères de classification de la surface sportive sont au nombre de 2

    -- $V_1 = \varepsilon_{résiduel\ humide}$ : le premier critère de classification est l'enfoncement résiduel $\varepsilon_{résiduel\ humide}$ calculé

par double intégration de la courbe d'accélération d'un mobile tombant sur la surface considérée quand le substrat dans lequel pousse le gazon constituant ladite surface sportive est en condition « humide » selon le protocole,

-- $V_2 = \gamma_{max\ sec}$ : le second critère de classification est l'accélération maximum pendant le choc $\gamma_{max\ sec}$ mesurée sur la courbe d'accélération d'un mobile tombant sur la surface considérée quand le substrat dans lequel pousse le gazon constituant ladite surface sportive est en condition « sèche » selon le protocole,

- troisièmement, les standarts de comparaison sont tous proportionnels, d'une classe à l'autre, avec un coefficient de proportionnalité $\lambda_j$ décroissant, à un couple de valeurs de référence ($M_1$, $M_2$) :

$K^j_i = \lambda_j M_i$ , pour i =1 et 2 avec $0 < \lambda_k < \lambda_j$ si $j<k \leq C$,

- quatrièmement, le couple de valeurs de référence( $M_1$, $M_2$) est choisi sous la forme :

-- $V_1 = \varepsilon_{\textbf{résiduel humide}}$ : le premier critère de classification est l'enfoncement résiduel $\varepsilon_{résiduel\ humide}$ calculé par double intégration de la courbe d'accélération d'un mobile tombant sur la surface étalon engazonnée mais non fibrée quand le substrat dans lequel pousse ce gazon étalon est en situation « humide » selon le protocole,

-- $V_2 = \gamma_{max\ sec}$ : le second critère de classification est l'accélération maximum pendant le choc $\gamma_{max\ sec}$ mesurée sur la courbe d'accélération d'un mobile tombant sur la surface étalon, engazonnée mais non fibrée, quand le substrat dans lequel pousse ce gazon étalon est en situation « sèche » selon le protocole ;

- un protocole de classification, dans une première variante, en 2 phases mais sans nécessité de mesurer la teneur en eau en ce que le protocole comprend les différentes phases suivantes :

arrosage copieux jusqu'à saturation de la surface sportive engazonnée à classifier, comme par exemple un arrosage de plus de 60 mm d'eau,

- attente de 2 heures avant de mesurer l'enfoncement résiduel $\varepsilon_{résiduel}$ humide,

- attente d'une évapotranspiration potentielle déterminée par le protocole comme par exemple 15 mm ( soit 3 jours d'attente avec une évapotranspiration de 5 mm) avant mesurer $\gamma_{max\ sec}$, l'accélération maximum pendant le choc ;

- un protocole de classification, dans une seconde variante, avec mesure de la teneur en eau mais en une seule visite en ce que le protocole comprend les différentes phases suivantes :

- la porosité totale et la capacité au champ du substrat sont mesurés en pourcentage du volume total,

- la teneur en eau « sec » d'utilisation du substrat est déterminée, comme par exemple capacité au champ diminué de 5% en volume total et la teneur en eau « humide » est déterminée comme par exemple la valeur de saturation diminuée de 5 %,

- la visite a lieu après 5 ou 6 jours d'évapotranspiration de plus de 5 mm et une première mesure de teneur en eau est réalisée sur place pour vérifier qu'on est bien en dessous de la teneur en eau « sec » et déterminer les arrosages à effectuer pour se ramener aux deux valeurs voulues,

- un premier arrosage, calculé en fonction de la teneur en eau mesurée en première mesure, est réalisé pour atteindre et mesurer une teneur en eau approchant de la teneur en eau sèche déterminée par le protocole et une mesure de la nouvelle teneur en eau constate que l'erreur est inférieure à une imprécision prévue par le protocole comme par exemple 2% du volume total et c'est dans ces conditions que $\gamma_{max\ sec}$ est mesuré,

- un second arrosage, calculé en fonction de la teneur en eau mesurée en première mesure, est réalisé pour atteindre ou approcher la teneur en eau « humide » et une mesure de teneur en eau est effectuée pour constater que l'erreur est inférieure à une imprécision prévue par le protocole comme par exemple 2% du volume total et c'est dans ces conditions l'enfoncement résiduel $\varepsilon_{résiduel}$ humide est mesuré.

En utilisant les critères du protocole d'évaluation de la surface sportive, d'autres moyens peuvent ensuite améliorer le résultat en intervenant sur les facteurs limitants extrinsèques de l'écosystème ou en rajoutant des moyens mécaniques dont il est aujourd'hui impossible de savoir, sans protocole d'évaluation, s'ils améliorent le terrain :

C'est ainsi qu'une version de l'invention propose d'améliorer le résultat en rajoutant, sans se substituer au fonctionnement décrit ci-dessus, une phase préalable de résilience si nécessaire (cette phase peut être incluse dans le sol ou la chaussure) et peut être rajoutée dans le sol ou dans une sous-couche résiliente.

Comme indiqué plus haut, l'invention concerne également une surface engazonnée comprenant un gazon naturel selon l'invention comme décrit ci avant et ayant le cas échéant, selon le mode de réalisation choisi, l'une au moins des caractéristiques supplémentaires suivantes considérées isolément ou selon toute combinaison techniquement possible:

- la surface engazonnée comprend des moyens conformés pour pouvoir assurer le maintien à un niveau contrôlé de la teneur en eau du gazon ; ces moyens comportent, par exemple, un arrosage automatique et/ou un drainage;

- le drainage est un drainage renforcé comprenant des fentes de suintement espacées de 50 cm à 2 m, ces fentes ayant une largeur comprise entre 3 et 8 cm et étant remplies d'un matériau de remplissage sous la forme d'un granulat de préférence 2-6 ou 3-8 ou encore d'un massif filtrant conformé pour pouvoir éconduire de l'eau collectée;

- la surface engazonnée comprend des moyens de chauffage et/ou de refroidissement;

- la surface engazonnée est conformée pour une utilisation sportive;

- la surface engazonnée est conformée pour une utilisation décorative et/ou climatisante.

La présente invention concerne également une chaussure de sport adaptée à une surface engazonnée telle que décrite plus haut pour la mise en oeuvre du protocole énoncé ci avant.

Pour répondre à d'autres exigences, la présente invention concerne également plusieurs modes de terrains de sport et en particulier des terrains en modules transportables de gazon naturel « prêts à jouer ». Ces modules comportent un fond sur lequel repose, directement ou non, le substrat dans lequel pousse la végétation.

Ces modules transportables et facilement assemblables, qui peuvent être de façon préférable équipés de drainage et d'éventuels équipement de climatisation, peuvent équiper des surfaces à vocation sportive, décorative ou écologique soit pour des activités événementielles soit pour une installation rapide en des lieux difficilement accessibles ou soumis à des limites de poids comme les toitures terrasses. En effet, de par son poids spécifique inférieur à celui d'un gazon artificiel ou d'un gazon naturel ne bénéficiant pas des caractéristiques avantageuses de l'invention, la pose d'un gazon naturel de l'invention sur une toiture terrasse permet d'alléger la structure de support de la toiture par rapport à une structure de support traditionnelle. Ceci est particulièrement intéressant lorsque la toiture terrasse à engazonner coiffe un immeuble d'une taille certaine avec une surface de la toiture mesurant des centaines de m$^2$, par exemple 800 m$^2$.

L'invention concerne aussi un stade sportif comportant une surface engazonnée telle que décrite plus haut ou issue d'un procédé de fabrication décrit plus haut.

L'invention concerne par ailleurs aussi :

- un système modulaire de pelouse sportive naturelle amovible permettant d'installer sur un fond de forme adapté une pelouse, destinée à la pratique des sports de grand jeux comme le football et le rugby, et qui peut, après une période d'utilisation, être escamotée, préservée et entretenue ailleurs puis réinstallée sur le même fond de forme ou sur un autre fond de forme pour une nouvelle période d'utilisation pour un tel sport, caractérisé :

  - en ce qu'il comprend une multitude de modules qui sont des éléments de forme approximativement rectangulaire ou carrée et d'une surface comprise entre 1 mètre carré et 10 m2,
  - en ce que chaque module comporte un fond sur lequel repose un substrat de culture dans lequel sont enracinées des plantes de gazon, comportant une couche (1) de feuilles et de parties aériennes au dessus dudit substrat
  - en ce que la disposition des éléments constitutifs d'un module ménage des espaces entre le fond du module sur lequel repose le substrat et le sol d'accueil du module et en ce que le système comporte des éléments conformés pour le transport des modules qui peuvent s'introduire dans ces espaces pour soulever le module, les éléments de transport et le fond du module étant capables de coopérer pour supporter l'ensemble du poids du module et de sa charge de substrat et de gazon, sans déformation autre qu'élastique,
  - en ce que le système comporte des critères de validation du fond de forme d'accueil de la pelouse sportive amovible, relatifs aux caractéristiques géométriques de ce fond de forme comme sa régularité et ses pentes, à des critères mécaniques de stabilité et de portance et des critères d'environnement de ce fond de forme comme la possibilité d'évacuation de l'eau de drainage,
  - en ce que le système comporte un procédé d'installation et de pose des modules sur un fond de forme valide selon les critères du système, et en ce que la juxtaposition de modules selon le procédé d'installation sur un tel fond de forme aboutit à la constitution d'une surface engazonnée d'un seul tenant, d'une surface égale à la somme des surfaces des modules juxtaposés et sans discontinuité fonctionnelle inacceptable au niveau des jonctions entre modules.
  - en ce que le système comporte un critère de validation définissant ce qu'est une discontinuité fonctionnelle acceptable ou inacceptable au niveau des jonctions entre modules,
  - en ce qu'un module installé selon le procédé d'installation sur un fond de forme valide peut supporter sans déformations irréversibles les contraintes mécaniques liées à l'utilisation sportive, comme le poids des joueurs et les forces exercées sur le sol du fait de la pratique sportive, ainsi que les forces exercées par le sol par les engins roulants motorisés comme les outils de tonte et d'entretien de la pelouse,

- en ce que le système comporte un critère de validation des engins roulants et des outils d'entretien autorisés, compatible avec les nécessités d'entretien de la pelouse ;
- un système modulaire de pelouse sportive naturelle amovible, caractérisé en ce que le critère d'acceptation d'une discontinuité fonctionnelle acceptable au niveau des jonctions entre modules est :

  d'une part que la discontinuité ne soit pas perceptible par un joueur lors des différents gestes sportifs comme la marche, la course, les m tacles, mêlées, chutes, plaquage
  d'autre part qu'il n'y ait pas d'éléments rigides susceptibles de provoquer un blocage de crampon à moins de 25 mm de la surface ;

- un système modulaire de pelouse sportive naturelle amovible, caractérisé en ce que le critère de validation des engins roulants et des outils d'entretien autorisés, compatible avec les nécessités d'entretien de la pelouse autorise l'utilisation des tracteurs, télescopiques ou tondeuses d'un poids maximum de 3 tonnes réparties sur 4 pneus sous gonflés avec 1 tonnes par appui sur un pneu avec la combinaison d'un dessin et d'une surface minimum définie par le protocole qui définit également la taille des louchets d'aération et tous les types d'outils de travail du sol autorisés un système modulaire de pelouse sportive naturelle amovible, caractérisé en ce qu'il comporte des modules dont la forme, en vue de dessus est rectangulaire ou carrée et dont la largeur et la longueur sont compris entre 150 cm et 250 cm ;
- un système modulaire de pelouse sportive naturelle amovible, caractérisé en ce que les modules comportent :

  - une partie basse rigide configurée comme un bac avec d'une part une surface globalement horizontale qui peut être plate et horizontale ou osciller de quelques centimètres en altimétrie selon un profil cyclique par rapport à une surface plane horizontale et servant de fond sur lequel repose directement ou indirectement le substrat et qui comprend des trous servant à la fois à l'évacuation de l'eau ayant percolé à travers le substrat et à rigidifier le fond et avec d'autre part un bord, remontant de 5 à 10 cm par rapport au fond du bac et maintenant le substrat jusqu'à cette hauteur
  - une partie intermédiaire avec une ceinture périphérique souple, grossièrement verticale et épaisse de quelques centimètres qui s'appuie en partie basse sur le bord rigide du bac inférieur et remonte au dessus du niveau supérieur de ce bac rigide sur une hauteur supplémentaire de 5 à 10 cm, cette ceinture intermédiaire souple et emprisonnant donc le substrat à l'intérieur de la surface délimitée par ses bords intérieurs sur la hauteur de 5 à 10 cm dont elle dépasse le niveau haut du bac
  - une partie supérieure, de 2 à 3 centimètres supplémentaires entre le haut de la partie intermédiaire et la surface libre du substrat où commence la partie aérienne du gazon, le substrat étant installé sur cette hauteur dans la surface délimitée par le bord externe de la ceinture périphérique souple épaisse de quelques centimètres, ce qui signifie que la partie supérieure du substrat repose sur la partie intermédiaire du substrat et sur la tranche de quelques centimètres de ladite ceinture périphérique souple épaisse, la tranche extérieure de la partie supérieure du substrat lui même se tenant toute seule dans une première version sur son épaisseur de 2 à 3 centimètres par le simple effet de la cohésion du substrat et des racines de gazon, comme c'est le cas de la tranche d'une même épaisseur d'un un rouleau de gazon de placage , mais étant de préférence protégée, dans une seconde version par une ceinture périphérique supérieure, très mince, de quelques millimètres d'épaisseur et constituée d'un faisceau de brins verticaux souples s'arrêtant à la surface libre ou la dépassant même de quelques millimètres ou centimètres et ayant une vocation esthétique et de protection de la qualité de cette bordure supérieure de substrat qui doit rester intacte malgré les frottements possibles lors des opérations de désinstallation et de réinstallation des modules de gazon amovible, l'intérieur de cette ceinture mince étant positionné dans sa partie basse et maintenu solidairement contre la ceinture souple intermédiaire plus épaisse à l'extérieur de cette dernière de telle sorte que la partie intérieure supérieure de la ceinture mince est dans le prolongement de la surface extérieure de la ceinture épaisse intermédiaire ;
  - un système modulaire de pelouse sportive naturelle amovible, caractérisé en ce que la ceinture supérieure mince est constituée de brins synthétiques de couleur verte solidarisés en partie basse à la ceinture périphérique intermédiaire et dont la partie haute atteint la surface ou dépasse de la surface engazonnée de quelques millimètres, ce qui ne pose pas de problème sur le plan mécanique du jeux ou des crampons puisque cette situation de brins synthétiques tenus par le substrat et sortant au milieu du gazon naturel est déjà connue dans le contexte du procédé de matérialisation permanente des lignes de jeux, connu sous le nom commercial Pitch line, où des lignes blanches de traçage sont constituées par un ruban de fibres synthétiques tenues entre elles par une armature centrale, ce ruban étant plié au niveau de cette armature et installé en force dans le sol qui maintient en place par frottement contre les fibres le faisceau de fibres blanches dépassant du sol et montant aussi haut que le gazon pour marquer les lignes ;
  - un système modulaire de pelouse sportive naturelle amovible, caractérisé en ce qu'il comporte des moyens de drainage et de chauffage des modules ;

- un procédé de fabrication par rotomoulage de la partie inférieure et rigide des modules, caractérisé en ce que :

  - les modules rotomoulés sont des bacs d'une dimension sensiblement égale à un carré de 2,4 mètre de coté par 10 à 30 cm de haut avec une partie inférieure support, creuse et d'une épaisseur de 10 à 20 cm sous le niveau du bas du substrat et une partie bac constituée par la partie support du substrat
  - le moule en deux parties de ce rotomoulage comprend une surface supérieure et une surface inférieure,
  - la partie supérieure a une surface grossièrement horizontale sur laquelle repose le substrat et remonte en périphérie pour constituer un bord rigide ploquant le substrat en périphérie, de sorte que la surface supérieure du rotomoulage constitue un bac rigide,
  - la partie inférieure a une partie qui repose sur le sol et une partie au bord qui remonte jusqu'à la surface supérieure, de sorte que ces deux surfaces, ensuite soudées entre elles constituent une surface fermée et étanche délimitant un volume intérieur dans lequel on peut faire circuler de l'air ou de l'eau après avoir prévu une réservation d'entrée et de sortie du fluide, le module étant une enveloppe vide pouvant être traversée par un fluide pour servir de radiateur,
  - entre les surfaces inférieures et supérieures, il y a des rapprochements périodiques et des parties traversantes qui rigidifient l'ensemble et font des trous d'évacuation d'eau,
  - la surface du module a une partie périphérique basse strictement verticale à l'extérieur qui dépasse du reste du profil de sorte que 2 modules contigus poussés l'un contre l'autre s'appuient sur 2 parois parallèles et que 2 entretoises d'une dimension D connue installées entre 2 bacs que l'on pousse l'un contre l'autre permettent de créer une réservation constante d'épaisseur D entre 2 parois parallèles,
  - la surface de l'enveloppe a une partie périphérique haute qui fait un décroché vers l'intérieur et qui continue à remonter pour servir de bord à l'intérieur du bac , ce décroché étant un emplacement destiné à appuyer une ceinture souple périphérique contre la partie supérieure du bord du bac,
  - le profil de la surface inférieure est grossièrement constitué de créneaux parallèles à l'une des dimensions qui permettent à la fois de rigidifier cette surface et de constituer l'équivalent de traverses reposant sur le sol et laissant la place entre ces traverses à une multitude d'éléments élévateurs qui sont prévus dans le système pour occuper toute la surface des réservations et faire une surface de soutien de plus de 30 % de la surface d'un module pour soulever ces modules qui n'auraient pas la rigidité suffisante pour être soulevés par une fourche ordinaire à 2 éléments sans plier et se casser,
  - ces saillies de la surface inférieure ayant la configuration géométrique de traverses parallèles s'appuyant sur le sol ne vont pas de bout en bout du module mais la surface inférieure a une partie plus haute ne reposant pas sur le sol sur toute sa périphérie, de sorte qu'il n'y a pas de reprise de poids en périphérie quand on gerbe les modules l'un sur l'autre pour les transporter,
  - des éléments d'une épaisseur E en mousse totalement étanche, en cellules fermées, et capable d'une compression élastique d'une amplitude A sont installés autour des réservations traversant la surface et avec E > D et E-A <D , D étant la distance de réservation entre 2 modules contigus , on obtient que 2 éléments en mousse se faisant face avec un trou au milieux sont en compression étanche par le seul fait d'approcher un module de l'autre ;

- un procédé de fabrication de la partie intermédiaire souple des modules, caractérisé en ce que :

  - une ceinture souple est installée avec sa partie basse entourant les bacs rotomoulés à l'emplacement prévu dans la forme des bacs et dont la partie supérieure dépassant le haut des bacs de 5 à 10 cm ,
  - l'épaisseur et la souplesse de cette ceinture souple permettent d'avoir une compression de rattrapage des dilatations et tolérances entre 2 modules contigus car ces pièces dépassent la paroi verticale inférieur des bacs d'une épaisseur F et ont une amplitude de compression de B, avec F > D et F-B < D, D étant la distance de réservation entre deux modules contigus,
  - cette ceinture périphérique est installée pour maintenir et protéger la tranche de substrat sur cette hauteur,
  - mais pour éviter tout risque de rigidité ressentie en surface, il n'y a pas de liaison rigide mais des membranes textiles solidaires de la ceinture souple et incluses dans le substrat tassé qui s'opposent à tout déplacement de la ceinture vers l'extérieur, par les forces de frottement et leur résistance interne à la tension,
  - comme le substrat doit être présent et comprimé avant de pouvoir retenir le bord qui le protégera à son tour et qu'il faut un bord pour tasser le substrat, le mode d'installation à la fois du substrat et de la ceinture périphérique est d'enfermer le module avec la ceinture périphérique souple à l'intérieur d'un moule pendant le remplissage et le tassement du substrat, ce moule étant enlevé une fois que le substrat tassé maintient la bordure souple périphérique qui elle même protège le substrat sur sa tanche périphérique et oppose par frottement à l'intérieur du substrat une réaction aux éventuelles forces de poussée du substrat vers l'extérieur de cette partie du module ;

- un système modulaire de pelouse sportive naturelle amovible, caractérisé en ce qu'il comporte des modules, chacun des modules étant constitué d'une partie rigide et d'une ceinture souple qui encadre les bacs rigides et constitue une bordure verticale dépassant le niveau des bacs rigides afin d'assurer une jonction entre bacs en tenant compte des faibles tolérances de fabrication et de positionnement des bacs et de dilatation des bacs, tout en garantissant qu'aucun élément rigide susceptible d'être blessant ou bloquant n'apparaisse en surface du gazon ni dans les 5 centimètres sous cette surface ;

- un procédé de remplissage de modules et d'installation de la ceinture souple périphérique caractérisé en ce qu'il comporte :

  - une étape de mise en place de la bordure souple périphérique,
  - une étape de remplissage en substrat des modules jusqu'au niveau prévu, ce niveau dépassant de 8 à 20 centimètres le bord rigide des bacs constituant la partie inférieure du module,
  - une étape de tassement de ce substrat,
  - une étape de maintien latéral de ce substrat et de la bordure souple périphérique qui doivent être maintenus latéralement par des bords rigides verticaux pendant qu'on remplit le substrat et qu'on le tasse au dessus du niveau où les bords du bac constituant la partie inférieure du module le maintiennent,
  - une étape de suppression du maintien latéral une fois que le substrat a atteint sa cohésion interne à la suite de son tassement, et que la bordure périphérique souple, constitutive des modules et permettant le maintien et la protection de la tranche extérieure du substrat au dessus des bords du bac rigide inférieur , est elle même maintenue par l'effet de la mise en tension par la pression du substrat des éléments textiles dont une partie est solidaires de cette bordure souples et dont l'autre partie est solidaire du substrat selon un cheminement géométrique tel que tout mouvement vers l'extérieur de la bordure souple crée par frottement avec le substrat une tension des éléments textiles se traduisant en force d'opposition à ce mouvement ;

- un procédé de remplissage de modules et d'installation de la ceinture souple périphérique, caractérisé en ce que :

  - les modules vides sont acheminés automatiquement en un lieu situé sous un tapis d'où le substrat tout près descend,
  - en ce même lieu 4 bords verticaux d'une hauteur égale à la hauteur de remplissage sont poussés contre le bac avec un système capable d'exercer sur ces bords une force appliquée vers l'intérieur, de sorte que ces 4 bords verticaux constituent un coffrage appliqué contre le module,
  - la ceinture souple périphérique est installée à l'emplacement prévu contre le bac ainsi que les éléments textiles destinés au maintien de cette ceinture en coopération avec le substrat,

  le substrat est versé dans le coffrage, tassé et aplani en profitant du coffrage qui sert pour s'opposer aux forces exercées pendant que le substrat est tassé et qui sert de niveau d'appui à une lame qui égalise en supprimant le surplus par rapport au plan constitué par le bord supérieur du coffrage,
  le coffrage s'escamote et le module plein est évacué et remplacé par le suivant à remplir ;

- un procédé de remplissage des modules et d'installation de la ceinture souple périphérique, caractérisé en ce que :

  - en plus du cloisonnement extérieur permettant de remplir et de tasser le substrat, le système de remplissage comprend des moyens pour installer un faisceau de n paires de cloisons minces, verticales et parallèles entre elles et à 2 des bords, avec $n \leq 3$ , la distance entre 2 cloisons minces de l'une quelconque de ces paires étant égale à e, avec $4cm \leq e \leq 7cm$, et la distance entre ces paires ou entre un bord et la paire la plus proche étant égale à $(C- ne)/(n+1)$, C étant la longueur du module selon la direction perpendiculaire au faisceau de cloisons parallèles, de sorte que n paires de cloisons minces partagent le module en n+1 espaces égaux qui constituent l'équidistance entre ces paires de cloison,
  - le dispositif permet de remplir les espaces entre 2 cloisons minces jusqu'à 2 cm de la surface en gravier d'une granulométrie choisie entre 2/6 et 3/8 mm et de substrat le reste de l'espace à l'intérieur du moule externe,
  - les cloisons minces sont ensuite escamotées vers le haut après avoir servi de réservation, le gravier étant alors prisonnier du substrat,
  - à l'issue du remplissage du gravier et du substrat, le module est rempli d'un substrat avec des fentes de suintement d'une épaisseur e entre 4 et 7 cm, avec une équidistance d'environ 80 cm à titre d'exemple, si il y a 2 paires de cloisons et que le module est un carré de 2,4 m de coté ;

- un procédé de remplissage des modules et d'installation d'un drainage par fentes de suintement à l'intérieur du module, caractérisé en ce que :

- la ceinture souple installée en périphérie est une matrice creuse élastique d'une épaisseur en l'absence de contrainte comprise entre 1 et 5 cm et avec un voile périphérique en géo-membrane tissée ou non tissée type géotextile , qui peut être par exemple un élément connu sous le nom commercial déposé de Enkadrain ® TP, de sorte qu'elle peut être comprimée de près la moitié de son épaisseur et conserve, même dans cette situation comprimée, une capacité d'évacuation quasi immédiate de l'eau gravitaire excédentaire,
- cette ceinture est donc un drain périphérique ayant les mêmes fonctions qu'une fente de suintement dans un terrain de sport et remonte à 2 cm de la surface,
- un géotexlile est installé sur la tranche en haut de l'élément enkadrain pour que le substrat posé dessus ne puisse pas migrer vers l'intérieur de la grille creuse de l'enkadrain par sa tranche supérieure, ce qui boucherait le drainage et ferait un affaissement du substrat en bordure ;
- un système modulaire de pelouse sportive naturelle amovible, caractérisé en ce que le système comporte des modules particuliers, le calepinage et la largeur et longueur des modules étant adaptés à la longueur d'un terrain pour éviter que les fourreaux ne se trouvent situés en bordure d'un bac ;
- un système modulaire de pelouse sportive naturelle amovible, caractérisé en ce que le système comporte des moyens de transporter les modules, de les poser et déposer sur une surface d'accueil, de les gerber directement les uns sur les autres sans les abîmer, compte tenu d'une part des caractéristiques de résistance du substrat et compte tenu de la forme des bacs qui n'ont pas d'appui sur le sol sur une périphérie de plus de 20 cm, ce qui évite que le poids d'un module ait une action de poussée sur la bordure périphérique du module sur lequel il s'appuie ;
- un système modulaire de pelouse sportive naturelle amovible, caractérisé en ce que le système comporte des moyens de chauffage des modules en trois familles:
- moyens permettant de transmettre des calories d'un module à l'autre avec en particulier un système permettant de communiquer les calories d'un module au module contigu sans contrainte de branchement, avec dans une version préférable des liaisons par mousse étanche en simple compression pour faire passer un fluide liquide ou de préférence gazeux comme de l'air chaud,
- moyens de production des calories et en particulier pour de l'air chaud moyen de réchauffer de l'air et de le faire circuler jusqu'à un système de nourrices alimentant les premiers modules,
- protocole de calcul et d'asservissement permettant d'apporter les calories nécessaires avec calcul de débit et de température dans une configuration adéquate en fonction des conditions environnementales et de capteurs mesurant la température et des paramètres calorimétriques de conductivité et pertes du milieu ;
- un système modulaire de pelouse sportive naturelle amovible, caractérisé en ce que le substrat comporte du sable, de la matière organique, des fibres et du liège et a une densité comprise entre 1 et 1,6, une forte cohésion, une forte résistance au cisaillement et que son épaisseur est comprise entre 10 et 20 cm ;
- un système modulaire de pelouse sportive naturelle amovible dont le fond de forme d'accueil est dans un stade avec une piste d'athlétisme,
- le fond de forme est construit avec une pente douce entre le niveau de la piste et le niveau surbaissé de la hauteur d'un module pour que le gazon, une fois un tel module installé, soit à la même hauteur que la piste, cette forme en pente douce permettant d'éviter une marche d'une vingtaine de centimètres entre la piste d'athlétisme périphérique et le fond de forme surbaissé qui serait un risque d'accident quand les modules sont escamotés et que la foule circule entre le niveau de la piste et celui du fond de forme.
- le système comporte un deuxième type de module pour s'adapter au profil en pente de la périphérie, dont la forme vue de dessus est rectangulaire ou carrée comme les modules de base permettant d'engazonner la zone centrale mais dont la section est triangulaire ou trapézoïdale pour s'adapter à la pente du fond de forme, le fond sur lequel repose le substrat restant horizontal mais la partie basse du module ayant un profil parallèle au fond de forme en pente, ce qui donne un profil triangulaire au module, sauf si on laisse une bande traitée autrement entre la piste et les modules , auquel cas les modules spécifiques de périphérie sont se section trapézoïdale ;
- un stade équipé d'un système modulaire tel que décrit plus haut.

De même, l'invention s'applique à de telles surfaces équipées de gazons mobiles selon l'invention, qu'il s'agisse de surfaces sportives ou non et de gazons de graminées ou de plantes tapissantes ou basses, piétinables ou à visée décorative.

**V) Description détaillée de l'ensemble des éléments caractérisant l'invention avec exemples de réalisation des différents éléments**

Le système sportif selon l'invention comprend :

- un gazon naturel et une surface comportant un tel gazon naturel et constituant avec ce dernier une surface sportive
- une chaussure de sport destinée à être utilisée sur une telle surface sportive
- un protocole d'évaluation des caractéristiques de la surface sportive ou du couple (surface sportive, chaussure de sport) et constituant avec ces derniers un nouveau système sportif.

### V-1 Définition générale du gazon naturel selon l'invention

Le gazon naturel selon l'invention est caractérisé par :

- les caractéristiques intrinsèques du gazon naturel selon l'invention,
- les caractéristiques extrinsèques de ce gazon : moyens d'obtention et de contrôle,
- les modes de conditionnement : gazon installé à demeure ou gazon mobile,
- les caractéristiques de la surface d'accueil d'un tel gazon.

### V-1-0 Définition préalable du concept de gazon naturel

S'agissant d'un gazon naturel, on cultive depuis longtemps du gazon pour y pratiquer du sport ou pour constituer des surfaces de détente ou de décoration. Un gazon naturel est une population de plantes vivantes, constituée d'une sorte ou plus généralement d'un mélange de différentes sortes de plantes, le plus souvent choisie parmi les graminées, qui poussent dans un substrat qui peut lui même reposer directement sur le fonds de forme ou reposer sur une ou plusieurs couches intermédiaires, couche drainante ou d'aveuglement ou de souplesse, sachant qu'il peut aussi exister des gazons en caisses ou provisoirement en rouleau de gazon de plaquage ou en gazonnière destinés à être transplantés ailleurs. Ces plantes et le substrat dans lequel poussent ces plantes font normalement l'objet de soins particuliers grâce à des équipements qui peuvent être intégrés comme des équipements d'arrosage intégré ou de drainage et par un programme de soins et de régénération comme la tonte, le sur-semis ou la fertilisation. Un gazon se différencie d'une prairie naturelle par le fait qu'il doit son existence ou son état à une intervention volontaire sur une ou plusieurs des phases de constitution du substrat, plantation des plantes ou sélection de ces dernières ou maintien en état de ces dernières par un entretien et un contrôle plus ou moins intensif des paramètres qui caractérisent l'état du substrat et des herbes qui y poussent ou qui influent sur son évolution.

Le plus souvent, on considère comme population de plantes constitutives d'un gazon un ensemble de plantes maintenues rases et qui peuvent être piétinées et le plus fréquemment choisies parmi un ensemble de graminées (monochotylédones) sélectionnées pour leur qualités de plantes susceptibles de se constituer, avec un entretien convenable, en tapis herbeux résistant à l'utilisation recherchée, qu'il s'agisse d'une utilisation décorative ou sportive. Dans la plupart des cas, un examen attentif de la population poussant réellement dans un gazon montre qu'aux graminées sélectionnées se mêlent d'autres graminées et d'autres plantes (dicothylédones) que des graminées et que les proportions des différentes espèces de plantes constituant ledit gazon évolue dans le temps en fonction des circonstances et des saisons.

Dans tous les cas, la population de plantes, le substrat et son support, l'état de la surface, les équipements intégrés, le programme des soins et la combinaison d'éventuels moyens et procédés classiques ou innovants destinés à améliorer l'état de cette surface, de ce substrat ou des plantes qui y poussent, définissent ensemble le gazon naturel en question.

Dans le cas du gazon naturel selon l'invention, ce gazon peut se présenter sous trois formes principales que sont :

- le gazon installé à demeure in situ,
- le gazon cultivé en gazonnière puis installé sur le lieu d'utilisation sous forme de pavés, selon un concept innovant de pavés installés entre des barres drainantes pour une utilisation immédiate,
- le gazon cultivé, selon un autre concept innovant, en modules transportables et prêts à assembler pour une utilisation immédiate.

### V-1-A Caractéristiques intrinsèques du gazon

### V-1-A-0 Phénomènes physiques concernés - Principe de l'invention

### V-1-A-0-1 Phénomènes physiques concernés

Cette analyse est essentielle pour la présente invention car les principes mêmes de l'invention en découlent.

L'objectif fonctionnel de l'invention est un sol résistant et souple.

Pour augmenter la résistance du sol tout en conservant un sol souple, l'invention part du constat qu'un sol en gazon naturel en bon état a la réponse la plus performante possible.

Des expériences consistant à cultiver du gazon naturel dans des boites de Cassagrin pour mesurer la cohésion et le frottement montrent que le gazon naturel a une très forte cohésion et un angle de frottement modéré.

D'autre part, des mesures faites à l'accéléromètre montrent qu'un gazon naturel en bonnes conditions présente une résistance satisfaisante avec une élasticité et un amortissement nettement supérieures aux autres sols sportifs.

La raison en est, de façon schématique, qu'un tel sol en gazon naturel est constitué de particules qui ne sont pas rattachées les unes aux autres par des liaisons rigides mais au contraire par des forces capables de travailler c'est à dire capables de s'opposer fortement à un mouvement sans empêcher ce mouvement. Ces forces caractéristiques des gazons naturels, capables de s'opposer sans tout bloquer, sont les forces de cohésion qui sont, comme on le verra plus en détail, le résultat de la pression de l'air interstitiel sur l'eau attachée aux particules et aux racines par capillarité. Ces forces donnent un comportement élastique au sol en gazon naturel, ce qui en fait le meilleur sol sportif connu.

Le parti pris de l'invention est de chercher à maintenir le gazon naturel dans des conditions qui lui permettent de fonctionner selon ce schéma, c'est à dire de composer le substrat et la végétation de façon à augmenter la cohésion et l'élasticité, de rajouter des inclusions dans le sol qui ne substituent pas au fonctionnement du gazon naturel un autre effet mais au contraire renforcent ce fonctionnement, en augmentant la cohésion et l'élasticité.

De façon à favoriser, imiter et renforcer le fonctionnement optimal du gazon naturel, dont on sait qu'il n'est pas toujours atteint, il faut en analyser les mécanismes, qui ont lieu à des échelles microscopiques et mésoscopiques et apprécier l'influence relative, à l'échelle macroscopique, de ces différents mécanismes et des paramètres qui les déterminent.

Bien que le résultat recherché soit évidemment un résultat macroscopique, on voit donc qu'il faut rentrer dans une compréhension suffisante des mécanismes microscopiques et mésoscopiques et des paramètres qui les déterminent pour en déduire les conditions qui permettent d'atteindre le résultat souhaité.

Les deux notions visées à l'échelle macroscopiques sont :

- d'une part la cohésion et l'angle de frottement, tels que définis de façon classique par l'expérience de Cassagrin et
- d'autre part l'énergie potentielle d'amortissement, dans une définition non générale mais relative à la présente invention.

Ensuite, seront analysés les mécanismes à l'échelle microscopique qui créent ces résistances au cisaillement sous forme de cohésion et de frottement interne dans une perspective de mise en lumière des paramètres à maîtriser, selon l'invention

Enfin, seront analysés dans le même esprit et avec le même objectif les mécanismes ayant lieu à l'échelle mésoscopique.

**V-1-A-0-2 Echelle macroscopique**

**• V-1-A-0-2-1 Cohésion apparente et angle de frottement interne**

De façon sommaire, et conformément à la classique expérience de Cassagrin, il est connu que la résistance au cisaillement peut être écrite comme la somme de deux facteurs macroscopiques fondamentaux que sont la cohésion et les forces de frottement interne, selon l'équation suivante :

$$S = C + (P-U) \sin a$$

avec C la cohésion du sol

avec f = tang a f étant le coefficient de frottement interne et a étant l'angle de frottement interne

avec P la pression normale à la surface de glissement due au poids sur la surface libre du sol et au poids du sol lui même au dessus de la surface de glissement

avec U la pression d'eau intersticielle dans le sol

S la résistance au cisaillement correspondant à la force minimale nécessaire pour vaincre la cohésion et le frottement interne

Si l'on considère un sol en gazon naturel, la cohésion apparente (résultant non seulement de la cohésion à l'échelle microscopique mais également des effets à l'échelle mésoscopique comme les racines de gazon) et l'angle de frottement dépendent de plusieurs facteurs tous susceptibles d'être déterminants, certains de ces facteurs étant microscopiques et d'autres mésoscopiques :

A l'échelle microscopique, les paramètres dont chacun peut changer de façon déterminante cohésion apparent ou angle de frottement sont essentiellement la courbe granulométrique du sol, la forme des grains, le coefficient de frottement des grains et la tension superficielle des grains, ainsi que la teneur en eau.

A l'échelle mésoscopique, d'autres paramètres intrinsèques peuvent déterminer de façon totalement déterminante également la cohésion et le frottement interne : la structure du sol (mottes et agrégats), le développement racinaire du gazon, la végétation aérienne du gazon.

De façon à modifier la cohésion et le frottement interne, il est possible d'introduire volontairement des inclusions dans le but d' augmenter la résistance au cisaillement en modifiant la cohésion et l'angle de frottement, ainsi que l'énergie potentielle d'amortissement, dont la définition est donnée ci dessous.

**• V-1-A-0-2-2 Energie potentielle d'absorption**

Le second de ces paramètres n'est pas étudié dans l'expérience de Cassagrin ou l'essai triaxial mais il est essentiel pour la présente invention. Avant que le sol, soumis à une force de cisaillement F inférieure à la force Fmin, ne se bloque, il peut bouger un peu et se mettre en tension.

Ce mouvement sous la contrainte de la force F se fait avec des mini-déplacements des grains et des inclusions qui sont susceptibles d'absorber une énergie en faisant travailler les forces de réaction qui s'opposent au mouvement.

L'énergie qui peut être absorbée est le travail mécanique des forces de réaction s'appliquant à toutes les particules se déplaçant sous l'effet d'une force capable de vaincre la résistance au mouvement.

On a

$$W = \sum F_i \, dl_i$$
avec W le travail d'absorption
avec $F_i$ la résistance au mouvement de la particule i
avec $dl_i$ le mouvement de la particule i

Le travail de chaque particule i dépend de la force de résistance Fi qu'elle peut opposer au mouvement mais également, et surtout, de la possibilité que cette particule a de se déplacer avant d'être bloquée.

En supposant selon les cas une contrainte de poids d'environ 100 kg correspondant au poids d'un joueur ou 1000 kg correspondant au poids d'un cheval, on peut considérer les forces qui peuvent s'appliquer dans le sol et le travail mécanique qui peut être fourni avant blocage : cette quantité est une donnée intrinsèque du sol : il s'agit de l'énergie potentielle d'absorption mécanique de ce sol avant blocage, qu'on peut noter Eméca.

A partir des trois paramètres que sont la cohésion apparente, l'angle de frottement interne, et l'énergie potentielle d'absorption (C, tang a, $E_{méca}$) on peut définir le principe de l'invention.

Contrairement aux inclusions connues des fibres épaisses par rapport à la porosité et qui augmentent tang a en diminuant C et $E_{méca}$, le principe de la présente invention est au contraire, à travers le choix du substrat, des graminées, de la teneur en eau, de la tension de surface et des coefficients de frottement et des inclusions d'augmenter C et $E_{méca}$ et de ne pas trop augmenter tang a si possible.

**V-1-A-0-3 A l'échelle microscopique**

**• V-1-A-0-3-1 Mécanismes déterminant la cohésion apparente et l'angle de frottement interne à l'échelle microscopique**

En n'oubliant pas cette distinction fondamentale entre l'échelle microscopique et l'échelle mésoscopique, on connaît les forces microscopiques élémentaires qui s'exercent et on sait également quels sont les paramètres naturels qui sont responsables des variations de ces forces élémentaires, s'exerçant à l'échelle microscopique mais aboutissant à la si grande hétérogénéité de comportement observée à l'échelle macroscopique. Les causes premières se situent en effet à l'échelle microscopique : ce sont les forces exercées par les grains les uns sur les autres, ce qui correspond à une échelle microscopique de quelques micromètres à quelques millimètres selon qu'on considère des grains d'argile ou des grains de sable au contact les uns des autres.

Considérons tout d'abord un empilement de grains de sable sans argile : les grains de sable sont considérés comme des grains de forme variable dont la plus régulière est la bille sphérique, d'un diamètre de 50 µm à 3 mm, qui constituent un «empilement» laissant subsister entre les grains des interstices ou espaces qui caractérisent ensemble ce qui est appelé la porosité du sable et dans lesquels se trouvent de l'eau et de l'air, selon des proportions dépendant des circonstances.

Trois cas principaux se présentent dans la porosité : absence d'eau, présence d'eau et d'air, absence d'air. Il ne faut pas oublier non plus la présence d'eau en phase solide (glace) ou en phase d'expansion (eau entre 4 °C et 0 °C).

En absence d'eau, la seule force qu'exerce un grain sur ses voisins est la force de frottement interne, qui s'oppose au mouvement de glissement d'un grain sur l'autre et qui dépend de la forme des grains (sphériques ou aplaties, et peau lisse ou ridée).

En présence d'eau et d'air, tant qu'il y a peu d'eau et beaucoup d'air, le frottement interne n'est pas modifié mais une force nouvelle et très importante apparaît : la force de cohésion créée par capillarité et tension de surface. Les molécules d'eau étant électriquement chargées comme des dipôles, elles s'orientent et constituent une lame d'eau qui s'accroche à la silice de deux grains au contact l'un de l'autre (forces capillaires) et forment une surface incurvée comme un ménisque côté air. La pression de l'air présent dans la porosité crée une force sur cette lame d'eau dont la résultante comprime les deux grains l'un contre l'autre ; cette force, indépendante des forces exercées par les grains l'un sur l'autre du fait d'une pression mécanique sur le tas empilé, est donc une force de cohésion, puisqu'elle contraint les grains à rester collés entre eux.

Une fois que les pores du sable se remplissent d'eau, les forces de cohésion et de frottement diminuent toutes deux. D'une part, une fois qu'un pore est plein d'eau, il n'y a plus de surface libre sur laquelle l'air puisse exercer une pression responsable de la cohésion des deux grains entre lesquels le pore est situé et la cohésion disparaît. D'autre part, le frottement exercé par un grain B sur un grain A s'exerce pour empêcher le glissement du grain A et cette force s'oppose à la force tangentielle de cisaillement jusqu'à une limite égale au produit de la force normale exercée par le grain A sur le grain B et d'un coefficient propre à la matière (et indépendant de la taille) des grains, selon le principe du cône de frottement de Coulomb ; si les pores sont pleins d'eau ou presque pleins d'eau, le grain A, en s'appuyant sur le grain B, s'appuie en même temps sur l'eau qui, étant incompressible, exerce une force de réaction sous la forme d'une pression hydrostatique qui diminue d'autant la force de réaction normale du grain B sur le grain A. Le frottement chute donc brusquement lorsque les pores se remplissent d'eau en chassant l'air.

D'où la formule déjà donnée à l'échelle macroscopique :

$$S = C + (P-U) \sin a$$

La pression interstitielle U vient prendre une partie de l'effort qui décharge le grain et diminue sa résistance au glissement.

Ainsi, par l'étude des forces microscopiques exercées à l'échelle microscopique, on voit que l'eau commence par apporter la force de cohésion et que l'augmentation de la quantité d'eau ne modifie pas le frottement interne du sable sec, tant que le milieu est franchement insaturé d'eau mais que l'excès d'eau aboutit brusquement à la diminution du frottement et à la disparition, à saturation, de la cohésion.

A l'échelle macroscopique, on assiste alors à une «liquéfaction» du sable : une fois les pores noyés, le sable perd sa portance et sa résistance au cisaillement, comme on peut l'observer sur un sol détrempé quand une roue s'embourbe (par manque de portance du sol) et éjecte le sol derrière elle sans avancer (produisant un effet de cisaillement). Il est connu que la terre, quelle que soit sa composition granulométrique, composée de sable ou d'argile, a un comportement mécanique face au cisaillement qui obéit toujours à ce schéma :

- totalement sec : pas de cohésion ;
- avec de l'eau, mais loin de la saturation, comportement constant : une cohésion d'autant plus importante que la granulométrie est faible car les forces capillaires exercées sur les argiles sont un « ciment » qui colle littéralement les grains de sable et créent une surface qui peut être dure comme du béton. Pas de modification du frottement ;
- avec une quantité d'eau plus importante : diminution du frottement puis de la cohésion pour obtenir un sol cohérent, mais pas bloqué parce que les zones responsables du ciment se trouvent noyées tandis que la plupart des pores sont encore pleins d'air ;
- avec une quantité d'eau plus importante encore : baisse brutale du frottement et de la cohésion jusqu'à la liquéfaction.

Bien entendu, dans la réalité, c'est encore plus compliqué que cela, car la liquéfaction du sable ne s'opère pas automatiquement et immédiatement ; les sables mouvants sont une illustration de cette situation où la portance est maintenue pendant plusieurs passages et s'effondre ensuite par liquéfaction ; dans certains sables fins, à condition qu'ils soient très purs, le tassement n'a pas lieu sans vibrer le sable et l'eau et on a des sables entre 100 μm et 150 μm qui ne drainent pas mais sont très serrés et cohérents alors même qu'ils sont saturés d'eau.

Pour cette raison, ces sables rares et très particuliers sont utilisés comme sols de carrière hippiques en condition trempée avec rajout de sable moins fin en surface pour créer une certaine glissance ou du moins une possibilité de déformation.

### • V-1-A-0-3-2 Impact de la granulométrie sur les forces capillaires

Compte tenu de l'importance du remplissage des pores par un mélange d'eau et d'air, il est essentiel de considérer le volume poral, mais surtout sa répartition, en fonction de la granulométrie.

Si l'on considère globalement l'indice des vides, c'est à dire le rapport entre le volume vide et le volume plein dans un empilement de grains de différentes granulométries, il est connu que ce rapport varie finalement assez peu avec la taille des grains ; en fait, il augmente légèrement quand la granulométrie diminue.

En revanche, chaque pore entre trois grains semblables ressemble à un triangle à côté courbes et dont les longueurs sont proportionnels au rayon des grains, de sorte que le volume du pore est proportionnel au cube de la granulométrie. Ce qui importe, ce n'est pas le volume global mais c'est la répartition de la porosité (dépendant de la granulométrie du sol) en pores minuscules, très petits, petits, grands car les phénomènes physiques prépondérants sont différents en fonction de la taille de ces pores.

On peut regarder dans un plan de coupe quelconque la dimension d'un vide entre trois grains semblables et on voit géométriquement qu'il s'agit d'une espèce de triangle dont les côtés sont proportionnels au rayon de la sphère du grain si on modélise le grain par une sphère. En tout cas, ces pores ont un « diamètre » ou une taille caractéristique qui peut être très grande, équivalente ou très petite par rapport à la taille d'une goutte d'eau en fonction de la tension de surface de cette goutte qui dépend elle-même de la matière du grain, en l'occurrence la silice pour le sable et différents matériaux pour les argiles.

- Dans un sable de plus de 2 mm, l'épaisseur du film d'eau constitué des gouttes juxtaposées accrochées à la silice est petite par rapport à la taille caractéristique de la porosité de ce sable.
- Dans un sable fin supérieur à 200 $\mu$m, il reste encore une place suffisante entre les grains pour un film d'eau capillaire et pour laisser un bon passage à l'eau gravitaire.

La circulation de l'eau dans un tel sable idéalement compris entre 200$\mu$m et 400 $\mu$m est particulière car il est assez grossier pour «boire en grand» et assez fin pour rester «frais», ce qui signifie que l'eau circule librement et rapidement par gravité dans la porosité en laissant seulement une quantité limitée d'eau sous la forme d'un mince film d'eau autour de chaque grain, le surplus s'écoulant librement, et cette mince lame d'eau restant accrochée au sable par capillarité et lui donnant sa cohésion de sable mouillé. En fait, ce sable est déjà perméable mais encore assez fin pour faire des «pâtés de sable» ou des «châteaux de sable» qui se tiennent par la cohésion de capillarité de l'eau.

Ce sol est intéressant sur le plan agronomique car il est naturellement aéré à sa compaction maximale avec un espace poral plein d'air et de l'eau disponible autour des grains.

Ce sable entre 200 $\mu$m et 400 $\mu$m a pour autre particularité de se compacter tout de suite à son optimum et, une fois compacté, d'être cohésif, aéré et drainant.

- Dans les sables très fins (80 $\mu$m à 150 $\mu$m) et les limons, la taille des gouttes d'eau piégées par capillarité et le volume disponible entre les grains sont d'un ordre de grandeur suffisamment proche pour qu'il y ait des interactions importantes (d'où la nécessité de vibrer les sables ou limon pour chasser l'air piégé, pour compacter et pour liquéfier).
- Dans le cas des argiles, la goutte d'eau qui rassemble les particules d'argile est plus grosse que la porosité des argiles sèches et l'argile «gonfle» en se mouillant.

### V-1-A-0-3-3 Influence de la porosité sur la teneur en eau

Ainsi, le volume d'eau présent dans les pores s'écoule plus lentement dans une porosité plus petite tandis que le film d'eau capturé par les parois du fait des forces capillaires a une faible épaisseur. Dans la porosité large d'un sable grossier, le volume de ce film est négligeable par rapport au volume d'un pore mais il finit par occuper une part relative importante du volume poral avec un sable très fin ou un limon et occupe la plus grosse partie de l'espace poral d'une argile. Quand on descend la granulométrie vers les argiles fines, ces argiles sont même «gonflantes», ce qui signifie que la lame d'eau entre les grains est plus large que la porosité d'origine. L'argile qui «gonfle» maintient entre elle des particules d'argile en les écartant les unes des autres pour constituer un colloïde qui «ferme» complètement l'espace poral et imperméabilise le terrain, de sorte que l'eau au dessus ne peut plus s'écouler par gravité et qu'il faut attendre que l'évapotranspiration assèche l'argile pour que l'eau et l'air puissent à nouveau circuler dans l'espace poral du massif sableux. Or, il faut ajouter que l'air et l'eau sont en constant échange par la tension de vapeur et que l'air froid hivernal ne retient pas une grande quantité d'eau sous forme de vapeur. De plus, les plantes boivent essentiellement pour pouvoir se refroidir en transpirant, ce qui n'est évidemment pas nécessaire en hiver. Ainsi, l'évapotranspiration hivernale est en moyenne de 1 mm d'eau par jour au lieu de 5 ou 6 mm en été et la sensibilité aux apports d'eau est amplifiée avec une porosité faible, car l'eau s'écoule plus lentement d'une part et que la part de l'air est moins grande d'autre part et c'est pourquoi un sol fin passe très vite de l'état sec et dur à l'état partiellement liquéfié caractéristique de nombreux sols sportifs en hiver.

Ainsi, on voit clairement que les fraction très fines des argiles, limons de moins de 50 $\mu$m et dans une moindre mesure des sables très fins entre 50$\mu$m et 150 $\mu$m sont responsables pour une grande part de l'extrême sensibilité des terrains de sport aux intempéries hivernales.

En conséquence, une amélioration de la qualité d'un terrain avec gazon naturel, destiné à une utilisation sportive, pourrait consister à supprimer cette fraction extrêmement présente naturellement dans les sols par un choix judicieux d'une granulométrie de substrat. Ceci contribuerait à résoudre une grande part du problème de sensibilité aux intempéries et favoriserait en même temps la santé du gazon.

**V-1-A-0-3-4 Impact microscopique** de **la granulométrie sur l'aspect agronomique**

Il sera vu plus loin comment résoudre le problème d'un sol privé de sa fraction fine et donnant une cohésion satisfaisante sur le plan mécanique. Auparavant toutefois, il faut résoudre un autre problème car les fines jouent également un rôle fondamental sur le plan agronomique avec un aspect négatif et un aspect positif.

L'aspect négatif, déjà développé ci dessus, est qu'un sol très fin, en l'absence de drainage macroscopique, va avoir tendance à ne pas drainer et à laisser peu de place pour l'air et en particulier l'oxygène indispensable pour les racines du gazon.

Cependant, il est généralement admis dans l'état actuel de la technique que cette fraction fine est essentielle et même généralement considérée comme indispensable, non seulement pour donner au sol sa cohésion, comme il a été dit ci dessus, mais également pour donner aux graminées les conditions nécessaires à leur croissance.

Les deux éléments dont sont pourvus les argiles et presque dépourvus les sables sont la capacité d'échange cationique ou CEC et la réserve utile en eau.

Quand on considère le gazon, il faut que les racines puissent pénétrer le sol, s'y accrocher et y puiser l'eau et les éléments nutritifs nécessaires. Si, dans un sol naturel habituel, la capacité d'échange cationique (CEC) est plus particulièrement importante dans la fraction fine des argiles, l'expérience montre cependant que le gazon peut parfaitement prospérer dans un sol plus «pauvre» et en particulier dans un sable siliceux d'une granulométrie comprise entre 200 $\mu$m et 400 $\mu$m en développant dans un tel sable un «chevelu» très dense permettant de compenser par la surface de contact la faible densité d'eau et d'éléments nutritifs. Ce fonctionnement d'une plante dans un sol à faible densité d'éléments nutritifs que compense une très importante densité de racines est à la fois fonctionnel pour la croissance et la santé de la plante et idéal pour le rôle mécanique qu'on souhaite faire jouer aux racines de gazon. Un sable siliceux roulé de 200 $\mu$m à 400 $\mu$m permet une telle situation à condition d'être «propre», c'est à dire sans fines notamment calcaires dont une toute petite quantité suffit à cimenter le sol et ruiner ses qualités spécifiques ci-dessus décrites.

**V-1-A-0-4 A l'échelle mésoscopique**

• **V-1-A-0-4-1 Impact de la structure du sol**

En fait, la porosité d'un sol normal, au sens habituel du terme « sol », avec de l'argile, du limon et de la matière humique est très différente du modèle pris à l'échelle sol sportif artificiellement recomposé, essentiellement sableux et considéré comme homogène, pris en modèle pour la présente invention. La différence essentielle est que la porosité d'un vrai sol n'est pas seulement la microporosité texturale entre les grains, directement liée à la texture en supposant un simple empilement de billes de différentes dimensions mais que cette porosité d'un sol comprend des macro pores, liées à un arrangement structurel du sol en macrostructures (ou mottes) sous l'effet des différentes colles d'argile et de l'histoire du sol (compaction, décompaction, gel, vers de terre etc.). Dans un vrai sol, une partie de l'oxygène, des chemins des racines et des forces s'exercent dans des macro pores entre agrégats, c'est à dire à une échelle mésoscopique très différente de l'échelle des particules microscopiques élémentaires, même si ces dernières fournissent toutefois les forces constitutives du sol, notamment la portance du sol.

En réalité, cette fraction fine est effectivement très efficace et a même un rôle essentiel pour la cohésion des sols et pour la culture des graminées (en situation décompactée et drainante).

Comme ces fines sont statistiquement très représentées dans les sols (plus de 90% des sols français sont riches ou très riches en argile) et que leur rôle utile est avéré tant d'un point de vue agronomique que de la résistance mécanique, il n'est pas étonnant que la plupart des sols sportifs soient conçus avec l'utilisation d'une terre locale, éventuellement amandée en sable, avec une proportion de fines (argiles ou limon) relativement importante. Toutefois, en raison des divers inconvénients des gazons naturels énoncés plus haut, il est préféré, dans le cadre de la présente invention de pouvoir disposer d'un gazon naturel dont la conception permet de mieux répondre aux sollicitations mécaniques et météorologiques tout en conservant certaines des caractéristiques des gazons actuellement utilisés telle la cohésion du sol.

En effet, le problème d'un terrain de sport est un problème macroscopique et l'erreur a été jusqu'à maintenant de vouloir tout résoudre à une seule et même échelle microscopique de base. Or, à l'échelle microscopique, un sol ne trouve sa cohésion que grâce aux éléments fins et très fins. Pour trouver une solution satisfaisante, il faut à nouveau poser le problème en recherchant d'abord quelles sont les fonctions attendues du sol et répartir les fonctions nécessaires à diverses échelles, ce qui suppose d'abandonner le modèle d'un terrain uniforme et homogène à toutes les échelles pour passer à la conception d'un modèle de terrain complexe, non uniforme et non homogène à l'échelle mésoscopique, même si le terrain doit paraître homogène à l'échelle macroscopique.

Quand on considère l'aspect mécanique du sol, on souhaite qu'il soit meuble à une certaine échelle de temps et d'espace et ferme à une autre échelle de temps et d'espace. On recherche un sol souple et plat qui puisse résister et réagir à d'importantes forces de propulsion.

### • V-1-A-0-4-2 Impact mésoscopique des racines sur la cohésion

Dans le cas d'un sable entre 200 et 400 $\mu$m, il a été vu ci dessus que le sol est suffisamment meuble pour permettre aux racines de coloniser une très importante partie de l'espace poral avec des racines très souples et très fines qui s'accrochent au sol par le simple biais des forces capillaires. Les racines sont au contact de milliers de grains qui sont ainsi reliés les uns aux autres par une même chaîne de forces liées aux interaction des grains avec une même racine et cet effet se multiplie avec un effet de réseau dans la mesure où les racines d'une même plante se constituent en maillage et le réseau gagne à se complexifier si les racines de plantes voisines se croisent et se mêlent avec des forces de cohésion (racines - eau - racines) ou des forces de frottement pour enchaîner les grains.

Plus les racines sont denses dans un sol sableux et plus l'effet mésoscopique du sol armé et enchaîné devient prépondérant par rapport aux forces de cohésion microscopiques (grains contre grains).

Dans un sol classique avec une dose d'argile assez importante, le sol se constitue en mottes et ce sont les forces microscopiques de colle de l'argile qui donnent aux mottes un comportement interne solide tandis que les racines et l'eau et l'air circulent préférentiellement entre les mottes.

Au contraire, dans un sol en sable pur, les forces entre grains sont très faibles pour un sable grossier, faibles moyennes pour un sable entre 200 à 400$\mu$m, c'est à dire qu'elles permettent la cohésion d'un pâté de sable qui se tient tout seul mais s'écrase si on marche dessus et elles sont moyennes dans le cas d'un sable très fin. A l'inverse, les radicelles se faufilent partout car il n'y a pas d'obstacle mécanique à leur progression et parce que la plante doit compenser la faible densité de nutriments par une forte surface d'échange ; ces racines créent un lien par capillarité entre tous les grains qui sont liés à une même radicelle proche et la somme de tous ces liens capillaires entre grains et racine devient la force prépondérante.

### • V-1-A-0-4-3 Impact mésoscopique d'inclusions sur la cohésion, l'énergie potentielle d'amortissement et l'angle de frottement

Si l'on rajoute des inclusions dans le sol pour changer son comportement mécanique à l'échelle macroscopique, l'analyse ci dessus montre que de telles inclusions peuvent affecter les trois paramètres décrits et définis ci dessus.

Ainsi, si une surface élémentaire de sol peut être caractérisé avant incorporation d'inclusions par les trois caractéristiques suivantes:
cohésion C1, frottement interne f1, énergie potentielle E méca1.

Après incorporation d'inclusions, les nouvelles caractéristiques deviennent :
cohésion C2, frottement interne f2, énergie potentielle E méca2.

Si l'on rajoute des inclusions dans le sol, sous forme de fibres ou de bandelettes, en règle générale ces inclusions d'une matière rugueuse augmentent le frottement interne en augmentant les surfaces de contact : une fois que l'inclusion est plaquée contre les grains et mise en tension du fait du début de cisaillement, l'effet du frottement se fait sur un grand nombre de grains dès lors que la longueur de l'inclusion la met au contact d'un grand nombre de grains et cela renforce l'effet du frottement car il faut vaincre simultanément toutes ces réactions.

Dans un terrain de sport classique, ces paramètres sont affectés par l'humidité et de façon classique, l'amélioration du coefficient de frottement par incorporation de fibres ou de bandelettes ou d'autres inclusions connues se fait au détriment des deux autres paramètres.

Or, on sait déjà augmenter le coefficient de frottement par inclusion de fibres synthétiques ou d'inclusions mais sans chercher simultanément à maîtriser la cohésion ni l'énergie potentielle d'absorption mécanique.

Les fibres incorporées au sol étant généralement plus grosses que la porosité du sable, il en résulte d'une part une perte de cohésion et d'autre part une perte d'énergie potentielle d'absorption mécanique quand elle existe.

Compte tenu de la nature, des dimensions et de la forme ainsi que de la distribution spatiale comprenant la quantité et la distribution en emplacements et en direction des différentes inclusions incorporées au substrat selon l'invention, cette incorporation induit, par rapport au substrat avant incorporation, un changement de la cohésion, du frottement interne et de l'énergie potentielle d'absorption mécanique avant blocage, par rapport à ces mêmes caractéristiques avant incorporation des inclusions, caractérisés selon l'invention par une augmentation de l'angle de frottement d'un facteur minimal de 25 % et pouvant dépasser 100% ou même beaucoup plus, tandis que simultanément la cohésion n'est à tout le moins pas dégradée de plus de 30% et peut être améliorée de façon importante de plus de 50% ou plus et que l'énergie potentielle d'absorption n'est à tout le moins pas dégradée de plus de 30% et peut être préférentiellement améliorée de façon très importante de 100% ou même 1000%.

La non dégradation de cette « énergie potentielle d'amortissement » ou mieux son augmentation lors de l'incorporation d'inclusions est le résultat, selon l'invention, d'une combinaison de plusieurs mécanismes dont le premier consiste à conserver ou en tout cas à ne pas dégrader de façon importante un mécanisme qui préexiste dans le substrat avant l'incorporation d'inclusions tandis que de nouveaux mécanismes au contraire découlent de certaines caractéristiques des inclusions incorporées selon l'invention et qu'un dernier mécanisme n'est pas directement lié au substrat mais à un dispositif extérieur d'amortissement supplémentaire dont peut, selon l'invention, être équipé le sol, entre la rhizosphère et le fond de forme.

Le premier mécanisme est celui du frottement des micro déplacements initiaux des grains bougeant les uns par rapport aux autres avant de se compacter et de se mettre en tension et d'être alors bloqués par l'ensemble des forces de frottement. Il est observé dans un sol granulaire, en dehors du cas des sols trop durs à cause d'une fraction argileuse trop forte dans un sol assez sec, que le sol se déforme et prend « l'empreinte » du pied lors de la réception, cette empreinte étant le résultat d'un tassement et d'un réarrangement local des grains qui doivent vaincre une force de résistance par frottement des grains qui translatent les uns par rapport aux autres. Lors de l'appel suivant la réception ou même avant d'avoir réussi à immobiliser le pied, il arrive que cette ébauche d'empreinte se transforme en une déformation irréversible au niveau de la surface avec un arrachement éventuel du gazon.

**V-1-A-0-5 Conclusion**

La présente invention fait le choix de favoriser la cohésion du sol. Pourtant, de façon paradoxale, la présente invention fait le choix, dans une version préférée, de se passer du principal facteur de cohésion du sol qu'est l'argile.

Or, les sols utilisés pour les gazons comprennent habituellement une part d'argile qui se trouve naturellement dans la plupart des sols naturels non reconstitués et cette part d'argile est généralement considérée comme indispensable à la fois pour donner au sol une cohésion et pour offrir au gazon une capacité d'échange cationique nécessaire à sa croissance. Or, l'argile confère au sol une cohésion très forte quand le sol est sec et très faible quand le sol est humide, surtout si la quantité d'argile est importante.

Une première particularité du sol selon l'invention est l'absence, ou à tout le moins la très faible quantité présente, d'argile dans le sol avant incorporation des inclusions destinées à changer le comportement mécanique de ce sol. Les deux principales raisons de ce choix sont :

- Surtout, éviter les très fortes cohésions du sol sec qui suppriment l'énergie potentielle du sol.
- Accessoirement, éviter la variabilité de comportement liée à l'humidité.

Contrairement aux sols habituellement utilisés dont le comportement de résistance mécanique pour augmenter la cohésion est lié de façon prépondérante à l'effet des forces à l'échelle microscopique, la présente invention une cohésion essentiellement mésoscopique selon le fonctionnement naturel des racines renforcé par des inclusions qui en imitent le fonctionnement.

**V-1-A-1 Composition du substrat d'origine**

**V-1-A-1-1 Squelette minéral sableux**

Conformément à l'invention, la couche de substrat comprend une première partie granulaire ayant la granulométrie d'un sable, comprise entre 80 μm et 3 mm. Ce « sable » peut être du sable siliceux ou un granulat de nature différente, résiliente ou poreuse, comme cela sera vu plus loin.

Dans une version préférable de création de novo, le substrat est composé pour une part d'un squelette minéral à granulométrie de sable entre 80 μm et 3 mm mais comporte de préférence une part importante qui peut être exclusive dans une version avantageuse de l'invention dans la plage 200 μm à 400 μm, de façon à favoriser la cohésion naturelle du substrat squelettique de base, en évitant pour cela les grosses granulométries qui créent une porosité de plus grande taille dans laquelle la part relative des forces de cohésion tient moins d'importance. De même les argiles et limons et dans une moindre mesure les sables fins entre 50 et 150 μm seront sinon interdits du moins très limités en proportion car ils donnent au substrat un comportement plus sensible aux légères variations d'humidité alors que dans le fuseau de 200 à 400 μm, les excès d'eau s'écoulent par granulométrie tandis que l'eau liée reste constante et donnent un comportement à la fois constant et essentiellement cohésif, ce qui est recherché.

La nature du sable, indépendamment de sa granulométrie de ce squelette, peut être un mélange d'éléments de densités et propriétés différentes mais sa forme doit être la moins anguleuse ou la plus ronde possible, dans le but de ne pas créer un emboîtage qui donne un comportement qui n'est plus cohésif mais à très fort angle de frottement.

De façon idéale, le substrat doit pouvoir être utilisé dans la plage d'humidité telle que prévue et contrôlée par l'arrosage et le drainage pour faire des pâtés de sable qui se tiennent par cohésion même si une force modérée permet de les faire s'écrouler.

L'invention concerne également les caractéristiques ci-après, considérées isolément ou selon toute combinaison techniquement possible:

- lorsque le gazon naturel de l'invention est disposé sur un substrat, ce dernier se distingue de substrats utilisés avant l'invention par le fait d'abord que ce substrat sert de support d'enracinement à un gazon qui y trouve le milieu propice à sa croissance et ensuite par le fait que d'une part la part pondérale des éléments du substrat d'une granulométrie inférieure à 3 mm est supérieure à 65% et que d'autre part la part pondérale de l'ensemble des éléments dont la granulométrie est inférieure à 50 μm par rapport à l'ensemble des particules dont la granulométrie est inférieure à 3mm est à tout le moins inférieure à 25%, de préférence à 2% et de façon idéale n'est présente qu'à l'état de traces ;
- le substrat comprend des particules de petite granulométrie de liège cuit;
- la première partie de particules a une granulométrie comprise entre 200 μm et 400 μm;
- le substrat est exempt de fines sous forme de limon ou d'argile;
- le substrat comprend une fraction organique en une proportion en volume comprise entre 0 % et 50 % du volume total, selon les circonstances particulières et de préférence entre 10 % et 25 %,
- le drainage et le maintien de la cohésion du substrat sont deux éléments essentiels de l'invention.

### V-1-A-1-2 Fines et matière organique

### V-1-A-1-2-1 Pas d'argile ou peu d'argile

En jouant sur plusieurs constituants et en se passant au maximum des fines, il est possible de constituer un «sable» qui dispose sur le plan agronomique de caractéristiques propices à la culture du gazon et qui, sur le plan mécanique, est drainant et peu sensible à la liquéfaction, avec une cohésion mécanique moyenne et un frottement interne moyen et borné.

L'absence de fines sous forme de limon et d'argile est essentielle pour rendre le sol peu sensible aux variations d'humidité. Même si l'absence totale et absolue d'argile et de limon est impossible, il est à tout le moins déterminant pour le comportement du sol souhaité dans le cadre de la présente invention que la granulométrie du sol permette de le situer dans le triangle de texture dans la case tout en bas à gauche, correspondant au comportement du sable pur.

Un tel sable selon l'invention se caractérise par une cohésion moyenne, du fait même de la coupure supprimant les fines ou tout au moins l'effet comportemental macroscopique des fines s'il y en a ; également, le frottement reste moyen par le choix, selon l'invention, de sable roulé et non concassé.

Il peut sembler paradoxal de rechercher une cohésion et un frottement qui soient moyens et bornés et qui ne soient ni faibles ni élevés alors qu'un des objectifs est de procurer un sol portant et ferme pour des appuis sûrs et pour éviter de désagréger la surface, mais cela vient du fait que la cohésion et le frottement à l'échelle microscopique ne sont pas la seule source de cohésion et de frottement intervenant à l'échelle macroscopique e que le principe de l'invention est précisément d'en privilégier un autre, à l'échelle mésoscopique, comme il a été vu plus haut.

Avec de l'argile et en situation sèche il est connu qu'une motte dure, contrairement à un pâté de sable, se tient et résiste à de fortes agressions mécaniques par l'effet de « colle » typique de l'action des argiles en sol relativement sec. Justement, on ne souhaite pas cet effet de colle qui est une cohésion trop forte et ne laisse pas assez de place au travail du sol lors d'un choc mais se traduit au contraire par une trop grande dureté de sol, non désirée dans la présente invention. Il est également connu à l'inverse qu'un sol argileux trop humide ne se tient pas et ce n'est pas non plus souhaité, même si cet aspect est moins grave dans la mesure où on peut le compenser. Le contraste entre un sol trop dur ou au contraire pas assez cohésif en fonction de la teneur en eau est une difficulté que l'on souhaite éviter autant que possible, et le meilleur moyen est de supprimer l'argile autant que possible, selon l'invention.

Dans le cas d'une création de novo, le substrat sera donc de préférence sans argile.

Cependant, dans le cas d'une rénovation et d'un mélange à de la terre en place, le substrat en place est susceptible d'être riche en argile et un substrat relativement argileux fait donc partie des possibilités de réalisation.

**V-1-A-1-2-2 Eventuelle fraction organique**

Le substrat, en plus de la fraction minérale, peut comprendre une fraction organique, dont on souhaite qu'elle n'ait pas pour inconvénient d'augmenter la variabilité du comportement mécanique du substrat en fonction de l'humidité, ce qui amène à préférer une part volumique faible qui peut être de 50 % mais est préférée inférieure à 25 % dans la plupart des cas et qui peut même, à la limite être nulle pour des terrains très entretenus dont on attend des performances optimales dans le domaine mécanique, et spécialement dans l'objectif de minimiser l'écart type de ces paramètres en fonction des conditions climatiques.

Toutefois, même si ce n'est pas obligatoire, il est possible d'adjoindre, pour un meilleur fonctionnement agronomique, une petite quantité de matière humique évoluée comme de la tourbe ou du compost de lin ou, de façon préférable sous la forme de compost stable et à granulométrie fine avec un apport de nutriments et de bactéries et à granulométrie maîtrisée, riche en bactéries utiles et présentant une grande valeur agronomique pour retenir et rendre assimilables les nutriments. La faction organique doit être de façon préférable une matière compostée ayant fait l'objet d'un compostage complet, être riche en enzymes et microorganismes vivants et se présenter sous une granulométrie très fine. Le lombricompost, surtout le lombricompost de fumier de bovin déjà bien composté est idéal mais d'autres produits comme un compost d'algues, de bois et de lisier complètement composté et connu sous le nom commercial d'Algoforestier ou encore tout bon compost mûri et tamisé sont des matières organiques qui seront préférées à des matières dont le compostage n'est pas fini, qui peuvent encore monter en chauffe, (surtout si ils contiennent du lisier) et qui peuvent ne pas être exempts de graines ou ne se présentent pas à l'état sec sous forme de très fines particules.

Ce type de matière humique ne crée pas de colles puissantes et la cohésion du sol n'est pas modifiée de façon négative par les colloïdes organiques qui constituent des liens de cohésion de qualité, comparables, mais encore plus efficaces, à celle du sable humide. En revanche, malgré cet avantage avec une faible quantité de matière organique, l'inconvénient est le risque de saturer l'espace poral ; plus le sable est fin, moins il faut de cette matière humique.

L'objectif d'une limitation de la quantité maximale de matière humique est de ne pas rendre le système trop sensible aux variations d'humidité et le principe retenu est de limiter cet apport de telle sorte que le volume de cette matière humique mouillée ne modifie pas de façon significative la taille de la porosité granulaire de la matrice sableuse, une fois la matière humique mélangée au sable. Il est possible par exemple de choisir une granulométrie de sable commençant à 200 $\mu$m pour obtenir une porosité équivalente, après injection de matière humique, à celle d'un sable de granulométrie commençant seulement à 180 $\mu$m. En effet, bien mélangée de façon idéale, la matière humique en très fines particules comme le lombricompost se combine à l'eau pour s'agglomérer aux grains de sable en laissant libre la porosité centrale de la matrice sableuse et en encombrant seulement les bords des pores, grâce aux forces de capillarité. En fait, le mélange crée un sol avec de petits blocs de matière humique et sable arrangés de façon aléatoire, c'est à dire une micro structuration du sol mais les agrégats sont tout petits et restent presque à l'échelle du sable et n'en changent pas fondamentalement le comportement, sinon par une augmentation de la cohésion et une forme de lubrification du sable quand il est frais.

Une proportion en volume de compost comprise selon l'invention entre 0 % et 50 % du volume total, selon les circonstances particulières et de préférence entre 10 % et 25 %, permet d'obtenir un compromis satisfaisant entre les caractéristiques agronomiques et mécaniques du substrat.

**V-1-A-1-3 Exemples de composants du substrat d'origine selon l'invention**

**V-1-A-1-3-1 Sable 200 $\mu$m à 400 $\mu$m**

Quand on considère le gazon, il faut que les racines puissent pénétrer le sol, s'y accrocher et y puiser l'eau et les éléments nutritifs nécessaires.

Toutefois, un autre objectif recherché est de disposer d'un terrain dont les caractéristiques soient les plus stables possibles pendant l'année, malgré les intempéries.

Il a été vu que le fait de supprimer les fines comme l'argile, les limons et les sables très fin permet de réduire considérablement la sensibilité aux intempéries en permettant d'éviter des situations de saturation.

Si, dans un sol naturel habituel, la capacité d'échange cationique (CEC) est plus particulièrement importante dans la fraction fine des argiles, l'expérience montre que le gazon peut parfaitement prospérer dans un sol plus «pauvre» et en particulier dans un sable siliceux d'une granulométrie comprise entre 200 $\mu$m et 400 $\mu$m en développant d ans un tel sable un «chevelu» très dense permettant de compenser par la surface de contact la faible densité d'eau et d'éléments nutritifs.

Ce sable, pour présenter ces caractéristiques avantageuses doit être de nature siliceuse minérale et extrait d'une sablière en prenant soin de choisir un gisement connu, de préférence formé initialement par granuloclassement hydraulique suivi d'un granuloclassement éolien de type sable de Fontainebleau ou d'Etampes, donnant des formes très sphériques, une grande pureté de silice, une grande propreté et un granuloclassement très étroit, régulier et constant au sein des gisements.

Ce fonctionnement d'une plante dans un sol à faible densité d'éléments nutritifs que compense une très importante densité de racines est à la fois fonctionnel pour la croissance et la santé de la plante et idéal pour le rôle mécanique qu'on souhaite faire jouer aux racines de gazon. Un sable siliceux roulé de 200 $\mu$m à 400 $\mu$m permet une telle situation à condition d'être «propre», c'est à dire sans fines, notamment calcaires, qui viennent cimenter le sol et peuvent ruiner ses caractéristiques mécaniques. Dans les bonnes conditions, un tel sol est suffisamment meuble pour permettre aux racines de coloniser une très importante partie de l'espace poral avec des racines très souples et très fines qui s'accrochent au sol par le simple biais des forces capillaires. La circulation de l'eau dans un tel sable est particulière car il est assez grossier pour «boire en grand» et assez fin pour rester «frais», ce qui signifie que l'eau circule librement et rapidement par gravité dans la porosité en laissant seulement une quantité limitée d'eau sous la forme d'un mince film d'eau autour de chaque grain, le surplus s'écoulant librement, et cette mince lame d'eau restant accrochée au sable par capillarité et lui donnant sa cohésion de sable mouillé. En fait, ce sable est déjà perméable mais encore assez fin pour faire des «pâtés de sable» ou des «châteaux de sable» qui se tiennent par la cohésion de capillarité de l'eau.

Ce sol est intéressant sur le plan agronomique car il est naturellement aéré à sa compaction maximale avec un espace poral plein d'air et de l'eau disponible autour des grains.

Ce sable entre 200 $\mu$m et 400 $\mu$m a pour autre particularité de se compacter tout de suite à son optimum et, une fois compacté, d'être cohésif, aéré et drainant.

Quand, en l'absence d'éléments supplémentaires, le substrat dans lequel pousse le gazon naturel est essentiellement constitué de sable siliceux roulé d'une granulométrie entre 200 $\mu$m et 400 $\mu$m et que ce sable est frais et que le gazon a développé un chevelu important comme c'est normalement le cas d'un gazon dans ces conditions en saison non hivernale, l'ensemble constitué par le sable et le chevelu racinaire du gazon a un comportement caractéristique du gazon naturel dans les meilleures conditions d'utilisation sportive.

Ce comportement est caractérisé :

- dans un premier temps par un sol qui laisse les crampons ou les sabots pénétrer sans difficulté et s'ajuster par la réaction immédiate sur une petite surface et une petite profondeur ; la première réaction est celle du sable frais qui a une cohésion suffisante à lui seul (sans gazon) pour porter un homme ou un cheval qui courent mais sans effet de ciment pour résister à l'enfoncement des crampons ou des sabots ou pour s'opposer à un ajustement latéral du pied ;

- dans un deuxième temps, à l'échelle du pied tout entier, par le fait que le gazon s'écrase et s'interpose entre la surface et le pied, procurant à la fois un amortissement et une certaine glissance qui permettent un ajustement du pied avant l'appel ; et

- dans un troisième temps, par le fait que, une fois les crampons enfoncés, le pied exerce une pression latérale et normale pour permettre au sportif de s'élancer ou pour un arrêt et changement de direction : le gazon manifeste alors un comportement de cohésion importante qui n'est pas celle liée à la cohésion directe des grains, mais cette cohésion est l'effet à l'échelle mésoscopique du chevelu racinaire.

### V-1-A-1-3-2 Sables super-fins

Dans les sables très fins (sables rares entre 100 $\mu$m et 150 $\mu$m), au contraire, le sable devrait théoriquement être liquéfié en situation totalement saturée (sursaturé pourrait-on dire). En réalité on utilise classiquement de tels sables dans les carrières hippiques en situation de saturation car il ne se compacte pas sans être vibré et présente une très grande portance, saturé d'eau.

Il pourrait donc être utile d'utiliser ces sables très fins qui sont excellents sur le plan mécanique, mais ils présentent l'inconvénient d'être lourds et bloquants sur le plan mécanique et peu oxygénés pour les racines. Comme produit unique, en l'absence de gazon, ils sont reconnus pour leur intérêt et conviennent pour les sports hippiques mais ils sont trop serrés et ne travaillent pas assez et sont durs quand ils ne sont pas saturés et les sols saturés d'eau ne conviennent pas au gazon .

### V-1-A-1-3-3 Granulés de liège

Dans une gamme de granulométrie semblable ou plus étendue vers les grosses granulométries, il est possible de remplacer une partie du sable siliceux par des grains d'autres matières avec un substrat qui réussit également à la culture du gazon.

En particulier, il est possible, selon l'invention, d'introduire des particules de petite granulométrie de liège cuit qui diminue la densité, apporte isolation thermique et résilience, joue un rôle semblable à celui du sable siliceux par capillarité et avec une rétention d'eau plus importante à cause des cellules périphériques ouvertes ;

Une autre solution consistant à utiliser du liège comme élément constitutif dans les substrats de culture du gazon, naturel, résilient, léger, isolant, est décrit dans le document FR-A-2 753 211, du même inventeur que de la présente invention.

De façon surprenante, malgré une densité 2O fois plus faible que celle du sable, des essais réalisés dans le cadre de la présente invention montrent que la cohésion liée aux propriétés de tension de surface de ce matériau à frottement même humide permet d'éviter une ségrégation et un débordement avec migration à l'extérieur lors d'évènements pluvieux, du fait que l'eau est bue très rapidement et qu'il ne se forme pas de surpression d'eau interstitielle. Compte tenu du drainage favorisé par l'incorporation de liège et de son effet isolant et de sa capacité de résilience qui peut en tout état de cause compenser une augmentation du volume de l'eau entre 4 °C et la prise en glace, on constate de façon surprenante encore une fois que le gel ne fait pas remonter de grosses particules de liège emprisonnées dans du sable fin. Ainsi, avant même de profiter de l'augmentation de stabilité par les racines et les inclusions selon l'invention, ce matériau présente une stabilité surprenante grâce à un comportement mettant en oeuvre des caractéristiques mécaniques très spécifiques et favorables à l'objectif visé. De plus, tous les essais ont été réalisés pour constater l'absence d'effet négatif et rejets négatifs (tanins ou autres produits du bois) mais, bien au contraire des qualités horticoles particulièrement favorables à la croissance des végétaux même sensibles et à fortiori du gazon.

Des essais de culture de gazon ont été menées avec succès dans un tel substrat composé à 100 % de fines particules de liège cuit qui ne présente aucune phytotoxicité et constitue un bon substrat neutre comme le sable avec une isolation thermique en plus. Sur le plan mécanique, la densité sèche étant de 70 kg/m3 (au lieu de 1.600 kg/m3 pour du sable siliceux en densité apparente), le poids d'un volume de substrat n'est pas capable de résister aux sollicitations mécaniques par son propre poids mais l'eau présente en périphérie des grains alourdit l'ensemble et peut remonter la densité apparente du substrat mouillé à quelques centaines de kilogrammes par mètre cube.

D'autre part et surtout, le liège, en plus d'un coefficient de frottement exceptionnellement élevé a une très grande mouillabilité qui lui donne une très grande force attractive de cohésion, ce qui permet à un grain d'être bloqué dans sa matrice malgré son faible poids.

Bien que le liège soit également cité plus bas parmi les inclusions à cause du rôle mécanique spécifique qu'il peut jouer dans le cadre de la présente invention, il a une potentialité de constitution d'un excellent substrat de culture en tant que tel, mélangé au sable et même pur.

Le liège est un produit naturel organique mais qui a pour caractéristique une très grande résistance à la dégradation, de sorte qu'on peut le considérer comme partiellement imputrescible à l'échelle d'utilisation d'un terrain de sport, grâce à un remarquable constituant spécifique, la subérine.

Les études ont été réalisées qui montrent parfaite compatibilité (même à 100%) avec les plantes et de plus le liège est naturel et classé consommable et constitue donc un élément parfaitement indiqué dans les perspectives de développement durable des terrains de sport en gazon naturel de la présente invention.

Or, le liège a une exceptionnelle mouillabilité qui lui donne une cohésion dans le substrat hors contraintes et un très fort coefficient de frottement qui le maintient sous contrainte par des forces de cohésion essentiellement, selon le principe de l'invention.

Du fait de sa mouillabilité, le liège retient une quantité d'eau importante en surface par un film d'eau lié par capillarité et également de l'eau s'accrochant à la porosité superficielle ouverte (la porosité interne est fermée et pleine d'air mais les cellules sont ouvertes en surface) et cela donne une réserve d'eau intéressante pour les plantes même si la proportion de liège est importante.

Le résultat mécanique en termes de souplesse suppose un potentiel d'écrasement cumulé suffisant et donc une proportion importante d'éléments en liège. Mécaniquement il est solide et peut être malmené sans créer de fines (comme tous les élastomères) et ses qualités de filtre anti-vibrations hautes fréquences sont reconnues.

Le liège est connu pour ses propriétés d'isolant thermique, ce qui présente un grand intérêt pour éviter le froid sur les racines et le gel dans le substrat.

La densité très faible du liège présente de l'intérêt pour les substrats de gazons mobiles et notamment pour les modules de gazon autonome.

Le fait de sa densité si faible pourrait normalement être un inconvénient en étant facteur de ségrégation mais les expériences de liège avec sable et végétation montrent le contraire : il y a moins de ségrégation qu'avec des particules pourtant plus lourdes d'autres matières car le liège évite la ségrégation hivernale et favorise le drainage et tient très fort à sa place par cohésion tant qu'il y a de l'air. Si il n' y a pas de drainage suffisant et que le substrat était saturé, il remonterait "comme....un bouchon".

Lorsque le gel entre dans le sol, ce qui est difficile avec un matériau si isolant et favorisant le drainage, le liège s'écrase si nécessaire sous la poussée de l'eau quand elle augmente de volume entre 4 °C et 0 °C, de sorte que les particules grossières ne subissent pas la force ascensionnelle qui fait remonter les cailloux en hiver.

**V-1-A-1-3-4 Minéraux poreux spéciaux à forte CEC et rétention d'eau**

Si on supprime à la fois la fraction minérale fine (argile et limon) et la part organique, on supprime les éléments riches en CEC (capacité d'échange cationique) et présentant une importante réserve utile d'eau, ce qui fait sortir le substrat des critères habituels de l'agronomie et même du concept normal de sol structuré constitué de macromottes favorisées par les assemblages lis aux ponts des colles des fines ou des colloïdes organiques. Cependant, avec des terrains munis d'arrosage automatique et d'un programme de fertilisation adéquat, un tel substrat est parfaitement adapté à la croissance du gazon et présente même un grand avantage : le gazon profite de la faible cohésion du sable, comparativement aux mottes comprenant de l'argile, pour prospecter tout le volume avec une densité de chevelu incomparablement supérieure et qui compense la faible densité volumique d'éléments nutritifs ou d'eau disponibles dans le substrat. En outre, l'utilisation de sables spéciaux comme la zéolithe ou les laves ou le sable de corail procure une CEC et une réserve utile sous une forme intra granulaire et non plus sous la forme inter granulaire habituelle et cette forme intra granulaire est tout aussi efficace sur le plan agronomique, si ce n'est plus puisqu'elle permet de combiner la densité du chevelu et celle d'une densité d'éléments disponibles aussi importante. Une bonne conduite d'un tel système consiste à ne pas fertiliser ni arroser pendant certaines périodes pour obliger le gazon à prospecter au maximum le substrat, à la recherche des éléments nécessaires à sa survie et de lui procurer en abondance, une fois qu'il a développé le chevelu souhaité. Or, le chevelu du gazon est l'élément le plus efficace du système, à l'exception des inclusions rajoutées pour pallier l'éventuelle insuffisance dudit chevelu et agir en mimétique de ce dernier.

On peut donc également introduire un «sable» avec de la CEC et de la rétention d'eau avec des roches poreuses allant des coraux aux roches volcaniques comme la pouzzolane ou les zéolithes et préférentiellement la clinoptilolithe. L'avantage supplémentaire est d'avoir une densité plus faible (de l'ordre de 1) qui diminue la différence avec le liège ; une autre caractéristique de ces roches poreuses est leur fort coefficient de frottement.

On ne souhaite pas un coefficient de frottement trop fort mais on a intérêt à augmenter le coefficient de frottement par une surface plus rugueuse que la silice. En revanche, il ne faut pas de blocage avec des grains angulaires qui font un emboîtage et la forme arrondie, sphérique si possible mais en tout cas non pointue. La forme arrondie est un critère important dans le choix des granulats.

**V-1-A-1-3-5 Autres natures de grains** - **critères de faisabilité**

Dans une gamme de granulométrie semblable ou plus étendue vers les grosses granulométries, il est possible de remplacer une partie du sable siliceux par des grains d'autres matières avec un substrat qui réussit également à la culture du gazon.

D'autres éléments naturels ou artificiels peuvent être utilisés avec une granulométrie semblable comme constituants d'un sol à granulométrie définie comme les mousses artificielles ou le PVC broyé, les billes de caoutchouc ou les billes d'argile cuites ou quantité d'autres matériaux qui sont adjoints aux substrats de culture. Cependant, pour constituer un sable de qualité, ces matériaux ne doivent pas seulement avoir une granulométrie appropriée mais ils doivent avoir des caractéristiques physiques et biologiques et de prix intéressantes. De plus, dans une perspective de développement durable en milieu écologique, certains éléments dont les caractéristiques physiques et biochimiques pourraient convenir ne sont pas souhaitables pour autant.

D'autres éléments naturels ou artificiels peuvent être utilisés avec une granulométrie semblable comme constituants d'un sol à granulométrie définie comme les mousses artificielles ou le PVC broyé, les billes de caoutchouc ou les billes d'argile cuites ou quantité d'autres matériaux qui sont adjoints aux substrats de culture. Cependant, pour constituer un sable de qualité, ces matériaux ne doivent pas seulement avoir une granulométrie appropriée mais ils doivent avoir des caractéristiques physiques et biologiques et de prix intéressantes.

La densité est un élément important, ainsi que la résilience, le coefficient de frottement, la couleur, la résistance à l'abrasion, les caractéristiques électrostatiques et de tension de surface essentielles pour la capillarité ainsi que la neutralité ou l'effet biochimique positif ou négatif à court et long terme.

Le PVC ni le caoutchouc de récupération de pneus ne sont neutres pour l'environnement, car ils larguent des produits volatils, potentiellement toxiques.

Les mousses en polystyrène expansé et autres produits chimiques présentent à ce titre plusieurs inconvénients importants : outre qu'ils ne s'intègrent pas bien dans une philosophie de développement durable, les billes d'argile cuite et les mousses expansées n'ont pas une résistance à l'abrasion suffisante et produisent des fines qui justement doivent être contrôlées selon l'invention.

**V-1-A-2 Principes de traitement du substrat d'origine par incorporation d'inclusions ou d'autres moyens**

L'objectif est d'équiper un tel sol sportif d'un dispositif supplémentaire permettant au gazon et au sol de travailler et d'absorber encore plus d'énergie dans une première phase et de réagir sans travailler ni se déformer à une sollicitation plus intense que celle qui fait rompre le sol en gazon naturel non équipé d'un tel dispositif.

Le dispositif nouveau peut à priori agir au niveau aérien, au niveau du substrat dans lequel poussent les racines ou encore dans le sol mais sous le substrat et on peut également combiner plusieurs de ces effets pour obtenir l'effet global recherché.

Il sera vu d'abord ci dessous comment intervenir par incorporation d'inclusions dans le substrat et également, au chapitre suivant comment agir sous le substrat par élasticité du sous-sol ou adjonction d'agents mouillants

Les principes selon l'invention sont d'une part des principes relatifs aux modifications recherchées par le traitement par d'incorporation d'inclusions et d'autre part des principes relatifs aux moyens d'obtenir de telles modifications.

### V-1-A-2-1 Principes relatifs aux modifications recherchées

Ce qui caractérise le traitement du substrat par incorporation d'inclusions selon l'invention est que ce traitement permet d'obtenir à la fois :

- une augmentation de l'amortissement ou plus exactement un amortissement au moins égal à celui du gazon naturel normal tel qu'on peut le trouver avec un sol frais
- une augmentation de la résistance
- une diminution de l'écart type des 2 paramètres précédents dans une plage [wmin, wmax]

Pour pouvoir mettre en oeuvre ce principe, cela suppose :

- De développer un protocole de mesures
- De trouver des inclusions permettant d'obtenir ce résultat
- De disposer de moyens et procédés pour incorporer ces inclusions

### V-1-A-2-2 Principes relatifs aux moyens d'obtenir de telles modifications

L'invention concerne deux principes :

- le maintien d'un fonctionnement par cohésion
- le maintien d'une énergie potentielle de travail avant blocage

### V-1-A-3 Inclusions spécifiques incorporées au substrat d'origine selon l'invention

L'étude détaillée ci après expose le principe de choix inclusions à incorporer au substrat et quelques exemples d'inclusions, caractéristiques de l'invention, qui donnent, ainsi que d'autres moyens exposés ci dessous, au sol des comportements mécaniques avantageux et inconnus auparavant.

### V-1-A-3-1 Contexte

Un premier dispositif possible pour changer le comportement mécanique du sol est de rajouter des éléments dans le substrat pour obtenir cet effet. Ces éléments ont pour première contrainte d'être compatibles avec la culture du gazon et pour seconde contrainte d'entraîner l'effet recherché.

Si l'on rajoute des éléments dans le substrat, leur effet sur le sol est conditionné par leur répartition dans le sol, par leur nature, par leur forme et par leur taille, relativement à la granulométrie du sol.

Or il est déjà connu que l'on peut rajouter des éléments au sol pour le rendre plus résistant en augmentant le frottement interne et en emprisonnant les grains. Il s'agit généralement d'inclusions de type de fibres pleines ou de nappes et en particulier de bandelettes ou de couches minces. Il est également connu que de tels éléments, s'ils sont susceptibles de renforcer le sol par renforcement du frottement interne, ont généralement pour inconvénient de supprimer la souplesse initiale du sol dans lequel ils sont inclus et de le rendre dur et traumatisant.

Il est également connu qu'on peut inclure dans un sol des éléments résilients qui ont tendance au contraire à diminuer la dureté des sols, mais ces éléments ont généralement l'inconvénient de diminuer en même temps la cohésion du sol.

Dans le cas particulier d'un gazon sportif, la présente invention propose des conditions particulières d'inclusions permettant à la fois d'améliorer la souplesse et la cohésion apparente du sol.

Rappelons d'abord que l'amélioration recherchée par l'incorporation d'inclusions selon l'invention est à la fois de bloquer le sol pendant la phase de propulsion et en même temps de permettre au sol de travailler dans la phase de réception. Le fait pour le sol d'absorber de l'énergie par un travail mécanique suppose un déplacement du sol, avec déformation de la surface du sol (et donc déplacements relatifs des grains ou compaction sous la surface). En effet, le travail mécanique est la somme des produits des forces par les déplacements qu'elles engendrent sur les différentes particules composant le sol : s'il n'y a pas de déplacement de ces particules, cela signifie qu'il n'y a pas de travail des forces appliquées.

Ce sol doit donc être conformé pour pouvoir bloquer le sol après cette première phase d'amortissement, de façon à résister sans se cisailler, sans se déformer et sans absorber une part de l'énergie de propulsion, mais en restituant, au contraire, la plus grande partie et idéalement toute l'énergie de l'effort de propulsion et si possible restituer une partie de l'énergie d'amortissement.

Ce sol doit également être réutilisable dans les mêmes conditions, ce qui signifie qu'il doit comporter des moyens lui permettant de se remettre en position initiale après les deux phases d'amortissement et de propulsion. Ces moyens doivent se servir des forces internes (du substrat et des racines ou inclusions incorporées) capables de provoquer des déplacements en sens inverse et de restituer le travail de la phase d'absorption pour la reconstitution du sol.

En effet, il existe des forces de cohésion et des forces de frottement interne du sol et des structures élastiques (racines et inclusions) qui travaillent quand il y a compaction ou cisaillement c'est à dire glissement d'un volume par rapport à un autre le long d'une surface de glissement et ce travail est le produit des mouvements par la force de frottement s'opposant à ces mouvements.

Quand on a un sol naturel engazonné, les radicelles sont mises en tension et finissent normalement par bloquer le sol après une première phase de déformation avec cisaillement. Un sol naturel engazonné est donc muni d'un dispositif naturel d'absorption qui est la force de résistance au cisaillement et à la compaction du sol quand ce sol n'est pas empêché de jouer du fait de forces de cohésion trop fortes et en particulier le collage des grains par de l'argile quand le sol est trop sec. Sous l'effet d'une réception, le sol se tasse et les forces de réaction augmentent avec la densité et les radicelles se tendent et jouent un rôle de frottement et d'emprisonnement des grains (en particulier avec les forces de frottement qui bloquent le mouvement du sol une fois que les surfaces sont en appui les unes sur les autres), sauf avec un effort trop intense et un sol trop humide car le sol peut alors se rompre lors d'un effort de cisaillement intense avec une composante tangentielle importante, par exemple lors de mêlées au rugby et de tacles au football sur sol humide.

**V-1-A-3-2 Principes du choix d'inclusions ou d'autres moyens selon l'invention**

1er principe : Conserver au sol une énergie potentielle d'absorption : Lorsque la surface engazonnée comporte des inclusions, la seule solution permettant à des inclusions capables de bloquer le sol, de ne pas empêcher ce sol d'absorber une part d'énergie au moment de la première phase de réception est de laisser un degré de liberté à ces inclusions avant qu'elles ne bloquent le sol.

2ième principe : Conserver au gazon naturel son mode de fonctionnement propre : En rajoutant des inclusions ou des produits dans le sol ou en intervenant au dessus ou au dessous du sol, on risque de rajouter un mécanisme supplémentaire ou même de substituer au mécanisme propre du gazon naturel un autre mécanisme qui dénaturerait la signature mécanique spécifique du gazon naturel. Il a été vu plus haut que la spécificité du gazon est d'être un milieu granulaire avec des fibres élastiques des racines qui fonctionnent en synergie par des forces de cohésion. Le principe des inclusions selon l'invention est de laisser le sol réagir selon ce mode particulier en renforçant encore ce mécanisme : il faut augmenter la cohésion sans diminuer l'énergie potentielle de travail, c'est à dire multiplier les liens souples sans rien rigidifier. Il ne faut pas constituer de tels liens qu'on perdrait l'avantage des degrés de liberté spécifiques des milieux granulaires retenus par capillarité.

**V-1-A-3-3 Constat et analyse des causes des inconvénients des fibres utilisées à l'heure actuelle**

On peut améliorer la résistance des sols aussi bien en portance qu'en cisaillement, en incorporant dans le substrat des inclusions, le plus souvent des fibres qui par frottement avec le sable ou la terre s'opposent aux cisaillements dans toutes les directions et rendent le sol plus portant et plus résistant au cisaillement. Selon l'état de la technique, ces améliorations de la portance se font cependant au détriment de la souplesse en rendant le sol traumatique

En effet, de façon générale, il y a été vu plus haut une antinomie théorique entre le fait de vouloir absorber le choc et de bloquer la déformation du sol qui permet justement cette absorption.

Si l'on renforce le blocage par l'adjonction de fibres, comme cela se fait traditionnellement, cela a pour effet de diminuer la capacité du sol au cisaillement par augmentation du frottement, mais le sol perd sa capacité d'absorption mécanique lors de la première phase de réception ou lors de chutes.

Un autre inconvénient de l'adjonction de fibres est que cela diminue la cohésion apparente.

Non seulement le frottement interne est trop augmenté mais parallèlement la cohérence chute. En effet, les fibres traditionnellement utilisées pour renforcer les gazons de sport sont des fibres plus épaisses que la porosité des grains. Il en résulte géométriquement que les grains doivent nécessairement s'écarter autour de ces fibres, ce qui a essentiellement deux inconvénients : d'une part cela fait perdre dans le voisinage de la fibre l'arrangement granulaire qui permet par les forces exercées par l'air sur le ménisque d'eau de créer une cohésion, d'autant que la fibre joue au contraire le rôle de « toboggan », c'est à dire d'axe de glissement quand il n'y a pas de poids pour retenir les grains par frottement. D'autre part, lorsque le terrain se tasse, il s'organise en réseau de fibres entre lesquelles les petits grains de sable viennent occuper les cellules du réseau entre lesquels ces grains se tassent ; ceci est très dommageable car c'est le réseau de fibres qui est en permanence tendu et « gonflé » par le tassement des grains à l'intérieur du macro réseau de fibres qui se mettent donc immédiatement à réagir sans réserve de mouvement des grains ou des fibres lors de la phase de réception et cela aboutit à des terrains « traumatiques ».

Le gazon selon l'invention doit se différentier des gazons fibrés déjà connus, obtenus par inclusion de fibres plus épaisses que la porosité du substrat, ce qui géométriquement conduit automatiquement à écarter les grains au passage de ces fibres, cassant à chaque passage de fibres, le lien de forces capillaires qui unit normalement les grains de sable ; au lieu de cela, le réseau de fibres constituent un maillage à l'intérieur duquel se tassent les grains de sable en cellules séparées par les fibres. La cohésion existe dans chaque cellule mais plus en masse car le passage des fibres casse le lien capillaire entre les cellules. Il est en effet reconnu que ces gazons deviennent très portants car le sable est « armé » par le réseau de fibres qui constituent un maillage dans une matrice compacte (comme dans le béton où cette technique a été mise au point pour donner de la résistance à la flexion et traction) et le résultat est comparable à un sable concassé, trop dur pour la pratique sportive. Ce comportement n'est plus celui d'une motte maintenue par la cohésion mais d'un sable concassé bloqué par frottement et empilement et interdisant le mouvement des grains et tout travail de dissipation d'énergie.

La première précaution, qui n'avait pas été prise dans l'état de la technique, consiste à veiller à ce que le sol puisse travailler pour absorber de l'énergie mécanique avant que les inclusions ne se mettent en tension. Pour que le sol puisse travailler, ce sont des considérations géométriques concernant la géométrie des inclusions comparée aux dimensions de la porosité , les tensions de surface permettant le cas échéant de créer des ponts d'eau et les caractères rhéologiques des inclusions, relativement au squelette spécifique, qui permettent d'atteindre ce résultat. La seconde précaution est de respecter le fonctionnement normal du gazon naturel lui même, qui est le seul système connu capable d'atteindre ce comportement mécanique, et de n'intervenir que dans un processus en synergie avec celui ci au lieu d'essayer de se substituer au comportement du gazon, ce qui aboutit immanquablement au comportement de sable concassé ci dessus mentionné.

Le double objectif recherché du mélange selon l'invention est en effet, et dans l'ordre chronologique des effets attendus :

- dans un premier temps de ne pas bloquer tout de suite le sol mais de disposer au contraire d'un espace géométrique de liberté permettant au sol de travailler selon le mode habituel de travail d'un sol gazonné avant de se bloquer du fait des inclusions dont l'action prend le relais. Sans se substituer à ce premier mécanisme du gazon naturel fonctionnant avec des pressions de l'air interstitiel qui pousse sur l'eau, elle même collée aux grains et aux racines ainsi qu'aux nouvelles inclusions et les maintenant tous ensemble, un mécanisme supplémentaire d'amortissement peut avantageusement être rajouté par des inclusions dont la forme et la rhéologie résiliente donnent une souplesse supplémentaire si le choix des chaussures et l'intérêt d'amortissement des chutes accidentelles ou inhérentes à la pratique du sport (rugby en particulier) le rendent souhaitable ;
- dans un second temps de bloquer complètement le sol, même en cas d'une sollicitation sévère qui aurait normalement abouti à arracher une motte de gazon ou à créer un cisaillement ou encore qui aurait abouti à une forte empreinte en l'absence d'inclusions. Le blocage sert à la fois à préserver l'intégrité du sol sous l'effort en toute situation d'humidité dans la limite du contrôle existant par le drainage et d'autre pat à améliorer l'efficacité sportive de l'élan qui suit la phase de réception.

En résumé, puisqu'il n'est pas possible d'absorber le choc sans déformation, il est possible en revanche de faire travailler le sol :

- plus tôt, pendant un laps de temps plus long, avec une force de réaction plus modérée que sur un choc brutal. Cette première phase est une absorption avec ou sans dissipation ;
- avec ensuite un blocage après ce laps de temps de mise en tension et enfin une capacité de résilience qui permet au sol de retrouver sa place après avoir travaillé. Cette deuxième phase est une opposition avec restitution plus ou moins complète et rapide.

Une analyse plus précise des phasages attendus dépend du sport auquel le sol sportif doit coopérer de façon idéale. Les sols sportifs doivent être formulés en fonction de la discipline sportive et du type d'utilisation, avec les exigences correspondantes.

**V-1-A-3-4 Mécanismes mettant en oeuvre ces principes et inclusions selon l'invention mettant en oeuvre ces mécanismes**

Dans ce substrat d'origine, peuvent être ajoutées selon l'invention des inclusions qui sont un aspect caractéristique particulièrement avantageux de la présente invention.

Les principes de l'invention, non respectés par les substrats fibrés connus sont cependant des principes peu contraignants qui laissent un champ de possibilités très large.

Les possibilités nouvelles ouvertes selon les principes de l'invention sont donc très nombreuses en considérant que les inclusions peuvent agir séparément ou coopérer entre elles pour obtenir le résultat recherché.

Les inclusions et leurs dimensions et caractéristiques ne doivent pas être considérées de façon séparée mais par rapport au substrat d'origine et par leur capacité d'interaction.

De façon générale, l'effet mécanique des inclusions est caractérisé par une combinaison de leur forme, de leur dimension relativement aux éléments avec lesquels ils interagissent, leur rhéologie, leur tension de surface et leur rugosité, ainsi que leur densité.

Il n'est donc pas prévu ici de donner de formulation définitive idéale des inclusions à incorporer dans un substrat mais au contraire de donner seulement des exemples de combinaisons d'éléments qui interagissent deux à deux dans un sens compatible avec les 2 principes énoncés ci dessus et créent des effets dans le sens du but de l'invention.

Une formulation selon l'invention sera recherchée dans une combinaison entre ces différents exemples et d'autres solutions respectant les principes tels qu'énoncés ci-dessus.

Les inclusions selon l'invention sont finalement caractérisées :

- par l'effet positif de ces inclusions,
- par une caractéristique géométrie relative d'inclusions permettant de mettre en oeuvre un mécanisme selon l'invention,
- par une caractéristique rhéologique d'inclusions permettant de mettre en oeuvre un mécanisme selon l'invention,
- par une caractéristique de mouillabilité d'inclusions permettant de mettre en oeuvre un mécanisme selon l'invention,
- par la nature des inclusions et l'absence de certaines nuisances et effets secondaires,
- par le dosage et la répartition de ces inclusions dans le substrat.

Il apparaîtra plus bas que ces caractéristiques sont importantes mais que la synergie entre les inclusions et le substrat d'origine est liée aux relations existant selon ces différents critères entre les différents éléments avec une notion de densité et de dimensions relatives des éléments entre eux.

**V-1-A-3-4-1 Nature des inclusions et absence de nuisances ou effets secondaires**

L'effet bio chimique des inclusions doit être également compatible avec le gazon naturel et l'environnement.

Indépendamment de leurs propriétés mécaniques et de l'influence de ces propriétés sur le comportement mécanique du sol, les inclusions sont caractérisés par leur nature selon des critères d'environnement. C'est ainsi qu'un avantage recherché est le caractère naturel d'une matière utilisée de préférence à une nature synthétique avec une réflexion globale sur le coût écologique du cycle de vie complet.

Fibres naturelles :
Des inclusions sont recherchées spécifiquement parmi les fibres naturelles, à pérennité naturelle de plusieurs années ou à biodégradabilité ralentie par traitement physique ou chimique ou biologique.

Une réalisation avantageuse est obtenue par utilisation de fibres ou copeaux de bois rendus stables par thermo-modification et notamment par rétification.

Les incluions, fibres,non tissés ou tissus, peuvent être constituées de matières lentement biodégradables comme le chanvre, la fibre de coco ou de cacao, le lin, le coton, les fibres de bois ou de chaume, à l'état naturel ou traitées contre une biodégradation rapide. Cela peut également être des matières comme les cheveux ou poils divers et notamment laine ou crin de cheval.

Eléments résilients naturels :
Le liège est à ce titre particulièrement intéressant puisqu'il s'agit d'un produit organique naturel, naturellement résistant pendant une longue durée à la biodégradation et classé pour être au contact des comestibles

Fibres artificielles :
Il peut également être utilisé dans une autre version des fibres artificielles caractérisées par leur comportement rhéologique avantageux ou leurs dimensions avantageuses relativement à la porosité du sable et à la granulométrie des éléments résilients.

Les incluions, fibres, non tissés ou tissus, peuvent être en nylon, polypropylène ou toutes fibres synthétiques.

La densité est un élément important, ainsi que la résilience, le coefficient de frottement, la couleur, la résistance à l'abrasion, les caractéristiques électrostatiques et de tension de surface, à la fois essentielles pour la capillarité et pour la neutralité ou l'effet biochimique positif ou négatif à court et long terme.

Elastomères artificiels :

Ni le PVC ni le caoutchouc de récupération de pneus, utilisés dans l'industrie des gazons synthétiques ne sont neutres pour l'environnement, car ils larguent des produits lessivables ou volatils, potentiellement toxiques.

Les mousses en polystyrène expansé et autres produits chimiques présentent à ce titre plusieurs inconvénients importants : outre qu'ils ne s'intègrent pas bien dans une philosophie de développement durable, les billes d'argile cuite et les mousses expansées n'ont pas une résistance à l'abrasion suffisante et produisent des fines qui justement doivent être contrôlées selon l'invention.

Les liaisons chimiques éventuelles autres que l'attirance capillaire ne doivent pas non plus modifier le modèle physique par constitution de liens rigides.

Par hypothèse, les liens chimiques qui existent par exemple dans les colloïdes organiques qui se constituent doivent conserver des liens entre grains du squelette sableux aussi souples que des liaisons de capillarité.

## V-1-A-3-4-2 Répartition et dosage des inclusions

D'autre part, il faut considérer non seulement la nature des inclusions mais la répartition spatiale de ces dernières, ce qui pose le double problème de pouvoir les incorporer par un procédé selon une répartition spatiale convenable et d'avoir un ensemble de forces à l'intérieur du substrat élaboré qui permet après incorporation d'éviter une ségrégation ultérieure.

Dans le cas d'une fibre, en particulier, le premier élément pris en considération est sa taille par rapport à la granulométrie et surtout la porosité existante. On recherche le fait d'avoir une élongation élastique et une tension de surface et une souplesse comparables à ceux d'une racine. Or, il faut un procédé d'incorporation innovant pour que la répartition réelle soit semblable à la répartition idéale et des caractéristiques particulières pour éviter une ségrégation ultérieure.

Le dosage des fibres est évidemment important mais ne doit pas s'analyser sans tenir compte de la répartition et la disposition spatiale. L'efficacité des fibres nécessite un dosage multiplié par mille ou dix mille selon que les fibres sont incorporées en mèches, en touffes ou au contraire réparties de façon discrète et distribuées uniformément en termes de dosage spatial et de distribution dans toutes les directions. La densité et la répartition des fibres seules sont essentielles prises ensemble et non pas la seule quantité pondérale ou volumique ; Une fois obtenu une répartition complètement dispersée, c'est la quantité pondérale ou volumique qui devient le critère essentiel d'efficacité.

Si l'on considère des pelotes de fibres et en particulier de fibres en élastomères avec fort coefficient de frottement, ces pelotes peuvent être aussi ou plus efficaces que des fibres réparties de façon plus homogène car ce sont des zones entières qui jouent un rôle tampon, comme dans le modèle des plantes qui ont des chevelus séparés les uns des autres mais proches et légèrement enchevêtrés pour créer des zones d'ajustement à plus forte capacité de résilience que la moyenne, un peu comme les joints de dilatation.

Un autre aspect est la distribution et la répartition de ces éléments. S'agissant de fibres ou de bandelettes, que ce soient des fibres pleines ou creuses, elles peuvent être réparties dans le substrat en étant séparées les unes des autres et réparties selon une dispersion spatiale uniforme ou au contraire en étant regroupées plus ou moins par paquets ; dans le cas de paquets, les directions des fibres peuvent être plus ou moins parallèles et les fibres serrées les unes contre les autres en « mèches » ou au contraire elles peuvent être organisées par paquets dispersés, en fagots ou orientées dans toutes les directions et organisés en « pelotes ». D'autre part ces paquets et en particulier ces pelotes peuvent être reliés les uns aux autres selon un maillage en réseau ou séparés les uns des autres par des distances qui peuvent être plutôt faibles ou au contraire très grandes par rapport à la taille des paquets.

Or, on veut généralement un terrain au comportement homogène et le plus constant possible dans le temps. Le dispositif doit permettre une réponse homogène à l'échelle macroscopique de la sollicitation, c'est à dire, selon le cas, du pied d'un joueur ou d'un cheval ou des roues d'un véhicule, mais cela ne signifie pas pour autant que le sol doit être homogène à une échelle inférieure. De même que les plans de gazons sont répartis de façon discrète à l'échelle microscopique mais ont une densité relativement constante à l'échelle macroscopique d'un sportif foulant le terrain, de même les inclusions éventuellement réparties dans le substrat peuvent parfaitement avoir une répartition hétérogène à l'échelle microscopique du sol mais suffisamment dense et statistiquement homogène à l'échelle du sportif pour que le comportement global du terrain soit homogène.

Ce qui compte, c'est le résultat :

Comme il est extrêmement difficile de modéliser à priori la répartition des fibres dans le substrat et l'effet d'une répartition, le procédé pragmatique de l'invention consiste à tester les résultats par le protocole d'évaluation des substrats avec un procédé de mélange donné, un substrat donné, une teneur en eau du substrat donnée et un dosage donné et de rechercher un optimum d'efficacité ou un rapport optimal coût efficacité en augmentant progressivement le dosage.

Deux cas particuliers de répartition méritent d'être cités.

Le modèle généralement recherché est celui de fibres réparties selon une dispersion uniforme comme des racines entre les grains. Ce modèle est celui qui optimise l'efficacité des fibres en terme de dosage et qui optimise l'uniformité du terrain et c'est donc celui qui sera prioritairement développé pour des terrains de football de haut niveau ou pour des terrains de gazon en herbe.

Un autre modèle très intéressant est, à l'opposé, celui de fibres regroupées en touffes ou nodules ou pelotes, c'est à dire regroupées en petits « paquets » avec une répartition non plus de fibres mais de touffes de fibres. C'est le type de répartition que l'on obtiendrait en passant le rotavator dans une pelouse établie : les touffes de gazon se mélangeraient au sol et on aurait une répartition de touffes de gazon dans le sol : les fibres regroupées en touffes peuvent être mélangées au sol et réparties de telle sorte qu'on ne puisse enfoncer une bêche sans tomber sur une ou plusieurs touffes de fibres qui s'opposent à l'enfoncement de la bêche. En particulier, si on mélange des touffes de fibres à un substrat composé en grande partie de granulés légers résilients, on obtient un mélange extrêmement souple et résilient mais qui résiste au cisaillement. Dans le cas de chevaux, cela permet au sol de s'enfoncer et d'amortir l'effort de réception mais au sol de s'opposer à la pénétration du sabot. De même, de telles touffes incorporées au sol en place d'un gazon permet à des véhicules et en particulier des voiturettes de golf de circuler sans cisaillement.

**V-1-A-3-4-3 Inclusions à effet positif selon le protocole d'évaluation**

Profitant du protocole de mesures et d'évacuation et considérant la difficulté de modélisation, l'invention concerne tout gazon naturel selon l'invention dont on améliore les caractéristiques selon ce protocole d'estimation par adjonction d'inclusions quelconques.

**V-1-A-3-4-4 Inclusions particulièrement mouillables**

Une solution avantageuse est d'utiliser des inclusions qui interagissent avec leur environnement par des forces d'attraction capillaires importantes. Ceci peut être obtenu par une grande mouillabilité de la surface tandis qu'à contrario une inclusion hydrophobe est repoussée par le sable ou les racines et gêne le passage de l'eau.

L'utilisation de liège est recommandée selon ce critère pour renforcer la cohésion du sol avec un matériau qui ne se compacte pas.

**V-1-A-3-4-5 Critères géométriques**

La seconde partie des particules du substrat comprend des éléments d'une taille beaucoup plus importante que celle des grains de la première partie de particules.

Compte tenu des paramètres qui influencent l'interaction entre les inclusions et le sol, il faut prendre en considération les principales inclusions potentiellement utilisables et il faut définir non seulement la nature ou la matière de ces inclusions mais également, d'un point de vue géométrique, les différents types d'inclusion et de répartition de ces inclusions et d'étudier les paramètres qui influencent cette interaction de façon significative.

Il n'y a pas que des fibres qui peuvent être incorporées.

Ainsi, quand deux dimensions sont très faibles par rapport à la troisième, on peut parler de fibres pleines (comme dans le cas de cheveux ou de fil de pêche en nylon par exemple) ou de fibres creuses (comme dans le cas de chaume par exemple) si on a un corps creux dont le diamètre creux intérieur est à la fois important par rapport à l'épaisseur de la membrane qui entoure ce diamètre creux et en même temps faible par rapport à la longueur de la fibre.

Quand une seule dimension est très faible par rapport aux deux autres il peut s'agir de couches minces ou à la limite de nappes, quand l'épaisseur très faible devient négligeable par rapport aux deux autres dimensions, et ces couches minces ou ces nappes peuvent être appelées bandelettes si une des deux dimensions non négligeables est toutefois très faible par rapport à l'autre.

Ce qui compte, dans la présente invention, c'est que les différentes inclusions permettent une absorption d'énergie dans un premier temps et un blocage par frottement interne dans un second temps.

La géométrie des inclusions par rapport aux grains et aux porosités :

L'apport d'inclusions, sous la forme de fibres, de bandelettes ou d'autres inclusions allongées, permet d'accroître et de mettre en réseau les forces de frottement qui sont exercées par un grain sur une telle inclusion en relation avec d'autres grains et d'autres inclusions de sorte que ce grain n'est plus soumis à la seule force de frottement d'un grain voisin sur une petite surface de contact mais à une pression sur une surface de contact plus importante exercée par une inclusion qui ne peut être translatée sans vaincre la résistance d'un grand nombre de grains.

Les fibres fines par rapport à la porosité :

Selon l'invention, il est possible de pallier les inconvénients énoncés plus haut par le choix d'une fibre très fine caractérisée par sa finesse par rapport à la porosité qui jouera un rôle mimétique des radicelles de gazon en « se lovant » autour des grains lors de son incorporation dans le substrat, du fait que la fibre est assez fine pour traverser la porosité sans être sur toute sa longueur au contact des grains mais en étant libre sur la plus grande partie de son trajet. Ainsi, si les grains commencent à glisser les uns sur les autres, la fibre doit d'abord se tendre et être plaquée contre les parois de la porosité avant de jouer son rôle de blocage. Sans apporter un supplément d'énergie potentielle, une telle fibre conserve, au moins en partie, un mécanisme préexistant.

De plus, concernant la cohésion, les fibres fines selon l'invention, comme les radicelles de gazon combinées à celles-ci, augmentent considérablement la cohésion et créent une synergie de réseau avec les plantes qui sont ancrées au substrat et aux fibres fines par des forces de cohésion (liées aux forces capillaires) et des forces de frottement qui toutes les deux raccordent les racines d'une plante aux racines des plantes voisines par le réseau des fibres fines.

Ainsi, on peut rajouter des fibres dans un sol sableux sans détériorer de façon sensible la souplesse du sol à condition que les fibres soient fines ; on peut aussi ajouter des fibres plus grosses que la porosité du sable si l'on rajoute des grains résilients plus gros que les fibres et assez nombreux statistiquement pour obliger les grosses fibres à faire un lacet entre les gros grains, du fait de la longueur suffisante des fibres.

C'est ici le critère géométrique qui donne à ces inclusions la possibilité de bouger par rapport au sol avant de bloquer le sol : des fibres nettement plus fines que la porosité peuvent bouger à l'intérieur des pores avant d'être coincées et de bloquer le massif par frottement

**V-1-A-3-4-6 Critères de mimétisme du gazon**

Tout en détaillant les différents mécanismes dont la combinaison donnera in fine le comportement du gazon, il apparaît qu'un choix et un dosage entre ces mécanismes est nécessaire et le mimétisme du gazon est une approche qui peut donner un « fil conducteur » pour chercher une solution de compromis dont l'expérience montre qu'elle est assez satisfaisante.

La présente invention propose des moyens appropriés pour armer et enchaîner le sol, de façon renforcée par rapport au gazon naturel, non pas à l'échelle microscopique mais à une ou plusieurs échelles mésoscopiques.

La présente invention propose une solution de sol armé et enchaîné naturellement par des racines et disposant, pour renforcer ce mécanisme, de fibres ou d'éléments étrangers en matériau naturel ou artificiel qui permettent de bloquer le sol en réaction à un effort de cisaillement.

Or, en considérant l'action mécanique des racines du gazon naturel, on constate également que le gazon naturel ne se contente pas, par ses racines, de s'opposer au cisaillement en bloquant le sol : au contraire, avec des racines fines ayant une possibilité de bouger par rapport aux grains entre lesquels elles se « faufilent » et disposant d'une élasticité propre, le gazon dans sa partie aérienne et les racines dans le sol apportent également un effet d'amortissement ; la partie aérienne du le gazon se couche et le sol se déforme légèrement et absorbe une partie de l'énergie en travail d'absorption avant de se bloquer. Les radicelles soumises à un effort de cisaillement se tendent et une fois tendues s'opposent à la continuation du mouvement. Lors d'un mouvement de glissement d'un volume A sur un volume B le long d'une surface de glissement, une radicelle traversant cette surface hypothétique va avoir une partie entraînée du coté du mouvement de A et une autre partie entraînée du coté du mouvement de B, ce qui aboutit à tendre la radicelle. Cependant, avant de bloquer le mouvement, la radicelle a un premier espace de mouvement du fait de la finesse de la radicelle par rapport à la taille des pores traversées puisque la radicelle doit être plaquée contre des grains avant d'avoir à subir le frottement des grains ; ensuite, il y a une certaine possibilité de glissement avant que le frottement ne bloque la radicelle ; ensuite, il y a une capacité d'allongement de la radicelle et enfin il reste la possibilité de se rompre. Ainsi, les radicelles de gazon qui par nature poussent en se faufilant dans la porosité ont une finesse et élasticité qui permettent aux racines de bloquer le sol après une première « course » entre le lacet initial de la radicelle et sa tension qui aboutit normalement à bloquer le sol mais aboutit parfois à casser les racines ou à les « déchausser ».

Ainsi, le gazon naturel est à la fois une source de cohésion et de souplesse et ce réseau racinaire agit à une échelle mésoscopique et de façon efficace, quoique limitée, dans ces deux effets. C'est ce principe qui est pris comme modèle par la présente invention qui propose un ensemble de solutions, à diverses échelles, qui, par leur combinaison entre elles, permettent d'obtenir et de renforcer les deux aspects de cette double fonctionnalité de souplesse et de blocage.

La première caractéristique de la présente invention est de renforcer l'effet positif du gazon naturel sans se substituer au gazon naturel qui reste un acteur majeur de l'invention et dont l'efficacité est renforcée, d'une part en mettant ce gazon dans des conditions optimales pour son efficacité en toute circonstance climatique et d'autre part en ajoutant diverses dispositions nouvelles qui, seules ou combinées entre elles, permettent d'améliorer les caractéristiques mécaniques de l'ensemble.

**V-1-A-3-4-7 Critères rhéologiques pour les fibres et inclusions bloquantes**

Les critères rhéologiques concernent à la fois la forme de l'inclusion et sa nature

Un autre mécanisme selon l'invention est l'utilisation de fibres ou de bandelettes ayant une élasticité intrinsèque permettant un allongement avec une force s'opposant à cet allongement (souvent proportionnelle à cet allongement) et permettant

- d'une part un travail de la fibre elle-même qui s'exprime comme l'intégrale du produit de l'allongement par la force s'opposant à l'allongement (soit $W = kL2 / 2$ dans le cas d'une force élastique de type $F = -kx$ s'opposant à un allongement $x$ avec une constante d'élasticité $k$),
- d'autre part un glissement avec frottement plus important des grains de sable avant blocage, en supposant par hypothèse que ce sont les fibres qui réussissent à bloquer le système.

Ce mécanisme présente plusieurs variantes :

- soit les inclusions peuvent s'écraser sur elles-mêmes en opposant une résistance à la force de compression, ce qui permet d'absorber de l'énergie en travail de compression avant que ces inclusions ne soient coincées par le sable et ne bloquent le mouvement du sable par frottement ;
- soit ces inclusions ont une capacité d'élongation avant de bloquer le sol et cette élongation élastique se fait contre une force de résistance élastique à l'élongation qui permet également d'absorber le travail d'élongation pendant l'élongation de l'inclusion avant son blocage par frottement

**V-1-A-3-4-8 Caractéristiques et exemples de différents matériaux résilients ou élastiques**

Concernant la résilience ou l'élasticité des éléments non bloquants mais coopérant avec ces derniers, on cherche des matériaux à la fois capables d'exercer une résistance importante à la compression et qui disposent d'une importante capacité de rétractation, de sorte que leur potentiel d'écrasement représente une importante énergie potentielle mécanique d'amortissement. L'énergie potentielle d'amortissement est le travail de réaction à l'écrasement du matériau ; il est égal au travail d'enfoncement (soit le produit de la force normale de résistance à l'enfoncement (égale à la pression de résistance que multiplie la surface élémentaire) que multiplie la distance d'enfoncement, c'est à dire finalement le produit du volume d'enfoncement par la pression de résistance à l'enfoncement.

Pour absorber de l'énergie quand un effort crée une tension de cisaillement dans un sol, c'est à dire le glissement dans deux directions opposées des grains d'un volume A séparé d'un volume B par une surface de glissement, c'est que cet effort crée sur des éléments $ei$ une force $fi$ qui agit sur un élément $ei$ en causant un déplacement $dli$ et le travail $Wi$ sur cet élément $ei$ peut s'écrire $wi = fi \cdot dli$.

Le travail du sol sur N éléments concernés est alors $W = \sum fi \cdot dli$ pour $i=1$ à N.

Quand un sol est trop dur, il n'absorbe pas d'énergie car les déplacements $dli$ sont nuls. Quand un sol est trop mou, il n'est pas capable de résister avec une force de réaction $fi$ suffisante et il faut un déplacement énorme avant d'absorber l'énergie de sollicitation.

Une autre caractéristique est la vitesse de restitution : la résilience à proprement parlé est une restitution tardive quand la cause de l'écrasement a disparu tandis que l'élasticité est une restitution transformant l'énergie potentielle d'écrasement une énergie cinétique en sens inverse communiquée au mobile cause de l'écrasement à une vitesse qui dépend du matériau.

Les mousses en polystyrène expansé ont généralement un faible volume d'enfoncement, car les cellules intérieures sont fermées et juxtaposées et la résistance à l'enfoncement est faible, avant de casser ou d'effriter la mousse, ce qui n'est pas l'objectif visé.

Au contraire, le liège est constitué de cellules fermées séparées entre elles par des parois capables de coulisser en opposant une résistance, ce qui crée des cellules plus petites en comprimant le gaz piégé dans ces cellules. Une fois la force de compression supprimée, la compression du gaz ramène les cellules à leur volume initial. Le liège agit comme un véritable amortisseur puisque, au niveau de chaque cellule microscopique et parfaitement étanche à l'air, la paroi de la cellule est capable de coulisser pour diminuer le volume de la cellule emprisonnant l'air qui se comprime pour résister à l'enfoncement avec une force croissant avec l'enfoncement.

Dans le cas du caoutchouc et autres élastomères artificiels ou naturels dont la température de transition vitreuse est inférieure à -20°C, on a une réelle capacité de compression et une famille intéressante ; l'avantage par rapport au liège est une élasticité plutôt qu'une résilience, même si une élasticité arrivant après le départ du pied aboutit au même résultat que la résilience ; toutefois le caoutchouc est un produit très cher et ce sont souvent des réutilisation de pneus qui sont abordables sur le marché sous forme de granulés mais ces produits contiennent des additifs qui ne sont pas neutres pour l'environnement. De plus le caoutchouc est généralement hydrophobe - même s'il existe du caoutchouc hydrophile - et l'hydrophobie, avec de fines granulométries bloque le drainage d'une part et ne permet pas de conserver de l'eau pour les racines d'autre part. Il faut étudier pour chaque produit sa phytotoxicité vis à vis du gazon.

En revanche, la densité du caoutchouc est élevée et ne crée pas de différence très marquée avec la densité de la silice et le frottement est très favorable. La matière connue sous le nom d'EPDM (Ethylène Propylène Diène Monomère) est un élastomère à prendre en compte pour ses caractéristiques (très souple et élastique, même à basse température, résistant aux UV et à l'ozone, pouvant être coloré dans la masse, plus ou moins inerte chimiquement selon ses promoteurs et compatible avec l'écologie à l'usage et à la fabrication) qui en font un constituant potentiellement intéressant.

En plus de leur nature constitutive de matériaux, ces grains ou inclusions sont caractérisées par leur formes et dimensions et on peut citer comme forme de bases :

- Grains résilients disposant d'un volume de déformation potentielle, d'un force de réaction à la compression et d'une granulométrie ; le travail potentiel d'un tel grain est égal au produit du volume comprimé par la force de réaction à la compression.
- Grains de silice enrobés de produits élastomères qui par combinaison d'un centre dur et d'une granulométrie définie et par l'épaisseur, la tension de surface et la rhéologie de l'enrobage constituent une famille nouvelle de matériaux composites et avec une densité plus proche du sable.

On peut citer les éléments typiques suivants à titre d'exemples d'inclusions résilientes à utiliser seules ou combinées entre elles :

- Dans une version avantageuse, le substrat comprend des éléments résilients, ces éléments représentant un potentiel d'amortissement supplémentaire, en une quantité représentant au moins 5 % et jusqu'à 100 % en volume;
- le substrat comprend des inclusions en liège cru ou en liège cuit d'une granulométrie fine entre 500 $\mu$m et 2 mm, d'une granulométrie moyenne entre 2 mm et 8 mm et d'une granulométrie grossière supérieure à 8 mm.

### V-1-A-3-4-9 Synergie entre différents critères

L'avantage de l'invention est de combiner deux fonctions dont les avantages s'ajoutent et dont les inconvénients se combinent pour s'annuler.

Il est connu que des éléments résilients plus légers ou plus grossiers ont l'avantage d'améliorer la souplesse mais font perdre au sol une part de sa cohésion. On a déjà exploité le fait que les fibres ou morceaux de textile insérés dans le sol augmentent le frottement interne et bloquent le sol en le rendant portant et résistant au cisaillement. Malheureusement ces forces de frottement rendent le sol dur et traumatique à la réception.

Dans certaines conditions, la combinaison des deux fonctions peut permettre selon l'invention de conserver les avantages et de supprimer les inconvénients respectifs des éléments résilients et des éléments fibreux ou textiles.

Le mécanisme nouveau selon l'invention consiste à combiner d'une part des fibres ou des bandelettes qui par elles-mêmes n'ont pas de caractère résilient ou élastique et d'autre part des grains ou grosses inclusions résilients. La caractéristique du mélange permettant une combinaison en synergie est que les inclusions élastomères ou résilientes sont d'une grosseur importante par rapport à la finesse de la fibre ou de la bandelette mais faible par rapport à la longueur de la fibre ou de la bandelette et sont présentes en dosage suffisant pour qu'une fibre ou bandelette soit statistiquement amenée, quand elle est incorporée au substrat, à se trouver au contact direct ou au moins en relation mécanique indirecte de plusieurs de ces grains ou inclusions résilients de sorte que cette fibre ou cette bandelette soit amenée à faire un lacet pour contourner plusieurs de ces grains ou grosses inclusions résilientes.

Le mécanisme d'énergie potentielle est alors le suivant : lors d'un mouvement de cisaillement, une fibres ou bandelette est tendue par le mouvement qui tire une extrémité dans un sens et l'autre extrémité dans l'autre, mais cette tension est contrariée par les lacets autour d'inclusions résilientes qui vont s'écraser pendant qu'on tend la fibre ou la bandelette.

L'énergie communiquée par la fibre aux inclusions résilientes va écraser ces inclusions et créer un travail égal au produit de la force de résistance à l'écrasement par la longueur d'écrasement que l'on peut exprimer comme le produit de la pression de résistance à l'écrasement par la diminution de volume.

Une variante est l'utilisation d'inclusions qui soient en même temps responsables du blocage du système par augmentation du frottement et responsable de l'augmentation du potentiel d'amortissement par un caractère résilient propre.

C'est le cas selon l'invention en utilisant des inclusions de forme allongée et capables de s'écraser sur elles-mêmes en travaillant par le fait d'une nature ou d'une forme particulière.

Ainsi, par exemple des « frites » en matière résiliente peuvent être utilisées (et peuvent combiner également une capacité d'allongement au fait que ces frites peuvent s'écraser sur elles-mêmes avant d'être contraintes lors d'un cisaillement à bloquer le système par frottement après avoir épuisé leur capacité d'allongement et d'écrasement.

Ainsi par exemple, des « macaronis » en matière résiliente sont comme des pailles ou des chaumes capables de s'écraser sur elles-mêmes avec un potentiel de volume important.

Une synergie particulièrement avantageuse de l'invention est celle entre une fibre ou une bandelette fine et longue par rapport à des éléments résilients grossiers

Si les fibres sont de dimensions importantes par rapport aux éléments résilients, les fibres, sous l'effet d'une sollicitation mécanique de type cisaillement vont se tendre et se bloquer tout de suite, se sorte que le terrain sera dur dès la réception, comme s'il n'y avait pas d'éléments résilients.

Si toutefois une telle fibre est fine par rapport aux éléments résilients plus grossiers rajoutés en même temps, elle va être souple par rapport à ces grains résilients et sa forme, une fois incorporée au sol, sera un lacet entre plusieurs grains résilients. Lors d'un effort de cisaillement, la fibre va vouloir se tendre et si, par hypothèse, ses extrémités dans le sable sont bloquées par frottement et que le sable s'éloigne par l'effet du cisaillement, le lacet autour d'éléments résilients va faire un effort sur le grain qui va s'aplatir en permettant à la fibre de gagner de la longueur avant de se tendre et de se bloquer : dans ces conditions, c'est l'élément résilient qui joue directement sur la fibre pour l'empêcher de se tendre et de bloquer tout de suite le mouvement du sable et la fibre doit pour cela exercer une force et un déplacement de compression, c'est à dire un travail sur l'élément résilient. Ceci signifie que le couple fibre - élément résilient fonctionne en amortisseur : le sable fait bouger la fibre qui travaille sur l'élément résilient qui absorbe l'énergie mécanique transmise par e sable à la fibre et par la fibre sur l'élément résilient.

L'effet avantageux nouveau obtenu selon l'invention est que les fibres suffisamment fines et souples par rapport aux grains résilients pour être disposées en lacet entre ces grains résilients peuvent écraser ces grains résilients lorsqu'elles se tendent et disposent ainsi d'une résistance mécanique et d'un travail à effectuer avant d'être tendue et de bloquer le système.

On peut renforcer le système racinaire par des fibres qui bloquent tout par frottement retenant les fibres fines qui se tendent et se bloquent par frottement dans le sable ; l'objectif est d'obtenir que le travail du chevelu racinaire ait lieu avant et que le relais soit pris par le frottement des fibres. Si les fibres ne sont pas tendues et ont une possibilité de se tendre avant de se bloquer, cela permet aux racines de se mettre en tension avant que les fibres ne se mettent en tension.

Il y a deux possibilités pour obtenir ce type de situation : soit on a des fibres très fines si les grains résilients sont fins, soit on a des éléments résilients grossiers et, à ce moment-là, beaucoup de fibres ou même de bandelettes étroites en textile et particulièrement en non-tissé peuvent s'adapter pour faire des lacets entre les particules grossières qui sont un élément déstabilisant permettant au frottement de ne pas se manifester avant un certain ajustement.

Il y a également une juste proportion de fibres et d'éléments résilients car il faut que le travail de frottement des fibres soit retardé par une énergie potentielle d'absorption suffisante.

De plus, une quantité importante d'éléments grossiers résilients et moins denses et une quantité importante d'éléments résilients fins résilients et peu denses donnent un degré de liberté renforcé en diminuant les forces de frottement.

**V-1-A-3-4-10 Caractéristiques et exemples de différentes fibres ou bandelettes ou inclusions bloquantes utilisables**

En combinaison en particulier avec les grains durs de silice ou d'autre nature comme il a été vu pour la constitution du substrat d'origine (grains indéformables) et définis essentiellement par leur taille (granulométrie)et leur rugosité, leur forme et leur mouillabilité, différents ingrédients typiques peuvent être utilisés séparément ou combinés entre eux :

- fibres pleines incompressibles. Ces fibres sont supposées beaucoup plus longues que la granulométrie fine de base mais leur diamètre doit être comparé à la porosité du granulat avec deux cas principaux :

  • fibre très fine, plus mince que la porosité du sable dans lequel pousse le gazon ; ceci signifie que cette fibre peut se « faufiler » en lacets entre les grains de sable comme le font les radicelles avec une liberté à l'intérieur de la porosité. Le comportement est le même que celui des radicelles car il existe une longueur disponible avant que le lacet ne se tende et ne glisse plus et cela permet au sable de travailler par cisaillement contre la force de frottement interne avant d'être bloqué par la fibre.
  De façon préférable, les fibres utilisables pour créer des lacets à l'intérieur du sable non résilient ou partiellement résilient de 100 $\mu$m à 400 $\mu$m sont des fibres d'un diamètre compris entre 5 $\mu$m et 30 $\mu$m et d'une longueur entre 3 mm et 100 mm.
  • fibres épaisses ou bandelettes (le raisonnement est le même), plus grosses que la porosité. Ceci signifie que ces fibres écartent les grains fins pour se positionner et à l'échelle des grains fins la fibre semble rigide et reste tendue en ligne droite sans faire de lacets. Dans cette situation il existe trois cas :

    - s'il n'existe pas de grains beaucoup plus gros que le sable de base, cette fibre va supprimer la cohésion et agir comme armature en réseau avec les autres fibres sans « jouer avec le sable » et cela donne un sol traumatique ;

- s'il existe des gros grains beaucoup plus gros que le sable et la fibre, en densité suffisante pour que la fibre en trouve plusieurs sur sa longueur, cela aboutit à faire faire un lacet à cette fibre quand elle est mélangée et incorporée au substrat ; cependant, si la densité des gros grains est suffisamment faible pour que la fibre ne soit au contact que de quelques grains, cela signifie que la fibre est en lacet mais sans degré de liberté à l'intérieur d'une porosité libre. Aussi, si les gros grains ne sont pas résilients, il n'y a pas de travail d'amortissement possible. Ainsi, par exemple un sable mélangé à de la fibre grossière relativement à la porosité du sable est un mélange dur et traumatisant et le fait de rajouter du gravier ne rend pas moins dur.
- Si, en revanche, on a une fibre grossière qui se trouve courbée en lacets du fait de la présence par densité statistique de plusieurs gros grains sur sa longueur et si ces gros grains sont résilients, la fibre en essayant de se tendre par l'effet du cisaillement qui entraîne ses deux extrémités en sens inverse par frottement avec le sable fin, va réussir à exercer une force sur les gros grains résilients. Cette force pourra écraser ces gros grains en produisant un travail de compression, constituant un amortissement de la force à l'origine du mouvement.

- le substrat comprend des fibres et éléments textiles pour créer des lacets à l'intérieur du sable non résilient ou partiellement résilient de 100 $\mu$m à 400 $\mu$m, les fibres ayant un diamètre compris entre 5 $\mu$m et 30 $\mu$m et une longueur entre 3 mm et 100 mm;
- le substrat comprend des fibres ou des bandelettes de non tissé pour créer des lacets entre les grosses particules résilientes, les fibres ou bandelettes de non tissé ayant une densité entre 100 et 500 g/m2, une longueur de préférence entre 30 et 150 mm et une largeur de préférence inférieure à 15 mm, les fibres ou bandelettes représentant une quantité de textile de l'ordre de 1 à 10 kg/m2 sur 20 cm de hauteur du substrat;
- fibres creuses épaisses compressibles : les fibres creuses épaisses compressibles sont assimilables aux couches minces compressibles.

Ces fibres creuses ou nappes ou bandelettes en matière résiliente et élastique peuvent jouer elles mêmes le double rôle car ces bandelettes vont d'abord se déformer et s'allonger et s'écraser avent de bloquer le sol.

On peut encore utiliser du « vermicelle » ou des « spaguetti » en liège ou en EPDM qui peuvent à la fois s'écraser sur eux mêmes et s'étirer avant de se bloquer.

On peut aussi utiliser des granulés grossiers de liège ou de EPDM avec des fibres fines ou grossières. Si la quantité de grains grossiers est suffisante, les fibres se lovent entre ces grains et doivent les écraser avant de pouvoir se tendre créant un travail d'absorption

### V-1-A-3-4-11 Caractéristiques globales et exemples de combinaisons

En résumé, on peut distinguer deux cas généraux qui peuvent se combiner entre eux :

- Inclusions bloquantes agissant directement sur le squelette du substrat d'origine :
  Dans le cas d'inclusions agissant directement sur le squelette du substrat d'origine, les formes sont allongées.
- Il peut s'agir de fibres, naturelles ou artificielles, de préférence souples ou élastiques ou résilientes ou encore des pailles ou même des bandelettes. Le fait d'être allongé signifie que la dimension des grains est petite par rapport la longueur des inclusions, ce qui signifie également qu'une inclusion est au contact d'un très grand nombre de grains sur son passage.

Interagissant avec des formes allongées, les inclusions peuvent également comprendre des granulés résilients et en particulier en liège cru ou cuit, avec une relation entre la taille, la tension de surface et la forme des éléments constitutifs du substrat et des inclusions allongées aboutissant à une forte augmentation de la cohésion, ainsi qu'une augmentation modérée du frottement interne. Même si l'augmentation du frottement interne est importante, l'objectif est d'avoir une augmentation de la cohésion apparente telle que ce n'est pas le frottement interne mais la cohésion qui donne au nouveau gazon selon l'invention un comportement de cohésion l'emportant sur le frottement, typique des gazons naturels normaux en sol sableux et frais.

Les deux principes de choix et de répartition des inclusions sont :

- qu'une inclusion de forme allongée au contact de nombreux grains de sol va pouvoir à la fois se constituer en réseau avec d'autres inclusions allongées et avec les nombreux grains en relation avec ces inclusions et que tous ces grains seront bloqués une fois que les inclusions allongées seront mis en tension ;
- que la géométrie, la rhéologie, les forces exercées entre particules laissent suffisamment de potentiel de déplacement pour que le travail correspondant ait absorbé une part suffisante de l'énergie transmise au sol.

Inclusions bloquantes coopérant avec des éléments résilients:
Le substrat selon l'invention est caractérisé dans une variante avantageuse en ce qu'il comprend une quantité d'éléments résilients d'au moins 5 % et jusqu'à 100 % en volume et des fibres et éléments textiles en dimensions et quantités adaptées pour que le sol puisse effectuer un travail d'absorption avant d'être bloqué quand le sol est soumis à une sollicitation mécanique.

Des inclusions de liège ou autres éléments résilients ou élastomères en quantité suffisante et des textiles assez long et souples pour s'appuyer sur plusieurs de ces grosses particules qui vont devoir s'écraser avant que le tissu ne soit tendu par les forces de frottement qui l'empêchent de glisser. Le travail d'écrasement donne à la fois un amortissement et une capacité de mouvement avant l'arrêt par blocage.

L'objectif recherché est que les inclusions forment des lacets entre des particules résilientes et que la mise en tension de ces inclusions passe par l'écrasement préalable de ces particules résilientes. Ceci est en particulier atteint en utilisant des fibres ou des bandelettes suffisamment fines et longues par rapport aux particules résilientes et suffisamment nombreuses dans la constitution du substrat du sol pour que lesdites fibres ou bandelettes soient amenées à faire des lacets autour de plusieurs particules résilientes lorsque ces fibres ou bandelettes sont mélangées au substrat.

De façon préférable, les fibres utilisables pour créer des lacets entre les grosses particules résilientes peuvent être choisies en fibres ou en bandelettes de non tissé de densité entre 100 et 500 g/m2, d'une longueur de préférence entre 30 et 150 mm et une largeur de préférence inférieure à 15 mm et une quantité de textile de l'ordre de 1 à 10 kg/m2 sur 20 cm.

Si l'on considère les fibres ou bandelettes creuses avec une capacité de travail par compression ou une capacité de travail par élongation élastique, on peut utiliser des bandelettes ou des « spaguetti » fabriqués en mousse, en EPDM ou en liège qui jouent à la fois un rôle de blocage une fois comprimés et allongés et un rôle d'amortisseurs dans la phase de compression élongation et qui jouent un rôle de réparation en travaillant en sens inverse en troisième étape après la phase de blocage.

**V-1-A-4 Autres moyens d'améliorer le comportement mécanique du sol sportif**

Il a été vu qu'on pouvait améliorer les caractéristiques mécaniques du sol par incorporation d'inclusions caractérisées par leur nature, leur dosage et répartition, leurs dimensions et formes.

On peut également agir par deux autres moyens que sont la mécanique des installations sous le substrat et la transformation des forces à l'intérieur du substrat par adjonction d'un agent mouillant

**V-1-A-4-1 Agents mouillants**

Selon une variante avantageuse de réalisation de l'invention, le substrat ou les inclusions peuvent éventuellement subir une transformation avantageuse de la tension de surface des éléments constitutifs du substrat et éventuellement des racines du gazon, soit définitivement soit par adjonction régulière d'un produit tensioactif, cette adjonction pouvant être avantageusement faite à travers un arrosage par une l'eau additivée par ledit produit tensio-actif, modifiant ainsi la mouillabilité de surface des produits arrosés pour augmenter la cohésion du gazon, de façon plus ou moins pérenne selon le produit employé. Il existe des produits tensio-actifs qui sont utilisés dans le traitement du gazon pour améliorer le drainage et lutter contre le feutre et les racines exercent elles mêmes des forces de capillarité très importantes (succion de plusieurs bars pour tirer l'eau des profondeurs et l'amener - pour les arbres - à 20 ou 30 mètres).

**V-1-A-4-2 Elasticité du fond du module ou sous couches élastiques ou résilientes**

Une autre approche est d'avoir un degré de liberté à une autre échelle : c'est le cas lorsque le substrat repose sur une surface qui peut travailler en absorption : En particulier on peut poser le substrat sur des plateaux résilients qui peuvent absorber une force verticale. C'est le cas avec des plateaux posés sur des blocs de mousse résiliente reposant eux-mêmes sur le fond de forme. C'est également le cas avec des modules dont le fond ou les pieds disposent de mécanismes permettant de donner une réponse élastique aux sollicitations mécaniques en surface. Cette possibilité doit s'analyser en se souvenant qu'une sollicitation mécanique en surface doit traverser le substrat, exciter et recevoir la réponse mécanique du support du module et retraverser la surface pour réagir à la cause de la sollicitation.

La solution consiste à avoir un substrat qui se bloque du fait des fibres fines qui agissent comme des radicelles en n'empêchant pas le pied de se placer et en ne durcissant pas le sol mais sans le rendre plus souple non plus. Pour améliorer la souplesse on utilise le support inférieur du substrat.

**V-1-A-5 Choix des plantes poussant dans le substrat**

**V-1-A-5-1 Principes généraux**

Un autre aspect important de l'invention est d'utiliser un type de gazon approprié, sur le plan botanique.

Concernant le choix des plantes il peut s'agir de toutes les plantes choisies par l'homme de l'art et en particulier de graminées qui sont généralement employées mais d'autres plantes gazonnantes ne sont pas exclues a priori, même si la mode actuelle ou le développement de l'état de l'art par les firmes spécialisées donne actuellement aux graminées le quasi-monopole des pelouses sportives avec seulement des intrus indésirables comme les trèfle ou le plantain par exemple, ce qui permet une sélection chimique facilitée mais pas forcément la meilleure compétition mécanique pour l'espace qui serait bien préférable et plus conforme au respect de l'environnement.

Ce choix est réalisé en profitant notamment des améliorations permanentes des variétés disponibles pour les professionnels. Les variétés mises sur le marché par les obtenteurs de graminées à gazon sont systématiquement testées par différents organismes nationaux, notamment français et britanniques, européens et mondiaux qui mettent à la disposition des professionnels un catalogue annuellement remis à jours des variétés reconnues. Les anciennes variétés reconnues sont notées en fonction de caractères techniques et de protocoles normalisés et la liste des variétés est régulièrement augmentée des variétés nouvelles ayant fait la preuve d'une amélioration significative par rapport aux autres variétés déjà connues sur au moins l'un des caractères systématiquement étudiés.

Il n'en est pas de même des plantes gazonnantes de type dicotylédone et notamment des vivaces couvre sol qui pourraient pour certaines être introduites avec profit dans les compositions de gazon mais que la profession a laissé de côté du fait, précisément, qu'elles ne participent pas au classement systématique des caractéristiques reconnues selon le protocole décrit ci-dessus, exclusivement réservé aux graminées issues de la sélection des obtenteurs participant au système.

Le gazon selon l'invention se distingue des gazons de sport par le fait que sa composition n'est pas systématiquement réservée à l'utilisation exclusive des graminées.

Dans la réalité d'ailleurs, l'examen attentif d'une composition de la végétation d'un gazon sportif montre que des « mauvaises herbes » s'invitent généralement d'elles mêmes, même si elles n'ont pas été introduites volontairement.

Cette remarque conduit à remarquer que la composition d'un gazon est par nature évolutive entre la composition de départ et son évolution au fil du temps sous l'influence de la durée, des saisons, du programme d'entretien et de l'utilisation plus ou moins intensive du terrain.

Quoiqu'il en soit, compte tenu des évolutions actuelles particulièrement rapides de la sélection de plantes en général mais surtout de graminées de plus en plus performantes, il faudra laisser à l'homme de l'art la possibilité de choisir parmi les nouvelles variétés qui seront proposées dans les années à venir. Toutefois, les critères de choix d'un gazon naturel habituel et d'un gazon naturel selon l'invention ne sont pas nécessairement les mêmes car les exigences sont très nombreuses dans le marché global des terrains de sport en gazon naturel il importe de considérer certains critères et d'orienter l'évolution de façon spécifiquement adaptée, en partant des choix actuels les plus pertinents.

**V-1-A-5-2 Description des problèmes par rapport aux différents climats et différentes saisons**

Un autre progrès a été fait de façon constante et continue sur les variétés de gazon et le marché propose des variétés de plus en plus denses, résistantes aux maladies, résistantes au piétinement et à l'arrachement, résistantes à la chaleur, à la sécheresse, au froid, à l'ombre, à l'hiver et également de plus en plus esthétiques....

Aucune variété n'est cependant capable de détenir les records dans tous les paramètres à la fois et la plupart des gazons sportifs sont des mélanges de graminées dont la combinaison est de plus en plus performante sur un ensemble de paramètres de plus en plus large. Il va de soi, cependant qu'aucun de ces mélanges ne peut prétendre être le meilleur en toute situation et le mélange dépend à la fois de la zone climatique, de la présence ou non de l'arrosage, de l'importance accordée à la facture d'eau, de l'intensité d'utilisation et d'entretien etc.

**V-1-A-5-2-1 Climats chauds**

Grâce à ces progrès, un choix pertinent de variétés de gazon permet de disposer de surfaces sportives en gazon naturel extrêmement performantes toute l'année dans les climats chauds et tempérés chauds c'est à dire les climats dont l'hiver est assez chaud pour que la pousse de raygrass par exemple ne ralentisse pas. Dans ces climats chauds, il est désormais possible, avec l'arrosage intégré, d'avoir des variétés qui poussent toute l'année ou bien des variétés tropicales pour l'été et d'autres variétés pour l'hiver quand ces dernières entrent en dormance, ces variétés pouvant le cas échéant cohabiter sur les mêmes terrains, soit de façon pérenne, soit en utilisant des sursemis de raygrass en automne par exemple. Des espèces comme les zoïzyas, encore peu utilisées seraient particulièrement indiquées pour leur densité et leur agressivité horizontale et leur résistance mais le zoizya entre en dormance en dessous de 12°C

**V-1-A-5-2-2 Climats tempérés**

Les possibilités sont également excellentes pour les climats tempérés à hiver relativement froid mais sans excès comme l'Europe occidentale (France ou Angleterre par exemple) avec des variétés nombreuses et adaptées qui poussent de façon vigoureuse pendant presque toute l'année, avec toutefois une période critique de décembre à mars.

Compte tenu des progrès des variétés et de l'arrosage intégré, la période critique en climat tempéré est l'hiver

Cette période critique est d'autant plus problématique que le calendrier sportif dans ces climats, en Europe en particulier, impose des matchs réguliers à cette saison. Les graminées utilisées classiquement restent vertes et pérennes mais ne poussent pratiquement pas, ce qui se traduit de façon pratique par le fait qu'il est inutile de tondre pendant 4 mois. Le corollaire est que le mécanisme de réparation naturelle par changement des feuilles usées mécaniquement par des feuilles neuves ne se fait pas pendant cette période.

Cependant, les graminées pérennes utilisées dans les gazons ne s'arrêtent de pousser que dans la mesure où il leur manque de la lumière et de la chaleur : il suffit de leur fournir chaleur et lumière pour qu'ils poussent: il ne s'agit pas pour le gazon d'un problème d'horloge interne qui arrête la végétation quand certains signes comme la durée du jour ou le contraste thermique entre le jour et la nuit augmente comme c'est le cas pour certaines plante caduques qui vont faire leur provision de sucre avant de s'endormir pour l'hiver.

**V-1-A-5-2-3 Climats froids**

Dans les climats froids, présentant un hiver long, obscur, avec gel sévère et neige sur une période prolongée comme c'est le cas pour le Canada, la Finlande ou la Russie par exemple, il existe des variétés très adaptées pour une reprise rapide de la végétation à la sortie de l'hiver mais l'utilisation des terrains de sport d'extérieur pendant la période hivernale pose de tels problèmes, indépendamment du terrain et du gazon lui même, que les calendriers sportifs excluent le jeux d'extérieur en hiver. L'utilisation des terrains en hiver serait un problème difficilement soluble pour les gazons naturels et également d'ailleurs pour les terrains synthétiques. Le passage de l'hiver sans endommager le terrain et une reprise rapide du jeu est plutôt le problème de ce type de climats. Toutefois, pour de grands stades avec tribunes et gazon au centre, le climat est de toutes façons un climat intermédiaire entre le climat véritablement extérieur et le climat intérieur et il est possible pour ces climats extrêmes comme pour des climats tempérés ou intermédiaires car septentrionaux mais océaniques (Hollande, Ecosse) de concevoir, selon l'invention, un système mettant en oeuvre des équipements spéciaux de contrôle du climat de la pelouse.

Cependant, pour passer l'hiver sans utilisation du terrain mais également sans détérioration, la solution naturelle est fonctionnelle alors que les matériaux artificiels sont soumis à des rigidifications qui ne sont pas sans poser des problèmes.

**V-1-A-5-2-4 Synthèse des problèmes selon climats et saisons**

Ainsi, malgré tous ces progrès, le gazon naturel, comme d'ailleurs c'est aussi le cas du gazon synthétique, doit s'adapter à travers le monde à des climats extrêmement différents et, malgré une adaptabilité remarquable, cela donne différentes difficultés dont certaines n'ont pas encore de solution satisfaisante dans l'état de l'art actuel, ce qui ne signifie pas qu'il soit impossible d'y remédier.

Au contraire, les équipements mis en oeuvre selon l'invention permettent de pallier ces différents inconvénients qui étaient admis jusqu'à présent mais qui doivent être résolus désormais pour que le gazon naturel ne soit pas remplacé par une surface artificielle en plastique lestée de sable ou d'élastomères, moins performante mais plus constante et disponible, indépendamment des aléas climatiques et de l'intensité, du moins dans une certaine mesure.

En particulier, les problèmes de détérioration du sol d'une part et de ralentissement de pousse du fait de la diminution de lumière et de chaleur en hiver d'autre part est de plus en plus sensible dans les zones tempérées en remontant vers les pôles , sachant que parallèlement l'évapotranspiration diminue tandis que l'ombre augmente et que les situations de gel et dégel deviennent de plus en plus fréquentes, avec, dans certaines zones géographiques, les problèmes de gel sévère et durable, d'obscurité et de neige pendant plusieurs mois.

Pour résumer la situation des gazons en fonction du climat en se préoccupant du seul point de vue de l'herbe elle même, on constate qu'il est possible d'avoir un gazon poussant naturellement toute l'année en climat chaud, que les climats tempérés posent un problème de pousse mais uniquement en hiver et uniquement par manque de chaleur du sol et de lumière , qu'il en est de même des climats plus septentrionaux océaniques et que le problème est terriblement accentué en climat très septentrional comme le Canada par exemple mais que dans ces climats, il est de toute façon inenvisageable de jouer à l'extérieur en hiver. Le problème pour ces climats froids est le laps de temps de reprise du gazon après le dégel.

Quand le gazon pousse normalement, au rythme correspondant à une tonte par semaine, on a un renouvellement de la couche d'usure chaque semaine et les problèmes de sur-fréquentation ne sont pas liés à l'usure du gazon mais plutôt à la capacité du sol à ne pas être déformé par le jeu et à protéger le collet des plantes en évitant que les efforts appliqués au sol ne se traduisent par des arrachements.

Ainsi, pour le seul aspect de l'herbe elle même, le gazon poussant présente une supériorité par rapport au synthétique car il y a renouvellement de la couche d'usure et réparation naturelle permanente sauf :

- en climat tempéré pendant l'hiver
- en climat froid pendant la reprise après le dégel

**V-1-A-5-3 Description des solutions préférables selon l'invention**

Certaines solutions particulièrement pertinentes et pas encore suffisamment connues ni utilisées sont actuellement disponibles.

En particulier pour des climats chauds et secs et pour des eaux d'arrosage salées certaines plantes gazonnantes qui ne sont pas des graminées, comme le matricaria Tchivetchii ou le Dichondra Repens et d'autres encore peuvent coexister avec des graminées de type blue-grass ou encore Zoïsyas et constituer de remarquables couvertures auto régénératrices. Dans certains climats chauds mais dont la température hivernale moyenne descend entre +4°C et +8°C à +12°C, des sursemis d'automne en raygrass anglais ou mieux encore en fétuque élevée à rhizome permettent d'obtenir une surface végétale active toute l'année.

Dans les climats tempérés, qui sont particulièrement visés par la présente invention bien qu'elle s'adapte à tous les autres climats mais avec un avantage spécifique consistant à compenser par une action sur le substrat une faiblesse spécifique de résistance des graminées aux conditions hivernales en climat tempéré, il faut déjà commencer par utiliser, ce qui n'est généralement pas le cas, les variétés qui ont le meilleur comportement face à ce problème spécifique. En n'oubliant pas les plantes gazonnantes couvre sol autres que les graminées, les meilleurs choix de graminées récemment obtenues et susceptibles d'optimiser le gazon selon l'invention, seules ou mélangées à d'autres espèces, sont actuellement les canches gazonnantes et la fétuque élevée à rhizomes, deux choix inconnus en France à l'heure actuelle, pour la fétuque élevée à Rhizomes parce que c'est extrêmement récent et sans raison valable en dehors d'une analyse mauvaise ou pas mise à jour des facteurs limitants en ce qui concerne la Canche gazonnante, pourtant testée depuis 5 ans avec succès en Grande Bretagne. Ce sont deux graminées particulièrement intéressantes individuellement et fonctionnant bien en synergie (en particulier les variétés Barcampsia et labarinth RTF® récemment obtenues par Barenbrug). Ces nouvelles variétés changent très significativement l'état des choses en pays tempéré car elles permettent pour la première une résistance au piétinement et à l'arrachement avec surtout une résistance à l'ombre inégalée et un très bon comportement hivernal et pour la seconde un enracinement profond combiné à une combinaison de rhizomes formant un réseau de tiges souterraines horizontales permettant à la plante de coloniser tout espace vide et donc de combler les trous par l'apparition de nouvelles pousses et de s'auto réparer ainsi qu'une exceptionnelle résistance à la chaleur et à la sécheresse , et enfin un excellent comportement hivernal, ce qui en fait actuellement la seule variété ayant le comportement estival idéal d'une plante tropicale comme le blue grass. La fétuque élevée à rhizomes combine une capacité unique de régénération spontanée par un réseau rhizomateux combiné à un enracinement profond à une vigueur et une capacité d'installation semblables à celles du raygrass anglais.De plus, cette variété s'accommode de la sécheresse et s'y adapte par un développement de son chevelu racinaire en profondeur d'abord et par rhizomes ensuite et cette variété a un des meilleurs comportements hivernaux, moins agressif qu'en été bien sur mais persistant et actif.

**V-1-A-5-4 Comportement et rôle des plantes face aux agressions mécaniques**

Le comportement du gazon naturel est donc adapté à la pratique sportive ; la pratique sportive se caractérise par des sauts ou des épisodes de course, de sorte que le pied du sportif ou du cheval commence par atterrir avec une certaine vitesse et énergie sur le sol lors d'une réception et doit « dans la foulée » prendre un appui sur le sol pour décoller à nouveau. Or, le gazon permet un certain amortissement et une déformation du sol au moment de la réception grâce à une cohésion pas trop grande du substrat et le sol se bloque ensuite pour résister à la poussée lors de l'élan suivant car le chevelu permet à la fois d'armer et d'enchaîner le sol.

Ce comportement est celui du gazon quand tout va bien, avec une humidité du sol convenable et un gazon poussant et résistant. Il y a une limite cependant à la résistance de l'ensemble sol-chevelu racinaire. Au delà de la cohésion créée par le chevelu racinaire, quand la sollicitation est particulièrement brutale, quand le sol est trop humide ou dans les zones de jeu les plus sollicitées où ce chevelu a déjà été fragilisé par une série de sollicitations, ou encore quand le chevelu est affaibli du fait de la saison ou de la mauvaise santé du gazon, il y a des mottes qui partent et des appuis qui manquent de fermeté. Soit les racines se cassent, soit l'ensemble de la racine est arraché, soit la plante entière est arrachée avec les racines et le sol enchaîné dans le chevelu mais non enchaîné à d'autres plants de gazon ou encore un ensemble de plantes contiguës sont arrachées ensemble car ces plantes ne sont pas suffisamment enchaînés en réseau aux groupes voisins de gazon. Pour cette raison d'ailleurs, les mélanges de gazon peuvent avantageusement juxtaposer des variétés à fort enracinement vertical comme le raygrass et des variétés à tendance rhizomateuse et de nouvelles espèces apparaissent comme par exemple une nouvelle variété de fétuque élevée rhizomateuse qui concilie avantageusement les deux avantages de s'ancrer solidement par un solide enracinement vertical et de s'accrocher aux autres en réseau par une création de rhizomes.

**V-1-A-6 Protocole de mesures et d'évaluation du substrat**

Il est un autre point essentiel de l'invention qui consiste à reconnaître que l'extrême complexité de modélisation de la statique et dynamique des milieux granulaires fins rend illusoire une prédiction de ce que peut donner dans les faits un mélange non testé. De ce fait, les conditions nouvelles inventives exprimées ci dessus et explicitées plus loin sont des conditions nécessaires mais non suffisantes de succès. Si on ne connaît pas un sable donné ni son humidité au moment du mélange ni la mélangeabilité à priori des inclusions dans un tel sable, on ne peut pas prévoir a priori le véritable mécanisme de statique et de dynamique granulaire dans un faisceau donné d'humidité et de température et de saturation d'eau de l'air interstitiel dans le milieu poreux. C'est pourquoi une évaluation du résultat après mélange est indispensable pour pouvoir garantir les caractéristiques de chaque nouveau mélange. La présente invention inclut cette nécessité par l'introduction du principe même de gazon naturel qualifié par un protocole de mesures mécaniques d'évaluation.

Ce protocole spécifique doit au moins vérifier une caractéristique liée à la courbe accélérométrique d'un mobile lâché d'une hauteur donnée, en reliant la courbe accélérométrique à une mesure de la teneur en eau du substrat dont on mesure la réponse accélérométrique. De façon préférable, plusieurs mesures accélérométriques sont faites en relation avec plusieurs teneurs en eau avec notamment une mesure pour une teneur en eau basse et une mesure avec teneur en eau élevée permettant d'estimer la variation d'accélérométrie dans la plage de teneur en eau prise comme plage de référence contrôlable par l'arrosage et le drainage et d'autres mesures peuvent être faites pour estimer la variabilité des mesures à l'intérieur de cette plage et en fonction de celle ci. Un autre point du protocole est d'avoir un substrat préalablement compacté à un degré de compaction correspondant à celui qu'on peut obtenir en situation d'utilisation du terrain et cette compaction doit être obtenue selon une méthode définie par le protocole. Un autre point du protocole est la possibilité offerte par la simplicité de l'outil de mesure autorisant de faire plusieurs chutes successives au même point pour vérifier l'évolution ou au contraire la stabilité de la mesure qui peut se modifier du fait du tassement résultant des chutes précédentes sur un sol insuffisamment tassé et se stabiliser une fois atteinte la compaction maximale obtenue par damage avec le poids du mobile de l'accéléromètre. Une possibilité offerte par le protocole est de faire plusieurs fois la mesure et de ne prendre en considération la courbe que si celle ci est stabilisée.

Un protocole d'évaluation n'est utilisable pour accepter ou non le résultat d'une fabrication que si le protocole d'évaluation comprend d'une part un protocole de mesures et d'autre part des critères de comparaison de ces mesures et d'acceptation ou de rejet des résultats.

Il est bien évident que de tels critères ne sont pas des critères absolus mais qu'ils sont au contraire relatifs puisque la base des données s'enrichit avec le temps des performances des substrats déjà testés et que l'acceptation d'une fabrication se fait en fonction d'un critère de comparaison des performances d'une part mais en prenant en considération le coût économique de fabrication d'autre part, sachant que le coût des matériaux dépend des transports et donc de chaque situation de chantier.

Quoiqu'il en soit, le protocole d'évaluation du substrat sert en même temps de protocole de contrôle qualité de fabrication. Une fois acceptée une mesure test, le protocole permet de vérifier l'homogénéité du comportement d'échantillons de substrat prélevés en cours de fabrication qui permettent de s'assurer que les variations plus ou moins importantes de caractéristiques des différents composants entrants n'aboutit pas à des sauts qualitatifs du résultat du substrat sortant. Il est important de ne pas oublier selon l'invention que la matière en sortie n'est qualifiée, dans une version préférable de l'invention, compte tenu des aléas de fabrication ou de fourniture des inclusions et encore des substrats qui peuvent varier en fonction des carrières ou des veines dans une même carrière que si des mesures selon le protocole d'évaluation du substrat confirment sur des échantillons pris au hasard en sortie de fabrication en centrale attestent l'adéquation du résultat et des prévisions

Une seconde mesure est souhaitable dans le protocole pour déterminer la résistance au cisaillement. L'expérience de la boite de Cassagrain est très intéressante sur le plan de l'étude fondamentale d'un sol mais elle n'est pas accessible en continu puisque c'est une mesure destructrice d'un gros échantillon hors de sa situation d'utilisation.

Pour le substrat seul, sans gazon, cela reste cependant un excellent moyen de mesurer cohésion et angle de frottement pour caractériser la résistance au cisaillement. De tels essais devraient être comparés à l'énergie de restitution lisible sur les courbes accélérométriques dans le but d'établir des corrélations.

La courbe accélérométrique est représentative non seulement de l'amplitude et la durée du choc et de la restitution d'énergie mais exercés par le sol en fonction de la déformation et elle donne l'empreinte théorique qui est un renseignement précieux sur la capacité du sol à remonter malgré un poids à soulever après avoir été déformé et on a également l'énergie cinétique restituée.

Elle donne également la courbe des efforts en fonction de la déformation du sol (et non la courbe force - enfoncement comme un pénétromètre)

En fonction du sport considéré, on peut considérer un protocole visant à exercer un effort de cisaillement et mesurer un déplacement ou une mesure caractéristique de la détérioration du sol soumis à un tel effort.

De façon idéale, le protocole aboutit à la représentation du sol dans un plan par un couple (A, B) de 2 paramètres représentatifs de la dureté du choc et de la déformation sous contrainte de cisaillement, pour une teneur en eau donnée.

Le critère de comparaison entre (A1, B1) et (A2, B2) est qu'on souhaite avoir

(A1, B1) meilleur que (A2, B2) si

A1 $\leq$ A2

et B1 $\leq$ B2

Si, de façon idéale, les deux critères sont remplis en même temps, le substrat 1 est meilleur que le substrat 2.

Sinon, une faible détérioration d'un paramètre pour une forte amélioration de l'autre peut être considérée avec discernement comme une amélioration significative.

Des recherches doivent encore être menées pour constituer une base de données permettant de classer les sols d'une part et pour définir les protocoles spécifiques les plus pertinents d'autre part.

Comme exemple de réalisation d'un protocole et d'un critère selon l'invention, on peut considérer le couple (A, E), où A est la mesure du pic d'accélération définie comme le maximum de la courbe de décélération et E est l'empreinte théorique calculée à partir de la courbe accélérométrique après avoir lâché 3 fois le mobile au même point, afin de s'affranchir du paramètre compactage préalable.

Un traitement du signal filtrant l'énergie au dessous d'une certaine fréquence à déterminer en fonction de la physiologie et du mouvement technique considéré et en intégrant l'énergie au dessus de cette fréquence est un autre exemple de valeur caractéristique de la dureté du choc.

Un effort pendant un temps suffisamment long pour atteindre l'équilibre du sol avec une pointe d'une profondeur connue, avec une composante normale et une composante tangentielle connue et une mesure de l'empreinte laissée dans le sol après une compaction préalable déterminée est un exemple de mesure caractéristique de déformation sous contrainte de cisaillement.

Si on représente différents sols dans un même diagramme A, B en représentant chaque sol plusieurs fois avec différentes teneurs en eau, les sols ne sont plus représentés par un point mais par des courbes paramétrées.

Le critère complet d'évaluation des courbes caractéristiques des terrains est alors le suivant :

On souhaite que l'ensemble de la courbe caractéristique du sol choisi soit le plus près possible du point (0,0), ce qui signifie d'une part que A est le plus petit possible et B le plus petit possible sur l'ensemble de la courbe et que d'autre part la courbe ne varie pas beaucoup avec le paramètre teneur en eau.

Exprimé autrement, et en notant A(h) et B(h) la valeur des mesures A et B en fonction de la teneur n eau h, le critère d'évaluation s'écrit :

A (h) le plus petit possible pour hmin < h < hmax

B(h) le plus petit possible pour hmin < h < hmax

A hmin - A hmax le plus petit possible

B hmax - B hmin le plus petit possible

On sait que le sol est d'autant plus dur, donc A important

que h est petit

On sait que le sol est d'autant plus déformable, donc B grand, que h est grand

Des critères peuvent être donnés à titre d'exemple en fixant hmin, hmax, un seuil A max et un seuil B max et en ayant comme protocole de vérifier

A (h min) < A max

Et B (h max) < B max

De façon à améliorer les formulations par itérations successives, le protocole permet d'évaluer le substrat fini mais c'est également un moyen d'évaluer, pour un substrat de départ donné l'efficacité du traitement par incorporation d'inclusions. Dans la mesure où l'incorporation d'inclusion permet d'avoir une résistance importante au cisaillement, même avec une teneur en eau plus importante, cela permet de comparer la dureté du terrain après traitement et avec une teneur en eau relativement importante à la dureté avant traitement mais avec une teneur en eau plus faible car une teneur en eau faible était indispensable avant traitement pour avoir une résistance au cisaillement convenable.

La teneur en eau après traitement peut être décalée vers les teneurs e eau plus importante pour diminuer la dureté des terrains.

**V-1-B Caractéristiques extrinsèques générales du gazon**

**V-1-B-1 Moyens et procédés de fabrication et entretien du gazon**

**V-1-B-1-1 Moyens et procédé pour incorporer les inclusions au substrat**

Pour mélanger les inclusions au substrat, un certain nombre de difficultés se présentent.

Bien que les inclusions ne soient pas nécessairement des fibres, il sera ici fait mention de fibres et de mélange fibré même si d'autres inclusions peuvent être incorporées au substrat selon le même procédé et avec les mêmes outils que présenté ci dessous.

Le document FR-A-2 785 918 décrit une machine permettant de faire un mélange dosé de matière divisée et de matière fibreuse et permettant conjointement de déposer et répandre ledit mélange sur le sol.

Il existe deux modes principaux qui sont :

- la création d'un substrat fibré en centrale suivi de l'épandage du substrat et
- l'épandage d'éléments à incorporer sur un sol en place et mélange des éléments épandus au sol en place.

Ces deux modes peuvent être combinés en ce sens que

- d'une part il est possible d'épandre un substrat déjà fibré et d'incorporer et mélanger ensuite ce mélange au sol déjà en place, et que
- d'autre part il est possible de fabriquer ce mélange dans une centrale de mélange permettant un épandage simultané, ainsi que le propose le brevet précité.

Dans la combinaison caractéristique décrite dans le document précité, la machine de mélange est installée sur une remorque qui mélange et épand simultanément. L'avantage de cette combinaison n'est pas évident et il est en tout état de cause restreint par la nécessité de recharger la remorque en matière non fibrée et en fibres à mélanger en continu et qu'il est tout aussi commode de recharger ladite remorque de matière déjà fibrée. En revanche, la combinaison précitée nécessite des remorques d'épandage à tout faire extrêmement complexes et considérablement plus lourdes en poids par rapport à la charge utile et surtout cela donne des contraintes plus complexes et moins de possibilités en termes de nombre de constituants.

Dans la présente invention, cette combinaison reste une simple option dont on ne voit pas quel avantage particulier il représente en dehors de celui, pour un petit marché de diminuer le nombre de machines à transporter mais dont la complexité et le surpoids constituent un désavantage en toute circonstance. Il semble plus simple d'avoir une centrale mobile que l'on installe sur le lieu proche de l'aire à traiter et accessible aux camions qui amènent la matière première et de disposer de plusieurs épandeurs qui travaillent en parallèle sans perte de temps.

La description ci dessous des moyens et procédés de production du gazon selon l'invention, sans répertorier toutes les combinaisons possibles ni tous les détails, ne s'attache qu'aux points particuliers qui ne sont pas connus de façon évidente de l'homme du métier. Sans décrire tous les détails de ces opérations qui sont déjà connues pour une large part dans l'état de la technique, la présente invention se contente d'indiquer les moyens trouvés pour pallier certains inconvénients spécifiques qui sont de nature à empêcher la bonne réalisation de ces opérations apparemment classiques mais dont la réalisation pose des difficultés suffisamment importantes pour que l'homme de la technique ne parvienne à un résultat conforme au cahier des charges théorique sans des moyens appropriés innovants comme ceux décrits ci-dessous.

La difficulté vient du fait que l'invention vise la production d'un substrat dans lequel des inclusions et tout particulièrement des fibres sont si intimement mélangées au substrat qu'elles sont capables, après un faible déplacement interne, de bloquer fermement les mouvements internes de ce substrat, nonobstant des forces importantes appliquées et que l'on souhaite également que ces fibres ou inclusions soient attachées au substrat par de telles forces qu'il soit très difficile d'obtenir ultérieurement une ségrégation.

Cet objectif, une fois le substrat réalisé et en place, implique qu'il faudrait une très grande énergie pour séparer les fibres ou inclusions du substrat initial ; mais cela suppose également que le travail inverse consistant à les introduire d'une façon aussi intimement mélée est également considérable.

Une caractéristique de la centrale de mélange est sa puissance de cisaillement, rapportée au débit de mélange. Un tel effet est obtenu avec un malaxeur suffisamment long pour brasser la matière plusieurs fois avec une puissance suffisamment importante pour obliger toute la matière à avancer d'un bout à l'autre du malaxeur en passant en force malgré un fort cisaillement entre les bords fixes et les éléments mobiles ou entre des bords en rotation et un ensemble intérieur d'éléments en contre-rotation de sorte que la puissance de l'ensemble crée dans le substrat à mélanger un violent cisaillement tout en fournissant l'énergie nécessaire et suffisante pour incorporer la fibre au substrat et afin d'obtenir une homogénéité du mélange par plusieurs passages successifs avec brassage et cisaillement entre le bord et les éléments mobiles. De façon préférable, il y a une simultanéité des apports d'inclusions et de substrat de base avec des moyens pour défibrer et mettre les fibres dans toutes les directions car il importe non seulement d'avoir des fibres mais leur disposition en toutes directions et non en paquets ou pire en bottes est importante ou plutôt essentielle pour une bonne efficacité rapportée à la quantité mélangée. Une solution qui n'est pas obligatoire mais qui permet d'arriver au résultat est le transport pneumatique de la fibre tout juste peignée jusqu'à l'entrée de la vis sans fin cisaillante où elle rencontre le substrat arrivant au même point par gravité.

Une première difficulté est de réussir à « ouvrir » la fibre et de faire parvenir des fibres dispersées en tous sens dans le substrat quand ces fibres se présentent le plus souvent au départ sous la forme compactée de mèches compressées les unes contre les autres ou même de tissu qu'il faut commencer par effilocher pour en extraire les fibres. Il faut réussir à introduire ces fibres dans le substrat de telle sorte qu'on n'ait pas en sortie des mèches mais des fibres individuelles disposées avec une densité aussi régulière que possible, dans des directions aussi aléatoires que possible et constituant des lacets entre les grains et se constituant en réseau dans le substrat.

Dans le cas des fibres ou inclusions selon l'invention, il est recherché des inclusions dont le sur-dosage ne produise pas un résultat trop différent du dosage idéal dans la mesure où ce surdosage ne bloque pas le substrat plus tôt et en considérant qu'une fois le substrat bloqué, il ne peut pas être bloqué davantage qu'il ne l'est déjà.

Cependant, quand d'autres inclusions que celles de l'invention, plus sensibles aux dosage, sont employées comme c'est par exemple le cas le cas si des fibres au diamètre supérieur à la porosité du sable sont employées, cet aspect du dosage est crucial car un sous-dosage aboutit à une inefficacité voire même pour un fort sous-dosage à une perte de portance locale du sol tandis qu'un sur-dosage se traduit en dureté du sol encore accrue.

Or, le surdosage en une zone se traduit obligatoirement par un sous-dosage dans une autre zone si la dose globale est la dose souhaitable et il n'est pas non plus possible d'avoir une bonne dose homogène partout si la dose globale n'est pas cette dose souhaitable.

Dans le cas de l'invention, il est possible d'avoir un surdosage général qui pourrait se traduire par une efficacité suffisante dans les zones de sous-dosage et une efficacité identique sans inconvénient supplémentaire en zone de surdosage.

En réalité, on peut avoir une baisse d'efficacité et en zone de surdosage et en zone de sous-dosage si le surdosage provient de l'incorporation de mèches qui peuvent regrouper des milliers de fibres en un lieu où une ouverture de la mèche en aurait placé une seule, ce qui signifie, à supposer à titre d'exemple qu'il en soit ainsi de toutes les mèches, que la densité d'objets serait divisée par mille d'une part et que chacun des objets est une mèche au lieu d'être une fibre, en sachant qu'une mèche de mille fibres est moins efficace localement qu'une seule fibre.

On voit donc qu'un mélange des fibres avec des mèches comme on observe sur les chantiers réalisés par les entreprises qui essaient, sans disposer de la technique ad hoc de rajouter des fibres aux sols en sable ou en gazon dans l'espoir d'en améliorer les caractéristiques.

Il peut arriver que la fibre « s'ouvre » et que l'on n'ait pas des mèches constitués de cheveux collés les uns aux autres dans la même direction et constituant ensemble une macro-fibre rigide mais des pelotes de fibres qui constituent une concentration de fibres dans toutes les directions mais reliées les unes aux autres.

Le premier cas, celui des mèches, est le résultat d'une fibre qui n'a pas été ouverte par un procédé qui commence par ouvrir les fibres avant de les introduire dans une phase de mélange avec le substrat initial tandis que le second cas est un problème lié à une fibre ouverte mais dont le mélange au substrat n'est pas réalisé selon des moyens adéquats.

Une fois que l'on n'a que des fibres isolées et mélangées au substrat, il faut que celles ci soient effectivement réparties de façon homogène et dans la dose souhaitée.

Même dans le cas où le problème du dosage est résolu, et même si les fibres se présentent individualisées et au bon rythme par rapport au substrat, il existe une grande difficulté pour obtenir qu'elles soient incorporées au substrats en formant des lacets selon un festoiement comparable à celui d'un chevelu racinaire.

Pour produire un substrat fibré ou une incorporation d'inclusions selon l'invention, la présente invention comprend plusieurs moyens, décrits ci dessous.

De façon générale, il apparaît que le transport des matières est une part importante du coût d'un terrain de sport et il est pour cette raison plus économique de disposer d'une centrale de mélange mobile de façon à faire converger sur le lieu d'utilisation les différents produits qui ne sont transportés qu'une seule fois de leur lieu d'extraction ou de production vers le lieu d'utilisation définitive, faisant ainsi l'économie d'un chargement, déchargement et transfert entre un lieu de production et de transport entre le lieu de production et le lieu d'utilisation. Pour cette raison, l'outil mis au point selon la présente invention a été conçu pour intégrer cette contrainte

De façon idéale, il s'agit d'une centrale mobile composée d'une ou de plusieurs centrales élémentaires de mélange, de préférence en continu avec transport des produits intermédiaires d'une centrale élémentaire à l'autre dans l'ordre croissant de finition des produits avec un débit coordonné entre les centrales, de telle sorte que la somme des débits entrant dans une centrale de mélange soit égale au débit de sortie de cette centrale et que la proportionnalité entre débits entrants soit égale à la proportion voulue des éléments considérés dans le mélange en sortie.

Ce principe de dosage par réglage du débit des entrants est simple et classique et consiste à alimenter une centrale de mélange, soit en continu avec le débit souhaité soit en « batch » dans une trémie qui elle même dispose d'un système d'alimentation du mélangeur en continu avec un débit maîtrisé en fonction du dosage du mélange, comme il a été dit ci dessus.

La mobilité de la centrale ou des centrales élémentaires s'il y en a plusieurs peut être obtenue par un choix et une disposition géométrique fonctionnelle des différents éléments de la centrale considérée, qui respecte une contrainte supplémentaire liée à la possibilité de transporter l'ensemble. Cette condition est de respecter les règles de poids et de dimensionnement du transport routier. Cela est obtenu de préférence en ayant une centrale dont certains éléments, et notamment les tapis d'évacuation du produit en sortie de centrale, puissent être partiellement démontés pour le transport et remontés pour l'installation et le fonctionnement sur site de la centrale, ces éléments pouvant être rangés dans un espace prévu à cet effet et l'ensemble étant équipé de moyens de blocage et de manipulation à cet effet , de sorte que, une fois ces éléments rangés dans l'emplacement réservé en question, l'ensemble ait une largeur compatible avec le transport routier de l'ensemble et de préférence inférieure à 2,50 m pour éviter les convois exceptionnels, et la longueur et le poids doivent être également contenus dans les limites imposés par les véhicules de transport choisi. En particulier le poids doit être inférieur à un poids maximal de 30 tonnes diminué du poids du tracteur multi benne choisi si la centrale est montée sur une benne qui peut être transportée par camion multi benne avec un système connu comme par exemple le système Ampirol ou encore ce poids doit être inférieur à la charge utile d'une remorque routière si la centrale est installée sur une telle remorque routière.

Au delà des contraintes pratiques liées au transport et des classiques contraintes de proportionnalité des débits entrants en fonction du dosage désiré en sortie de centrale, telles qu' explicitées ci dessus, les mélange de la fibre au sable se heurte à plusieurs problèmes spécifiques plus complexes à maîtriser.

Si l'on veut introduire le sable seul où déjà mélangé à d'autres éléments dans une trémie d'alimentation qui doit alimenter une centrale de mélange où ce substrat sableux sera mélangé à de la fibre où autres produits, il faut résoudre le fait que par gravité et/ou avec l'aide d'agitateurs dans la trémie ou de vibreurs sur la trémie, le sable pur fin et mouillé et à plus forte raison un mélange de sable et de matière organique ont une forte tendance à se coincer et de se bloquer avec des effets de voûte, et la difficulté liée au fait qu'une impureté dans le mélange comme un peu de racines, de fibres ou une pierre chargée avec le sable sont susceptibles de bloquer totalement ou partiellement le débit entrant de sable.

Une trémie de faible dimension pourvue d'une forme adéquate et d'agitateurs bien placés est donc une solution utilisable mais ne permet pas de garantir une grande uniformité du mélange et de plus une telle trémie doit être au dessus du mélangeur et la hauteur du sommet de la trémie pose des problèmes supplémentaires de chargement soit en batch par chargeur télescopique soit par tapis convoyeur qui doit monter plus haut.

Une solution préférable est celle d'une trémie en longueur et non plus en hauteur, à fond mobile, utilisant le coefficient de frottement interne du substrat sableux pour obliger la matière à une translation permanente vers une extrémité de la trémie où un système adéquat comme il en existe dans les épandeurs agricoles prend en charge la matière et l'évacue selon un débit réglable ou connu.

Une seconde solution est une trémie en longueur sans fonds roulant mais avec une vis sans fin comme on en utilise en agriculture pour les vendangeuses par exemple mais avec un dispositif supplémentaire pour éviter l'effet de voûte au dessus de la vis sans fin. Un simple film vertical, par exemple de polyane au dessus de la vis sans fin sépare en deux compartiments le sable ou la matière organique introduite dans la trémie et cette séparation au niveau où se produit habituellement la voûte permet à la matière d'être tirée par la vis sans fin de part et d'autres de la vis sans le blocage traditionnellement observé dans ce type de situation.

Selon une caractéristique avantageuse de l'invention, le poste distributeur des fibres comprend un dispositif permettant d'arracher des fibres de la matière mise dans la trémie et qui se présente sous la forme d'une bourre plus ou moins compactée de fibres et tissu et un dispositif permettant d'acheminer cette fibre arrachée sous la forme la plus ouverte possible et la plus dispersée possible jusqu'au malaxeur où cette fibre doit être mélangée au sable.

Toutes sortes de machines existent dans le domaine de l'industrie textile, entre les effilocheuses, cardeuses, coupeuses qui peuvent être adaptées à la réalisation de ces fonctions.

Cependant, suivant une autre caractéristique avantageuse de l'invention, pour introduire les fibres, qui sont extrêmement légères au niveau du malaxeur, un moyen simple et efficace est d'introduire la fibre compacté dans une petite trémie de broyeur à couteaux tangentiels avec contre-couteaux, qui peut être située à proximité de la centrale sans contrainte de hauteur ni de proximité et peut par exemple être située par terre à quelques mètres de la centrale.

Normalement, un broyage avec des matières fibreuses ou résilientes ou trop légères n'est pas l'objectif prévu des broyeurs et il n'est difficile de prime abord d'obtenir un résultat car il n'existe pas de force suffisante pour que la masse résiste pendant que les couteaux l'attaquent pour en extraire des éléments. Avec des corps solides correspondant à l'usage habituel, la gravité et l'absence d'élasticité des matériaux permet qu'ils soient broyés au passage du couteau mais des matériaux comme le liège par exemple rebondissent sans être attaqués et de même les tissus sont mal défibrés et soit le débit s'arrête car le tissu n'appuie pas assez par son poids, soit les morceaux arrachés sont grossiers, sont coupés plusieurs fois, créent un bourrage qui bloque le système ou des pelotes qui ne se mélangent pas au sable.

La particularité du dispositif selon l'invention est d'utiliser une prise d'air et un ventilateur d'assez forte puissance qui crée un courant d'air avec une vitesse de l'air élevée qui par effet Venturi plaque la matière contre une grille suffisamment ouverte pour que la combinaison de la dépression derrière cette grille et la résistance de la grille à l'aspiration de la matière fibreuse aboutisse à plaquer cette matière avec une force de résistance importante à la pénétration des couteaux tangentiels qui, du coup peuvent alors éplucher en les coupant et en les effilochant les tissus plaqués contre la grille.

Un premier intérêt de cette extraction par des couteaux de fibres extraites de la matière fibreuse aspirée contre une grille est que la matière coupée est aussitôt évacuée et n'est donc ni coupée plusieurs fois ni amenée à faire un bourrage à la sortie ni amené à faire des pelotes.

Un second intérêt est que le courant d'air transporte les fibres jusqu'au mélangeur sans contraintes géométriques et sans laisser la fibre se ré-agglomérer pendant le transport ; au contraire, des obstacles pendant le transport peuvent permettre une séparation de plus en plus grande des fibres.

Au lieu de ce dispositif simple « d'épluchage » qui ouvre la fibre et détache des fibres relativement indépendantes les unes des autres et restent dans cet état en suspension dans un courant d'air, un dispositif composé d'un effilocheuse suivie d'une coupeuse avec un dosage permet d'obtenir, de façon plus coûteuse et avec un matériel plus encombrant, un résultat encore plus contrôlé. Cependant, l'hétérogénéité des fibres du système plus simple ne présente pas que des inconvénients car une courbe de gauss des longueurs de fibre donne un résultat plus mimétique des racines de gazon avec une efficacité du substrat en termes de stabilité qui semble supérieure à ce que l'on obtient avec une fibre plus homogène.

Le courant d'air de transport doit rencontrer le flux de substrat descendant par gravité vers le mélangeur, ce qui permet d'avoir une rencontre en continu d'un flux granulaire tombant dans l'air par gravité et d'un flux d'air transportant la fibre.

Un problème spécifique doit être signalé à ce stade. Si l'on ne dispose pas d'une trémie s'écoulant par gravité mais qu'on veut alimenter directement en sable par un tapis convoyeur, le courant d'air transporteur de fibres n'a pas de masse de sable suffisante pour s'opposer au flux d'air qui traverse alors le flux de sable entrant et envoie les fibres dans la nature. C'est la raison pour laquelle il est nécessaire d'avoir une trémie intermédiaire et c'est pourquoi il a été vu plus haut comment résoudre les problèmes de voûte dans une trémie alors qu'il aurait été plus simple de ne pas interposer une trémie et d'alimenter en direct avec le substrat tombant directement dans le mélangeur d'un tapis d'alimentation.

Un second problème intervient une fois que la fibre arrive dans le flux de sable : on a le bon dosage par le réglage des flux et on pourrait s'imaginer que le mélange est donc réalisé dès ce stade dans la mesure où les ingrédients sont présents dans les bonnes proportions mais en réalité on a seulement des fibres qui viennent s'agglutiner seuls ou en paquets sur un flux de sable sans que ces fibres ne soient contraintes à s'incorporer avec des lacets entre les grains dans une organisation intime qui constitue l'objectif recherché et cette opération nécessite une énergie de mélange très importante avec un cisaillement très contraignant .

La solution selon l'invention comprend également un malaxeur de forte puissance, capable de créer plusieurs fois des efforts de cisaillement suffisants pour incorporer la fibre au sable ou substrat entre l'entrée et la sortie du malaxeur. De façon préférable, les fibres et le substrat sont introduits à l'entrée d'un malaxeur avec des débits respectifs dont la proportion correspond au dosage du mélange final et la matière est déplacée vers la sortie du malaxeur par un mécanisme aboutissant, à la sortie du malaxeur à une incorporation satisfaisante.

Concernant le procédé de fabrication, il existe deux modes de fabrication sur site de substrat fibré en centrale avant épandage, avec stock tampon et chargeur

Dans une première version, la centrale est installée fixe sur un lieu proche du site d'épandage permettant l'acheminement et le stockage de la matière en amont de la centrale et le stockage si nécessaire de la matière finie. Soit un stock tampon de matière est constitué et cette matière est chargée pour être épandue sur le site d'utilisation, soit une rotation de remorques d'épandage permet d'éviter le stock tampon avec rechargement mais immobilise plus longtemps la remorque d'épandage.

## V-I-B-1-2 Procédés pour installer un tel substrat sur une surface de culture

### V-I-B-1-2-1 Création de novo pour installation à demeure

La forme de base est celle d'un gazon créé pour être installé à demeure. La formule normale est de préparer le fond de forme et les éventuelles couches sous-jacentes selon les méthodes que connaît l'homme de l'art et de mélanger en centrale, soit en site de production avec ensuite un transport soit avec une centrale mobile installée dans le voisinage immédiat du terrain à créer, le substrat étant ensuite installé sur le terrain, réglé et rendu plan selon des méthodes différentes des terres normales, car même un bulldozer calle en essayant de pousser un petit tas de substrat fibré. Mais il est possible d'épandre le fond de forme de façon régulière par plusieurs méthodes y compris l'épandeur à fumier suivi d'un réglage fin avec une fraise régleuse. Un avantage supplémentaire de ce substrat est la possibilité d'installer un tel terrain en hiver dans des conditions climatiques rendant impossible la création d'un terrain normal. En effet, le substrat fibré peut être benné et épandu et tassé et devient immédiatement une voie d'accès à la suite du terrain de sorte qu'en roulant uniquement sur la partie qui vient d'être installée, on peut répandre et régler plus loin le substrat sans rouler directement sur un fond de forme par hypothèse trop mou pour rouler dessus. On peut aussi installer une sous couche drainante du type connu sous le nom commercial Enkadrain et installer le substrat dessus, mais l'important est que le substrat est immédiatement travaillable et on peut par exemple le tasser et installer des fentes de suintement et semer et il faut encore attendre la levée du gazon, sauf à installer dessus un placage ou un pavage en gazon selon l'invention comme il sera vu plus bas et disposer d'un gazon selon l'invention fabriqué entièrement en hiver et immédiatement disponible.

**V-I-B-1-2-2 Méthode d'épandage et de nivellement**

Une autre difficulté spécifique du procédé de création d'une surface en gazon naturel selon l'invention est l'épandage et le nivellement du substrat. En effet, la matière est très difficile à faire tomber et à pousser du fait des ses caractéristiques d'auto blocage ; ainsi un bull ou un grader n'arriveront pas à pousser un tas ou à niveler et on ne peut donc pas utiliser une technique habituelle.

Les remorques d'épandages doivent être équipées d'un système pour évacuer une matière fibreuse et les solutions les plus avantageuses selon l'invention sont les mêmes que pour la trémie d'alimentation de la centrale, c'est à dire un système à fond mobile avec un hérisson à axe horizontal du type épandeur à fumier ou bien une vis sans fin avec un système anti- voûte en polyane vertical au dessus de la vis sans fin comme décrit pour la trémie de la centrale.

L'idéal est de pouvoir benner également pour accélérer le débit d'épandage et on a le choix entre une technique d'épandage par couches successives ou la mise en place directe de la chape. Dans le cas de la mise en place directe de la chape, la matière tombant en vrac sur le sol peut être avantageusement régalée et nivelée selon l'invention par un traîneau mobile équipé d'un système permettant à la remorque d'accrocher le traîneau pour le tirer ou de le décrocher pour aller faire le plein de matière et revenir accrocher le traîneau et reprendre le travail là où il en était avant que l'épandeur n'aille faire le plein de matière. Le dit traîneau est caractérisé par le fait qu'il se présente comme une trémie sans fonds posée sur le sol avec à l'arrière une règle très lourde et un soc en forme de V tourné vers l'avant au milieu de la trémie sans fonds. Le substrat tombe en tas de l'épandeur, directement sur le sol au milieu de la trémie sans fonds et ce tas est d'abord écrêté par le V dirigé vers l'avant, si il est trop haut. Ensuite, la paroi arrière laisse un échappement de l'épaisseur de la chape et un réglage laser peut modifier le réglage de hauteur et d'inclinaison de cette règle très lourde pour assurer le niveau de la chape. Le traîneau est tiré et des roues tout à l'arrière roulent en le tassant sur le substrat mis en place et soutiennent le traîneau.

Il n'est pas possible de reprendre une telle surface, qui ne saurait être parfaite du premier coup avec des outils du style grader mais il existe une possibilité de nivellement fin en utilisant une machine de réglage fin comprenant une fraise qui griffe très légèrement avec des couteaux très fins et rapprochés et qui tournent très vite ainsi qu'une une règle pilotée au laser et un rouleau. Cet outil du type connu sous le nom de « blake » permet d'obtenir une surface parfaitement plane et réglée et compactée.

La combinaison d'un épandage rapide d'une mince couche de substrat qui se tient suivi de l'épandage d'une couche selon le procédé de la chape réglée par un traîneau permet de créer des terrains même en hiver en situation très humide car le substrat compacté est immédiatement portant et non glissant et permet de mettre en oeuvre ces procédés en toute saison.

L'invention concerne aussi un procédé de fabrication d'une surface engazonnée selon l'une des revendications 19 à 21, comprenant une étape d'épandage du substrat dans lequel doivent s'enraciner les plantes du gazon, et une étape d'implantation du gazon et caractérisé en ce qu'il comprend aussi, avant l'étape d'épandage du substrat, une étape préalable d'évaluation et de validation dudit substrat par un protocole d'évaluation selon l'une quelconque des revendications 11 à 16, le procédé de fabrication étant interrompu si l'étape de validation ne donne pas le résultat escompté.

**V-I-B-1-3 Procédé de rénovation pour améliorer le substrat d'un gazon existant à moindre coût et faible délai d'immobilisation.**

La formule de régénération a pour avantage la transformation en gazon naturel plus résistant selon l'invention d'un gazon naturel préexistant, par exemple pour régénérer un terrain de football existant dont on veut faire un terrain d'entraînement à forte fréquentation hivernale ou pour rénover un fairway existant de golf existant pour le rendre accessible en toute saison à des engins d'entretien et notamment de tonte et même aux voiturettes qui créent de très forts efforts de cisaillement du fait des de petites roues avec un couple très fort caractéristique des moteurs électriques ou encore pour régénérer des pistes de galop qui subissent des dégâts d'empreinte trop importants quand la piste est humide pour donner la souplesse requise par la fragilité des articulations des chevaux. Cette formule consiste à faire l'épandage sur le sol gazonné existant de l'éventuelle part de squelette sableux et de matière organique nécessaire pour rééquilibrer autant que de besoin le squelette en place et à épandre sur le sol des inclusions et mélanger ensuite avec un mélangeur spécial à forte énergie type broyeur à bois avec des couteaux adaptés et installé derrière un tracteur agricole puissant.

Dans cette opération, le gazon en place peut être préalablement évacué avec une technique connue de couteaux scalpant et évacuant gazon et terre sur une profondeur réglable de quelques millimètres à 10 cm. Au contraire, le gazon peut aussi, selon un autre mode, être lui même pulvérisé et incorporé au mélange sous forme pulvérulente. A l'issue de ce mélange et du réglage fin de la surface, un roulage donne un substrat imitant le sol engazonné avant même l'installation de ce dernier, qu'il est possible d'installer aussitôt, de préférence selon la méthode du semis de perforation, consistant à semer dans une répartition par poquets dans des petits trous issus d'un carottage serré dans le nouveau substrat stabilisé, ce qui donne un gazon éclairci qui dispose de place pour taller et avec un collet légèrement enterré et par conséquent protégé par le substrat. Avant ce semis, il faut installer un nouveau drainage renforcé par extraction et remplissage de gravier selon les règles de l'art, ce qui est praticable sur ce substrat nouvellement mélangé et compacté.

Selon ce mode de mise en place, un substrat peut donc être aménagé par incorporation au sol en place soit de fibres ou autres inclusions, soit d'un substrat fibré plus fortement dosé en fibres pour tenir compte de la dilution lors du mélange du substrat fibré au sol en place.

Un broyeur, du type des broyeurs à bois permet une telle incorporation.

Selon une variante particulière du procédé, il est possible d'extraire une partie du sol en place pour l'utiliser dans le mélange du substrat et il existe également 2 modes possibles à ce procédé.

Or les difficultés sont nombreuses pour obtenir un substrat bien fibré.

Une version intéressante du procédé est une combinaison particulière d'une technique peu répandue mais connue pour prélever le gazon et une épaisseur bien déterminée du sol de surface en place. Ce sol peut être soit repris pour un mélange en centrale, soit épandu à côté au dessus par exemple d'un épandage de liège et de fibre et suivi d'un mélange en place.

Une machine connue permet de fraiser et d'évacuer une hauteur de sol extrêmement précise allant selon les réglages de quelques millimètres à 5 centimètres en un seul passage. L'évacuation a lieu sur le coté par un tapis convoyeur permettant de charger dans une remorque et le gazon de surface est à cette occasion totalement pulvérisé.

Il est donc possible de récupérer proprement le sol du site même sur une profondeur de quelques centimètres ou de 10 cm si on le souhaite pour amener ce sol jusqu'à la centrale, traiter ce sol en le mélangeant à divers produits comme fibre et éléments résilients et réinstaller ensuite le nouveau substrat comme il a été dit.

Un autre mode de réalisation est d'évacuer une première largeur et ensuite d'épandre les éléments à incorporer et de recouvrir ces éléments par la terre évacuée à coté puis de mélanger le tout en place.

Il est clair qu'une telle méthode ne peut prétendre une homogénéité comparable à la méthode précédente mais elle présente en revanche un avantage économique considérable, d'abord en termes de construction puisqu'on économise l'achat et la mise en place d'une importante partie du substrat mais le gain économique est tout aussi important sur le plan de l'exploitation car les travaux sont extrêmement rapides et le terrain immédiatement disponible à l'issue des travaux si on accepte momentanément l'inconvénient essentiellement visuel de pratiquer le sport considéré en l'absence de tapis végétal pendant une certaine période ; il est alors possible en effet, du fait des caractéristiques propres du substrat renforcé selon l'invention de pratiquer le sport considéré sur un sol performant avec un comportement imitant celui du gazon tout en laissant un sol ferme qui protège le gazon naturel pendant sa croissance Cette formule peut être également adaptée également à la création dans la mesure où l'on peut installer le substrat de création sans inclusion ou encore le seul squelette sableux sur les fonds de forme et sous-couches, faire l'épandage sur ce squelette sableux des inclusions et de l'éventuelle part organique et mélanger ensuite comme pour une rénovation comme il a été dit précédemment

### V-I-B-1-4 Procédés pour installer et entretenir un gazon dans un tel substrat

Moyens normaux de l'état de l'art mais les particularités du substrat donnent l'avantage de pouvoir travailler en hiver et autres méthodes sur certaines phases

Le mode d'entretien le plus avantageux est le même que celui de création : une ou plusieurs fois par an, il est possible d'intervenir pour rajeunir ou réorienter la population de graminées par le moyen d'un semis perforation, consistant à perforer le substrat en plusieurs centaines de petites poquets obtenus par extraction à l'aide de louchets creux, étroits et courts (environ 5 cm) et à semer à l'intérieur de ces poquets. Cette opération est idéalement accompagné d'une aération à louchets avec des louchets plus longs (10 cm ou plus) pour aérer le terrain, avec un sablage et le passage d'une traîne rigide ou d'une brosse rotative d'égalisation qui fera tomber le sable épandu dans les trous des louchets et permettra au graines dans le trous de semis d'être dans un milieux idéal meuble au milieu d'un sol résistant non déstabilisé par le semis. Ces opérations permettent également d'entretenir la planéité et favorisent la santé du gazon en place et surtout ces opérations sont réalisées en quelques heures et le terrain est immédiatement disponible à l'issue de ces opérations et le semis pousse sans arrêter le jeux avec un collet protégé par la technique, légèrement enfoncé dans le sol et protégé par la végétation existant.-On peut également utiliser un outil de décompactage par sous-solage vibrant mais ce n'est pas très utile car le sol ne fonctionne pas par mottes puisqu'il n'y a pas de structure à proprement parler.

**V-I-B-2 Moyens de contrôle de la teneur en eau**

Dans tous les cas, ce gazon naturel selon l'invention a une teneur en eau du substrat contrôlée, entre une valeur minimale et une valeur maximale de teneur en eau, dans une plage compatible avec le maintien en état des plantes poussant dans le substrat et l'utilisation du gazon pour sa destination.

Dans cette perspective, le gazon naturel selon l'invention est cultivé dans un substrat qui présente d'une part un pouvoir drainant suffisant, compte tenu des capacités drainantes intrinsèques du substrat et de l'éventuel équipement de drainage et d'autre part une réserve en eau suffisante, compte tenu dudit pouvoir drainant, de l'évapotranspiration, liée au choix de plantes et au climat et compte tenu de la pluviosité naturelle et de l'éventuel équipement d'arrosage intégré, de sorte que la teneur en eau du substrat reste contrôlée entre deux valeurs de teneur en eau Wmin et Wmax , compatibles à la fois avec le maintien en état des plantes et avec le maintien de bonnes conditions pour l'utilisation prévue, avec un risque statistique de sortir de cette plage de teneurs en eau pendant des périodes de temps suffisamment faibles pour être acceptables, compte tenu des enjeux.

Si l'on considère les circulations de l'eau dans un terrain de sport, il existe plusieurs chemins de circulation ; la circulation dans la porosité microscopique de quelques micromètres à quelques dizaines de micromètres, l'écoulement entre les mottes et, le cas échéant, l'écoulement à travers un réseau drainant avec des fentes de suintement positionnées selon l'invention avec une équidistance inférieure à 3 mètres et idéalement comprise entre 50 cm à 1 mètre, à une échelle macroscopique encore supérieure, à ne pas perdre de vue.

De façon préférable, le gazon naturel est équipé d'un arrosage automatique et d'un drainage renforcé qui permettent de maintenir la teneur en eau dans une plage suffisamment étroite pour que d'une part les plantes soient dans une situation de croissance optimale et que d'autre part les mesures caractéristiques mécaniques à l'intérieur de cette plage ne varient pas de façon trop importante afin de pouvoir garantir une stabilité optimale du comportement de la surface sportive.

**V-I-B-3 Moyens de contrôle de plusieurs paramètres d'état du gazon : température du substrat, température de l'air à la surface du substrat, éclairage du gazon**

Dans une version particulièrement avantageuse , le gazon selon l'invention est équipé de moyens de contrôle de l'un au moins ou de deux ou des trois paramètres que sont la température du substrat, la température de l'air à la surface du substrat et l'éclairage du gazon.

**V-I-B-3-1 Analyse des causes des problèmes liés aux facteurs climatiques**

Une des difficultés constantes d'un gazon est que les graminées constituant le gazon sont des plantes. Or, les plantes ont besoin d'énergie lumineuse, de chaleur et de lumière pour pousser et elles entrent en dormance en hiver, ce qui les rend moins denses et plus fragiles et moins aptes à se régénérer après les blessures qu'elles reçoivent du fait du piétinement pendant les jeux.

Cela implique que le choix des plantes gazonnantes en général et des graminées en particulier soit cohérent avec le climat du stade et l'utilisation hivernale ou estivale qui en est faite.

Un zoysia ou un cynodon dactilon par exemple sont très résistants à la chaleur et extrêmement résistants au piétinement mais entrent en dormance dès que la température est inférieure à 5 °C ; de telles graminées sont adaptées à l'Afrique mais ne le sont pas à l'Europe. En Europe du Nord, il convient de privilégier des espèces et variété qui ont une capacité de régénération et de résistance même en hiver. Du fait de l'invention, certaines espèces normalement proscrites, car leur résistance à l'arrachement n'est pas importante, pourraient devenir un choix judicieux du fait de leur comportement hivernal favorable. Ainsi, une « plaie » comme le paturin annuel qui a une très faible résistance à l'arrachement mais qui verdit, pousse, fleurit et se ressème, et en hiver il pourrait peut-être être intégré aux compositions.

Un autre problème est celui du gel sur les feuilles et dans le sol. Le gel rend les feuilles cassantes et glissantes et déstructure le sol et d'autre part crée sur les racines une pression et une absence d'oxygénation et une fragilisation directe qui peut les rendre incapables de jouer leur rôle mécanique pendant le sport et qui affaiblit la plante et la met en dormance et empêche les échanges et en particulier empêche la plante de boire car l'eau est gelée.

Or, pour prendre l'exemple de l'Europe et de l'Afrique, le gel est un phénomène possible au sud de la méditerranée, courrant dans les pays au nord de la Méditerranée, fréquent au nord et à l'est de la France.

A cela il faut rajouter l'ombre qui est le problème climatique majeur des stades entourés de gradins. Les gradins ont une ombre portée qui s'étend sur tout ou partie des grands stades et privent les plantes de la lumière et de l'énergie du soleil.

Le premier facteur de risque étant la teneur en eau, il a été vu que cette teneur en eau était contrôlée par un drainage et un arrosage approprié.

Cependant, une température trop froide et le gel ainsi que le dégel qui s'ensuit sont des facteurs de détérioration des performances du sol car le gel et même une température en dessous de 4 °C modifie le comportement de l'eau qui augmente de volume à partir de 4 °C et cristallise, ce qui bloque le drainage et exerce des forces qui déstabilisent le terrain, et écrasent les racines.

Par ailleurs, les graminées ne poussent que si la terre atteint une température supérieure à un seuil qui dépend des variétés mais un substrat au dessous de 12 °C ne laisse pas la plante bien pousser alors qu'une température du substrat de 20 °C est idéale.

Même avec une température convenable, la pousse n'a lieu qu'avec de la lumière et la lumière du soleil est idéale mais la croissance et la photosynthèse ont également lieu avec de la lumière artificielle.

La température de l'air au niveau du feuillage est importante également, notamment pour éviter le gel des feuilles.

Si on obtient une température du substrat entre 15 et 20°C, une température de l'air au niveau des feuilles supérieur à 5°C et un éclairage suffisant, l'herbe pousse et la terre se comporte en hiver comme au printemps.

Or, du fait des tribunes qui entourent la pelouse, les grands stades offrent à la fois un climat plus néfaste pour le maintien en état du gazon, en particulier du fait de l'ombre portée qui prive de la lumière et de la chaleur du soleil et une opportunité d'un microclimat protégé, en utilisant ces infrastructures comme supports d'installations permettant de contrôler le climat de la pelouse, selon l'invention.

**V-I-B-3-2 Description des moyens généraux permettant de résoudre ces problèmes selon l'invention**

**V-I-B-3-2-1 Température du substrat**

Comme c'est essentiellement en climat tempéré et en hiver que le synthétique montre sa supériorité à l'heure actuelle en termes de fréquentation d'usage, la présente invention met en oeuvre à la fois des moyens innovants pour créer un sol résistant mais en même temps propose, de façon optionnelle des moyens adaptés pour donner au gazon naturel la lumière et la température du sol dont il a besoin pour pousser en hiver.

Certains moyens sont déjà connus et sont parfois utilisés mais ils ne sont pas en synergie avec un sol adapté et leur utilité, quoique réelle sur une partie des paramètres reste limitée, faute de traiter tous les paramètres en même temps.

Certains stades sont équipés de Sols chauffants avec circuits électriques enterrés

Il existe également des Couvertures, notamment en non tissé comme pour les salades contre le gel

On connaît aussi des Pelouses mobiles par le fait que le fond de forme est une juxtaposition de bacs pouvant être tractés « dehors « à l'air libre et au soleil hors du stade pour échapper à l'ombre des tribunes

Les substrats de l'invention comprennent le plus souvent du liège et sont drainés : dans ces conditions, ils sont très isolants et sont naturellement moins exposés au froid que les substrats classiques qui conjuguent les effets négatifs du froid, de l'humidité et le cas échéant du gel et du dégel.

De ce fait, si un chauffage du sol est obtenu par des moyens qui peuvent être des tuyaux d'eau chaude ou des résistances électriques et qui soient installés à une certaine profondeur, la chaleur ne sera diffusée que lentement vers l'air libre et le flux de chaleur sera faible mais il sera possible, du fait de ce matériau moins conducteur de maintenir cette température avec une relativement plus faible consommation d'énergie pour s'opposer au refroidissement lié à une basse température de l'air en surface.

Selon l'invention, le terrain de sport est de façon préférable doté d'un arrosage automatique et d'un drainage permettant de réguler le taux d'humidité dans une plage beaucoup plus étroite qu'en l'absence de ces deux fonctions.

Le drainage sera de préférence un drainage renforcé comprenant des «fentes de suintement» espacées de 50 cm à 2 m ; la largeur de ces fentes sera de préférence comprise entre 3 et 8 cm et le matériau de remplissage sera un granulat de préférence 2-6 ou 3-8 ou encore un massif filtrant réalisé en un matériau conformé pour éconduire de l'eau collectée.

**V-I-B-3-2-2 Température de l'air à la surface du substrat**

Si l'on considère la température de l'air à la surface, il est d'abord évident que le sol ne peut pas réchauffer l'air extérieur comme une dalle chauffante réchauffe une pièce mais le flux de chaleur en provenance du sol réchauffe de façon assez efficace la petite couche d'air emprisonnée entre les surfaces des feuilles. Les feuilles rayonnent et se refroidissent par rayonnement, ainsi que la surface mais à l'inverse une source de lumière réchauffe la surface du sol et la surface des feuilles.

Un moyen simple pour aider la végétation en supprimant une partie du givre et des gelées blanches est l'utilisation de couvertures en non tissé très léger, perméables à l'eau, à l'air et à la lumière telles qu'on les utilise en horticulture ou en culture pour protéger les salades par une isolation thermique et une limitation du rayonnement.

Un autre type de couverture utilisable est une couverture opaque aux rayonnements et plus isolante thermiquement, si elle n'est installée que la nuit mais elle doit être très légère et laisser passer l'air et l'eau de la pluie.

Dans une version de l'invention, le stade comprend une zone de rangement d'une telle couverture, qui peut être d'un seul tenant ou une juxtaposition de couvertures, et le stade comprend les moyens de tirer et installer cette couverture ou ces couvertures et de la ou les retirer, ainsi qu'un protocole ou un automatisme réglé sur la lumière qui permet de tirer la couverture dès que la lumière descend en dessous d'un certain seuil et de la retirer dès que la lumière a atteint un certain seuil.

En couvrant la couverture la nuit, cette couverture maintient une température en limitant le rayonnement du sol vers le ciel et au contraire le substrat chauffé rayonne et le rayonnement est réfléchi par la couverture. Le flux de chaleur en provenance du sol peut maintenir la température sous la couverture si la somme du rayonnement traversant la couverture et de la chaleur traversant la couverture par conduction est inférieure au flux de chaleur en provenance du sol.

### V-I-B-3-2-3 Eclairage du gazon

Un point innovant particulièrement important de l'invention est de ne pas laisser le gazon dans l'ombre.

Dans ce cadre, un moyen efficace selon la présente invention est d'augmenter la lumière sur le gazon pendant l'hiver. Ceci peut être fait selon deux modes distincts.

Eclairage par miroirs utilisant le soleil :

Une première solution est d'utiliser le soleil qui en hiver se trouve plus bas de sorte que l'incidence des rayons est assez rasante de sorte que d'une part l'intersection d'un faisceau avec l'horizontale est « étalée » sur une surface importante, ce qui conduit de façon géométrique à diminuer la concentration d'énergie tandis que d'autre part un obstacle bas comme les tribunes autour du stade sont souvent sur le trajet du faisceau qui devrait illuminer le stade et crée une ombre portée qui prive le gazon d'ensoleillement direct.

Compte tenu des infrastructures importantes autour des stades, il est possible, en dehors des spectacles, d'installer, faisant plus ou moins face au Sud à 45° près coté Est ou Ouest, c'est à dire du coté nord des tribunes (dans le cas bien sur de l'hémisphère nord) des miroirs qui peuvent être en tissu ou autre feuille ayant une face réfléchissante comme cela existe, ces feuilles étant tendues et juxtaposées sur une grande surface correspondant approximativement à la hauteur des tribunes ou même davantage et à la largeur entre deux tribunes perpendiculairement à l'axe Nord-Sud. Une tribune équipée selon l'invention d'un dispositif permettant de tendre une feuille réfléchissante ou un ensemble de feuilles réfléchissantes sur une grande surface en réglant l'incidence de ces feuilles de façon que la normale à ces feuilles ait un angle idéalement symétrique entre l'angle incident de la lumière solaire et la verticale permettrait de façon peu coûteuse en infrastructure et totalement gratuite en énergie de fournir une énergie lumineuse apportant à la surface d'herbe autant de chaleur et de lumière pour la photosynthèse qu'en été, au facteur d'absorption près de la surface réfléchissante. Il est vrai que le soleil ne brille pas tous les jours en hiver et cette solution n'est efficace que les jours de beau temps mais l'herbe est parfaitement capable de s'arrêter de pousser pendant quelques jours et de recommencer dès qu'il fait beau.

En dehors des pays très septentrionaux, l'énergie lumineuse du soleil hivernal est importante mais l'intersection d'un flux oblique avec l'horizontale répartit la densité du flux lumineux sur une surface S1 = S /cos A où A représente l'angle entre le rayon lumineux et la verticale

Par conséquence, le flux lumineux par mètre carré Fl arrivant au sol avec un angle a par rapport à la verticale est en première approximation égal au flux lumineux Fl vert qu'on aurait eu sur la même surface avec un rayonnement vertical, multiplié par le facteur cos a :

$$Fl = Fl\ vert \quad X \quad cos\ a.$$

Naturellement, le passage sur un plus long trajet dans l'atmosphère induit également une perte d'énergie du flux lumineux descendant plus importante que si le flux était descendu à la verticale, compte tenu de différents phénomènes d'absorption et de dispersion mais la formue ci dessus n'en est pas affectée dans une proportion de plus de 10% en général, quand il fait beau.

Cependant, plus l'angle A grandit, plus l'ombre portée d'un obstacle est importante et c'est un inconvénient connu des tribunes des grands stades que de mettre une importante partie du gazon dans l'ombre pendant une grande partie de l'hiver.

Une troisième difficulté, liée à la précédente, compte tenu de la courbure de la terre est la durée du jour plus courte.

Une quatrième difficulté est que le temps en hiver est souvent maussade et pluvieux dans les pays à climat océanique d'Europe de l'Ouest mais cet inconvénient est compensé par une température douce quand le temps est pluvieux.

Dans l'ensemble cependant, le nombre d'heures de soleil en hiver serait suffisant pour donner assez d'éclairage à une pelouse pour croître en hiver si d'une part la pelouse n'était pas à l'ombre à cause de l'ombre portée des tribunes et si d'autre part le coefficient cos a d'atténuation de l'éclairage pouvait être supprimé.

Il est connu en effet que l'éclairage peut s'arrêter la nuit ou pendant quelques jours et la pousse du gazon s'arrête mais sans trouble pour le gazon qui recommence à pousser dès que les conditions de température et de lumière le permettent à nouveau.

Il est connu d'autre part qu'en été, malgré un angle a qui n'est pas nul, le rayonnement à midi au mois de juin est largement suffisant pour éclairer le gazon.

Les deux inconvénients d'un flux arrivant en angle et d'une ombre portée décrites ci dessus peuvent être supprimées en même temps si l'on dispose, selon l'invention un miroir ou une série de miroirs pour refléter vers la pelouse les rayons arrivant du sud sur le miroir.

Si, pour fixer les idées, on considère qu'en plein hiver une tribune de 20 mètres de haut crée une ombre portée de 40 mètres, on a un flux de lumière coupant la verticale du mur au sud sur 20 mètres qui éclairent la deuxième moitié du gazon située entre 40 mètres et 80 mètres du mur au Sud.

On peut alors considérer cinq surfaces définies par une hauteur verticale et une largeur unitaire dans le plan perpendiculaire.

La première surface, A, est celle du mur de 20 mètres au sud.

La seconde surface, B, est une hauteur de 20 mètres au dessus de A.

La troisième surface, C, est constituée par une hauteur de 20 mètres à partir du sol, prise au milieu du terrain à 40 mètres du mur A.

La surface D est constituée par une hauteur de 20 mètres au dessus de C.

La surface E est à l'extrémité nord à 80 mètres et fait une hauteur de 20 mètres.

Le flux solaire lumineux arrivant sur A est bloqué.

Le flux lumineux arrivant en B éclaire la deuxième moitié du terrain d'un flux f(B), sauf si la surface C est installée avec des miroirs qui éclairent la première moitié du terrain d'un flux f(C) avec la même énergie lumineuse (même flux réparti sur la même surface). On a f(B) = f(C).

L'ensemble du flux arrivant sur E est équivalent à celui qui arrive sur A et peut être renvoyé selon un flux f(E) sur la deuxième partie du terrain par des miroirs installés sur la surface E et on a f (E) = f (A) = f(B) = f(C).

Si l'on installe une surface en D, l'énergie lumineuse n'arrive plus sur E. Le flux peut être renvoyé de D sur la première moitié sud du stade mais comme le flux est intercepté plus haut, il est nécessaire dans ce cas d'avoir des miroirs orientables comme des stores par rapport à la surface verticale pour renvoyer les rayons plus bas en visant la pelouse (sinon on éclairerait la face nord du mur A.

Avec la possibilité de tendre une surface au milieu du stade entre le sud et le nord entre l'est et l'ouest et à une hauteur dépassant la hauteur des tribunes, ou plutôt de tendre une sorte de store dont chaque lamelle réfléchissante aurait l'orientation voulue pour éclairer la pelouse de façon uniforme, il est possible de répartir un flux équivalent aux flux précédents sur la moitié sud du terrain.

Par cet exemple de réalisation schématique, on montre qu'avec des possibilités de dérouler des surfaces comme des stores tendus entre des mats situés à l'est pour l'un et à l'ouest pour l'autre, il est possible à la fois d'éclairer tout le terrain et également d'avoir un flux lumineux doublé, c'est à dire équivalent ou même supérieur au flux solaire estival. On voit également sur cet exemple qu'en doublant le flux au nord on peut avoir un flux F = f (B) + f (E) = 2 f(B), cela suppose que la partie sud du terrain est dans l'ombre (absence de surfaces C et D).

Quand on a au contraire dans la partie sud du terrain un flux F = f(C) + f(D) = 2 f(B), cela signifie à l'inverse que la partie nord est dans l'ombre (pas de lumière arrivant sur E car prise par D et le flux de B est intercepté par C).

On ne crée pas plus de lumière avec des jeux de miroirs mais on répartit la lumière dans le temps et dans l'espace.

Or, il est connu que le gazon peut pousser pendant 2 jours d'été puis s'arrêter pendant 2 jours d'ombre et recommencer à pousser pendant 2 jours et ainsi de suite tandis qu'avec 4 jours de suite avec une énergie lumineuse divisée de moitié et insuffisante pour démarrer le processus, le gazon se met au repos et dort.

Eclairage électrique :

Un autre moyen qui peut être utilisé seul ou combiné au précédent est l'utilisation de la lumière électrique. Il est connu que des plantes cultivées en serre sous lumière électrique et sans autre source de lumière peuvent croître et il est connu qu'une telle lumière, surtout dans les infrarouges transporte une énergie qui réchauffe les surfaces exposées. En profitant des mats d'éclairage existants et capables par leur disposition d'éclairer toute la pelouse, il est possible de fournir l'appoint d'énergie lumineuse et la chaleur nécessaires pour maintenir le gazon en état malgré une période hivernale prolongée sans soleil.

Dans le cas de terrains de sport éclairés, il peut être avantageusement rajouté selon l'invention un éclairage de la pelouse en lumière infrarouge et dans les fréquences captées par les plantes pour la photosynthèse en utilisant les mats et projecteurs pour éclairer la pelouse en dehors des matchs avec une lumière artificielle comprenant des rayons infrarouges qui maintiennent une température supérieure à 10 °C au niveau de la pelouse et avec des rayons favorisant la photosynthèse.

Compte tenu du fait que tous les stades importants disposent d'éclairage de la pelouse, cela signifie que toute l'infrastructure électrique et mats et lampes existe pour éclairer la pelouse. Avec cette infrastructure, il est possible selon l'invention d'éclairer le gazon naturel pendant le jour (et éventuellement aussi la nuit) ce qui a pour double effet de réchauffer la surface du sol et de fournir les photons nécessaires à la photosynthèse. De façon préférable il faut une lumière disposant d'une part d'infrarouges pour réchauffer la surface et du spectre correspondant à la photosynthèse. De façon préférable, on peut utiliser les lampes spéciales permettant de concentrer toute la lumière dans le faisceau visé sans perte vers les gradins et le ciel, ce qui permet de ne pas gaspiller d'énergie d'une part et de ne pas créer de pollution lumineuse d'autre part et de ne pas éblouir les spectateurs si ces lampes sont les mêmes que celles de l'éclairage purement lumineux de la pelouse ou sont utilisées pendant les matchs.

Il est important de souligner que ces mesures d'éclairage, naturel renforcé par des miroirs ou artificiel électrique, n'ont aucun effet sur un gaon en situation de stress ou poussant dans un sol froid ; l'efficacité de ces mesures n'existe pas en dehors d'une synergie avec des mesures permettant de réchauffer le sol qui sont également prévues dans l'invention et seront exposées plus loin car elles s'intègrent dans d'autres moyens de l'invention.

A la fois pour éviter le gaspillage d'énergie et pour éviter la pollution lumineuse, il est préférable d'utiliser des projecteurs connus pour diriger toute la lumière dans un faisceau dirigé vers la pelouse, sans énergie lumineuse gaspillée vers les gradins ou vers le ciel.

**V-I-C Trois modes de réalisation spécifiques**

La suite de la description de l'invention sera faite en partie, notamment en ce qui concerne le gazon et la surface engazonnée, en référence aux dessins annexés. Dans ces dessins,

- la figure 1 représente une coupe verticale d'un gazon selon l'invention,

- la figure 2 représente une coupe verticale d'une variante du gazon de la figure 1,

- la figure 3 représente schématiquement en vue de dessus une surface engazonnée formée de modules d'un gazon selon l'invention,

- la figure 4 représente une coupe verticale d'un gazon selon l'invention présenté sous forme de modules,

- la figure 5 schématiquement en vue de dessus une surface engazonnée avec des moyens de réchauffement et de refroidissement formée de modules selon l'invention,

- la figure 6 montre schématiquement, en une coupe, l'agencement des particules d'un substrat d'un gazon selon l'invention,

- la figure 7 représente schématiquement une coupe verticale d'un stade sportif avec tribunes et toit partiel, avec un gazon selon l'invention,

- les figures 8 et 9 représentent schématiquement une modélisation du comportement d'un gazon selon l'invention sous l'effet d'un cisaillement, et

- les figures 10 à 14 représentent un module selon l'invention.

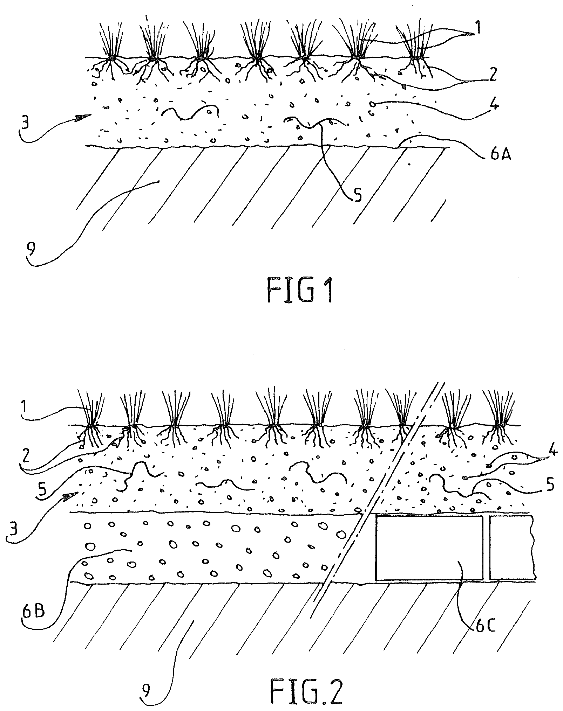

Conformément à ce qui est représenté sur la figure 1, un gazon naturel selon l'invention, qu'il soit destiné à être soumis à des charges sportives ou qu'il soit destiné à recouvrir une surface de promenade ou à servir comme surface décorative, comporte une couche visible 1 de feuilles et parties aériennes de graminées ou d'autres plantes gazonnantes naturelles et au moins une couche de substrat 3 dans laquelle sont enracinées ces plantes par leurs racines 2. La couche de substrat 3 comprend une première partie de particules 4 ayant une granulométrie en sable, comprise entre 50 micromètres et 3 millimètres. Le gazon de l'invention comprend également, bien que non représentés sur les figures 1 et 2, des moyens conformés pour pouvoir assurer le maintien à un niveau constant de la teneur en eau du gazon.

Le gazon de l'invention comprend par ailleurs un fond 6 sur lequel le substrat 3 repose. La couche 9 représente, de manière schématisée, une structure sur laquelle le gazon de l'invention est installé ; cette structure peut être un terrain naturel, voire sauvage, un terrain préparé pour des activités sportives, une surface de construction à décorer telle un parvis ou un toit terrasse, etc.

Dans le cas d'un gazon fabriqué sur son lieu d'utilisation à demeure, le substrat repose directement sur le terrain d'accueil préparé selon les pentes voulues et la couche 6 entre le substrat et le terrain d'accueil se réduit à sa plus simple expression de « fond de forme » 6A, c'est à dire de surface virtuelle de séparation entre le terrain d'accueil et le substrat.

Dans le cas de pavés de gazon selon l'invention, il peut arriver que le fond du pavé soit posé directement sur le fond de forme, mais il est habituel qu'une sous-couche intermédiaire 6B en gros granulat ou 6C en matière synthétique, par exemple des mattes résilientes 6C, soit intercalée, pouvant apporter amortissement, drainage, planéité.

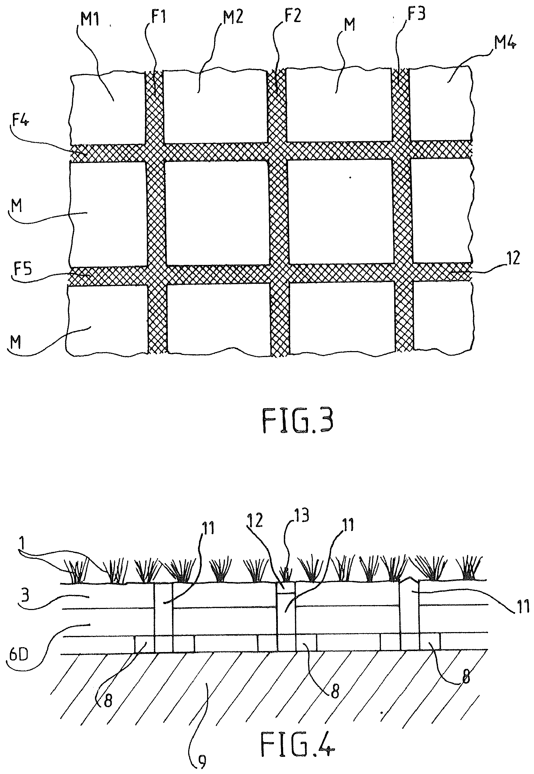

Dans le cas de modules indépendants, au contraire, ces modules comportent nécessairement un fond 6D (voir figure 4) sur lequel repose le substrat et ils comportent habituellement des pieds ou des traverses 8 entre le fond 6D du module et la structure d'accueil 9.

La figure 1 montre par ailleurs que, selon un mode de réalisation avantageux du gazon de l'invention, le substrat 3 comporte une première partie de particules 4 comprenant du sable siliceux ou un granulat de nature différente, résiliente ou poreuse. Le gazon comprend par ailleurs une seconde partie de particules 5 choisie parmi des grains et des fibres et ayant une granulométrie ou des dimensions supérieures à la granulométrie de la première partie de particules 4 afin de permettre au gazon et au sol de présenter en même temps une cohésion apparente supérieure et une souplesse supérieure à celle du même gazon non équipé de tels grains et/ou fibres.

Les figures 3 et 4 représentent un gazon de l'invention en modules M, référencé dans les dessins comme M1, M2, M3 etc. Chaque module M du gazon comprend une couche 1 de feuilles et une partie aérienne de graminées ou autres plantes gazonnantes naturelles et au moins une couche de substrat 3, éventuellement aussi, comme représenté sur la figure 4, une sous-couche 6C de résilience ou de transport. Chacun des modules M comporte des éléments 8 qui peuvent être de pieds ou des traverses de forme allongée destinés à surélever le gazon par rapport à un support 9 sur lequel le gazon de l'invention doit être posé. L'espace entre la sous-couche 6C et le fond 9 sur lequel le gazon repose, est déterminé en hauteur de façon à permettre, pour la pose et pour l'enlèvement des modules M1, M2, M3 etc, de passer sous chaque module avec des moyens mécaniques tels la fourche d'un chariot élévateur pour respectivement le poser ou l'enlever et, le cas échéant empiler les modules pour les transporter, notamment de les charger sur un camion et de les transporter vers un nouvel endroit d'utilisation ou une jardinerie pour régénérer le gazon en cas de besoin..

Les modules de gazon M sont posés avec les éléments allongés 11 en matière synthétique formant à la fois des joints et des canaux de drainage. Les éléments entre deux modules adjacents, d'une largeur comprise entre environ 3 et 8 cm, sont coiffés soit d'un substrat synthétique 12 avec des plantes artificielles 13 ou d'un mélange de plantes artificielles et de gazon naturel ou tout simplement par du gazon naturel en profitant d'une forme biseautée particulière des éléments 11, qui permet au gazon naturel un bon recouvrement de des éléments synthétiques drainants.

La figure 3 représente plus particulièrement l'agencement de moyens de drainage formés essentiellement par des drains solides F1, F2, F3 etc.

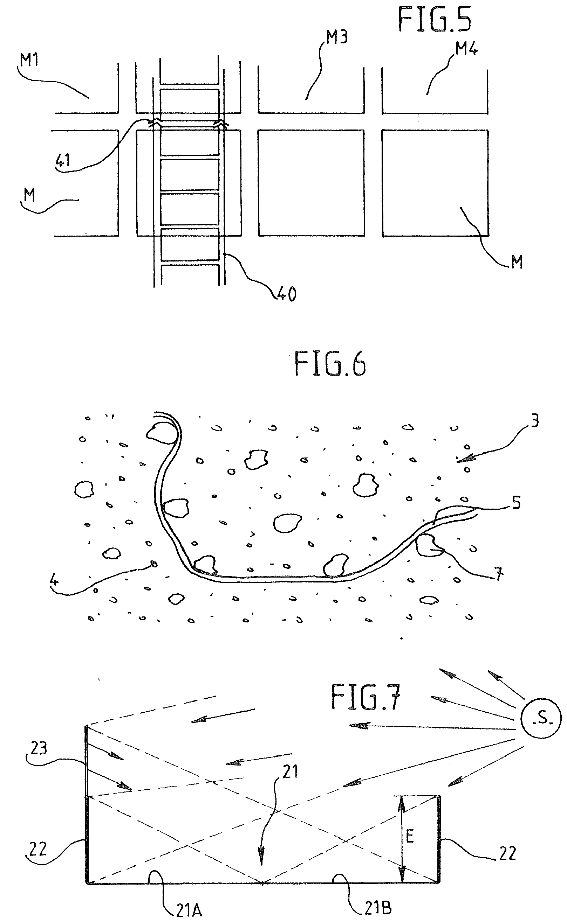

La figure 5 représente un gazon selon l'invention en modules M, avec des conduits 40 posés en réseau sous les modules M et dans lesquels on peut faire passer de l'eau chaude ou de l'eau froide pour respectivement chauffer ou refroidir le substrat du gazon et pour compenser ainsi au moins partiellement quelques influences climatiques sur le gazon. Selon une variante de réalisation évoquées sur la figure 5, les conduits 40 peuvent être intégrés, par exemple comme conduits souples, dans les modules et, en ce cas, être conformés pour être raccordés aux raccords 41.

Selon encore une autre variante de réalisation, les modules M peuvent être pourvus de mattes chauffantes électriques.

La représentation très schématisée d'un substrat 3 sur la figure 6 montre que le substrat 3 comprend avantageusement, outre une première partie de particules 4, des fibres ou bandelettes 5 de non tissés et, éventuellement, aussi des inclusions 7 en liège cru ou en liège cuit. Les fibres ou bandelettes 5 de non tissés ont une densité entre 100 et 500 g par $m^2$, une longueur de préférence entre 30 et 150 mm et une largeur de préférence inférieure à 15 mm. Les fibres ou bandelettes créent des lacets entre les grosses particules et représentent une quantité de textile de l'ordre de 1 à 10 kg par $m^2$ sur une hauteur de l'ordre de 20 cm de substrat.

La figure 7 représente schématiquement l'amélioration de l'ensoleillement d'un gazon de l'invention dans un stade sportif. Ce stade comporte une surface engazonnée 21 entourée de tribunes 22 ayant une hauteur E. Les tribunes 22 engendrent une ombre s'étendant, suivant l'orientation et l'élévation du soleil, environ sur la moitié 21B de la surface engazonnée 21 et laissant donc tomber le soleil S uniquement sur la partie 21A du gazon. Lorsque l'on installe sur une des tribunes des miroirs ou autres surfaces réfléchissantes 23, la lumière est réfléchie vers la zone d'ombre 21B de manière à l'ensoleiller et, dans une situation idéale, d'effacer l'ombre.

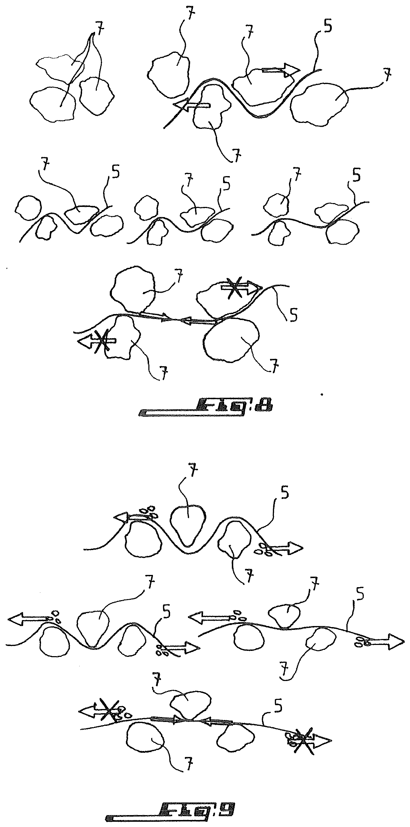

Les figures 8 et 9 représentent, d'une manière schématisée et selon une modélisation, deux exemples de comportement d'un gazon selon l'invention, sous l'effet d'un cisaillement résultant, par exemple, d'une activité sportive sur ce gazon. On peut observer successivement dans les groupes de particules et de fibres de chacune des deux figures comment les fibres 5 se déforment et se reforment et comment, simultanément, les particules 7 se déplacent, comme cela est indiqué par les flèches. On voit plus particulièrement dans la dernière situation montrée du groupe de chacun des deux exemples que les fibres empêchent les particules de « fuir », ce qui est symbolisé par des flèches barrées.

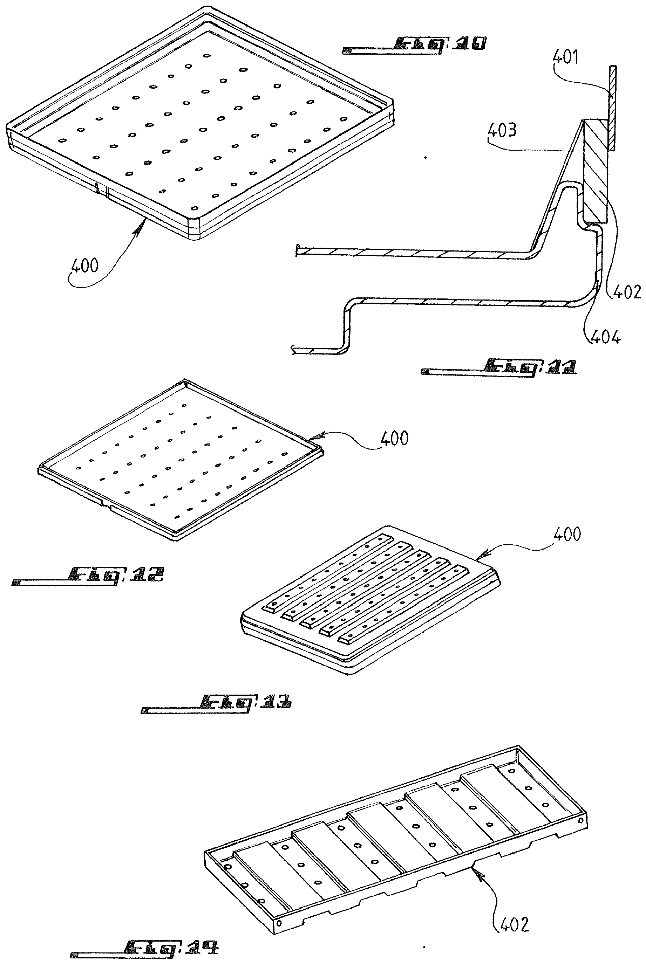

Les figures 10 à 14 représentent un mode de réalisation d'un module selon l'invention. Chaque module 400 comporte un bac en plastique rigide 404 avec une encoche sur laquelle s'appuie une ceinture 402 en un matériau souple et drainant. Le bord supérieur 401 du module 400 est formé en un matériau souple à fonction esthétique. A l'intérieur du module 400, par exemple à partir de la face supérieure de la ceinture 402, s'étend une membrane géotextile 403. Le fond du module n'est pas entièrement plat, mais présente des parties en sailli vers le bas du module, vu en sa position d'utilisation, comme cela est visible sur la figure 13.

La figure 10 représente le module en une vue en perspective, la figure 11 représente une coupe transversale du module, la figure 12 représente une vue de dessus du module, la figure 13 représente une vue de dessous du module et la figure 14 représente une vue en perspective sur une partie de la ceinture.

## V-I-C-1 Gazon fabriqué sur son lieu d'installation à demeure

### V-I-C-1-1 Fabrication et intégration des gazons à demeure

La forme de base est celle d'un gazon créé pour être installé à demeure. Les méthodes de fabrication de novo ou de rénovation ont été décrites plus haut.

### V-I-C-1-2 Moyens de contrôle de la teneur en eau des gazons à demeure

Dans le cas d'une rénovation, la méthode selon l'état de l'art des fentes de suintement par extraction et remplacement par du gravier est la méthode la plus adaptée. Toutefois, pour des questions de coût et de légèreté lors de l'installation, il est également possible, dans la fente de suintement de remplacer le gravier par un tuyau, une grille ou une mousse ou tout objet drainant de forme grossièrement parallélépipédique occupant le volume traditionnellement rempli de gravier et offrant la même fonctionnalité.

### V-I-C-1-3 Moyens de contrôle du climat des gazons à demeure

Il est possible d'installer les moyens de chauffage du substrat dans une couche sous le substrat et d'épandre le substrat par dessus avec les précautions nécessaires pour ne pas écraser le système.

### V-I-C-1-4 Sous couches résilientes à demeure

Il est possible dans le cas d'une fabrication de novo d'épandre le substrat, non pas directement sur le fond de forme de la surface d'accueil mais sur une sous couche apportant amortissement et drainage et en même temps planéité et résistance.

### V-I-C-2 Gazon mobile sous forme de pavés

Comme il a été dit plus haut, les grands stades ont à la fois des problèmes de climat particulier (notamment ombre portée très importante) qui n'est pas propice à la croissance du gazon mais également et surtout ils ont des contraintes de rentabilité qui incitent les gestionnaires qui en ont la charge à faire le choix de remplacer souvent et rapidement la pelouse, quelque soit la pérennité et la résistance théorique de cette dernière. Pour pouvoir répondre à une partie du marché, celle des stades les plus exigeants et en vue, il faut donc pouvoir cultiver un gazon en gazonnière et l'installer rapidement, ce que l'état de l'art sait faire mais avec des gazons qui sont particulièrement inadaptés à la pratique sportive, comme l'expérience le prouve trop souvent, encourageant ainsi le développement des gazons synthétiques.

Avec des gazons mobiles il est alors possible selon l'invention de répondre aux besoins non visés initialement comme les gazons sportifs ou décoratifs événementiels ou d'autres marchés qui seront présentés plus loin.

Le problème spécifique rencontré dans l'état de l'art actuel par les gazon mobiles, qu'il s'agisse de rouleaux d'épaisseur de 3,5 cm développés spécialement pour les besoins du parc des princes ou qu'il s'agisse de pavés encore plus épais est que ces gazons sont installés sans système de drainage renforcé alors même qu'ils utilisent des terres qui en auraient particulièrement besoin. En effet, une difficulté majeure de la pose de pavés est d'avoir une pelouse plate alors que les pavés ont des épaisseurs variant avec le tassement et l'effritement pendant le transport et la solution retenue, pour pallier ce problème est d'utiliser des pavés en terre lourde pour avoir des pavés bien moulés qui arrivent non altérés. Le rouleau épais est lui même maintenu à l'aide d'un filet netlon® pour éviter l'effritement de la motte.

L'intérêt du gazon selon l'invention est triple :

- non seulement le substrat selon l'invention est intrinsèquement adapté à l'usage sportif visé
- mais il est à la fois drainant et cohérent, ce qui signifie qu'il est possible de transporter des pavés drainants sans qu'ils se délitent et cela est encore plus vrai quand la densité du mélange est plus faible, avec l'utilisation de zéolithe ou de lave poreuse par exemple et de liège pour la résilience, ce qui en outre permet d'empiler et de diminuer le coût des transports limités par le poids.

**V-I-C-2-1 Fabrication en gazonnière et intégration des gazons en pavés**

**V-1-C-2-1-1 Concept et procédé de création et de culture en gazonnière**

Selon un deuxième mode particulier, l'invention concerne un gazon dont les racines poussent à travers un substrat spécifique selon l'invention, reposant lui même sur une surface servant de frontière avec le sous sol, de telle façon que des rectangles de ce gazon puissent être soulevés avec le substrat de culture du gazon et désolidarisés de la surface, pour constituer des pavés de substrat engazonné prêts à être transportés et installés ailleurs. On obtient de pouvoir désolidariser le fond du pavé de la surface sous-jacente quand on soulève le gazon en installant le substrat sur une nappe lisse laissant passer l'eau mais ne laissant pas les fines passer ni les racines s'accrocher : des nappes en polypropylènes, par exemple du type de celles utilisées dans les magsacs permettent un tel effet. D'autre part pour un pré-découpage des pavés, des cloisons doivent être installées au départ pour partitionner la surface cultivée en rectangles de la taille prévue pour les pavés et ces cloisons doivent être dans un matériau qui ne laisse pas les racines s'accrocher ou traverser, de façon qu'en exerçant une traction verticale au niveau d'un pavé, on puisse soulever le pavé qui se détache de son environnement du fait que le pavé a une forte cohésion interne et n'a pas de forces de cohésion avec la surface horizontale sur laquelle il repose ou avec les quatre surfaces verticales qui délimitent son périmètre.

Le pavé doit être assez épais pour disposer d'une autonomie agronomique suffisante, notamment en termes de réserve en eau et pour constituer un poids suffisant pour résister au jeu en combinant poids et cohésion interne du pavé.

D'un autre coté, l'épaisseur du pavé devra être réduite autant qu'il est possible, en respectant les contraintes données ci dessus, dans le triple but d'économiser le substrat, de minimiser le poids des pavés pour le transport et également pour obliger le chevelu à compenser un plus faible volume par une plus grande densité racinaire de chevelu, ce qui constitue un moyen d'augmenter la cohésion interne par le chevelu.

**V-I-C-2-1-2 Moyens de transport et d'installation ailleurs**

La triple particularité du substrat selon l'invention est d'être plus léger si le substrat comporte une part importante de liège, de supporter le poinçonnement sans s'écraser et d'avoir une importante cohésion apparente. Ces caractéristiques permettent de constituer une couche de substrat dans laquelle pousse du gazon et qui puisse être beaucoup plus facilement déplaçable qu'un gazon dans une terre normale.

En effet, il est connu que les gazons en plaques épaisses et plus particulièrement en pavés ont une cohésion apparente très faible avec des substrats sableux drainant. Pour cette raison, les pavés sont constitués de substrats trop lourds et inadaptés aux terrains de sport afin d'avoir une cohésion apparente suffisante pour ne pas trop déformer la forme des pavés avec les trépidations des transports. Malgré cela, les pavés juxtaposés constituent une surface inégale, lourde et un milieu non drainant. Pourtant, dans l'état actuel de la technique, ils sont utilisés, faute de mieux, pour la réfection la plus rapide possible des pelouses sportives quand un délai insuffisant ne laisse pas d'autre possibilité.

Au lieu de cela, le substrat du gazon de sport selon l'invention est à la fois drainant, léger et doté d'une forte cohésion apparente, ces deux dernières caractéristiques - habituellement antinomiques dans les substrats disponibles avant l'invention - étant les caractéristiques importantes d'un gazon transportable.

Profitant de ces caractéristiques, il est possible d'obtenir un gazon qui, non seulement présente des caractéristiques mécaniques supérieures pendant le sport et plus résistant en toute saison, mais permette en outre de rendre le gazon transportable sans en altérer les qualités.

Un avantage supplémentaire du procédé est de créer une pelouse qui puisse à titre d'exemple être enlevée pendant 8 jours dans la perspective d'être remise en place, avec maintien de ses qualités, à l'occasion par exemple d'un spectacle de planche à voile ou de motocross sur l'emplacement de la pelouse pour utiliser et rentabiliser l'arène du stade pendant quelque jours tout en respectant les contraintes de planning de la reprise du championnat de rugby, une semaine après. Cet avantage suppose toutefois que le stade d'accueil dispose d'une surface proche pour installer les pavés et cela suppose également de disposer des moyens et du procédé de transfert rapide du gazon de placage et du drainage qui va avec.

### V-I-C-2-1-3 Entretien à destination

Dans une version avantageuse préférée, il est prévu d'installer les pavés de gazon avec un réseau de drainage en installant des drains amovibles en plastique qui sont positionnés entre les éléments de pelouse. L'entretien est un entretien classique d'un gazon de sport. , La seule contrainte est de veiller à ne pas endommager les drains entre les pavés.

En revanche, les avantages spécifiques concernent la possibilité de remplacer un pavé abîmé et c'est donc une pratique de la « rustine » ou du remplacement plus fréquent de zones plus fragiles.

Un autre avantage est de pouvoir remplacer la pelouse ou plutôt faire tourner la pelouse et laisser reposer une pelouse fatiguée pendant qu'une pelouse d substitution prend le relais avant d'aller elle même se refaire une santé, quitte à aller sous un autre climat pour « changer d'air »

Un autre avantage est de pouvoir pré-cultiver un gazon «à la campagne» ou en climat plus chaud sur une surface représentant plusieurs fois la surface du terrain de sport afin de faire reposer une surface très utilisée en la remplaçant par une autre prête à l'emploi et transportée en camion ou en train ou en bateau ou en avion pour être installée sur le stade en remplacement de l'ancienne surface qui sera remise en forme pour être à nouveau exploitée.

Un troisième avantage est de permettre un remplacement partiel des zones les plus endommagées.

### V-I-C-2-2 Moyens de contrôle de la teneur en eau des gazons en pavés

Pour les pavés de gazon, l'invention propose deux modes innovants possibles :
le premier mode est réalisé à l'aide de drains de suintement solides parallèles posés sur la tranche et disposés parallèlement les uns aux autres avec une équidistance correspondant à l'équidistance entre fentes de suintement d'un drainage renforcé classique, c'est à dire entre 50 cm et 1m 50. Chaque drain de suintement solide se présente approximativement sous la forme de barre ou de tube de section rectangulaire c'est à dire qu'il a une forme parallélépipédique allongée. Chaque drain est intérieurement poreux , qu'il soit rempli d'une mousse poreuse ou qu'il soit vide et renforcé par un maillage de grilles de façon que l'eau puisse circuler aisément et chaque drain est enveloppé par une surface extérieure très perméable mais capable de filtrer de façon à laisser pénétrer l'eau en bloquant terre et racines et enfin l'ensemble est assez solide et indéformable pour se tenir sur la tranche et supporter des pressions dans toutes les directions sans se déformer ou s'écraser. La longueur de ces barres solides drainantes est l'axe du drain de suintement et le drain est posé sur sa tranche d'une épaisseur de 2 à 4 cm de préférence et la profondeur du drain est la largeur du parallélépipède, entre 5 cm et 20 cm, selon l'épaisseur du substrat et des couches sous-jacentes. Les drains de forme parallélépipédique ont généralement une structure de tube ou de grille ou de pain de mousse et sont perméables à l'eau qui peut pénétrer à l'intérieur du volume et y circuler avec un débit supérieur ou égal à une fente de suintement en gravier mais les grains du substrat et les racines ne pénètrent pas dans le volume.

Dans une version préférable, les drains n'ont pas une section tout à fait rectangulaire mais un des petits côtés se présente comme un tringle arrondi, de sorte que le haut du drain n'arrive pas jusqu'en haut comme un rail de la largeur du parallélépipède mais ne présente qu'une arrête centrale arrondie et plonge sous le gazon des deux côtés, de façon que le gazon le recouvre sans difficulté.

Dans une version préférable, les pavés n'ont pas non plus une section rectangulaire mais le profil vertical a un biais en haut du pavé qui épouse le biseau du drain, ce qui donne au pavé un profil vertical évasé vers l'extérieur dans la partie haute, ce qui peut typiquement représenter 3 centimètres de haut et de décalage vers l'extérieur.

Pour obtenir ce profil, il suffit selon l'invention d'avoir en gazonnière des séparateurs des pavés qui ne soient pas exacte ment des nappes verticales mais qui aient la forme des drains qui va être épousée en gazonnière et sera donc adaptée une fois rendu sur site.

Un mode de réalisation consiste à utiliser les mêmes drains en gazonnière, ce qui permet en même temps de drainer, même si les besoins de drainage ne sont pas les mêmes.

L'évacuation de l'eau qui circule vers le bas par gravité à l'intérieur des drains solides parallélépipédique est faite par tout moyen connu de l'homme de l'art. Une solution par exemple est de poser un faisceau de drains parallèles du même type que le faisceau de drains de suintement mais dans une direction perpendiculaire et non plus posés sur la tranche mais sur la largeur du parallélépipède et remontant donc moins haut de ce fait. Pour organiser l'intersection des faisceaux, Il peut être avantageux de choisir de joindre bout à bout les drains de suintement d'une longueur par exemple de 2 mètres et tous les quatre drains mis bout à bout c'est à dire au bout de 8 mètres linéaires de drain de suintement on peut laisser un espace de la largeur d'un drain pour permettre l'intersection par un faisceau de drains évacuateurs et continuer la ligne de drains de suintement pour 8 mètres avant le drain d'évacuation suivant et ainsi de suite. Les drains de suintement recoupent ainsi avec une surface de recoupement importante (l'épaisseur du drain de suintement que multiplie la hauteur du drain d'évacuation, c'est à dire dans l'hypothèse de mêmes drains posés selon deux faces différentes, la section du dit drain.

Un deuxième mode pour évacuer l'eau descendant des drains de suintement est de poser les drains de suintement sur une couche drainante ou sur des grilles drainantes, par exemple des grilles connues sous le nom commerciale d'Enkadrain ou produits équivalents, couramment utilisées pour le drainage des sols synthétiques. De plus ces couches drainantes peuvent avoir en même temps une fonction de couche de souplesse.

Dans le cas de drains de section rectangulaire de 4 cm d'épaisseur par 8 cm de large avec par exemple un écart entre drains parallèles consécutifs 60 cm et une équidistance de drains d'évacuation de 4 m, cela donne l'équivalent de rails de 4 cm d'épaisseurs délimitant des rectangles juxtaposés et séparés par lesdits rails de 60 cm par 4 mètres. Ces structures parallélépipèdes allongés se tenant sur leur tranche d'une épaisseur de quelques centimètres (2 cm à 7 cm) constituent des réseaux drainants sous forme de structures drainantes pré installées entre lesquels son installé des pavés de gazon.

Une autre solution est de disposer de plateaux de gazon en modules comprenant un drainage renforcé incorporé et pouvant être installés directement sur une dalle quelconque notamment sur un parking ou une chaussée selon un mode de réalisation particulièrement adapté à une utilisation événementielle ou une installation sur un lieux d'accès compliqué.

Dans le cas d'une création de novo, toutes ces solutions sont envisageables mais les deux dernières sont bien préférables, combinées aux modes de gazon naturels correspondant pour un stade par exemple dont la pelouse doit être enlevée et remise ou remplacée de façon fréquente pour un renouvellement permanent de pelouse en condition optimale ou pour d'autres utilisation de la surface entre les matchs prévus du calendrier sportif.

Les figures 10 à 14 représentent un exemple de réalisation d'un module selon l'invention. Le module comporte

### V-I-C-2-3 Moyens de contrôle du climat des gazons en pavés

Si des moyens électriques ou d'eau chaude sont installés dans la sous couche à demeure sur laquelle est posé le gazon en pavé, le pavé par lui même ne dispose pas de moyens spécifiques mais il y a parfaite compatibilité entre gazon de pavage et contrôle du climat selon le concept général développé plus haut.

Il en est évidemment de même des moyens de chauffage de la surface ou d'éclairage du gazon.

### V-I-C-2-4 Sous couches amortissantes des gazons en pavés

Dans une réalisation particulière, les pavés de gazon ne sont pas posés directement sur le fond de forme mais posés sur une sous couche drainante et résiliente ou élastique constituée d'une juxtaposition de sous-couches identiques ayant ces deux fonctions, comme il en existe dans l'état de la technique.

### V-I-C-3 Gazon en modules mobiles et autonomes

Pour répondre à d'autres exigences, la présente invention comporte plusieurs modes de terrains de sport et en particulier des terrains en modules transportables de gazon naturel « prêts à jouer ».

Ces modules transportables et facilement assemblables, qui peuvent être de façon préférable équipés de drainage et d'éventuels équipement de climatisation, peuvent équiper des surfaces à vocation sportive ou décorative ou écologique soit pour des activités événementielles soit pour une installation rapide en des lieux difficilement accessibles ou soumis à des limites de poids comme les toitures terrasses et l'invention s'applique à des surfaces équipées de gazons mobiles selon l'invention, qu'il s'agisse de gazons de graminées ou de plantes tapissantes ou basses piétinables ou à visée décorative.

### V-I-C-3-1 Fabrication et intégration des modules mobiles et autonomes

### V-I-C-3-1-1 Description des éléments constitutifs

Ces modules comportent un fond sur lequel repose le substrat dans lequel pousse la végétation.

Une version avantageuse de ces modules comporte des pieds ou des traverses disposés entre le fond et le sol et qui créent un espace entre le fond et le sol. La disposition et l'épaisseur des pieds ou des traverses permettent le passage d'une fourche d'élévateur dans l'espace entre le sol et le fond pour soulever le module et le transporter, le fond étant capable de supporter l'ensemble du poids du module sans déformation autre qu'élastique.

Dans une version avantageuse, le fond du module comporte une grille d'un certain maillage ou, dans le cas d'une maille unique un cadre périphérique et une géomembrane peut être tendue sur la grille pour retenir le substrat mais en laissant passer l'eau et l'air et sans laisser de prise aux racines. Le fond est conformé pour supporter le substrat et le gazon planté dans le substrat reposant directement sur ledit fond ou sur d'éventuelles couches intermédiaires reposant sur ledit fond. Un fond en membrane de polypropylène tendu dans un cadre ou sur une grille rigide d'un maillage étudié permet d'obtenir la rigidité souhaitée.

### V-I-C-3-1-2 Moyens de transport et d'installation ailleurs

La cohésion du substrat, associée au mode de réalisation de ces modules permet de garantir le maintien des qualités du sol malgré les contraintes du transport. Du fait de la cohésion du substrat, de sa légèreté si le liège et les zéolithes sont largement utilisés, le transport est facilité avec une possibilité d'empiler les modules les uns sur les autres sans abîmer le substrat et par le fait que les trépidations du voyage n'abîment pas les mottes.

Pour des voyages ou des entreposages en piles pendant plusieurs jours, il est préférable d'équiper les modules d'un dispositif permettant à l'air de circuler sans que le module placé au-dessus n'écrase l'herbe ou ne s'appuie directement sur celui situé en dessous.

Une solution existe en utilisant des pieds assez nombreux se terminant en pointes qui ne s'enfoncent pas du fait de la résistance du gazon et ne font qu'un appui sur de petites surfaces ne laissant pas de trace ensuite. Ce résultat peut être obtenu avec des traverses si celles-ci reposent sur des formes en pointes.

Une autre solution consiste à équiper les modules de pièces mécaniques solidaires ou non qui ne sont pas les pieds ou traverses séparant le fond du sol en temps normal mais ne servent, dans une certaine position, qu'à soulever davantage les modules pendant le transport et pouvant éventuellement servir, dans une autre position à solidariser les modules. L'effet recherché est obtenu si ces pièces présentent en position de transport une partie verticale qui dépasse le module vers le bas assez longue pour laisser passer l'air et éventuellement un peu de lumière et assez minces pour ne pas laisser de trace visible d'écrasement, tout en étant assez épaisses, solides et nombreuses pour maintenir en équilibre un module sur lequel repose une pile de plusieurs modules s'appuyant sur le module du dessous de la même façon. Une série de pièces réparties autour du cadre, comprenant une tige cylindrique de 1 à 4 centimètres de diamètre et un système mécanique coopérant avec la structure du module pour le soulever de 20 cm constituent un exemple de réalisation parmi d'autres.

### V-I-C-3-1-3 Installation à destination

Ces modules peuvent être équipés de dispositifs mécaniques permettant à 2 modules contigus d'être facilement et rapidement assemblés ou au contraire désolidarisés pour les déplacer ailleurs par une coopération desdits dispositifs mécaniques et de rendre ainsi deux modules contigus mécaniquement solidaires et de niveau, si le fond de forme sur lequel sont installés les module est lui même plan.

Un autre exemple de réalisation est obtenu en utilisant des pièces de plastique selon par exemple un modèle connu comme raccord rapide « mâle-mâle » dans le domaine de l'arrosage automatique et qui se clipsent ou se déclipsent très aisément. Si les pieds des modules sont équipés de la partie « femelle » tel dispositif en partie basse, il est alors possible d'enclencher un raccord « mâle-mâle » à l'extrémité des pieds d'un module qui ne s'appuie plus sur la base normale de ses pieds mais sur une tige mince au bout de ses pieds et le module peut ainsi s'appuyer sur le gazon du module du dessous sans l'endommager et laisser de trace. Les mêmes raccords sont rapidement enlevés des pieds au moment d'installer le module en position et peuvent en revanche être utilisés pour raccorder des modules entre eux si deux logements femelles de deux modules contigus se font face.

Il est possible de combiner la technique des modules et celle du pavage. On peut enlever le substrat avec son gazon posé sur un plateau pour le remplacer par un pavé de gazon sans avoir à déplacer le plateau ou bien au contraire, on peut également enlever le plateau avec son substrat et son gazon pour remplacer l'ensemble, permettant dans ce dernier cas le remplacement complet de la pelouse et dans le premier cas une réparation ponctuelle ne nécessitant pas de déplacer les plateaux voisins du plateau dont le gazon est à remplacer.

### V-I-C-3-2 Contrôle de la teneur en eau des modules mobiles et autonomes

Compte tenu de la porosité du substrat et de l'espace d'air sous le module avec une membrane perméable, par exemple en polypropylène, le module est par nature drainant.

De plus, il est possible de laisser un courant d'air sous la membrane du fond, ce qui va avoir pour effet d'assécher le substrat, sauf si l'air est saturé en eau.

Toutefois, dans un mode plus avantageux, les modules sont équipés d'un système de drainage intégré supplémentaire. Les modules, de façon préférable sont de forme rectangulaire avec une largeur l et une longueur L et de façon préférable, la largeur (ou la longueur) correspond à l'équidistance du drainage renforcé. 2 modes de réalisation permettent de réaliser de tels modules qui peuvent avoir un drain intégré au milieu du module ou au contraire sur une des deux longueurs du module ou sur les deux longueurs du module , ce qui signifie que le drain sert de bord au module. Dans une solution avantageuse selon l'invention, ce sont les 4 bords verticaux du module qui sont à la fois des éléments drainants et qui servent de bord et qui sont équipés de moyens de solidarisation des modules contigus.

Dans cette version, les drains périphériques sont des barres rigides drainantes solidaires du fond avec lequel ils constituent une forme de caisse dans laquelle est installé le gazon, c'est à dire le substrat dans lequel pousse l'herbe reposant sur le fond ou sur les éventuelles couches inférieures, elles mêmes posées sur le fond.

Le profil de ces barres drainantes peut être rectangulaire mais de façon préférable la partie supérieure est biaisée vers l'intérieur avec un léger arrondi au sommet pour que le drain constitué de 2 drains contigus se présente comme un rectangle d'une largeur double de la largeur de chacune des barres drainantes constituant les 2 bords côte à côte, ce rectangle étant surmonté d'un triangle pointe arrondie en haut constitué des deux parties biaisées. Ainsi, le gazon peut recouvrir le drain et on veillera à ce que le recouvrement soit réalisé avec un substrat particulièrement drainant sur les bords drainants biseautés.

En plus du drainage, un mode de réalisation avantageux comprend une installation d'arrosage intégré. Compte tenu de l'espace entre le sol et le fond des modules, le plus économique est de poser et « faire courir » sur le sol l'ensemble du réseau d'alimentation d'un système d'arrosage intégré classique, sans qu'il soit besoin de tranchées pour faire passer les tuyaux qui passent sous les modules.

Dans une première réalisation, le réseau comprend une nourrice d'alimentation en diamètre 90mm, l'espace entre le fond du module étant dans ce mode de réalisation supérieur à 10 cm, et de cette nourrice partent comme un peigne les tuyaux d'alimentation en diamètre 75 ou 50 ou 32 avec des colliers de prise en charge positionnés à un mètre près des lieux où ont été prévus les arroseurs selon un plan d'arrosage cohérent de la surface respectant l'état de l'art et des tuyaux de raccordement souples de 2 mètres pour se raccorder facilement aux arroseurs qui s'installent dans un coin du module dans un espace réservé à cet effet.

Compte tenu des difficultés de manipulation des tuyaux en polyéthylène d'un gros diamètre, une autre solution, plus consommatrice de tuyau mais plus aisée à mettre en oeuvre rapidement consiste à disposer d'une alimentation générale dans un coin du terrain et d'une nourrice de distribution de 1 ou 2 mètres de long immédiatement raccordée à l'alimentation générale et des tuyaux de diamètre 32 qui partent tous directement de la nourrice de départ pour alimenter chacun 2 ou 3 arroseurs, selon la pression disponible.

## V-I-C-3-3 Moyens de contrôle du climat modules mobiles et autonomes

Dans un mode de réalisation particulièrement avantageux, ils comportent également un système d'arrosage automatique et de chauffage du sol.

Dans un mode de réalisation avantageux, les modules sont équipés d'un système autonome de chauffage par le sol qui nécessite seulement que la surface qui accueille ces modules dispose de la source d'eau et ou d'énergie nécessaire.

Les plateaux peuvent être équipés de circuits électriques avec de préférence deux câbles « aller et retour » raccordables d'un plateau à l'autre, ces deux câbles étant raccordés l'un à l'autre par des résistances électriques disposées à une même distance les unes des autres, ce qui permet de réchauffer le substrat.

Un autre moyen de réchauffer le substrat est d'utiliser l'espace entre le plateau et le fond de forme pour faire circuler de l'air à une température qui peut être réglée pour réchauffer ou pour refroidir le sol et conserver son humidité si l'air a été préalablement saturé en eau ou pour l'assécher rapidement en cas de besoin.

Ces modules sont équipés, dans la couche au dessus du fond du bac d'un circuit qui peut être un circuit électrique ou un circuit de circulation d'eau selon les techniques déjà connues dans le domaine de la construction pour le chauffage rayonnant basse température par le sol. Le principe est d'avoir une certaine isolation en bas qui peut être obtenue par exemple en milieu fragmenté par une couche de liège en granulés sur laquelle est installé,au dessus d'une éventuelle géomembrane de séparation, un circuit chauffant qui peut être électrique ou un circuit d'eau tiède à une température entre 20 et 40°C, au dessus duquel repose éventuellement une géomembrane sous une éventuelle couche de protection ainsi qu'une éventuelle autre géomembrane de protection au dessus de cette couche et au dessus duquel repose finalement le substrat dans lequel pousse l'herbe constitutive du gazon.

De façon préférable, le circuit, qu'il s'agisse d'un circuit d'eau ou d'un circuit électrique, est constitué selon la même architecture. Il s'agit d'une architecture ressemblant fonctionnellement à une échelle dont un montant représente le circuit aller et l'autre montant le circuit retour avec des barreaux parallèles rejoignant les montants et avec toutes les variantes géométriques possibles de réalisation pour faire « serpenter » les « barreaux ». Les montants sont dotés aux deux extrémités d'un système à enclenchement rapide permettant la connexion aisée avec la partie correspondante du module voisin, de sorte qu'en juxtaposant deux modules orientés dans le bon sens, on mette bout à bout et on relie les 2 échelles pour ne faire qu'une seule échelle d'une plus grande longueur. Ceci suppose que les montants de l'échelle sont équipés à chaque extrémité de raccords qui coupent le circuit en l'absence de raccord homologue et qui prolongent le circuit dans le montant suivant quand les raccords sont enclenchés ; de tels raccords existent et sont connus de l'homme de la technique aussi bien en électricité qu'en raccords de tuyaux d'eau. La grosseur de montants et des barreaux est déterminée par les débits d'eau ou les débits électriques (intensité du courant) prévus par le calcul des débits nécessaires, une fois l'ensemble des modules installés dans une configuration selon une dimension maximale dans la direction des échelles prévue dès le départ une fois les modules installés. Si par exemple, pour fixer les idées, on veut couvrir un stade de 80 mètres par 100 mètres par des modules de 2 mètres par 50 cm, on peut installer 50 lignes de 160 modules mis bout à bout dans le sens de la largeur en colonnes, en supposant que les montants des échelles sont installés dans le sens de la largeur des modules. Dans cet exemple, chaque colonne comprend 160 modules raccordés qui créent une échelle dont les montants parallèles font 80 mètres de long et les barreaux 2 mètres de large, si on suppose que les montants sont positionnés au niveau des bords du module. Cela donne l'indication de la surface à chauffer et dont du débit dans les montants avec l'équation disant que la somme des débits des barreaux est égale au débit dans les montants (débit aller d'un coté égal au débit retour de l'autre) et sachant que le débit de chaque barreau élémentaire est le débit nécessaire pour chauffer une surface de 2 mètres que multiplie l'équidistance entre 2 barreaux. Si on multiplie le nombre de barreau, on divise d'autant le débit du dit barreau et au final, le débit des montants est le débit nécessaire pour chauffer la surface d'une colonne de 180 modules. Ainsi, le débit maximum à prévoir dans les montants est celui correspondant au nombre maximal de modules qu'il est prévu d'assembler en une seule colonne.

Avec une différence de potentiel donnée entre deux montants s'il s'agit d'électricité et une surpression dans un des barreaux s'il s'agit de circuit d'eau, le courant ou le débit s'établissent à peu près identiques dans tous les barreaux présentant une résistance identique, quelque soit le nombre de modules, si l'on a une résistance dans les montants presque négligeable par rapport à celle des barreaux.

Le fonctionnement de l'ensemble des modules mis en place permet un chauffage à peu près homogène en supposant que la circulation dans les montants ne fait pas baisser la température du liquide caloporteur, et ceci est d'autant plus vrai que les montants sont isolés et que le débit est important, ce qui permet un écart de température faible entre l'eau de l'aller et l'eau de retour.

Chaque colonne doit être alimentée par un équipement d'alimentation générale avec aller et retour d'eau (ou d'électricité) qui alimentent chaque colonne de modules et l'alimentation suppose une arrivée générale d'eau, une source d'énergie et un échangeur thermique qui sont installés selon l'état de la technique

Une autre possibilité de chauffage ou de refroidissement du substrat peut être mise en oeuvre du fait du vide d'air entre le fond des modules et le sol. Plusieurs ventilateurs avec source d'énergie et échangeur thermique pour souffler de l'air chaud et une disposition des ventilateurs pour créer des courants d'air dans une même direction permettent de créer un mouvement d'air chaud sous les modules et les calories permettent de chauffer ces modules et éventuellement d'assécher le sol si l'air n'est pas saturé en eau. Une saturation en eau préalable permet au contraire de chauffer le sol et de refroidir légèrement l'air qui va créer une légère condensation et humidifier le fond du module.

Ce système de chauffage des modules par courant d'air présente plusieurs avantages. Tout d'abord il peut être installé sur un site dépourvu d'alimentation en eau et même d'électricité car des groupes électrogènes peuvent alimenter les ventilateurs et des brûleurs à gaz chauffer l'air. Un autre avantage est qu'il est possible de faire pousser du gazon sur un site pollué d'où remontent des émanations gazeuses, du fait que ces émanations peuvent être stoppées dans leur ascension et évacuées par le courant d'air sans polluer le substrat. De même, il est possible de rafraîchir le fond des modules si le sol est une dalle très chaude, sur un parking surélevé par exemple.

En cas de pollution du sol avec dégagement de gaz, les dispositions de l'invention permettent d'avoir un gazon qui pousse au dessus d'un site pollué producteur de gaz du fait qu'on peut créer un courant d'air sous le substrat qui permet d'évacuer cette pollution sans que les gaz aient à traverser la rhizosphère.

**V-I-C-3-4 Sous couches résilientes à demeure des modules mobiles et autonomes**

Les pieds des modules peuvent être équipés de cylindre blocs ou autres pièces mécaniques permettant un amortissement.

Dans un autre mode de réalisation par traverses disposées parallèlement la même souplesse que celle d'une sous-couche élastique ou résiliente est obtenue si les traverses sont constituées d'une matière souple comme une mousse qui peuvent donner au module une fonction d'amortissement facilement réglable. Un système mécanique avec des tiges flexibles ou des ressorts coopérant avec le fond du module et le fond de forme est également une solution concernée par l'invention pour apporter souplesse et restitution d'énergie. Un substrat moins souple et un fond de module élastique permettent un comportement très performant.

Il a été vu qu'une membrane de polypropylène peut être tendue sur une grille rigide d'un maillage étudié pour constituer le fond en donnant la rigidité souhaitée à ce fond mais un surplus de souplesse peut être obtenu par « effet trampoline » par le choix d'une maille plus grande et par des cordes type cordes de piano servant de support à une géomembrane.

Selon un premier mode particulier, la couche inférieure est posée sur un fond de forme et peut être à nouveau soulevée avec sa charge ; cela permet de disposer d'un gazon dont les racines poussent à travers un substrat spécifique reposant lui même sur une plaque mobile, transportable avec le gazon dessus.

**V-I-D Surface comportant un tel gazon naturel**

**V-1-D-1 Surface sportive**

L'invention comprend une surface sportive comportant un gazon selon l'invention

La surface sportive comportant un tel gazon comprend :

- une surface susceptible d'accueillir un tel gazon
- un gazon naturel selon l'invention installé sur cette surface
- des moyens et procédés pour la fabrication sur place l'installation sur place d'un tel gazon fabriqué ailleurs
- des moyens de remplacement éventuel du gazon naturel installé sur ladite surface
- un procédé d'entretien du gazon naturel installé sur une telle surface
- des moyens équipant ladite surface participant aux procédés de contrôle des paramètres climatiques et de teneur eau
- des moyens d'accueil dudit gazon mobile selon qu'il s'agit d'un gazon en version mobile ou en version mobile et autonome

**V-1-D-1-1 Surface susceptible d'accueillir un tel gazon**

Une surface susceptible d'accueillir un tel gazon est d'abord une surface dotée d'un fonds de forme stable sur lequel, de préférence, il est possible de rouler sans créer d'ornières et avec une dimension et une topographie générale compatibles avec les normes en vigueur pour la construction des terrains de sport , dans la catégorie sportive considérée.

- Le fond de forme peut être en terre ou une couche drainante en gravier ou en sable concassé ou ce peut être une surface quelconque en dur comme une dalle de béton ou d'asphalte.

Au cas où le fond de forme est meuble, il existe des sous-couches drainantes ou non de type nappes qui doivent d'abord être déroulées pour constituer un fond de forme suffisamment stable

En outre, si une telle surface est elle même soumise à des contraintes globales de poids ou de profondeur d'excavation possible, comme c'est le cas d'une aire de sport installée sur une toiture terrasse, par exemple au dessus d'habitations ou de parkings, il faut à la fois une compatibilité avec la charge du gazon installé avec la situation de teneur en eau la plus importante qui se puisse trouver en supposant un orage inhabituel ou une fuite d'eau, compte tenu des drainages et de leur débit d'évacuation d'une source d'eau imprévue.

Une telle surface doit disposer d'une possibilité d'évacuation de l'eau. Dans le cas d'un drainage renforcé avec fentes de suintement et drains primaires, la surface doit être équipée en point bas d'un exutoire général et d'un réseau collecteur susceptible de prendre en charge l'évacuation de l'eau entre les drains primaires et l'exutoire général, compte tenu de la disposition géographique en fonction de la topographie dans le respect des règles habituelles de la technique.

Dans le cas d'un arrosage intégré, elle doit disposer d'un point d'alimentation avec une capacité en pression et débit compatible avec le choix du système d'arrosage : nombre d'arroseurs utilisés simultanément, caractéristiques en pression et débit de ces arroseurs pour la couverture d'arrosage visée.

**V-1-D-1-2 Gazon naturel selon l'invention installé sur cette surface**

Les gazons fixes ou mobiles selon l'invention ont déjà été décrits ci dessus. Les surfaces susceptibles d'accueillir un tel gazon ont des contraintes particulières en périphérie de ce gazon si par exemple le gazon doit être installé au centre d'un anneau utilisé pour l'athlétisme car l'épaisseur du gazon installé sur le fond de forme d'accueil de ce gazon donne l'altitude finale de la surface de la pelouse et cette altitude doit se raccorder sans discontinuité à l'altitude des aménagements contigus.

**V-1-D-1-3 Moyens et procédés pour la fabrication sur place ou l'installation sur place d'un tel gazon fabriqué ailleurs.**

Dans le cas d'une fabrication sur place ou d'une installation sur pace d'un gazon fabriqué ailleurs, la surface d'accueil doit disposer d'une première aire d'accueil accessible aux camions qui vont livrer notamment les matériaux nécessaires à la constitution du substrat et accueillir la centrale de mélange et les engins qui doivent transporter les éléments constitutifs du gazon depuis cette première aire d'accueil jusqu'à la surface d'accueil du gazon, ce qui suppose que l'aire d'accueil est idéalement la moins éloignée possible de la surface de gazon à installer et que le chemin entre les deux st aussi praticable que possible sans danger d'accident. Au moment de l'installation, les procédés nécessitent la mise en oeuvre des moyens et procédés qui dépendent de chaque mode de gazon (en place, en pavés, en modules) et qui sont décrits dans les parties consacrées à ces différents modes. Cependant, il existe des contraintes spécifiques de compatibilité de poids et dimensionnement des engins avec la surface d'accueil et les structures périphériques. En particulier :

Il faut également un mode d'installation du gazon dont le procédé soit analysé pour qu'à aucun moment des engins transportant des poids ne soient en surcharge locale avec risques de fragilisation ou poinçonnement local si la surface d'accueil est sur une dalle d'immobilier avec des contraintes spécifiques. En fonction des fréquences propres des sous structures le choix des engins de mise en place du gazon doivent être compatibles pour éviter tout phénomène de résonance en fréquences propres.

- Dans le chemin d'accès entre la première aire d'accueil et la surface d'installation du gazon également,il faut une compatibilité sans exception d'un bout à l'autre du parcours. Si il existe une ou plusieurs portes d'entrée ou couloirs de tunnel ou couloirs sur dalle avec sous structures portantes donnant accès à la surface d'accueil du gazon, les charges admissibles sur le trajet, les hauteurs sous obstacles à demeure et les largeurs déterminent les engins utilisables et dans le cas de modules la longueur maximale de modules utilisables et le nombre de modules transportables d'un coup.

**V-1-D-1-4 Moyens pour le remplacement éventuel du gazon naturel installé sur ladite surface**

Les gazons en place selon l'invention n'ont pas pour vocation d'être remplacés. Si la pelouse est usée, les deux possibilités connues de réfection les plus classiques sont le placage et le semis. La technique moins connue mais préférable selon l'invention est le semis de perforation qui consiste à perforer le substrat de plusieurs centaines de petits tous d'une taille caractéristique d'environ 1cm de diamètre et quelques centimètres de profondeur par mètre carré et d'y installer des graines de gazon par semis, épandage de sable ou substrat et passage de grille pour remplir les trous d'un tel mélange. Un tel procédé présente l'avantage de fournir des conditions optimales dans un micro environnement favorable à la germination, à la levée à l'installation et au tallage de plans de gazon qui présentent l'avantage d'être suffisamment éloignés les uns des autres pour ne pas se gêner mutuellement comme un rang de radis semés espacé pour ne pas avoir à éclaircir ultérieurement et le second avantage de protéger le collet de la plante qui s'installe un peu plus bas qu'un autre type de semis dans un substrat dont on n'abîme pas la structure et les réseaux de racines préexistants mais avec un volume meuble dans le micro volume insignifiant à l'échelle de la surface mais suffisant à l'échelle du gazon.

**V-1-D-1-5 Procédé d'entretien du gazon naturel installé sur une telle surface**

La technique de régénération par semis de perforation, décrite pour le renouvellement de la pelouse est en fait la technique la technique la plus pertinente dans le cadre de l'invention pour un programme d'entretien en renouvellement permanent du gazon, même si ce dernier est de toutes façons pérenne par nature mais cette technique aide à la régénération face à une sur fréquentation et permet également dans certains climats contrastés d'orienter la population en fonction des saisons. Le grand intérêt de cette technique est de rendre compatible une régénération de la pelouse et un maintien de ses caractéristiques mécaniques pendant l'installation des nouvelles plantes, sans nécessité d'arrêter l'exploitation.

Les moyens connus de la technique pour l'entretien d'un gazon de sport selon l'invention sont utilisables en règle générale mais avec des précautions et adaptations.

Les entretiens mécaniques sont possibles et souhaitables mais uniquement avec des moyens adaptés, en particulier dans le cas des gazons mobiles. Des aérations à louchets creux par perforation verticale à faible profondeur avec des réglages des machines pour ne pas perforer les réseaux de drains solides, suivis d'épandage d'un substrat adapté et d'un passage de brosses animées d'énergie de rotation et d'une contrainte forte de maintien de la planéité sont souhaitables de façon régulière pour entretenir la planéité de la surface, lutter contre le feutre, maintenir l'aération et la perméabilité superficielle et favoriser la santé du gazon.

La fertilisation peut être menée en fonction de l'épaisseur du substrat de sa CEC et du programme d'arrosage, de la réserve utile en eau, du climat, des exigences, de la sollicitation par le jeu, des stress de la pelouse et évidemment des variétés de gazon choisies. Les moyens habituels d'épandage en granulés ou en engrais liquides sont adaptés et rien n'interdit de réutiliser l'eau de drainage pour l'arrosage après stockage dans une bâche, analyse des nutriments de l'eau dans la bâche et adaptation de la fertilisation ; mais en revanche, le gazon selon l'invention n'est pas prévu pour un arrosage par le bas avec équilibre capillaire, ce qui est contraire au principe d'une porosité assez grossière pour avoir une partie de l'eau rapidement évacuée par gravité et une phase gazeuse importante.

Au lieu d'envisager uniquement le renouvellement d'une pelouse quand celle ci est usée, le principe de semis de perforation permet d'avoir un renouvellement permanant et programmé pour renforcer la pelouse en favorisant telle ou telle espèce en fonction des saisons et par exemple il peut être avantageux, à titre d'exemple, de semer systématiquement des canche en septembre pour favoriser les canches pendant l'hiver et systématiquement des fétuques en mars pour favoriser leur installation pour l'été.

**V-1-D-1-6 Moyens équipant ladite surface et procédés de contrôle des paramètres et climatiques et de teneur en eau**

Ladite surface doit disposer des moyens permettant la mise en oeuvre des procédés et protocoles décrits dans la définition du gazon selon l'invention.

Le contrôle actif de l'humidité est réalisé par le drainage et l'arrosage et l'arrosage lui même est programmé en fonction de mesures réelles du taux d'humidité dans le sol. La surface dispose des moyens de mesure de l'humidité du sol par conductivité électrique entre deux points ou plusieurs couples de points situés de façon à être représentatifs de l'humidité sur le gazon naturel et de préférence d'enregistrement de cette mesure

**V-1-D-1-6-1 Sources d'énergie- - Alimentation en eau - Evacuation du drainage**

La surface qui accueille un terrain de sport doit avoir les caractéristiques de dimensions et de topographie appropriées. Si un drainage renforcé est installé, la surface doit disposer d'un exutoire fonctionnel en point bas pour relayer le système de drainage et évacuer l'eau. Cette surface doit également disposer d'un approvisionnement en eau dont les caractéristiques de pression et de débit et le cas échéant de réserve d'eau sont compatibles avec le système d'arrosage. Enfin, si un chauffage et un éclairage sont installés, la surface d'accueil doit disposer de la source d'alimentation en énergie suffisante pour alimenter le système.

De plus, la surface peut être équipée selon l'invention des moyens de rangements et de dépliage et re-pliage des couvertures chauffantes ou d'autres équipements permettant de créer une atmosphère à climat régulé au niveau de la pelouse.

**V-1-D-1-6-2 Eléments nécessaires pour mettre en oeuvre les miroirs**

Pour mettre en oeuvre le système de miroirs selon l'invention, le stade doit être équipé des mats entre lesquels il sera possible de tendre une surface réfléchissante, d'un dispositif pour ranger cette surface d'un coté du stade sous sa forme pliée, qu'il s'agisse d'un rouleau ou d'un pliage sous une autre forme, et pour l'accrocher et la tendre en travers du stade , d'un dispositif pour dérouler ou déplier cette surface comme on peut le faire avec un store tendu en travers du stade, d'un dispositif pour régler la surface à une altimétrie et l'incidence de chaque lamelle si la surface est constituée d'un assemblage de lamelles comme un store géant.

Dans le cas des éclairages électriques, le stade dispose des mats et lampes qui éclairent la pelouse ainsi que d'un programmateur qui permet de programmer les éclairages.

**V-1-D-2 Autres surfaces pour d'autres utilisations du gazon selon l'invention**

Quoique l'objectif principal ayant guidé l'ensemble de la démarche innovante soit entièrement tournée vers la recherche d'une surface sportive idéale, les moyens trouvés sont très performants et ont d'autres applications possibles.

La présente invention concerne ces nouveaux usages et les surfaces concernées comportant un gazon naturel selon l'invention

C'est ainsi que les modules autonomes installables rapidement pour une durée éphémère ou pour rester à demeure peuvent répondre de façon étonnante à d'autres usages que la constitution d'un terrain de sport et peuvent permettre en particulier de constituer :

des surfaces de terrasses végétalisées, installables facilement et permettant aussi bien une protection de l'étanchéité existante, une climatisation passive et active de l'immeuble sur lequel est situé la surface, une décoration de la surface et une utilisation de cette surface comme jardin piétinable ou non, des surfaces sans infrastructures spécifiques utilisables comme support d'un jardin éphémère ou d'une pelouse provisoire, sportive ou d'agrément, à l'occasion d'un événement .

**V-1-D-2-1 Utilisation et procédé d'installation sur surfaces de terrasses**

Procédé d'installation d'un gazon, en modules prêts à être posés, de graminées ou de plantes décoratives gazonnantes ne demandant aucune tonte et piétinables ou non sur des surfaces représentant un potentiel de plusieurs millions d'hectares : les surfaces de terrasses et toitures-terrasses de maisons et immeubles qui sont la norme dans la plupart des pays chauds qui y trouveraient le double avantage d'un jardin au sommet des maisons et d'une climatisation efficace.

Un avantage du liège est la facilité d'entretien avec la sécurité, sans travaux, de garantir drainage et protection de l'étanchéité existante qui sont trois obstacles majeurs de l'état de la technique actuelle des toitures terrasses, végétalisées ou non.

**V-1-D-2-2 Utilisation pour installations provisoires sur surfaces sans infrastructure spécifique**

Surfaces en gazon pour installations éphémères, provisoires événementielles avec gazon sportif ou d'accueil ou de décoration dans une plage de temps événementiel avec circulation sur gazon et possibilité d'organisation d'évènements sportifs sur une place qui n'a pas cette vocation.

Exemples : arènes de corrida ou théâtres antiques ou boulevards, parkings ou places.

Possibilité de transport, installation, récupération et entretien puis réutilisation.

Utilisation pour fêtes, expositions, salons.

L'avantage d'une surface piétinable souple (reposant pour les visiteurs) qui atténue le bruit, apporte un confort climatique et supprime les risques de sols boueux (peut être installé au dessus d'une prairie susceptible d'être boueuse et ravagée exemple de journée des plantes.

Elle permet la constitution d'un splendide parking qui ne dégrade pas l'environnement avec un coût d'installation par événement mais de construction et d'entretien annuel des surfaces partagé sur plusieurs événements.

En plus de ces différents éléments, la présente invention propose de façon préférable de supprimer un nombre important des inconvénients actuels par un contrôle du climat spécifique de la pelouse. Des techniques sont déjà connues et le mode spécifique rend opportune et économique la technique de chauffage du bâtiment par le sol rayonnant à basse température avec une version eau chaude à environ 25 °C et une version électrique. Le fait de lasser un espace entre le fonds de forme et le plateau ouvre une possibilité au courant d'air qui règle en même temps les problèmes de pollution ou de chaleur en provenance du sol et permet de sécher ou ré humidifier rapidement par air conditionné l'humidité du sol au dessus.

### *V-2 Définition d'une chaussure de sport destinée à être utilisée sur une telle surface sportive*

L'invention concerne également une chaussure de sport destinée à être utilisée sur une telle surface sportive.

Une chaussure selon l'invention est déterminée par des caractéristiques mécaniques comme une partie de l'ensemble (sol, chaussure).

Dans l'état de la technique, des chaussures existent pour chaque type de sport mais également pour différents types de terrain. Dans le cas du football, il existe des chaussures à crampons acier ou des chaussures à empreintes moulées en matière plastique et l'on sait que ces chaussures doivent permettre de jouer dans des conditions variables d'un terrain à l'autre et variables, sur un même terrain d'une saison à l'autre, de sorte qu'il s'agit d'une adaptation à un large éventail de conditions de sol. Il va de soi qu'en diminuant la variabilité des sols, le cahier des charges d'une chaussure idéalement adaptée au sol en question se précise et qu'il est alors possible de concevoir et fabriquer une chaussure plus spécifiquement adaptée qui va donc améliorer le système (sol, chaussure).

En fait, en se posant la même question plus en amont, on conçoit que le sol peut lui même être réglé différemment en fonction des fonctions que l'on souhaite attribuer au sol et celles qu'il est préférable d'attribuer à la chaussure. Un élément important est de considérer ce que les joueurs expriment à ce sujet et il apparaît que les joueurs souhaitent avoir une bonne sensation du sol et du ballon et qu'il est préférable d'avoir un amortissement modéré dans la chaussure si le sol est suffisamment amortissant par lui même. Une partie de l'amortissement des chaussures a pour but de compenser le désagrément lié aux crampons mais là aussi, il est possible de diminuer la nécessité de compensation si on diminue la cause en diminuant les crampons ou même en les remplaçant par un dessin thermoformé adapté à la nouvelle surface.

De façon plus précisé, la chaussure étant l'interface entre le sportif et le sol et aussi avec le ballon dans le cas du football et partiellement du rugby, a un rôle important pour la qualité d'exécution des gestes sportifs et a un rôle important dans la prévention des risques de santé.

En particulier la fréquence des lésions du ligament croisé du genou est corrélable au dessin des crampons et à l'adéquation de ce dessin par rapport au terrain.

Concilier traction suffisante et faible résistance à la rotation pour diminuer la fréquence des accidents du genou.

Les chaussures doivent en même temps éviter de glisser tout droit, ce qui se traduit par des crampons d'autant plus profonds que le terrain est mou et glissant mais elles doivent éviter une résistance à la rotation, responsable directement des lésions des ligaments du genou, et devraient pour ce faire avoir des crampons le moins profond possible et dans une disposition, une densité et un dessin adapté pour minimiser la résistance à la rotation.

Si l'on considère les deux mesures qui peuvent être faites de la traction et du moment de résistance à la rotation, il faut que le premier soit le plus fort possible et le second le plus faible possible et ces deux valeurs dépendent à la fois du dessin de la chaussure et du sol sur lequel travaille la chaussure.

Si l'on considère un sol dans lequel les crampons ne s'enfoncent pas, il n'est pas nécessaire d'avoir de tels crampons et il vaut mieux une simple empreinte qui sera d'autant plus légère que le sol sera moins glissant. Dans le cas du gazon naturel et d'un sol humide, il existe une glissance des feuilles d'herbe par elles mêmes qui permet de ne pas se bloquer systématiquement et de glisser lors d'une chute sans se brûler mais il suffit d'appuyer un peu le pied pour enfoncer suffisamment les empreintes pour que le sol soit capable « d'accrocher la chaussure » si cette dernière exerce un effort de cisaillement en exerçant une force verticale : un pied sur lequel repose une part suffisante du poids reçoit du sol une résistance à la traction importante si le sol se déforme suffisamment pour prendre l'empreinte et que le blocage est suffisant pour résister à l'effort horizontal qui suit .

Dans ces conditions, il n'est pas nécessaire de créer un dessin trop prononcé et cela permet alors de minimiser la résistance à la rotation, surtout en ayant changé la jambe d'appui.

Minimiser l'atténuation d'impact de la chaussure pour favoriser la perception du sol, sensation et conduite de la balle

En fonction de la dureté du sol et des crampons, il peut être nécessaire d'inclure dans la chaussure une fonction d'amorti pour compenser les surpressions exercées sur le pied qui peuvent causer douleurs et blessures si elles dépassent les seuils admissibles en fonction de l'entraînement. Un joueur entraîné supporte mieux la douleur car son organisme se renforce mais en contrepartie les efforts inadéquats ont lieu pendant plus longtemps et il est donc préférable de ne pas dépasser les seuils de pression sur le pied ; or la distribution des pressions fait apparaître une répartition liée à différents facteurs entre pression sur la partie antérieure et sur la partie postérieure du pied.

La pression sur la partie antérieure est particulièrement affectée par la pression des crampons et doit être compensée par une coque raide qui répartit ces pressions et évite une répercussion locale sur la plante du pied à l'aplomb du crampon au moment où celui-ci encaisse, sur une faible surface, une partie importante de l'effort de réaction du sol.

L'autre élément qui permet de minimiser cet effort est de ne pas avoir des crampons trop longs par rapport à la dureté du sol, ce qui crée immanquablement une surpression sur ces crampons qui répartissent le poids sur une trop petite surface en concentrant les efforts, ce qui crée des surpressions en permanence, ces surpressions se déplaçant d'un crampon à l'autre en fonction de l'appui.

Il apparaît donc que pour éviter la surpression antérieure, l'un des moyens est d'avoir une coque très dure de répartition et l'autre moyen rejoint celui qui permet de minimiser les lésions du genou, à savoir une réduction des crampons au minimum admissible pour ne pas glisser sur le sol considéré

La pression sur la partie postérieure du pied est directement liée à la dureté du sol et peut être atténuée soit en ayant un sol qui est doté d'une souplesse suffisante, soit en rajoutant une fonction d'amortissement à la semelle de la chaussure, soit enfin en utilisant un dessin de semelle incurvée qui permet de ne pas concentrer sur le talon l'impact de la course.

Si l'on veut éviter pour une meilleure perception du terrain d'avoir une fonction d'amortissement dans la semelle tout en évitant des surpressions dans le talon nuisibles à terme pour la santé des sportifs, cela suppose de jouer sur la courbe de la semelle d'une part et de choisir le meilleur compromis de répartition de résilience entre la chaussure et le sol.

En fonction de la souplesse du sol, il faut examiner l'avantage ou l'inconvénient d'un appoint supplémentaire de résilience d'une part et sa localisation optimale d'autre part entre le talon de la chaussure, une sous-couche résiliente sous le substrat du gazon ou encore un ajout de matière résiliente à l'intérieur du substrat.

Il est difficile de trancher à priori mais il faut veiller, à vouloir trop bien faire, à ce qu'on n'aboutisse pas à une surface plus lente ou à une diminution de la perception du terrain. Dans le premier cas, les joueurs compensent par un effort musculaire plus intense qui crée fatigue et traumatismes spécifiques et notamment accidentes de fatigue et déchirures musculaires tandis que dans le second cas l'amoindrissement de la perception du terrain empêche les mécanismes normaux de rééquilibrage de se manifester à temps pour éviter les accidents et de plus frustrent les joueurs des sensations qu'ils recherchent.

Pour la sensation de la balle, les chaussures peuvent utiliser des matières à frottement important comme le cuir de kangourou ou différentes textures qui augmentent la sensation ou encore être plus serrées, ce qui raidit le pied et crée d'autres accidents.

Il est généralement reconnu qu'un compromis doit être apporté par le couple (sol, chaussure) entre souplesse et performance, la sous performance étant un facteur de risque pour la santé au même titre qu'une trop grande dureté.

Si l'amortissement est la capacité du système (sol, chaussure) à décélérer le pied, il est connu qu'un sol trop dur c'est à dire une décélération trop brutale ou un amortissement insuffisant provoque une onde de choc qui est dangereuse pour le système ostéo-articulaire, avec des effets secondaires de douleurs qui induisent de mauvaises postures, responsables elles mêmes d'aggravation à terme des impacts directs.

Si au contraire le système amortit mais ne restitue pas l'énergie, sachant que cette restitution d'énergie sous forme d'énergie cinétique se lit dans la courbe d'accélérométrie par la vitesse de retour du système (sol, chaussure) à sa position initiale, il y a déperdition d'énergie. Cette déperdition d'énergie existe soit dans le cas où le sol ne restitue pas l'énergie lors de son retour à sa position initiale quand il reste enfoncé ou retourne lentement et sans énergie cinétique à sa position finale, soit dans le cas où le sol a bien une restitution de l'énergie mais que celle ci intervient trop tard alors que le sportif est déjà parti et n'a pas pu en profiter.

Il est connu qu'un système (sol, chaussure) trop mou entraîne une instabilité, avec déplacement plus fatiguant et travail propirioceptif inhabituel, diminution de précision des sensations et aggrave les risques d'entorses tibio-tarsiennes ou médio-tarsiennes.

Il ne faut pas négliger la planéité du terrain en sachant que celle ci peut être détériorée par l'effet même du jeu, surtout avec des crampon trop longs qui induisent des surpressions locales surdimensionnées en cisaillement : un bon compromis d'adhérence avec faible longueur de crampons est également préférable de ce point de vue.

Dans le cas de la chaussure, la chaussure est susceptible d'emmagasiner de l'énergie et de la restituer plus tard, même si le pied a déjà quitté le sol et cela montre que le problème de cinétique de la chaussure n'est pas le même que celui du sol et qu'il faut en tenir compte dans la répartition de l'amortissement.

De façon générale, la remarque précédente rappelle une évidence : le système (sol, chaussure) n'est pas soumis à des contraintes simples de laboratoire consistant à lâcher un poids et à prendre une simple mesure d'amortissement et restitution théorique mais c'est dans le contexte du geste de la pratique sportive du sport considéré que doit être optimisé le système.

Il est important également dans le cas du football et dans une moindre mesure du rugby de ne pas oublier le contexte de contraintes des chaussures qui doivent permettre non seulement d'être une interface avec le sol mais dans une autre phase avec le ballon frappé pour transmettre une énergie et des effets.

Une autre approche consiste donc, à l'opposé de l'approche théorique à priori du milieu, de regarder les mesures sur joueur en action et les approches médicales et les statistiques de blessures et les modélisations du mouvement du pied du sportif pour affiner le cahier des charges.

En ne s'intéressant pas aux blessures liées au chocs entre joueurs, puisqu'une partie de ces accidents provient d'une absence de respect des règles et des autres joueurs ou des risques normaux liés au sport considéré, notamment au rugby, même si une autre partie de ces accidents soient le résultat d'une impossibilité de s'arrêter ou de maîtriser sa course, il reste un grand nombre de traumatismes accidentels et chroniques dont la fréquence renseigne sur les effets négatifs d'un système (sol, chaussure) inadapté et permettent a contrario de préciser ce qui est souhaitable.

Une pelouse agréable est le meilleur support pour courir les pieds nus et détendre les tendons et les muscles en course de récupération. Cependant, il faut des chaussures pour frapper dans un ballon et une des premières fonctions de la chaussure de football est de protéger le pied contre les nombreux écrasements du dos du pied et pour communiquer au ballon l'énergie de la frappe ainsi que les effets.

Il est connu que l'enregistrement par capteurs de pression fait apparaître pendant la course un pic d'impact au niveau du talon et la réaction du sol crée des composantes de forces verticales qui peuvent dépasser trios fois le poids du corps et se transmettent au pied sous forme d'onde se répartissant entre le tendon d'Achille ou tendon calcanéen et l'aponévrose plantaire, sachant que le tendon calcanéen restitue au pied 90% de l'énergie emmagasinée pour la phase suivante de propulsion. Il n'est pas étonnant que ces éléments anatomiques soient l'objet des pathologie de fatigue pouvant aller de l'inflammation à la rupture du tendon d'Achille si le pic n'est pas suffisamment amorti ou de pathologie de fatigue s'il est trop amorti et que le tendon n'a pas assez d'énergie à restituer.

Il est connu que la chaussure doit avoir un pouvoir amortissant au niveau du talon, doit limiter l'amplification de la pronation, stabiliser l'arrière pied et conserver au contraire la mobilité de milieu de pied métatarso-phalangienne.

En réalité, plutôt que d'amortir le pic d'impact par une mousse, l'énergie d'impact doit être filtrée par la chaussure par un comportement élastique pour protéger des hautes fréquences et accumuler puis restituer l'énergie au tendon à une fréquence plus basse pour que ce dernier la restitue au pied dans la phase suivante de propulsion. L'idéal est que cette énergie soit transmise rapidement du talon vers l'avant pied en réduisant le temps de contact et l'effort vertical au strict minimum.

Les traumatismes les plus fréquents du fait du système sol chaussure sont ceux qui ont pour cause la fatigue liée à cette sollicitation fatiguant et enflammant les tendons avec par exemple la rupture du tendon d'Achille lors d'un démarrage brutal ou encore les accidents liés à une rotation médiale du tibia sur un pied en rotation bloquée.

La solution selon l'invention est d'adapter au mieux la chaussure au sol.

Une demande de brevet déposée par Podo-concept en 1998, publiée sous le numéro FR-2 782 613, décrit la possibilité d'utiliser les matériaux composites de thermoformage en trois épaisseurs ABC utilisant les propriétés rhéologiques du polyester pour fabriquer une semelle fonctionnelle distribuant horizontalement et verticalement par les épaisseurs respectives des trois éléments ABC que sont la base en mousse qui assure la liaison avec une chaussure de base, la coque en résine polyester constituant l'ossature avec les caractéristiques d'élasticité et le recouvrement destiné à recevoir la face plantaire du pied et le protéger.

Ainsi l'état de l'art permet de répondre au mieux aux contraintes mécaniques dans la mesure où la forme donnée aux éléments mentionnés ci dessus permettent une répartition adaptée aux besoins physiologiques du pied, une fois connu le cahier des charges en terme d'absorption des chocs, stabilité, contrôle du mouvement du pied etc.

La chaussure et la semelle qui en fait partie selon l'invention est caractérisée par le fait que le dessin, la répartition et la hauteur des crampons sont déterminés par des essais sur le sol selon l'invention pour obtenir un compromis optimal entre adhérence s'opposant au glissement et liberté de rotation et en ce que l'amortissement du choc par la chaussure est essentiellement élastique avec pour objectif de protéger le tendon d'Achille en filtrant les hautes fréquences tout en restituant au plus vite la plus grande part de l'énergie du pic d'impact pour avoir un système à bonne performance, plus agréable à jouer, moins fatiguant et limitant les accidents.

### *V-3 Protocole d'évaluation d'un système sportif*

L'invention comprend un protocole d'évaluation des caractéristiques de la surface sportive ou du couple (surface sportive, chaussure de sport).

Ce protocole d'évaluation, associé aux surfaces sportives selon l'invention ou aux surfaces sportives et chaussures selon l'invention constitue avec ces dernières un nouveau système sportif.

Le protocole d'évaluation est constitué :

- d'un protocole de mesures
- d'un critère permettant d'évaluer, de comparer, de contrôler le niveau de performance d'un terrain de sport ou d'un couple (chaussure, terrain de sport) à partir des mesures obtenues par le protocole

### V-3-1 Choix d'un protocole de mesures du sol

Qu'il s'agisse d'une phase unique ou que l'on considère deux ou plusieurs phases distinctes, on peut considérer qu'une mesure (gmax, empreinte) = (faible, faible) manifeste, si elle est représentative, que l'empreinte faible du sol montre qu'il a été capable non seulement d'arrêter le mobile mais encore d'avoir mobilisé une capacité de résister à la pénétration malgré des forces importantes et pendant un temps long. Si cependant on retire le mobile et que par exemple des éléments résilients écrasés remontent en surface après la chute du mobile, on a une mesure d'enfoncement nulle qui n'indique rien car le choc entier a été amorti par la résilience et le mobile n'a pas forcé sur le sol et n'a pas prouvé sa résistance à l'arrachement par exemple.

Il faut dans un tel cas se rendre compte que le couple de paramètres proposés pour approcher le comportement mécanique complexe global ne serait pas le bon. Il faudrait alors choisir au moins deux mesures représentatives et ne pas oublier de tenir compte d'un troisième paramètre qui est le temps de retard pris entre les deux phases.

Si un couple de paramètres qui semble pertinent dans le cas du gazon sert de référence dans la présente invention, le principe de l'invention n'est pas de fixer définitivement tel ou tel choix de mesures de façon définitive comme le plus adapté à une appréciation fine et discriminante de toutes les situations. Bien au contraire, cela fait partie des objectifs de réglage du procédé de chercher et développer les mesures de contrôle les plus adaptées.

Un couple de mesures idéal pour une discipline donnée doit mesurer au minimum quatre mesures différentes :

- mesure du choc, par une mesure accélérométrique, par exemple comme il a été dit ci-dessus, d'un mobile tombant sur le sol avec extraction par traitement du signal approprié d'un nombre caractéristique de l'intensité du choc
- mesure de la restitution d'énergie ; la mesure accélérométrique est un outil idéal pour calculer la restitution d'énergie cinétique, la rapidité de restitution mais l'aspect extrinsèque du geste sportif doit aussi être connu pour en déduire le coefficient de restitution d'énergie
- mesure de la déformation du sol soumis à une force la plus représentative possible de la force subie par le sol lors de la propulsion ou de la mêlée, qui peut être une mesure générale type pénétromètre statique ou dynamique ou de façon préférable une mesure appropriée à chaque sport représentant au mieux l'agression à laquelle doit résister le terrain ;
- enfin mesure des écarts types de ces mesures, les écarts types mesurant à la fois l'hétérogénéité des résultats en conditions constantes et la variabilité en fonction des paramètres significatifs et notamment la teneur en eau dans un sol granulaire.

Il a été vu ci-dessus un protocole avec seulement deux mesures, le pic d'accélération représentant l'intensité du choc et l'Empreinte théorique représentant à la fois, par hypothèse à vérifier, l'inverse de la restitution d'énergie et de la résistance au cisaillement ou à l'arrachement, et la teneur en eau étant un paramètre permettant de représenter un terrain par une courbe paramétrée.

Dans le cas de l'accéléromètre, le temps est évidemment mesuré puisqu'on a l'accélération en fonction du temps et la caractéristique de rapidité ou lenteur de réponse, c'est-à-dire le temps global d'amortissement doit être rajouté aux deux autres si on rajoute de la résilience.

Pour un protocole de mesures minimum, il faudrait de façon préférable:

- Déterminer une plage de teneurs en eau
- une accélération maximale ou toute mesure issue de la courbe accélérométrique et caractérisant la dureté du choc avec la teneur en eau minimum de la plage choisie
- une mesure, avec la teneur en eau maximum, d'empreinte théorique ou toute mesure caractéristique de la détérioration résultant de l'agression du sport considéré.

Or, s'agissant de gazon naturel classique, les deux paramètres (fréquence d'amortissement grossièrement équivalent à mesure du pic de décélération) d'une part et (résistance au cisaillement qui peut s'approcher plus ou moins bien par mesure de pénétration statique ou de l'empreinte laissée par le mobile) d'autre part sont liés par une courbe caractéristique du matériau, cette courbe étant de plus paramétrable par le degré d'humidité, de sorte que le sol en gazon naturel est toujours assez amortissant mais pas assez résistant quand il est humide et résistant mais légèrement trop dur quand il est sec.

Avec des courbes différentes et placées, en toute valeur de l'humidité avec une accélération plus forte, on peut en dire autant de toutes les autres surfaces (comme les stabilisés en terre sable ou le sable pur ou en sable fibré ou gazon fibré etc.) qui semblent vérifier chacune une courbe caractéristique paramétrable par l'humidité du sol.

Quelque soit le protocole de mesures et en essayant de se rapprocher du choix le plus approprié, il appartient à l'homme de l'art de déterminer un triplet représentatif des caractéristiques recherchées (amortissement du choc, performance ou restitution de l'énergie du choc, résistance du gazon). On peut considérer pour chaque sport une mesure particulièrement appropriée de la résistance, par la mise au point d'un instrument créant un effort mesurable ressemblant à la nature des efforts auxquels un tel sol est soumis pendant la pratique du sport considéré .

Dans tous les cas, il faut vérifier par un nombre suffisant de mesures qu'on peut corréler suffisamment les deux derniers paramètres ou avoir un degré de sécurité suffisant de l'un d'eux pour pouvoir l'oublier afin de pouvoir représenter tous les terrains à comparer dans un même diagramme de type (amortissement du choc, performance) en vérifiant qu'on a pour chaque surface sportive deux paramètres d'état (amortissement et résistance) qui sont reliés entre eux par une courbe d'état paramétrable en degré d'humidité.

**V-3-2 Choix d'un protocole de mesures du couple (sol, chaussure)**

Le principe d'un tel protocole est de rajouter au protocole relatif au sol sportif des mesures et critères de comparaison relatifs à l'action du sol sur la chaussure et notamment la glissance et la résistance à la rotation qui seront comparés aux mesures qui peuvent être obtenus avec une autre chaussure et un autre sol sportif avec une glissance et une résistance à la rotation qui doivent être faibles en même temps.

L'amortissement et la restitution d'énergie sont mesurés avec le sol mais doivent l'être à nouveau selon un protocole de mesures approprié pour le couple (sol chaussure) car le pied transmet une énergie au sol par l'intermédiaire de la chaussure et la réponse mécanique du sol est transmise en retour au pied à travers la chaussure.

**V-3-3 Critère d'évaluation**

Le critère d'évaluation est celui qui permet de vérifier que l'invention a atteint son but :
Amortissement fort, bonne restitution de l'énergie, bonne résistance à la dégradation, paramètres peu sensibles à la teneur en eau, faible glissance, faible résistance à la rotation.

Et enfin, un gazon naturel dense, poussant et vigoureux toute l'année, avec tous les avantages connus qui s'y attachent.

I) Domaine d'application de l'invention
II) Etat de la technique
II-1 Etat de la technique du gazon naturel
II-1-A Etat de la technique du gazon naturel « installé à demeure»
II-1-B Etat de la technique du gazon naturel « mobile »
II-2 Etat de la technique dans le domaine des surfaces artificielles concurrentes du gazon naturel
II-2-A Différents types de gazons synthétiques
II-2-B Terrains en sable fibré ........................................
II-2-C Combiné synthétique + naturel
II-2-D Gazon fibré
III) Evaluation objective de la performance des terrains de sport
III-1 Analyse fonctionnelle : évaluation des terrains de sport par rapport a l'objectif fonctionnel

III-1-A Définition fonctionnelle de la finalité d'un terrain de sport

III-1-B Définition fonctionnelle des caractéristiques sportives d'un terrain de sport

III-1-C Inconvénients fonctionnels des terrains dans l'état de la technique

III-1-C-1 Inconvénients écologiques des gazons synthétiques

III-1-C-2 Problèmes de blessures

III-1-C-3 Autres inconvénients fonctionnels

III-2 Analyse mécanique : évaluation des terrains par une analyse mathématique de la mécanique du sol

III-2-A Traduction objective du problème fonctionnel

III-2-B Analyse théorique et interprétation générale de la courbe accélérométrique d'un mobile arrêté par le sol

III-2-B-1 Relations décélération du mobile - déformation du sol - enfoncement - empreinte

III-2-B-2 Relations décélération du mobile - vitesse de restitution, énergie restituée, coefficient de restitution.

III-2-B-3 Relations décélération du mobile - déplacement du mobile

III-2-B-4 Analyse générale d'un sol réagissant en deux phases bien distinctes d'amortissement et de résistance, représenté par trois paramètres (choc, performance, résistance)

III-2-B-5 Représentation idéale d'un sol dans un diagramme (gmax, empreinte théorique)

III-2-C Inconvénients mécaniques des terrains dans l'état de la technique

III-2-C-1 Inconvénients des synthétiques avec ou sans résilience ajoutée et des sols non granulaires ou collés ou tassés

III-2-C-2 Inconvénients des gazons naturels et des sols granulaires IV) But et solution de l'invention

IV-1 Le but de l'invention

IV-2 La solution de l'invention

V) Description détaillée de l'ensemble des éléments caractérisant l'invention avec exemples de réalisation des différents éléments

V-1 Définition générale du gazon naturel selon l'invention

V-1-0 Définition préalable du concept de gazon naturel

V-1-A Caractéristiques intrinsèques du gazon

V-1-A-0 Phénomènes physiques concernés - Principe de l'invention

V-1-A-0-1 Phénomènes physiques concernés

V-1-A-0-2 Echelle macroscopique

- V-1-A-0-2-1 Cohésion apparente et angle de frottement interne
- V-1-A-0-2 -2 Energie potentielle d'absorption

V-1-A-0-3 A l'échelle microscopique

- V-1-A-0-3-1 Mécanismes déterminant la cohésion apparente et l'angle de frottement interne à l'échelle microscopique
- V-1-A-0-3-2 Impact de la granulométrie sur les forces capillaires

V-1-A-0-3-3 Influence de la porosité sur la teneur en eau

V-1-A-0-3-4 Impact microscopique de la granulométrie sur l'aspect agronomique

V-1-A-0-4 A l'échelle mésoscopique

- V-1-A-0-4-1 Impact de la structure du sol
- V-1-A-0-4-2 Impact mésoscopique des racines sur la cohésion
- V-1-A-0-4-3 Impact mésoscopique d'inclusions sur la cohésion, l'énergie potentielle d'amortissement et l'angle de frottement

V-1-A-0-5 Conclusion

V-1-A-1 Composition du substrat d'origine

V-1-A-1-1 Squelette minéral sableux

V-1-A-1-2 Fines et matière organique

V-1-A-1-2 -1 Pas d'argile ou peu d'argile

V-1-A-1-2 -2 Eventuelle fraction organique

V-1-A-1-3 Exemples de composants du substrat d'origine selon l'invention

V-1-A-1-3-1 Sable 200 $\mu$m à 400 $\mu$m

V-1-A-1-3-2 Sables super-fins

V-1-A-1-3-3 Granulés de liège

V-1-A-1-3-4 Minéraux poreux spéciaux à forte CEC et rétention d'eau

V-1-A-1-3-5 Autres natures de grains - critères de faisabilité

V-1-A-2 Principes de traitement du substrat d'origine par incorporation d'inclusions ou d'autres moyens

V-1-A-2-1 Principes relatifs aux modifications recherchées

V-1-A-2-2 Principes relatifs aux moyens d'obtenir de telles modifications

V-1-A-3 Inclusions spécifiques incorporées au substrat d'origine selon l'invention

V-1-A-3-1 Contexte

V-1-A-3-2 Principes du choix d'inclusions ou d'autres moyens selon l'invention

V-1-A-3-3 Constat et analyse des causes des inconvénients des fibres utilisées à l'heure actuelle

V-1-A-3-4 Mécanismes mettant en oeuvre ces principes et inclusions selon l'invention mettant en oeuvre ces mécanismes

V-1-A-3-4-1 nature des inclusions et absence de nuisances ou effets secondaires

V-1-A-3-4-2 Répartition et dosage des inclusions

V-1-A-3-4-3 Inclusions à effet positif selon le protocole d'évaluation

V-1-A-3-4-4 Inclusions particulièrement mouillables

V-1-A-3-4-5 Critères géométriques

V-1-A-3-4-6 Critères de mimétisme du gazon

V-1-A-3-4-7 Critères rhéologiques pour les fibres et inclusions bloquantes

V-1-A-3-4-8 Caractéristiques et exemples de différents matériaux résilients ou élastiques

V-1-A-3-4-9 Synergie entre différents critères

V-1-A-3-4-10 Caractéristiques et exemples de différentes fibres ou bandelettes ou inclusions bloquantes utilisables

V-1-A-3-4-11 Caractéristiques globales et exemples de combinaisons

V-1-A-4 Autres moyens d'améliorer le comportement mécanique du sol sportif

V-1-A-4-1 Agents mouillants

V-1-A-4-2 Elasticité du fond du module ou sous couches élastiques ou résilientes

V-1-A-5 Choix des plantes poussant dans le substrat

V-1-A-5-1 Principes généraux

V-1-A-5-2 Description des problèmes par rapport aux différents climats et différentes saisons

V-1-A-5-2-1 Climats chauds

V-1-A-5-2-2 Climats tempérés

V-1-A-5-2-3 Climats froids

V-1-A-5-2-4 Synthèse des problèmes selon climats et saisons

V-1-A-5-3 Description des solutions préférables selon l'invention

V-1-A-5-4 Comportement et rôle des plantes face aux agressions mécaniques

V-1-A-6 Protocole de mesures et d'évaluation du substrat

V-1-B Caractéristiques extrinsèques générales du gazon

V-1-B-1 Moyens et procédés de fabrication et entretien du gazon

V-1-B-1-1 Moyens et procédé pour incorporer les inclusions au substrat

V-I-B-1-2 Procédés pour installer un tel substrat sur une surface de culture

V-I-B-1-2-1 Création de novo pour installation à demeure

V-I-B-1-2-2 Méthode d'épandage et de nivellement

V-I-B-1-3 Procédé de rénovation pour améliorer le substrat d'un gazon existant à moindre coût et faible délai d'immobilisation.

V-I-B-1-4 Procédés pour installer et entretenir un gazon dans un tel substrat

V-I-B-2 Moyens de contrôle de la teneur en eau

V-I-B-3 Moyens de contrôle de plusieurs paramètres d'état du gazon : température du substrat, température de l'air à la surface du substrat, éclairage du gazon

V-I-B-3-1 Analyse des causes des problèmes liés aux facteurs climatiques

V-I-B-3-2 Description des moyens généraux permettant de résoudre ces problèmes selon l'inven

V-I-B-3-2-1 Température du substrat

V-I-B-3-2-2 Température de l'air à la surface du substrat

V-I-B-3-2-3 Eclairage du gazon

V-I-C Trois modes de réalisation spécifiques

V-I-C-1 Gazon fabriqué sur son lieu d'installation à demeure

V-I-C-1-1 Fabrication et intégration des gazons à demeure

V-I-C-1-2 Moyens de contrôle de la teneur en eau des gazons à demeure

V-I-C-1-3 Moyens de contrôle du climat des gazons à demeure

V-I-C-1-4 Sous couches résilientes à demeure

V-I-C-2 Gazon mobile sous forme de pavés

V-I-C-2-1 Fabrication en gazonnière et intégration des gazons en pavés

V-1-C-2-1-1 Concept et procédé de création et de culture en gazonnière

V-I-C-2-1-2 Moyens de transport et d'installation ailleurs

V-I-C-2-1-3 Entretien à destination

V-I-C-2-2 Moyens de contrôle de la teneur en eau des gazons en pavés

V-I-C-2-3 Moyens de contrôle du climat des gazons en pavés

V-I-C-2-4 Sous couches amortissantes des gazons en pavés

V-I-C-3 Gazon en modules mobiles et autonomes

V-I-C-3 -1 Fabrication et intégration des modules mobiles et autonomes

V-I-C-3-1-1 Description des éléments constitutifs

V-I-C-3 -1 -2 Moyens de transport et d'installation ailleurs

V-I-C-3-1-3 Installation à destination

V-I-C-3 -2 Contrôle de la teneur en eau des modules mobiles et autonomes

V-I-C-3 -3 Moyens de contrôle du climat modules mobiles et autonomes

V-I-C-3 -4 Sous couches résilientes à demeure des modules mobiles et autonomes

V-I-D Surface comportant un tel gazon naturel

V-1-D-1 Surface sportive

V-1-D-1-1 Surface susceptible d'accueillir un tel gazon

V-1-D-1-2 Gazon naturel selon l'invention installé sur cette surface

V-1-D-1-3 Moyens et procédés pour la fabrication sur place ou l'installation sur place d'un tel gazon fabriqué ailleurs.

V-1-D-1-4 Moyens pour le remplacement éventuel du gazon naturel installé sur ladite surface

V-1-D-1-5 procédé d'entretien du gazon naturel installé sur une telle surface

V-1-D-1-6 Moyens équipant ladite surface et procédés de contrôle des paramètres et climatiques et de teneur en eau

V-1-D-1-6-1 Sources d'énergie- - Alimentation en eau - Evacuation du drainage

V-1-D-1-6-2 Eléments nécessaires pour mettre en oeuvre les miroirs

V- 1-D- 2 Autres surfaces pour d'autres utilisations du gazon selon l'invention

V- 1-D-2-1 Utilisation et procédé d'installation sur surfaces de terrasses

V-1-D-2-2 Utilisation pour installations provisoires sur surfaces sans infrastructure spécifique

V-2 Définition d'une chaussure de sport destinée à être utilisée sur une telle surface sportive

V-3 Protocole d'évaluation d'un système sportif

V-3-1 Choix d'un protocole de mesures du sol

V-3-2 Choix d'un protocole de mesures du couple (sol, chaussure) V-3-3 Critère d'évaluation

REVENDICATIONS

2

## Revendications

**1.** Substrat (3) destiné à servir de support de culture à du gazon pour constituer une surface sportive engazonnée mécaniquement performante, caractérisé :

- premièrement en ce qu' il comprend une première partie de particules minérales ou artificielles (4) ayant la granulométrie d'un sable, appelés également grains (4) ou particules sableuses (4), comprise entre 80 $\mu$m et 3 mm, constituant le squelette du substrat et représentant entre 25% et 99,9% du poids total du substrat,
- deuxièmement en ce qu' il comprend au moins une seconde partie de particules qui sont des inclusions bloquantes allongées et sont (5) mélangées et incorporées à ce squelette, chacune de ces inclusions bloquantes (5) ayant au moins une de ses dimensions largement supérieure à la granulométrie des particules sableuses (4), de sorte qu'elle se trouve au voisinage ou au contact d'une multitude de ces dites particules sableuses (4), le dosage de ces inclusions bloquantes allongées (5) étant au moins égal à 2 grammes par litre de substrat,
- troisièmement, en ce que le substrat (3) comprend aussi une partie constituée de grosses inclusions résilientes (7), lesdites inclusions résilientes (7) étant suffisamment grosses par rapport à la finesse des inclusions bloquantes allongées (5), suffisamment grosses par rapport aux particules sableuses (4) composant le substrat (3), suffisamment petites par rapport à la longueur des inclusions bloquantes allongées (5) et présentes dans un dosage suffisant dans le substrat (3) pour qu'une quelconque des inclusions bloquantes allongées (5) soit statistiquement amenée, quand elle est incorporée au substrat à se trouver au contact direct ou au moins en relation mécanique indirecte de plusieurs de ces grosses inclusions résilientes (7) et à devoir faire des lacets pour contourner plusieurs de ces grosses inclusions résilientes (7) et puisse ainsi coopérer avec lesdites grosses inclusions résilientes (7) selon le mécanisme suivant : Lors d'un mouvement de cisaillement du substrat (3), une inclusions bloquantes allongées (5) se trouve tendue par le mouvement qui tire une extrémité de ladite inclusions bloquantes allongées (5) dans un sens et son autre extrémité dans l'autre sens, mais ce mouvement de tension de lesdites inclusions bloquantes allongées (5) se trouve contrarié par les lacets autour de plusieurs grosses inclusions résilientes (7) qui vont devoir s'écraser pour que puisse se tendre lesdites inclusions bloquantes allongées (5) sous l'effet de l'énergie communiquée par lesdites inclusions bloquantes allongées (5) auxdites grosses inclusions résilientes (7) qui génèrent ainsi au coeur du substrat (3) un travail d'amortissement égal à la force de résistance à l'écrasement desdites grosses inclusions résilientes (7) par la longueur de leur écrasement,

- quatrièmement en ce que le substrat comprend une 3$^{ieme}$ partie constituée par la fraction organique du substrat qui peut être éventuellement absente et qui représente en tout état de cause une proportion en volume comprise entre 0 % et 50 % du volume total du substrat, cette troisième partie étant intimement mélangée à la première partie,

- cinquièmement en ce que le substrat a, au moins pour certaines valeurs de la teneur en eau du substrat, une cohésion interne supérieure d'au moins 20% à celle du même substrat avec la même teneur en eau mais sans les inclusions bloquantes allongées (5), en prenant comme définition classique de la cohésion interne la force de cisaillement à exercer pour amorcer un glissement interne, diminuée de la force de frottement interne selon la formule $\sigma = C + (p - U) \sin \alpha$, où C est la cohésion interne, $\sigma$ étant l'effort de cisaillement nécessaire pour vaincre les forces de cohésion et de frottement et créer un glissement interne, p étant la pression exercée sur le substrat, U la pression interstitielle de l'eau de sorte que p - U est la pression interne des forces normales réciproques exercée par les éléments du substrat l'un sur l'autre et $\alpha$ l'angle de frottement interne qui détermine la force de frottement, proportionnelle à la pression interne par la formule de Coulomb : force de frottement = (p-U) $\sin \alpha$,

- sixièmement en ce que ce substrat, pour répondre aux exigences requises en terme d'efficacité et d' innocuité pour un support de culture dans lequel doit pousser un gazon qui doit y puiser l'eau et les nutriments dont il a besoin, a

= d'une part une concentration en éléments chimiques solubles inférieure aux seuils déterminés par les normes des supports de culture, en particulier pour les produits connus pour être toxiques pour le gazon que sont la simazine, l'atrazine, la créosote, les acides phénoliques, les acides tanniques, le chlorure de sodium et le bore et a

= d' autre part une valeur supérieure à 7 % pour son coefficient volumique de rétention d'eau, diminué le cas échéant du coefficient volumique d' occupation par d'éventuelles substances présentes dans le substrat et occupant dans la porosité la place normale de l'eau capillaire, comme par exemple de l'huile ou de la paraffine, classiquement utilisées pour augmenter la cohésion des sols sportifs en sable fibre non engazonné, ce coefficient de rétention d'eau par unité de volume apparent de substrat étant égal à la porosité totale du substrat diminuée de la porosité de drainage, cette dernière étant elle même égale, par unité de volume, au volume d'eau drainée par gravité.

**2.** Substrat selon la revendication 1, caractérisé: d'une part en ce que les inclusions bloquantes allongées (5) du substrat sont capables de bloquer ledit substrat soumis à un effort de cisaillement par l'effet combiné de leur résistance interne à la compression et à l'élongation et des forces de frottement qu'elles peuvent exercer entre elles et sur les grains (4) du squelette sableux du substrat, de sorte que le substrat résiste à certains efforts de cisaillement alors que le même substrat dans les mêmes conditions mais sans les inclusions bloquantes allongées (5)n'y résiste pas,

- d'autre part en ce que, lorsque le substrat est soumis à une sollicitation mécanique de cisaillement, ces inclusions bloquantes allongées (5) commencent pendant une première phase par se déformer dans le sens de l'élongation à l'intérieur du squelette sableux (4) avant d'être mises en tension et que leur mise en tension n'aboutisse à une force d'opposition au cisaillement du substrat, de telle sorte que le rapport $\sum_i |\varepsilon_i|/\sum_i |f_i|$ entre la somme des valeurs absolues de ces déformations de inclusions bloquantes allongées (5) et la somme des forces positives d'opposition au cisaillement développées par ces mêmes inclusions bloquantes allongées (5)par l'effet combiné de leur résistance interne à l'élongation et de leur frottement sur le squelette sableux (4) soit au moins 10 fois supérieur au même rapport avec un substrat fibre classique constitué d'un sable dans lequel sont incorporées des fibres non élastiques dont la section est supérieure à la porosité moyenne de ce sable, en définissant la déformation $\varepsilon i$ d'une fibre ou bandelette (5) comme l'augmentation entre l'état initial au repos et l'état à l'instant t de la distance maximale entre les 2 points les plus éloignés de cette fibre ou bandelette (5), cette déformation augmentant donc quand une fibre en lacet se tend ou quand une fibre élastique s'étire.

3. Substrat selon la revendication 1 ou 2, **caractérisé en ce que** la première partie de particules (4) :

    - est pratiquement exempte de fines sous forme de limon ou d'argile, les particules minérales de dimension inférieure à 20$\mu$m représentant moins de 5% en poids du substrat, et
    - comprend au moins 30% et jusqu'à 100% en poids d'un sable :
    - dont la granulométrie est comprise entre 200 $\mu$m et 400 $\mu$m
    - dont le coefficient de dureté est supérieur à 6 Mohs,
    - dont la forme se rapproche autant que possible de la forme sphérique et lisse, avec un coefficient de sphéricité entre 1 et 1,1, ce coefficient de sphéricité représentant le rapport moyen entre la surface réelle d'un grain et la surface de la sphère ayant le même volume .

4. Substrat selon l'une quelconque des revendications 1 à 3, caractérisé

    - premièrement, en ce qu'il existe une partition de l'ensemble des dimensions granulométriques de ses particules minérales (4) en un ou n intervalles disjoints $I_1$, i allant de 1 à n et n supérieur ou égal à 1, ce qui signifie que chaque grain a sa dimension granulométrique qui appartient à un et à un seul de ces intervalles $I_i$, - deuxièmement, en ce que, dans l'un au moins de ces intervalles $I_1$, la granulométrie est répartie de façon relativement homométrique autour d'un pic isolé de dimension $\lambda_i$, avec d'une part un coefficient d'uniformité inférieur ou égal à 1,5 dans l'ensemble des particules ayant leur dimension granulométrique dans l'intervalle $I_1$, ce coefficient étant défini par le rapport $d_{60\,i}/d_{10\,i}$, $d_{60\,i}$ étant l'ouverture des mailles laissant passer 60% des grains ayant leur dimension granulométrique dans l'intervalle $I_1$, et $d_{10\,i}$ étant l'ouverture des mailles ne laissant passer que 10% des grains ayant leur dimension granulométrique dans l'intervalle $I_1$, et avec d'autre part l'intervalle [2/3 $d_{10\,i}$, 1/5 $d_{60\,i}$] inclus dans l'intervalle $I_1$.

5. Substrat selon la revendication 4, caractérisé

    - premièrement, en ce qu'il existe une partition de l'ensemble des dimensions granulométriques de ses particules minérales (4) en n intervalles disjoints $I_1$, i allant de 1 à n et n étant supérieur ou égal à 2, ce qui signifie que chaque grain a sa dimension granulométrique qui appartient à un et à un seul de ces intervalles $I_1$,
    - deuxièmement, en ce que, dans deux au moins de ces intervalles li, que l'on peut nommer $I_1$ et $I_2$ en choisissant l'indexation pour que les éléments de $I_2$ soient plus grands que ceux de $I_1$, la granulométrie est répartie de façon homométrique autour d'un pic isolé de dimension $\lambda_i$, avec d'une part, pour i=1 et pour i =2, un coefficient d'uniformité inférieur ou égal à 1,5 dans l'ensemble des particules ayant leur dimension granulométrique dans l'intervalle $I_1$ et avec d'autre part, pour i=1 et pour i =2, l'intervalle [2/3 $d_{10\,i}$, 1/5 $d_{60\,i}$] inclus dans l'intervalle $I_i$,
    - troisièmement, en ce que $\lambda_2 > 4\,\lambda_1$ de sorte que une ou plusieurs particules ayant leur dimension granulométrique dans l'intervalle li puissent entrer dans la porosité constituée par les particules ayant leur dimension granulométrique dans l'intervalle $I_2$, quatrièmement en ce que le volume apparent qu'aurait l'ensemble des grains du substrat dont la dimension est inférieure à $d_{60\,1}$ si ils étaient séparés du reste du substrat est inférieur à la porosité totale qu'aurait l'ensemble des grains du substrat dont la dimension est supérieur à $d_{10\,2}$ si ils étaient séparés du reste du substrat.

6. Substrat selon l'une quelconque des revendications 1 à 5, **caractérisé en ce qu'**il comprend au moins un ingrédient dans la famille comportant :

    - des granulats poreux comme du corail ou des minéraux d'origine volcanique comme pierre ponce, zéolithe, pouzzolane, des granulats résilients et notamment des granulats résilients en liège cru ou en liège cuit d'une granulométrie fine entre 500 $\mu$m et 3 mm,
    - des granulats résilients grossiers d'une granulométrie supérieure à 5 mm et pouvant atteindre plusieurs centimètres,
    - des granulats enrobés d'un produit augmentant la cohésion entre grains comme par exemple du latex ou une paraffine, ce produit étant choisi non toxique pour la croissance du gazon et son dosage laissant une place suffisante, compte tenu de la porosité, pour l'eau capillaire nécessaire à la croissance du gazon,
    - un agent mouillant pelliculant certains grains et modifiant les tensions de surface, permettant à la fois une augmentation des forces de cohésion par rapport à celles que l'on aurait dans le même substrat sans agent mouillant et une amélioration de la réserve utile en eau favorable à la culture du gazon,

- des inclusions allongées, visant à bloquer les grains de sable (4) du squelette du substrat, comme par exemple des fibres, naturelles ou artificielles, de préférence souples ou élastiques ou résilientes ou encore des pailles ou même des bandelettes,
- des fibres ayant une capacité d'élongation élastique, visant à permettre au sol soumis à une sollicitation mécanique de se déformer plus et donc d'amortir une plus grande part du choc avant d'être bloqué et visant aussi une restitution d'énergie dans la phase de rebond et un meilleur retour du sol à sa position initiale,
- des fibre (5)s, non tissés ou tissus, constituées de matières synthétiques comme le nylon ou le polypropylène,
- des fibres (5), non tissés ou tissus, constituées de matières naturelles organiques lentement biodégradables qui peuvent être d'origine végétale comme le chanvre, la fibre de coco ou de cacao, le lin, le coton, les fibres de bois ou de chaume, à l'état naturel ou traitées contre une biodégradation rapide, notamment par thermo-modification et en particulier par rétification ou peuvent être d'origine animale comme les cheveux ou poils divers et notamment laine ou crin de cheval,
- des éléments organiques ayant subi un compostage poussé et exempts de mauvaises graines et de résidus toxiques avec une granulométrie fine et homométrique que possible et avec une flore bactérienne aussi riche et active que possible comme par exemple du lombricompost obtenu à partir de fumier de bovin ou encore du lin composté .

**7.** Substrat selon l'une quelconque des revendications 1 à 6, dont la composition vise à permettre aux divers ingrédients de coopérer entre eux pour permettre au substrat de se déplacer dans une première phase puis de se bloquer quand il est soumis à une sollicitation mécanique de cisaillement, de telle sorte que de façon idéale le sol soumis à une sollicitation mécanique bouge dans un premier temps comme en l'absence de inclusions bloquantes allongées (5) et se bloque ensuite par l'effet des inclusions bloquantes allongées (5), grâce à l'effet combiné d'une ou plusieurs des caractéristiques du squelette et des fibres (5) que sont pour les premières la répartition granulométrique, la forme ni anguleuse ni plate des grains (4) ainsi que leur tension de surface et leur coefficient de frottement modéré et que sont pour les secondes primo leurs caractéristiques géométriques par rapport à la géométrie des grains (4), notamment la petite taille des sections de fibres par rapport aux pores du squelette sableux, secundo leurs caractéristiques rhéologiques de capacité d'écrasement ou d'allongement élastique, tertio leurs caractéristiques de surface de rugosité et de tension de surface et quatro leur faible densité pondérale, et **caractérisé en ce qu'**il comprend au moins un mode de coopération entre ingrédients lié à une relation fonctionnelle ou de dosages respectifs entre ingrédients dans la famille comportant les modes suivants:

- mode de coopération entre fibres fines et allongées par rapport aux dimensions des grains du squelette (4) du substrat, de telle sorte que d'une part ces fibres, du fait de leur longueur importante, se trouvent par leur mélange avec les grains du squelette (4) au contact ou au voisinage d'un très grand nombre de ces grains de sable, ces nombreux grains étant ainsi reliés entre eux par les forces qu' ils exercent individuellement sur la fibre en question et les forces de réaction de ladite fibre et que d' autre part la section de la fibre est petite en comparaison de la taille des pores, de sorte qu'une telle fibre s'incorpore dans le substrat en faisant des lacets entre les grains et qu'elle a la place de se déplacer à l'intérieur de la porosité avant d'être plaquée contre un grain lorsqu'elle se tend sous l'effet d'un cisaillement du substrat, ce qui lui laisse un potentiel important d'allongement avant d'être tendue , avant que la dite fibre, une fois tendue, n'exerce par frottement sur les grains à son contact une force de blocage s' opposant à la poursuite du mouvement, du fait de sa propre réaction interne à l'allongement,
- mode de coopération entre fibres fines et allongées par rapport aux dimensions des grains du squelette (4) du substrat, dans lequel au moins 80% des pores du squelette (4) ont une dimension supérieure à 10 fois la section des fibres fines coopérant avec eux,
- mode de coopération entre fibres fines et allongées par rapport aux dimensions des grains du squelette (4) du substrat, dans lequel plus de 30% de la partie (4) du squelette est constituée d'un sable dont la granulométrie est entre 100 $\mu$m à 400 $\mu$m, les fibres ayant un diamètre compris entre 5 $\mu$m et 30 $\mu$m et une longueur entre 3 mm et 100 mm, pour créer des lacets à l'intérieur du sable, la dose des fibres étant comprise entre 5 et 50 grammes/litre de substrat,
- mode de coopération complexe entre sable, éléments grossiers élastiques ou résilients et inclusions bloquantes allongées formant des lacets entre des particules résilientes grossières, dans lequel la mise en tension de ces inclusions bloquantes allongées par l'effet du frottement du sable se déplaçant de façon divergente lors d'un cisaillement passe par l'écrasement préalable de ces particules résilientes,
- mode de coopération entre grosses particules résilientes d'une dimension supérieure à 5 mm et pouvant atteindre plusieurs centimètres et des fibres ou des bandelettes, suffisamment fines et longues par rapport aux particules résilientes et suffisamment nombreuses dans la constitution du substrat du sol, dans lequel lesdites fibres ou bandelettes font des lacets autour de plusieurs de ces grosses particules résilientes lorsque ces fibres ou bandelettes sont mélangées au substrat, de sorte qu' ils doivent écraser ces grosses particules avant de se tendre et de bloquer le substrat,

- mode de coopération entre sable, éventuelles inclusions allongées et inclusions comprennent des fibres ou bandelettes creuses ayant une capacité de travail par compression ou par élongation élastique, dans lequel lesdites fibres ou bandelettes creuses jouent à la fois un rôle de blocage une fois comprimés et allongés et un rôle d'amortisseurs dans la phase de compression élongation et peuvent également coopérer entre elles ou avec des inclusions allongées et travailler en sens inverse par son énergie interne à ramener le sol à sa position initiale,

- mode de coopération entre eau interstitielle, air interstitiel, sable et éventuelles inclusions dans lequel une partie des particules du substrat et en particulier les inclusions, compte tenu d'une combinaison de leur répartition spatiale, de leur faible densité pondérale et de leur caractéristiques de surface et notamment de rugosité et de forte tension de surface se tient dans l'espace essentiellement par des forces de tension de surface sans que la gravité ne les plaque contre les grains au dessous d'eux et n'entraîne un frottement important contre ces grains dès qu' il y a déplacement interne dans le substrat,

- mode de coopération entre eau interstitielle, air interstitiel, particules sableuses (4) du substrat et une éventuelle fraction organique du substrat dans lequel les forces prépondérantes entre éléments solides du substrat sont essentiellement les forces exercées par l'air interstitiel sur l'eau interstitielle attachée au grains par les forces de tension de surface du fait de la répartition granulométrique dans laquelle les rayons des grains sont dans l'ensemble assez petits pour que les forces capillaires de cohésion, approximativement proportionnels pour un diamètre de grain supérieur à 100 $\mu$m à la surface de la sphère, soit $4\pi R^2$ (malgré un coefficient correcteur lié au rayon de courbure) l'emportent sur les forces gravitaires, proportionnelles au volume, soit $4/3 \, \pi R^3$, ces forces de cohésion liées à la capillarité rendant possible, dans une large plage de teneurs en eau excluant l'état sec et l'état saturé, de mouler et faire tenir ce substrat en « pâté de sable » d'une hauteur supérieure à 30 cm par l'effet des seules forces de cohésion liées à la tension capillaire de l'eau sur les particules dudit substrat et que d' autre part ces mêmes grains soient dans l'ensemble assez grands, ronds, peu rugueux et peu angulaires pour que les forces de cohésion capillaires de cohésion de ce substrat sans inclusions et les forces de frottement interne soient assez faibles pour qu'une personne laisse une empreinte de plus de 1 mm en marchant dans un tel substrat épandu en couche de 20 cm sur un fond de forme drainant et tassé et se trouvant à l'état frais c'est à dire avec une teneur en eau obtenue en mouillant abondamment et en attendant que l'eau gravitaire soit évacuée.

8. Substrat selon l'une quelconque des revendications 1 à 7, **caractérisé en ce que** le substrat sans les inclusions bloquantes allongées (5) mais constitué de particules (4) et d'une éventuelle fraction organique a une répartition granulométrique telle que

- d'une part les rayons des grains sont dans l'ensemble assez petits pour que les forces capillaires de cohésion, approximativement proportionnels pour un diamètre de grain supérieur à 100 $\mu$m à la surface de la sphère, soit $4\pi R^2$ (malgré un coefficient correcteur lié au rayon de courbure) l'emportent sur les forces gravitaires, proportionnelles au volume, soit $4/3 \, \pi R^3$, de telle sorte qu'il est possible, dans une large plage de teneurs en eau excluant l'état sec et l'état saturé, de mouler puis démouler et faire tenir ce substrat en « pâté de sable » avec une paroi verticale se tenant par cohésion capillaire sur une hauteur d'au moins 30 cm par l'effet des forces de cohésion liées à la tension capillaire de l'eau sur les particules dudit substrat,

- d'autre part ces mêmes grains soient dans l'ensemble assez grands, ronds, peu rugueux et peu angulaires pour que les forces de cohésion capillaires de cohésion de ce substrat sans inclusions et les forces de frottement interne soient assez faibles pour qu'une personne laisse une empreinte de plus de 1 mm en marchant dans un tel substrat épandu en couche de 20 cm sur un fond de forme drainant et tassé et se trouvant à l'état frais c'est à dire avec une teneur en eau obtenue en mouillant abondamment et en attendant que l'eau gravitaire soit évacuée,

- enfin, la conductivité hydraulique du substrat complet avec ses inclusions est supérieure à 5 cm/heure quand la teneur en eau est supérieure à 90 % de la saturation et supérieure à 2 cm/heure pour une teneur en eau supérieure à 80 % de la saturation.

9. Substrat selon l'une quelconque des revendications 1 à 8, **caractérisé en ce que** la distribution des inclusions bloquantes allongées (5), fibres, non tissés ou tissus obéit à l'une des possibilités suivantes

- les inclusions sont incorporées au substrat de façon individuelle et la distribution spatiale de leur dosage et de leur orientation spatiale dans toutes les directions est uniforme,

- les inclusions bloquantes allongées (5) sont incorporées au substrat, regroupées en paquets et les fibres au sein d'un paquet ne sont pas parallèles et collées les unes aux autres comme dans une mèche mais leur orientation au sein d'un paquet est au contraire bien dispersée dans toutes les directions comme dans une pelote ou une touffe et ces pelotes sont elles même réparties de façon uniforme dans le substrat et suffisamment proches les unes des autres pour se constituer un maillage continu, la distance entre deux pelotes voisines étant faible par rapport à la taille des pelotes ou idéalement nulle en ce sens qu'un réseau continu de fibres permet de relier deux pelotes contiguës de telle sorte que le substrat apparaisse homogène à l'échelle macroscopique de 20 cm, même si la répartition mésoscopique des pelotes apparaît discrète à l'échelle microscopique, de façon comparable aux touffes de gazon qui ont des chevelus séparés les uns des autres mais proches et légèrement enchevêtrés.

**10.** Substrat selon l'une quelconque des revendication 1 à 9 , capable d' amortir un choc par un déplacement interne dans un premier temps malgré les inclusions et de se bloquer avec restitution d'énergie dans un deuxième temps grâce aux inclusions, et **caractérisé en ce que**, si il est épandu sur un fond de forme et sur une surface suffisante pour pouvoir négliger les effets de bord, par exemple 1 mètre carré, et sur une certaine épaisseur représentative d'un substrat de gazon de sol sportif, par exemple 20 cm, puis mouillé et tassé pour simuler une surface sportive et qu'on laisse tomber un mobile d'une certaine hauteur sur cette surface pour observer l'action mécanique de cette surface sur le mobile, on constate, au moins dans certaines conditions expérimentales :

- d'une part, que la distance de décélération $\varepsilon_{max}$ parcourue par le mobile après le contact avec la surface et avant l'annulation de sa vitesse instantanée est au moins égale ou supérieure à la moitié de la distance de décélération du même mobile tombant sur une surface constituée dans les mêmes conditions avec le même substrat mais sans les inclusions bloquantes allongées (5) dans le substrat,
- d'autre part que l'enfoncement résiduel $\varepsilon_{résiduel}$, c'est à dire la distance parcourue par le mobile vers le bas après le contact avec la surface, c'est à dire la distance de décélération $\varepsilon_{max}$, diminuée de la distance de remontée ultérieure du mobile en sens inverse avant immobilisation complète, sous l'effet des forces de restitution d'énergie du sol, est au plus égal ou inférieure à 75% de l'enfoncement résiduel $\varepsilon_{résiduel}$ du même mobile tombant sur une surface constituée dans les mêmes conditions avec le même substrat, mais sans les inclusions bloquantes allongées (5) dans le substrat.

**11.** Substrat (3) selon l'une quelconque des revendications 1 à 10, **caractérisé en ce que** les grosses inclusions résilientes (7) et les inclusions bloquantes allongées (5) forment un seul type d'inclusions en même temps responsables du blocage du système par augmentation du frottement et responsable de l'augmentation du potentiel d'amortissement par un caractère résilient propre.

**12.** Substrat (3) selon l'une quelconque des revendications 1 à 10, **caractérisé en ce que** les grosses inclusions résilientes (7) comprennent au moins des inclusions qui soient en même temps responsables du blocage du système par augmentation du frottement et responsable de l'augmentation du potentiel d'amortissement par un caractère résilient propre.

**13.** Substrat (3) selon l'une quelconque des revendications 1 à 10, **caractérisé en ce que** les inclusions bloquantes allongées (5) sont creuses avec une capacité de travail par compression ou une capacité de travail par élongation élastique, qui jouent à la fois un rôle de blocage une fois comprimées et allongées et un rôle d'amortisseurs dans la phase de compression élongation et qui jouent un rôle de réparation en travaillant en sens inverse en troisième étape après la phase de blocage.

**14.** Substrat (3) selon la revendication 11 ou 12, **caractérisé en ce que** les grosses inclusions résilientes (7) sont choisies parmi :

- des granulés grossiers de liège ou de EPDM coopérant avec des fibres, la quantité de granulés grossiers étant suffisante pour que les fibres se lovent entre ces granulés grossiers et doivent les écraser avant de pouvoir se tendre créant un travail d'absorption

**15.** Substrat (3) selon la revendication 11 ou 13, **caractérisé en ce que** les inclusions bloquantes allongées (5) sont creuses et choisies parmi :

- des « vermicelle » ou des « spaguetti » en liège ou en EPDM qui peuvent à la fois s'écraser sur eux-mêmes et s'étirer avant de se bloquer,
- des « frites » en matière résiliente présentant une capacité d'allongement pour s'écraser sur elles-mêmes avant d'être contraintes lors d'un cisaillement à bloquer le système par frottement après avoir épuisé leur capacité d'allongement et d'écrasement,
- des « macaronis » en matière résiliente comme des pailles ou des chaumes capables de s'écraser sur elles-mêmes avec un potentiel de volume important.

## Patentansprüche

**1.** Substrat (3), das vorgesehen ist, um als Kulturträger für Rasen zu dienen, um eine mechanisch leistungsstarke Rasensportfläche zu bilden, gekennzeichnet

- erstens dadurch, dass es einen ersten Teil von Mineral- oder künstlichen Partikel (4) aufweist, die die Korngröße von Sand haben, wobei diese zwischen 80 $\mu$m und 3 mm beträgt, auch als Körner (4) oder Sandpartikel (4) bezeichnet werden, das Gerüst des Substrats ausbilden und zwischen 25% und 99,9% des Gesamtgewichts des Substrats darstellen,
- zweitens dadurch, dass es mindestens einen zweiten Teil von Partikeln aufweist, die langgestreckte blockierende Einschlüsse sind und (5) und in dieses Gerüst eingemischt und eingearbeitet sind, wobei jeder dieser blockierenden Einschlüsse (5) mindestens eine Abmessung hat, die deutlich größer als die Korngröße der Sandpartikel (4) ist, so dass er benachbart zu oder in Kontakt mit einer Mehrzahl dieser Sandpartikel (4) ist, wobei die Dosierung dieser langgestreckten blockierenden Einschlüsse (5) mindestens gleich 2 Gramm pro Liter Substrat beträgt,
- drittens dadurch, dass das Substrat (3) ferner einen Teil aufweist, der aus dicken federnden Einschlüssen (7) gebildet ist, wobei die federnden Einschlüsse (7) relativ zu den Feinheiten der langgestreckten blockierenden Einschlüsse (5) ausreichend dick sind, relativ zu den Sandpartikeln (4), die das Substrat (3) bilden, ausreichend dick sind, relativ zu der Länge der langgestreckten blockierenden Einschlüsse (5) ausreichend klein sind und in dem Substrat (3) in einer ausreichenden Dosierung vorliegen, damit statistisch herbeigeführt wird, dass irgendeiner der langgestreckten blockierenden Einschlüsse (5), wenn er in das Substrat eingearbeitet ist, in direktem Kontakt oder zumindest in einem indirekten mechanischen Verhältnis zu mehreren der dicken federnden Einschlüsse (7) ist und Windungen machen muss, um mehrere dieser dicken federnden Einschlüsse (7) zu umgehen, und so gemäß dem folgenden Mechanismus direkt mit den dicken federnden Einschlüssen (7) zusammenwirken kann: bei einer Scherbewegung des Substrats (3) wird ein langgestreckter blockierender Einschluss (5) durch die Bewegung gespannt, die an einem Ende des langgestreckten blockierenden Einschlusses (5) in einer Richtung und an seinem anderen Ende in der anderen Richtung zieht, wobei jedoch dieser Spannbewegung der langgestreckten blockierenden Einschlüsse (5) durch die Windungen um mehrere dicke federnde Einschlüsse (7) entgegengewirkt wird, die druckverformt werden müssen, damit sich die langgestreckten blockierenden Einschlüsse (5) unter der Wirkung der Energie spannen können, die durch die langgestreckten blockierenden Einschlüsse (5) auf die dicken federnden Einschlüsse (7) übertragen wird, die so im Kern des Substrats (3) eine Abdämpfungsarbeit erzeugen, die gleich der Widerstandskraft gegenüber dem Druckverformen der dicken federnden Einschlüsse (7) mit der Länge ihres Druckverformens ist,
- viertens dadurch, dass das Substrat einen dritten Teil aufweist, der durch den organischen Anteil des Substrats gebildet ist, der gegebenenfalls fehlen kann und der in jedem Fall einen Volumenanteil von zwischen 0% und 50% des Gesamtvolumens des Substrats repräsentiert, wobei dieser dritte Teil innig mit dem ersten Teil vermischt ist,
- fünftens dadurch, dass das Substrat zumindest für bestimmte Werte des Wassergehalts des Substrats eine innere Kohäsion hat, die mindestens 20% größer als diejenige des gleichen Substrats mit dem gleichen Wassergehalt aber ohne die langgestreckten blockierenden Einschlüsse (5) ist, wobei als klassische Definition der inneren Kohäsion die Scherkraft genommen wird, die auszuüben ist, um eine innere Verschiebung einzuleiten, vermindert um die innere Reibungskraft gemäß der Formel $\sigma = C + (p-U) \sin \alpha$, wobei C die innere Kohäsion ist, $\sigma$ die Scherkraft ist, die erforderlich ist, um die Kohäsionskraft und die Reibungskraft zu überwinden und eine innere Verschiebung zu erzeugen, p der Druck ist, der auf das Substrat ausgeübt wird, U der Porenwasserdruck ist, so dass p-U der innere Druck der gegenseitigen Normalkräfte ist, der durch die Elemente des Substrats aufeinander ausgeübt wird, und $\alpha$ der innere Reibungswinkel ist, der die Reibungskraft proportional zum inneren Druck durch die folgende Coulombsche Formel bestimmt: Reibungskraft = $(p-U) \sin \alpha$,
- sechstens dadurch, dass dieses Substrat, um die Anforderungen zu erfüllen, die hinsichtlich der Wirksamkeit und der Unbedenklichkeit für einen Kulturträger zu erfüllen sind, in dem ein Rasen wachsen soll, der daraus das Wasser und die Nährstoffe herausziehen soll, die er benötigt, aufweist:

= einerseits eine Konzentration aus löslichen chemischen Elementen, die kleiner als die durch die Normen für Kulturträger bestimmten Schwellenwerte ist, insbesondere für die Produkte, von denen bekannt ist, dass sie für Rasen toxisch sind, wobei es sich hierbei um Simazin, Atrazin, Kreosot, Phenolsäuren, Gerbsäuren, Natriumchlorid und Bor handelt, und

= andererseits einen Wert von größer als 7% für seinen Wassereinlagerungs-Volumenkoeffizienten, der gegebenenfalls um den Volumenkoeffizienten bezüglich der Besetzung durch eventuelle Substanzen verringert ist, die sich in dem Substrat befinden und in der Porosität den normalen Platz von Kapillarwasser einnehmen, wie zum Beispiel Öl oder Paraffin, die klassischerweise verwendet werden, um die Kohäsion von Sportböden aus nicht mit Rasen begrüntem Fasersand zu erhöhen, wobei dieser sichtbare Wassereinlagerungs-Koeffizient pro Volumeneinheit von Substrat gleich der Gesamtporosität des Substrats verringert um die Wasserabführungsporosität ist, wobei letztere ihrerseits pro Volumeneinheit gleich dem Volumen von durch Schwerkraft abgeführtem Wasser ist.

2. Substrat gemäß Anspruch 1, gekennzeichnet einerseits dadurch, dass die langgestreckten blockierenden Einschlüsse (5) des Substrats in der Lage sind, das Substrat, das einer Scherbeanspruchung unterworfen ist, durch die kombinierte Wirkung ihrer inneren Widerstandsfähigkeit gegenüber der Kompression und der Dehnung sowie Reibungskräften, die diese aufeinander und auf die Körner (4) des Sandgerüstes des Substrats ausüben können, zu blockieren, so dass das Substrat bestimmten Scherbeanspruchungen standhält, während das gleiche Substrat unter den gleichen Bedingungen aber ohne langgestreckte blockierende Einschlüsse (5) diesen nicht standhält,

- andererseits dadurch, dass, wenn das Substrat einer mechanischen Scherbeanspruchung unterworfen wird, diese langgestreckten blockierenden Einschlüsse (5) während einer ersten Phase beginnen, sich in der Richtung der Dehnung im Inneren des Sandgerüsts (4) zu verformen, bevor sie unter Spannung gesetzt werden und bevor ihr unter-Spannung-Setzen zu einer Scher-Gegenkraft des Substrats führt, so dass das Verhältnis $\Sigma_i |\varepsilon_i| / \Sigma_i |f_i|$ zwischen der Summe der absoluten Werte dieser Verformungen von langgestreckten blockierenden Einschlüssen (5) und der Summe der positiven Gegenscherkräfte, die sich durch eben diese langestreckten blockierenden Einschlüsse (5) durch den kombinierten Effekt ihrer inneren Widerstandskraft gegenüber der Dehnung und ihrer Reibung auf dem Sandgerüst (4) entwickeln, mindestens um das Zehnfache größer als das gleiche Verhältnis mit einem klassischen Fasersubstrat ist, das aus einem Sand gebildet ist, in den nichtelastische Fasern eingearbeitet sind, deren Querschnitt größer als die mittlere Porosität dieses Sandes ist, wobei die Verformung $\varepsilon_i$ einer Faser oder eines Streifens (5) wie der Anstieg zwischen dem Anfangsruhezustand und dem Zustand im Augenblick t der maximalen Entfernung zwischen den beiden am weitesten entfernten Punkten dieser Faser oder dieses Streifens (5) definiert wird, wobei diese Verformung somit dann ansteigt, wenn eine Faser in der Windung gespannt wird oder wenn eine elastische Faser gedehnt wird.

3. Substrat gemäß Anspruch 1 oder 2, **dadurch gekennzeichnet, dass** der erste Teil von Partikeln (4):

- praktisch frei von Feinanteilen in Form von Lehm oder Ton ist, wobei die mineralischen Partikel mit einer Abmessung von kleiner als 20 $\mu$m mindestens 5 Gew.-% des Substrats darstellen, und
- mindestens 30 Gew.-% und bis zu 100 Gew.-% eines Sandes aufweist,
- dessen Korngröße zwischen 200 $\mu$m und 400 $\mu$m beträgt,
- dessen Härtekoeffizient größer als 6 Mohs ist,
- dessen Form sich soweit wie möglich der sphärischen und glatten Form annähert, mit einem Kugelgestaltkoeffizienten zwischen 1 und 1,1, wobei dieser Kugelgestaltkoeffizient das mittlere Verhältnis zwischen der realen Oberfläche eines Korns und der Oberfläche der Kugelgestalt mit dem gleichen Volumen repräsentiert.

4. Substrat gemäß irgendeinem der Ansprüche 1 bis 3, gekennzeichnet

- erstens dadurch, dass es eine Unterteilung der Gesamtheit der Korngrößenabmessungen seiner Mineralpartikel (4) in ein oder n getrennte Intervalle $I_1$ gibt, wobei i von 1 bis n geht und n größer oder gleich 1 ist, was bedeutet, dass jedes Korn seine Korngrößenabmessung hat, die lediglich zu einem dieser Intervalle $I_i$ gehört,
- zweitens dadurch, dass in mindestens einem dieser Intervalle $I_1$ die Korngröße auf relativ homometrische Weise um eine isolierte Spitze mit der Abmessung $\lambda_i$ verteilt ist, mit einerseits einem Einheitlichkeitskoeffizienten von kleiner oder gleich 1,5 in der Gesamtheit der Partikel, deren Korngrößenabmessung im Intervall $I_1$ liegt, wobei dieser Koeffizient durch das Verhältnis $d_{60\,i} / d_{10\,i}$ definiert ist, wobei $d_{60\,i}$ die Öffnung der Maschen ist, die 60 % der Körner durchlassen, deren Korngrößenabmessung im Intervall $I_1$ ist, und $d_{10\,i}$ die Öffnung der Maschen ist, die nur 10% der Körner durchlassen, deren Korngrößenabmessung im Intervall $I_1$ liegt, und mit andererseits dem Intervall $[2/3\,d1_{0\,i},\ 1/5\,d_{60\,i}]$, das im Intervall $I_1$ enthalten ist.

**5.** Substrat gemäß Anspruch 4, gekennzeichnet

- erstens dadurch, dass es eine Unterteilung der Gesamtheit der Korngrößenabmessungen seiner Mineralpartikel (4) in n getrennte Intervalle $I_1$ gibt, wobei i von 1 bis n geht und n größer oder gleich 2 ist, was bedeutet, dass jedes Korn seine Korngrößenabmessung hat, die lediglich zu einem einzigen dieser Intervalle $I_1$ gehört,
- zweitens dadurch, dass in mindestens zwei dieser Intervalle Ii, die als $I_1$ und $I_2$ bezeichnet werden können, wobei die Indexierung so gewählt ist, dass die Elemente von $I_2$ größer als die von $I_1$ sind, die Korngröße auf homometrische Weise um eine isolierte Spitze mit der Abmessung $\lambda_i$ verteilt ist, mit einerseits, für i=1 und für i=2, einem Einheitlichkeitskoeffizienten von kleiner oder gleich 1,5 in der Gesamtheit der Partikel, deren Korngrößenabmessung im Intervall $I_1$ liegt, und mit andererseits, für i=1 und für
i=2, dem Intervall $[2/3\ d_{10\ i},\ 1/5\ d_{60\ i}]$, das im Intervall $I_i$ enthalten ist,
- drittens dadurch, dass $\lambda_2 > 4\ \lambda_1$, so dass ein oder mehrere Partikel, deren Korngrößenabmessung im Intervall Ii liegt, in die Porosität eintreten können, die durch die Partikel gebildet ist, deren Korngrößenabmessung im Intervall $I_2$ liegt, viertens dadurch, dass das sichtbare Volumen, das die Gesamtheit der Körner des Substrats hätte, deren Abmessung kleiner als $d_{60\ 1}$ ist, wenn sie von dem Rest des Substrats getrennt wären, kleiner als die Gesamtporosität ist, die die Gesamtheit der Körner des Substrats hätte, deren Abmessung größer als $d_{10\ 2}$ ist, wenn sie von dem Rest des Substrats getrennt wären.

**6.** Substrat gemäß irgendeinem der Ansprüche 1 bis 5, **dadurch gekennzeichnet, dass** es mindestens einen Bestandteil aus der Familie aufweist, die aufweist:

- poröse Granulate, wie Koralle, oder Minerale vulkanischen Ursprungs, wie Bimsstein, Zeolith, Puzzolan, federnde Granulate und insbesondere federnde Granulate aus rohem Kork oder gebackenem Kork mit einer feinen Korngröße zwischen 500 $\mu$m und 3 mm,
- grobkörnige federnde Granulate mit einer Korngröße von größer als 5 mm, die ferner mehrere Zentimeter erreichen kann,
- Granulate, die mit einem Produkt überzogen sind, das die Kohäsion zwischen Körnern erhöht, wie zum Beispiel Latex oder Paraffin, wobei das Produkt als nicht toxisch für das Wachstum von Rasen ausgewählt ist und seine Dosierung unter Berücksichtigung der Porosität ausreichend Platz für das Kapillarwasser lässt, das für das Wachstum des Rasens erforderlich ist,
- ein Benetzungsmittel, das bestimmte Körner überzieht und die Oberflächenspannungen modifiziert, wobei gleichzeitig eine Erhöhung der Kohäsionskräfte relativ zu denjenigen, die in dem gleichen Substrat ohne Benetzungsmittel vorhanden wären, sowie eine die Kultur des Rasens begünstigende Verbesserung der nützlichen Wasserreserven ermöglicht werden,
- langgestreckte Einschlüsse, die darauf abzielen, die Sandkörner (4) des Gerüsts des Substrats zu blockieren, wie zum Beispiel Natur- oder Kunstfasern, die vorzugsweise biegsam oder elastisch oder federnd sind, oder Strohalme oder sogar Streifen,
- Fasern mit einer elastischen Dehnfähigkeit, die darauf abzielen zu ermöglichen, dass sich der Boden, der einer mechanischen Beanspruchung unterworfen ist, mehr verformt und somit vor einem Blockieren einen größeren Teil des Stoßes dämpft, und ferner auf eine Wiederherstellung von Energie in der Rückprallphase und ein verbessertes Zurückkehren des Bodens in seine Anfangsposition abzielen,
- Fasern (5), Vliesstoff oder Gewebe, die aus synthetischen Stoffen, wie zum Beispiel Nylon oder Polypropylen gebildet sind,
- Fasern (5), Vliesstoff oder Gewebe, die aus natürlichen organischen langsam biologisch abbaubaren Stoffen gebildet sind, die pflanzlichen Ursprungs sein können, wie Hanf, Kokosfaser oder Kakaofaser, Flachs, Baumwolle, Holz- oder Strohfasern, im natürlichen Zustand oder gegen eine schnelle biologische Abbaubarkeit behandelt, insbesondere durch Thermomodifizierung und insbesondere durch Vernetzung, oder die tierischen Ursprungs sein können, wie verschiedene Haare oder Härchen und insbesondere Wolle oder Pferdehaar,
- organische Elemente, die einer gründlichen Kompostierung unterzogen wurden und frei von schlechten Körnern und von toxischen Rückständen sind, mit einer möglichst feinen und homometrischen Korngröße und mit einer möglichst reichen und aktiven Bakterienflora, wie zum Beispiel Wurmkompost, der aus Kuhmist erhalten wird, oder auch kompostierter Flachs.

**7.** Substrat gemäß irgendeinem der Ansprüche 1 bis 6, dessen Zusammensetzung darauf abzielt, den verschiedenen Inhaltsstoffen ein Zusammenwirken untereinander zu ermöglichen, um dem Substrat zu ermöglichen, sich in einer ersten Phase zu verlagern, dann zu blockieren, wenn es einer mechanischen Scherbeanspruchung unterworfen wird, so dass sich idealerweise der Boden, der einer mechanischen Beanspruchung unterworfen wird, in einem ersten Zeitraum wie in Abwesenheit von langgestreckten blockierenden Einschlüssen (5) bewegt und anschließend durch die Wirkung der langgestreckten blockierenden Einschlüsse (5) blockiert, dank der kombinierten Wirkung von einer oder mehreren der Eigenschaften des Gerüsts und der Fasern (5), die für erstere die Korngrößenverteilung, die weder eckige noch flache Form der Körner (4) sowie ihre Oberflächenspannung und ihr gemäßigter Reibungskoeffizient sind, und die für zweitere erstens ihre geometrischen Eigenschaften in Bezug auf die Geometrie der Körner (4), insbesondere die kleine Größe der Faserquerschnitte in Bezug zu den Poren des Sandgerüsts, zweitens ihre rheologischen Zusammendrückfähigkeit- oder elastische-Dehnfähigkeit-Eigenschaften, drittens ihre Eigenschaften in Bezug auf die Oberflächenrauigkeit und die Oberflächenspannung und viertens ihre geringe Gewichtsdichte sind, und **dadurch gekennzeichnet, dass** es mindestens eine Art des Zusammenwirkens zwischen Inhaltsstoffen aufweist, die mit einer funktionellen Beziehung oder jeweiligen Dosierungen zwischen Inhaltsstoffen in der Familie verbunden ist, die folgenden Arten aufweisend:

- eine Art des Zusammenwirkens zwischen feinen und langgestreckten Fasern bezüglich der Abmessungen der Körner des Gerüsts (4) des Substrats, derart, dass einerseits diese Fasern aufgrund ihrer beträchtlichen Länge durch ihre Vermischung mit den Körnern des Gerüsts (4) in Kontakt mit oder benachbart zu einer sehr großen Anzahl dieser Sandkörner sind, wobei diese zahlreichen Körner somit durch die Kräfte, die sie einzeln auf die betreffende Faser ausüben, und durch die Reaktionskräfte der Faser miteinander verbunden sind, und andererseits der Querschnitt der Faser im Vergleich zu der Porengröße klein ist, so dass sich eine derartige Faser in das Substrat einfügt, wobei sie Windungen zwischen den Körnern ausbildet, und den Platz hat, sich innerhalb der Porosität vor einem Plattieren gegen ein Korn zu verlagern, wenn sie unter der Wirkung einer Scherung des Substrats gespannt wird, was ihr ein beträchtliches Dehnungspotential vor dem Spannen lässt, bevor die Faser, wenn sie einmal gespannt ist, durch Reibung auf die Körner in Kontakt damit eine Blockierkraft ausübt, die dem Fortsetzen der Bewegung entgegenwirkt, aufgrund ihrer eigenen inneren Reaktion auf die Dehnung,

- eine Art des Zusammenwirkens zwischen feinen und langgestreckten Fasern bezüglich der Abmessungen der Körner des Gerüsts (4) des Substrats, wobei mindestens 80% der Poren des Gerüsts (4) eine Abmessung haben, die um das Zehnfache größer als der Querschnitt der feinen Fasern ist, die mit diesen zusammenwirken,

- eine Art des Zusammenwirkens zwischen feinen und langgestreckten Fasern bezüglich der Abmessungen der Körner des Gerüsts (4) des Substrats, wobei mehr als 30% des Teils (4) des Gerüsts aus einem Sand gebildet ist, dessen Korngröße zwischen 100 $\mu$m bis 400 $\mu$m liegt, wobei die Fasern einen Durchmesser, der zwischen 5 $\mu$m und 30 $\mu$m liegt, und eine Länge zwischen 3 mm und 100 mm haben, um Windungen im Inneren des Sandes zu erzeugen, wobei die Dosis der Fasern zwischen 5 und 50 Gramm/Liter Substrat beträgt,

- eine Art des komplexen Zusammenwirkens zwischen Sand, grobkörnigen elastischen oder federnden Elementen und langgestreckten blockierenden Einschlüssen, die Windungen zwischen grobkörnigen federnden Partikeln bilden, wobei das unter-Spannung-Setzen dieser langgestreckten blockierenden Einschlüsse durch die Wirkung der Reibung des Sandes, die sich bei einer Scherung auf divergierende Weise verlagern, durch das vorangehende Druckverformen dieser federnden Partikel erfolgt,

- eine Art des Zusammenwirkens zwischen dicken federnden Partikeln mit einer Abmessung von größer als 5 mm und die mehrere Zentimeter erreichen kann, und Fasern oder Streifen, die relativ zu den federnden Partikeln ausreichend fein und lang und ausreichend zahlreich in der Beschaffenheit des Substrats des Bodens sind, wobei die Fasern oder Streifen Windungen um mehrere dieser dicken federnden Partikel machen, wenn diese Fasern oder Streifen mit dem Substrat vermischt sind, so dass sie diese dicken Partikel vor dem Dehnen und Blockieren des Substrats druckverformen müssen,

- eine Art des Zusammenwirkens zwischen Sand, etwaigen langgestreckten Einschlüssen und Einschlüssen, die hohle Fasern oder Streifen aufweisen, die eine Arbeitskapazität durch Kompression oder durch elastische Dehnung haben, wobei die hohlen Fasern oder Streifen gleichzeitig eine Rolle des Blockierens, sobald sie komprimiert und langgestreckt sind, und in der Dehnungs-Kompressions-Phase eine Abdämpferrolle spielen und ferner untereinander oder mit langgestreckten Einschlüssen zusammenwirken können und durch ihre innere Energie in entgegengesetzter Richtung arbeiten können, um den Boden in seine Anfangsposition zurückzuführen,

- eine Art des Zusammenwirkens zwischen Porenwasser, Porenluft, Sand und etwaigen Einschlüssen, wobei sich ein Teil der Partikel des Substrats und insbesondere die Einschlüsse, unter Berücksichtigung einer Kombination ihrer räumlichen Verteilung, ihrer geringen Gewichtsdichte und ihrer Oberflächen- und insbesondere Rauigkeitseigenschaften und der starken Oberflächenspannung im Wesentlichen durch Oberflächenspannungskräfte im Raum hält, ohne dass die Schwerkraft diese gegen die Körner unter ihnen plattiert und eine starke Reibung gegen diese Körner bewirkt, sobald es eine innere Verlagerung im Substrat gibt,

- eine Art des Zusammenwirkens zwischen Porenwasser, Porenluft, Sandpartikeln (4) des Substrats und einem möglichen organischen Anteil des Substrats, wobei die wesentlichen Kräfte zwischen festen Elementen des Substrats im Wesentlichen die Kräfte sind, die durch die Porenluft auf das Porenwasser ausgeübt werden, das durch die Oberflächenspannungskräfte an den Körnern anhaftet, aufgrund der Korngrößenverteilung, bei der die Radien der Körner in der Gesamtheit ausreichend klein sind, damit die Kapillarkohäsionskräfte, die für einen Korndurchmesser von größer als 100 $\mu$m an der Oberfläche der Kugel annähernd proportional sind, nämlich $4\pi R^2$ (trotz eines Berichtigungskoeffizienten, der mit dem Krümmungsradius verbunden ist) die Gravitationskräfte übertreffen, die proportional zum Volumen sind, nämlich $4/3\,\pi R^3$, wobei diese mit der Kapillarität verbundenen Kohäsionskräfte in einem großen Wassergehaltsbereich unter Ausschluss des Trockenzustands und des Sättigungszustands ein Formen und Haltenlassen des Substrats als "Sandpaste" mit einer Höhe von größer als 30 cm einzig durch die Wirkung der Kohäsionskräfte ermöglichen, die mit der Kapillarspannung des Wassers auf den Partikeln des Substrats verbunden sind, und andererseits eben diese Körner in der Gesamtheit ausreichend groß, rund, wenig rau und wenig eckig sind, damit die Kapillarkohäsionskräfte zur Kohäsion dieses Substrats ohne Einschlüsse und die inneren Reibungskräfte ausreichend gering sind, damit eine Person einen Abdruck von mehr als 1 mm bei einem Gehen in einem derartigen Substrat hinterlässt, das in einer Schicht von 20 cm auf einem Boden in wasserdurchlässiger und zusammengepresster Form ausgebracht ist und sich in frischem Zustand befindet, d.h. mit einem Wassergehalt, der durch ausgiebiges Bewässern und Warten darauf erhalten wird, dass das Gravitationswasser abgeleitet wird.

8. Substrat gemäß irgendeinem der Ansprüche 1 bis 7, **dadurch gekennzeichnet, dass** das Substrat ohne die langgestreckten blockierenden Einschlüsse (5), das jedoch aus Partikeln (4) und einem potentiellen organischen Anteil gebildet ist, eine derartige Korngrößenverteilung hat, dass

- einerseits die Radien der Körner in der Gesamtheit ausreichend klein sind, damit die Kapillarkohäsionskräfte, die für einen Korndurchmesser von größer als 100 $\mu$m an der Oberfläche der Kugel annähernd proportional sind, nämlich $4\pi R^2$ (trotz eines Berichtigungskoeffizienten, der mit dem Krümmungsradius verbunden ist), die Gravitationskräfte, die proportional zum Volumen sind, nämlich $4/3\pi R^3$, übertreffen, so dass es möglich ist, in einem großen Wassergehaltsbereich unter Ausschluss des Trockenzustands und des Sättigungszustands dieses Substrat als "Sandpaste" zu formen, anschließend zu entformen und halten zu lassen mit einer vertikalen Wand, die sich durch kapillare Kohäsion auf einer Höhe von mindestens 30 cm durch die Wirkung der Kohäsionskräfte hält, die mit der Kapillarspannung des Wassers auf den Partikeln des Substrats verbunden sind,
- andererseits eben diese Körner in der Gesamtheit ausreichend groß, rund, wenig rau und wenig eckig sind, damit die Kapillarkohäsionskräfte zur Kohäsion dieses Substrats ohne Einschlüsse und die inneren Reibungskräfte ausreichend gering sind, damit eine Person einen Abdruck von mehr als 1 mm beim Gehen in einem derartigen Substrat zurücklässt, das als Schicht von 20 cm auf einem Boden in wasserdurchlässiger und zusammengepresster ausgebracht ist und sich im frischen Zustand befindet, d.h. mit einem Wassergehalt, der durch ausgiebiges Bewässern und Warten darauf, dass das Gravitationswasser abgeleitet wird, erhalten wird,
- schließlich die hydraulische Leitfähigkeit des vollständigen Substrats mit seinen Einschlüssen größer als 5 cm/Stunde ist, wenn der Wassergehalt größer als 90% der Sättigung ist, und für einen Wassergehalt von größer als 80 % der Sättigung größer als 2 cm/Stunde ist.

9. Substrat gemäß irgendeinem der Ansprüche 1 bis 8, **dadurch gekennzeichnet, dass** die Verteilung der langgestreckten blockierenden Einschlüsse (5), Fasern, Vliesstoffe oder Gewebe, einer der folgenden Möglichkeiten gehorcht:

- die Einschlüsse sind in das Substrat auf individuelle Weise eingearbeitet und die räumliche Verteilung ihrer Dosierung und ihrer räumlichen Ausrichtung in allen Richtungen ist gleichmäßig,
- die langgestreckten blockierenden Einschlüsse (5) sind in das Substrat eingearbeitet, in Paketen gruppiert, und die Fasern innerhalb eines Pakets sind nicht parallel und aneinander geklebt wie in einem Netz, sondern ihre Ausrichtung innerhalb eines Pakets ist im Gegenteil in allen Richtungen gut verteilt, wie in einem Knäuel oder einem Büschel, und diese Knäuel selbst sind auf gleichmäßige Weise in dem Substrat verteilt und liegen ausreichend nahe beieinander, um ein durchgehendes Netz auszubilden, wobei der Abstand zwischen zwei benachbarten Knäueln relativ zu der Größe der Knäuel gering ist oder idealerweise Null beträgt, insofern als ein durchgehendes Netz von Fasern ein Verbinden von zwei aneinandergrenzenden Knäueln miteinander ermöglicht, so dass das Substrat auf makroskopischer Ebene von 20 cm homogen erscheint, selbst wenn die mesoskopische Verteilung der Knäuel auf mikroskopischer Ebene diskret erscheint, in einer Weise, die mit den Grasbüscheln vergleichbar ist, die voneinander getrennte, jedoch nahe und leicht miteinander verflochtene Wurzelwerke haben.

10. Substrat gemäß irgendeinem der Ansprüche 1 bis 9, das in der Lage ist, einen Stoß durch eine innere Verlagerung in einem ersten Zeitraum trotz der Einschlüsse zu dämpfen und in einem zweiten Zeitraum dank der Einschlüsse mit Energierückgewinnung zu blockieren, und **dadurch gekennzeichnet, dass**, wenn es auf einem Boden mit einer Form und auf einer Oberfläche, die ausreicht, um die Randeffekte zu vernachlässigen, zum Beispiel 1 Quadratmeter, und über eine bestimmte Dicke, die für ein Rasensubstrat für einen Sportboden repräsentativ ist, zum Beispiel 20 cm, ausgebracht ist, anschließend benetzt und zusammengedrückt wird, um eine Sportfläche zu simulieren, und dann ein Mobilgerät aus einer bestimmten Höhe auf diese Sportfläche fallengelassen wird, um die mechanische Wirkung dieser Oberfläche auf das Mobilgerät zu beobachten, zumindest unter bestimmten experimentellen Bedingungen folgendes festzustellen ist:

- einerseits, dass die Verzögerungsdistanz $\varepsilon_{max}$, die von dem Mobilgerät nach dem Kontakt mit der Oberfläche und vor der Aufhebung seiner momentanen Geschwindigkeit zurückgelegt wird, mindestens größer oder gleich der Hälfte der Verzögerungsdistanz desselben Mobilgeräts ist, das auf eine Oberfläche fällt, die unter den gleichen Bedingungen mit dem gleichen Substrat, jedoch ohne die langgestreckten blockierenden Einschlüsse (5) in dem Substrat ausgebildet ist,
- andererseits, dass das restliche Einsinken $\varepsilon_{Rest}$, d.h. die von dem Mobilgerät nach dem Kontakt mit der Oberfläche nach unten zurückgelegte Entfernung, d.h. die Verzögerungsdistanz $\varepsilon_{max}$ minus der anschließenden Aufwärtsbewegungsentfernung des Mobilgeräts in der Gegenrichtung vor der vollständigen Immobilisierung unter der Einwirkung der Energierückgewinnungskräfte des Bodens höchstens kleiner oder gleich 75% des restlichen Einsinkens $\varepsilon_{Rest}$ des gleichen Mobilgeräts ist, das auf eine Fläche fällt, die unter den gleichen Bedingungen mit dem gleichen Substrat, jedoch ohne die langgestreckten blockierenden Einschlüsse (5) in dem Substrat ausgebildet ist.

**11.** Substrat (3) gemäß irgendeinem der Ansprüche 1 bis 10, **dadurch gekennzeichnet, dass** die dicken federnden Einschlüsse (7) und die langgestreckten blockierenden Einschlüsse (5) einen einzigen Typ von Einschlüssen ausbilden, die gleichzeitig für das Blockieren des Systems durch Erhöhung der Reibung verantwortlich sind, und für die Erhöhung des Dämpfungspotentials durch ein eigenes Federungsmerkmal verantwortlich sind.

**12.** Substrat (3) gemäß irgendeinem der Ansprüche 1 bis 10, **dadurch gekennzeichnet, dass** die dicken federnden Einschlüsse (7) mindestens Einschlüsse aufweisen, die gleichzeitig für das Blockieren des Systems durch Erhöhung der Reibung verantwortlich sind, und für die Erhöhung des Dämpfungspotentials durch ein eigenes Federungsmerkmal verantwortlich sind.

**13.** Substrat (3) gemäß irgendeinem der Ansprüche 1 bis 10, **dadurch gekennzeichnet, dass** die langgestreckten blockierenden Einschlüsse (5) hohl sind, mit einer Arbeitsfähigkeit durch Kompression oder einer Arbeitsfähigkeit durch elastische Dehnung, die gleichzeitig, sobald sie komprimiert und gedehnt sind, eine Blockierrolle, und in der Kompressions-Dehnungs-Phase eine Abdämpfungsrolle spielen, und die eine Wiederherstellungsrolle spielen, indem sie im dritten Schritt nach der Blockierphase in der Gegenrichtung arbeiten.

**14.** Substrat (3) gemäß Anspruch 11 oder 12, **dadurch gekennzeichnet, dass** die dicken federnden Einschlüsse (7) ausgewählt sind aus:

- grobkörnigen Granulaten aus Kork oder EPDM, die mit Fasern zusammenwirken, wobei die Menge an grobkörnigen Granulaten ausreicht, damit sich die Fasern zwischen diese grobkörnigen Granulate schmiegen und diese druckverformen müssen, bevor sie gespannt werden können, wobei eine Absorptionsarbeit erzeugt wird.

**15.** Substrat (3) gemäß den Ansprüchen 11 oder 13, **dadurch gekennzeichnet, dass** die langgestreckten blockierenden Einschlüsse (5) hohl sind und ausgewählt sind aus:

- "Fadennudeln" oder "Spagetti" aus Flachs oder aus EPDM, die gleichzeitig aufeinander druckverformt werden können und vor dem Blockieren gedehnt werden können,
- "Pommes frites" aus einem federnden Material mit einer Dehnfähigkeit, um vor einer Beanspruchung bei einer Scherung aufeinander druckverformt werden zu können, zum Blockieren des Systems durch Reibung nach dem Aufbrauchen ihrer Dehn- und Zusammendrückfähigkeit,
- "Makkaroni" aus einem federnden Material, wie Trinkhalme oder Stroh, die in der Lage sind, mit einem beträchtlichen Volumenpotential aufeinander druckverformt zu werden.

**Claims**

1.  Substrate (3) which is to serve as a growth medium for turf in order to constitute a mechanically high-performance turfed sports surface, characterised:

    - firstly, in that it comprises a first part of mineral or artificial particles (4) having the grain size of a sand, also called grains (4) or sandy particles (4), of between 80 $\mu$m and 3 mm, constituting the skeleton of the substrate and representing between 25% and 99.9% of the total weight of the substrate,
    - secondly, in that it comprises at least a second part of particles which are elongate immobilising inclusions (5) and are mixed with and incorporated into said skeleton, each of said immobilising inclusions (5) having at least one of its dimensions substantially larger than the grain size of the sandy particles (4), so that it is in proximity to or in contact with a plurality of said sandy particles (4), the quantity of said elongate immobilising inclusions (5) being at least equal to 2 grams per litre of substrate,
    - thirdly, in that the substrate (3) also comprises a part composed of large resilient inclusions (7), said resilient inclusions (7) being sufficiently large relative to the fineness of the elongate immobilising inclusions (5), sufficiently large relative to the sandy particles (4) of which the substrate (3) is composed, sufficiently small relative to the length of the elongate immobilising inclusions (5) and present in a sufficient quantity in the substrate (3) that any one of the elongate immobilising inclusions (5), when it is incorporated into the substrate, is statistically brought to be in direct contact or at least in indirect mechanical relation with a plurality of said large resilient inclusions (7) and to have to form loops in order to circumvent a plurality of said large resilient inclusions (7) and is thus able to cooperate with said large resilient inclusions (7) in accordance with the following mechanism: When there is a shear movement of the substrate (3), an elongate immobilising inclusion (5) is tensioned by the movement, which pulls one end of said elongate immobilising inclusion (5) in one direction and its other end in the other direction, but this tensioning movement of said elongate immobilising inclusions (5) is impeded by the loops around a plurality of large resilient inclusions (7), which will have to be crushed, in order that said elongate immobilising inclusions (5) can be tensioned, under the effect of the energy transmitted by said elongate immobilising inclusions (5) to said large resilient inclusions (7), which thus generate within the substrate (3) a cushioning work equal to the force of resistance to crushing of said large resilient inclusions (7) by the length of their crushing,
    - fourthly, in that the substrate comprises a third part constituted by the organic fraction of the substrate, which may optionally be absent and which in any case represents a proportion by volume of between 0% and 50% of the total volume of the substrate, this third part being intimately mixed with the first part,
    - fifthly, in that the substrate has, at least for some values of the water content of the substrate, an internal cohesion which is greater by at least 20% than that of the same substrate with the same water content but without the elongate immobilising inclusions (5), taking as the conventional definition of internal cohesion the shear force to be exerted in order to start internal sliding less the internal friction force according to the formula $\sigma = C + (p - U) \sin \alpha$, where C is the internal cohesion, $\sigma$ being the shear force necessary to overcome the cohesive and friction forces and create internal sliding, p being the pressure exerted on the substrate, U being the interstitial water pressure, so that p - U is the internal pressure of the reciprocal normal forces that is exerted by the elements of the substrate on one another, and $\alpha$ being the internal friction angle which determines the friction force, proportional to the internal pressure by Coulomb's formula: friction force = $(p - U) \sin \alpha$,
    - sixthly, in that the substrate, in order to meet the demands required in terms of efficiency and safety for a growth medium in which there must grow a turf which must draw water and the nutrients it needs therefrom, has

        = on the one hand, a concentration of soluble chemical elements below the thresholds determined by the growth medium standards, especially for the products that are known to be toxic to turf, which are simazine, atrazine, creosote, phenolic acids, tannic acids, sodium chloride and boron, and has
        = on the other hand, a value greater than 7% for its volume coefficient of water retention less, where appropriate, the volume coefficient of occupation by any substances present in the substrate and occupying in the pore space the normal place of capillary water, such as, for example, oil or paraffin, which are conventionally used to increase the cohesion of non-turfed fibre-sand sports grounds, this coefficient of water retention per unit of apparent volume of substrate being equal to the total porosity of the substrate less the drainage porosity, the latter itself being equal, per unit volume, to the volume of water drained by gravity.

2.  Substrate according to claim 1, characterised: on the one hand, in that the elongate immobilising inclusions (5) of the substrate are capable of immobilising said substrate subjected to a shear force by the combined effect of their internal resistance to compression and elongation and the friction forces which they are able to exert between themselves and on the grains (4) of the sandy skeleton of the substrate, so that the substrate withstands certain shear forces, while the same substrate under the same conditions but without the elongate immobilising inclusions (5) does not withstand those forces,

- on the other hand, in that, when the substrate is subjected to mechanical shear stress, the elongate immobilising inclusions (5) begin during a first phase by deforming in the direction of elongation inside the sandy skeleton (4) before they are tensioned and their tensioning leads to a force of opposition to the shear of the substrate, such that the ratio $\sum_i |\varepsilon_i|/\sum_i |f_i|$ between the sum of the absolute values of these deformations of elongate immobilising inclusions (5) and the sum of the positive forces of opposition to shear developed by those same elongate immobilising inclusions (5) by the combined effect of their internal resistance to elongation and their friction on the sandy skeleton (4) is at least 10 times greater than the same ratio with a conventional fibre substrate composed of a sand in which there are incorporated non-elastic fibres whose cross-section is greater than the mean porosity of said sand, the deformation $\varepsilon_i$ of a fibre or strip (5) being defined as the increase between the initial state at rest and the state at time t of the maximum distance between the two furthermost points of said fibre or strip (5), this deformation therefore increasing when a looped fibre is tensioned or when an elastic fibre stretches.

3. Substrate according to claim 1 or 2, **characterised in that** the first part of particles (4):

- is virtually free of fines in the form of silt or clay, mineral particles having a size of less than 20 $\mu$m representing less than 5% by weight of the substrate, and
- comprises at least 30% and up to 100% by weight of a sand:
- the grain size of which is between 200 $\mu$m and 400 $\mu$m,
- the coefficient of hardness of which is greater than 6 Mohs,
- the shape of which is as close as possible to a spherical shape and is smooth, with a sphericity coefficient between 1 and 1.1, said sphericity coefficient representing the mean ratio between the actual surface area of a grain and the surface area of the sphere having the same volume.

4. Substrate according to any one of claims 1 to 3, characterised

- firstly, in that there is a partitioning of the totality of the grain sizes of its mineral particles (4) into one or n disjoint intervals $I_1$, i ranging from 1 to n and n being greater than or equal to 1, which means that each grain has its grain size which belongs to one and only one of said intervals $I_i$, - secondly, in that, in at least one of said intervals $I_1$, the grain size is distributed relatively homometrically about an isolated peak of size $\lambda_i$, with on the one hand a uniformity coefficient less than or equal to 1.5 in the totality of the particles whose grain size is in the interval $I_1$, said coefficient being defined by the ratio $d_{60\,i}/d_{10\,i}$, $d_{60\,i}$ being the mesh size that allows 60% of the grains whose grain size is in the interval $I_1$ to pass, and $d_{10\,i}$ being the mesh size that allows only 10% of the grains whose grain size is in the interval $I_1$ to pass, and with on the other hand the interval [2/3 $d_{10\,i}$, 1/5 $d_{60\,i}$] included in the interval $I_1$.

5. Substrate according to claim 4, characterised

- firstly, in that there is a partitioning of the totality of the grain sizes of its mineral particles (4) into n disjoint intervals $I_1$, i ranging from 1 to n and n being greater than or equal to 2, which means that each grain has its grain size which belongs to one and only one of said intervals $I_1$,
- secondly, in that, in at least two of said intervals li, which can be named $I_1$ and $I_2$, the indexing being chosen such that the elements of $I_2$ are larger than those of $I_1$, the grain size is distributed homometrically about an isolated peak of size $\lambda_i$, with on the one hand, for i = 1 and for i = 2, a uniformity coefficient less than or equal to 1.5 in the totality of the particles whose grain size is in the interval $I_1$, and with on the other hand, for i = 1 and for i = 2, the interval [2/3 $d_{10\,i}$, 1/5 $d_{60\,i}$] included in the interval $I_i$,
- thirdly, in that $\lambda_2 > 4 \lambda_1$ so that one or more particles whose grain size is in the interval li may form part of the porosity constituted by the particles whose grain size is in the interval $I_2$, fourthly, in that the apparent volume which the totality of the grains of the substrate whose size is less than $d_{60\,1}$ would have if they were separated from the remainder of the substrate is less than the total porosity which the totality of the grains of the substrate whose size is greater than $d_{10\,2}$ would have if they were separated from the remainder of the substrate.

6. Substrate according to any one of claims 1 to 5, **characterised in that** it comprises at least one ingredient from the family comprising:

- porous granulates such as coral or minerals of volcanic origin such as pumice stone, zeolite, pozzalan, resilient granulates and especially resilient granulates of raw cork or of baked cork having a fine grain size between 500 μm and 3 mm,
- coarse resilient granulates having a grain size which is greater than 5 mm and may reach several centimetres,
- granulates coated with a product which increases cohesion between grains, such as, for example, latex or a paraffin, this product being chosen to be non-toxic for the growth of the turf and the quantity thereof leaving sufficient space, taking into account the porosity, for the capillary water necessary for the growth of the turf,
- a wetting agent which coats some grains and modifies the surface tensions, allowing both an increase in the cohesive forces relative to those which would be obtained in the same substrate without a wetting agent, and an improvement in the useful water supply which is favourable for the growing of the turf,
- elongate inclusions, the purpose of which is to immobilise the grains of sand (4) of the skeleton of the substrate, such as, for example, natural or synthetic, preferably flexible or elastic or resilient fibres, or straw or even strips,
- fibres having an elastic elongation capacity, the purpose of which is to allow the ground subjected to mechanical stress to deform more and therefore cushion a greater proportion of the impact before being immobilised, and which also serve the purpose of energy recovery in the rebound phase and better return of the ground to its original position,
- non-woven or woven fibres (5) composed of synthetic materials such as nylon or polypropylene,
- non-woven or woven fibres (5) composed of natural organic materials which are slowly biodegradable and which may be of plant origin, such as hemp, coconut or cocoa fibre, flax, cotton, wood or thatch fibres, in the natural state or treated against rapid biodegradation, especially by thermo-modification and in particular by crosslinking, or which may be of animal origin, such as various hairs or bristles and especially wool or horsehair,
- organic elements which have undergone accelerated composting and are free of defective seeds and toxic residues, with as fine and homometric a grain size as possible and with a bacterial flora that is as rich and active as possible, such as, for example, vermicompost obtained from cattle manure or alternatively composted flax.

7. Substrate according to any one of claims 1 to 6, the composition of which aims to allow the various ingredients to cooperate with one another in order to allow the substrate, when it is subjected to mechanical shear stress, to move in a first phase and then to be immobilised, so that, ideally, the ground subjected to mechanical stress moves in a first phase as in the absence of elongate immobilising inclusions (5) and is then immobilised by the effect of the elongate immobilising inclusions (5), by virtue of the combined effect of one or more of the characteristics of the skeleton and of the fibres (5), which characteristics are, for the former, the grain size distribution, the neither angular nor flat shape of the grains (4) as well as their surface tension and their moderate coefficient of friction, and which are, for the latter, firstly their geometric characteristics relative to the geometry of the grains (4), especially the small size of the fibre cross-sections relative to the pores of the sandy skeleton, secondly their rheological characteristics of crushing or elastic elongation capacity, thirdly their surface characteristics of roughness and surface tension, and fourthly their low gravimetric density, and **characterised in that** it comprises at least one mode of cooperation between ingredients associated with a functional relationship or respective quantities of ingredients in the family, comprising the following modes:

- mode of cooperation between fibres which are fine and elongate relative to the dimensions of the grains of the skeleton (4) of the substrate, so that, on the one hand, said fibres, owing to their considerable length, are, as a result of being mixed with the grains of the skeleton (4), in contact with or in proximity to a very large number of said grains of sand, said numerous grains being thus connected together by the forces which they exert individually on the fibre in question and the reaction forces of said fibre, and, on the other hand, the cross-section of the fibre is small in comparison with the size of the pores, so that such a fibre is incorporated in the substrate by forming loops between the grains and it has room to move inside the pore space before being flattened against a grain when it is tensioned under the effect of shear of the substrate, which leaves it with a considerable potential for elongation before being tensioned, before said fibre, once tensioned, exerts by friction on the grains in contact therewith an immobilising force which opposes the continued movement, owing to its own internal reaction to the elongation,
- mode of cooperation between fibres which are fine and elongate relative to the sizes of the grains of the skeleton (4) of the substrate, in which at least 80% of the pores of the skeleton (4) have a size greater than 10 times the cross-section of the fine fibres cooperating therewith,
- mode of cooperation between fibres which are fine and elongate relative to the sizes of the grains of the skeleton (4) of the substrate, in which more than 30% of the part (4) of the skeleton is composed of a sand whose grain size is between 100 μm and 400 μm, the fibres having a diameter between 5 μm and 30 μm and a length between 3 mm and 100 mm, in order to create loops within the sand, the quantity of fibres being between 5 and 50 grams/litre of substrate,

- complex mode of cooperation between sand, coarse elastic or resilient elements and elongate immobilising inclusions forming loops between coarse resilient particles, in which the tensioning of said elongate immobilising inclusions by the effect of the friction of the sand moving in a divergent manner when there is shear involves the prior crushing of said resilient particles,

- mode of cooperation between large resilient particles having a size which is greater than 5 mm and may reach several centimetres and fibres or strips which are sufficiently fine and long relative to the resilient particles and are present in a sufficient number in the composition of the substrate of the ground, in which said fibres or strips form loops around a plurality of said large resilient particles when said fibres or strips are mixed with the substrate, so that they must crush said large particles before being tensioned and immobilising the substrate,

- mode of cooperation between sand, any elongate inclusions and inclusions comprising hollow fibres or strips having a capacity for work by compression or by elastic elongation, in which said hollow fibres or strips play both an immobilising role once they have been compressed and elongated and a cushioning role in the phase of compression elongation and can also cooperate with one another or with elongate inclusions and work in the opposite direction by their internal energy to return the ground to its original position,

- mode of cooperation between interstitial water, interstitial air, sand and any inclusions, in which a portion of the particles of the substrate, and especially the inclusions, taking into account a combination of their spatial distribution, their low gravimetric density and their surface characteristics, especially of roughness and high surface tension, are held in space essentially by forces of surface tension without gravity flattening them against the grains beneath them and causing considerable friction against said grains as soon as there is internal displacement in the substrate,

- mode of cooperation between interstitial water, interstitial air, sandy particles (4) of the substrate and any organic fraction of the substrate, in which the predominant forces between solid elements of the substrate are essentially the forces exerted by the interstitial air on the interstitial water attached to the grains by the forces of surface tension owing to the grain size distribution, in which the radii of the grains are quite small overall, so that the cohesive capillary forces, which are approximately proportional for a grain diameter greater than 100 $\mu$m to the surface area of the sphere, namely $4\pi R^2$ (despite a correction coefficient associated with the radius of curvature), overcome the forces of gravity, which are proportional to the volume, namely $4/3\ \pi R^3$, these cohesive forces associated with the capillarity making it possible, within a large range of water contents excluding the dry state and the saturated state, to mould and keep the substrate as a "sand pie" having a height greater than 30 cm by the effect only of the cohesive forces associated with the capillary tension of the water on the particles of said substrate, and, on the other hand, those same grains overall are quite large, round, not very rough and not very angular, so that the cohesive capillary forces of this substrate without inclusions and the internal friction forces are quite weak so that a person leaves an imprint of more than 1 mm when walking in such a substrate spread in a layer of 20 cm on a porous and compressed base which is in the moist state, that is to say with a water content obtained by wetting copiously and waiting for the gravitational water to drain off.

8. Substrate according to any one of claims 1 to 7, **characterised in that** the substrate without the elongate immobilising inclusions (5) but composed of particles (4) and optionally an organic fraction has a grain size distribution such that

- on the one hand, the radii of the grains are quite small overall so that the cohesive capillary forces, which are approximately proportional for a grain diameter greater than 100 $\mu$m to the surface area of the sphere, namely $4\pi R^2$ (despite a correction coefficient associated with the radius of curvature), overcome the forces of gravity, which are proportional to the volume, namely $4/3\ \pi R^3$, so that it is possible, within a large range of water contents excluding the dry state and the saturated state, to mould and then demould and keep the substrate as a "sand pie" with a vertical wall which stands up by capillary cohesion over a height of at least 30 cm by the effect of the cohesive forces associated with the capillary tension of the water on the particles of said substrate,

- on the other hand, those same grains are overall quite large, round, not very rough and not very angular, so that the cohesive capillary forces of this substrate without inclusions and the internal friction forces are quite weak so that a person leaves an imprint of more than 1 mm when walking in such a substrate spread in a layer of 20 cm on a porous and compressed base which is in the moist state, that is to say with a water content obtained by wetting copiously and waiting for the gravitational water to drain off,

- finally, the hydraulic conductivity of the complete substrate with its inclusions is greater than 5 cm/hour when the water content is greater than 90% of saturation and greater than 2 cm/hour for a water content greater than 80% of saturation.

9. Substrate according to any one of claims 1 to 8, **characterised in that** the distribution of the elongate immobilising inclusions (5), non-woven or woven fibres, is in accordance with one of the following possibilities:

- the inclusions are incorporated into the substrate individually and the spatial distribution of their quantity and of their spatial orientation in all directions is uniform,
- the elongate immobilising inclusions (5) are incorporated into the substrate grouped in bundles, and the fibres within a bundle are not parallel and bonded to one another as in a mesh but their orientation within a bundle is, by contrast, dispersed in all directions as in a ball or a tuft, and these balls are themselves distributed uniformly in the substrate and are sufficiently close to one another to constitute a continuous mesh, the distance between two adjacent balls being small relative to the size of the balls, or ideally zero in the sense that a continuous network of fibres allows two contiguous balls to be connected so that the substrate appears homogeneous on the macroscopic scale of 20 cm even if the mesoscopic distribution of the balls appears discrete on the microscopic scale, in a manner comparable to tufts of turf in which the strands are separate from one another but close and slightly entangled.

10. Substrate according to any one of claims 1 to 9, capable of cushioning an impact by internal displacement in a first phase, despite the inclusions, and of being immobilised with energy recovery in a second phase by virtue of the inclusions, and **characterised in that**, if it is spread on a base and over a sufficient area that the edge effects can be disregarded, for example 1 square metre, and at a certain thickness representative of a substrate of turf for sports ground, for example 20 cm, then wetted and compressed in order to simulate a sports surface, and if a moving body is dropped onto said surface from a certain height in order to observe the mechanical action of said surface on the moving body, it is found, at least under certain experimental conditions:

- on the one hand, that the deceleration distance $\varepsilon_{max}$ travelled by the moving body after it has come into contact with the surface and before its instantaneous speed is cancelled is at least equal to or greater than half the deceleration distance of the same moving body falling on a surface composed, under the same conditions, of the same substrate but without the elongate immobilising inclusions (5) in the substrate,
- on the other hand, that the residual indentation $\varepsilon_{residual}$, that is to say the distance travelled downwards by the moving body after it has come into contact with the surface, that is to say the deceleration distance $\varepsilon_{max}$ less the distance of subsequent rebound of the moving body in the opposite direction before complete immobilisation, under the effect of the energy recovery forces of the ground, is at most equal to or less than 75% of the residual indentation $\varepsilon_{residual}$ of the same moving body falling on a surface composed, under the same conditions, of the same substrate but without the elongate immobilising inclusions (5) in the substrate.

11. Substrate (3) according to any one of claims 1 to 10, **characterised in that** the large resilient inclusions (7) and the elongate immobilising inclusions (5) form a single type of inclusions which are both responsible for immobilising the system by increasing the friction and responsible for increasing the cushioning potential by their own resilient nature.

12. Substrate (3) according to any one of claims 1 to 10, **characterised in that** the large resilient inclusions (7) comprise at least inclusions which are both responsible for immobilising the system by increasing the friction and responsible for increasing the cushioning potential by their own resilient nature.

13. Substrate (3) according to any one of claims 1 to 10, **characterised in that** the elongate immobilising inclusions (5) are hollow with a capacity for work by compression or a capacity for work by elastic elongation, which play both an immobilising role once they have been compressed and elongated and a cushioning role in the phase of compression elongation and which play a role of recovery by working in the opposite direction in the third stage after the immobilising phase.

14. Substrate (3) according to claim 11 or 12, **characterised in that** the large resilient inclusions (7) are chosen from:

- coarse granulates of cork or EPDM which cooperate with fibres, the quantity of coarse granulates being sufficient that the fibres coil up between the coarse granulates and must crush them before they are able to be tensioned, creating absorption work.

15. Substrate (3) according to claim 11 or 13, **characterised in that** the elongate immobilising inclusions (5) are hollow and chosen from:

- "vermicelli" or "spaghetti" made of cork or EPDM which can both crush on themselves and stretch before being immobilised,
- "chips" made of resilient material, having a capacity of elongation in order to crush on themselves before being constrained when there is shear in order to immobilise the system by friction after having exhausted their capacity of elongation and crush,
- "macaroni" made of resilient material such as straw or thatch, capable of crushing on themselves with a considerable volume potential.

FIG 1

FIG.2

FIG.3

FIG.4

114

FIG.5

M1

M3

M4

41

M

40

M

M

FIG.6

3

5

7

4

FIG.7

.S.

23

21

22

E

22

21A

21B

Fig. 8

Fig. 9

Fig. 10

Fig. 11

Fig. 12

Fig. 13

Fig. 14

**EP 2 013 418 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5958527 A
- FR 2857991
- GB 2135350 A
- US 3034071 A
- NL 0204381
- GB 2135631 A
- FR 8617402
- FR 9307994, Genser
- WO 9823817 A
- WO 9400639 A
- CA 2285639
- US 870541 A
- FR 9911987, Genser
- DE 19946947 A1
- FR 2753211 A
- FR 2785918 A
- FR 2782613